(19)

**Europäisches Patentamt**

**European Patent Office**

**Office européen des brevets**

(11) **EP 4 531 004 A2**

(12) **EUROPEAN PATENT APPLICATION**

(43) Date of publication:
**02.04.2025  Bulletin 2025/14**

(21) Application number: **25153287.5**

(22) Date of filing: **23.12.2021**

(51) International Patent Classification (IPC):
***G06V 20/58*** *(2022.01)*

(52) Cooperative Patent Classification (CPC):
**G06V 20/58; B60W 10/22; B60W 30/09;
B60W 30/12; B60W 30/16; B60W 40/06;
B60W 50/14; B60W 50/16; G01S 7/003;
G01S 7/4013; G01S 7/4021; G01S 7/412;
G01S 13/931; G01S 17/931; G08G 1/096716;**
*(Cont.)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2020  US 202063130028 P
30.12.2020  US 202063132184 P
05.02.2021  US 202163146379 P**

(62) Document number(s) of the earlier application(s) in
accordance with Art. 76 EPC:
**21912222.3 / 4 268 199**

(71) Applicant: **Clearmotion, Inc.
Billerica, MA 01821 (US)**

(72) Inventors:
• **Giovanardi, Marco
 Melrose, MA, 02176 (US)**
• **Schulze, Stefan
 Brookline, MA, 02446 (US)**
• **Eisenmann, John Parker
 Burlington, MA, 01803 (US)**
• **Graves, William
 Somerville, MA, 02144 (US)**
• **Proctor, Marcus Joseph
 Goffstown, NH, 03045 (US)**
• **Karavas, Nikolaos
 Cambridge, MA, 02138 (US)**
• **Chen, Allen Chung-Hao
 San Jose, CA, 95134 (US)**
• **Ekchian, Jack A.
 Belmont, MA, 02138 (US)**
• **Lin, Hou-Yi
 Cambridge, MA, 02140 (US)**

(74) Representative: **Hoffmann Eitle
Patent- und Rechtsanwälte PartmbB
Arabellastraße 30
81925 München (DE)**

Remarks:
This application was filed on 22-01-2025 as a
divisional application to the application mentioned
under INID code 62.

(54) **SYSTEMS AND METHODS FOR VEHICLE CONTROL USING TERRAIN-BASED LOCALIZATION**

(57)    Systems and methods described herein include implementation of road surface-based localization techniques for advanced vehicle features and control methods including advanced driver assistance systems (ADAS), lane drift detection, passing guidance, bandwidth conservation and caching based on road data, vehicle speed correction, suspension and vehicle system performance tracking and control, road estimation calibration, and others.

**EP 4 531 004 A2**

(52) Cooperative Patent Classification (CPC): (Cont.)
**G08G 1/096741; G08G 1/09675; G08G 1/096775;
H04W 4/44;** B60W 2050/143; B60W 2050/146;
B60W 2552/15; B60W 2552/20; B60W 2552/30;
B60W 2552/35; B60W 2552/40; B60W 2554/802;
B60W 2555/20; B60W 2556/45; B60W 2556/50;
B60W 2720/10; G01S 2013/9316;
G01S 2013/9322; G01S 2013/9323;
G01S 2013/9325; G01S 2013/93271

## Description

### RELATED APPLICATIONS

This application claims the benefit of priority under 35 U.S.C. § 119(e) of U.S. Provisional Application Serial No. 63/130,028, filed December 23, 2020, U.S. Provisional Application Serial No. 63/132,184, filed December 30, 2020, and U.S. Provisional Application Serial No. 63/146,379, filed February 5, 2021, the disclosures of which are incorporated herein by reference in their entirety.

### TECHNICAL FIELD

Disclosed embodiments are related to systems for terrain-based localization and insights for systems in vehicles and related methods of use.

### BACKGROUND

Advanced vehicle features such as, for example, advanced driver assistance systems, active suspension systems, and/or autonomous or semi-autonomous driving may rely on highly accurate localization of a vehicle. Localization systems based on, for example, global navigation satellite systems (GNSS), may not provide sufficient accuracy or resolution for such features.

### SUMMARY

According to one aspect, the present disclosure provides a method for providing terrain-based insights to a terrain-based advanced driver assistance system of a vehicle. The method includes obtaining a road profile of a road segment the vehicle is traveling on, determining a location of the vehicle based at least partly on the road profile, and determining one or more operating parameters of one or more vehicle systems based at least partially on the location of the vehicle.

In some implementations, the method also includes transmitting the one or more operating parameters to the vehicle. In some instances, the method further includes operating the one or more vehicle systems based at least partly on the one or more operating parameters. In some instances, the method further includes operating the advanced driver assistance system based at least partly on the one or more operating parameters. In some instances, operating the advanced driver assistance system includes initiating an alert to a driver of the vehicle. In some instances, the alert includes at least one of a visual, audible, haptic, or tactile alert. In some instances, operating the advanced driver assistance system includes initiating an alert to an autonomous or a semi-autonomous driving controller of the vehicle.

According to another aspect, the present disclosure provides a method for providing terrain-based insights to an intelligent speed adaptation system of a vehicle. The method includes obtaining a road profile of a road segment the vehicle is traveling on, determining a location of the vehicle based at least partly on the road profile, and determining one or more recommended driving speeds based at least partly on the location of the vehicle.

In some implementations, the method also includes transmitting the one or more recommended driving speeds to the vehicle. In some instances, the method also includes operating the intelligent speed adaptation system based at least partly on the one or more recommended driving speeds. In some instances, operating the intelligent speed adaptation system includes initiating an alert to a driver of the vehicle. In some instances, the alert includes at least one of a visual, audible, haptic, or tactile alert. In some instances, the alert is a visual alert and is presented on a display in the vehicle. In some instances, operating the intelligent speed adaptation system includes initiating an alert to an autonomous or a semi-autonomous driving controller of the vehicle.

In some implementations, the recommended driving speed is based, at least partially, on road information for an upcoming portion of the road segment on which the vehicle is traveling. In some instances, road information for an upcoming portion of the road segment comprises weather information. In some instances, the weather information comprises an ambient temperature at the location of the vehicle. In some instances, the weather information comprises precipitation information at the location of the vehicle. In some instances, the weather information comprises fog information at the location of the vehicle.

In some implementations, the road profile information comprises at least one of road slope information, road roughness information, road frequency content, road friction information, road curvature, or road grip information.

In some implementations, road information for an upcoming portion of the road segment comprises road event information. In some instances, the road event information comprises a location of at least one of a pothole or a speedbump. In some instances, the road event information is based on road data that has been normalized by vehicle class.

In some implementations, road information for an upcoming portion of the road segment comprises road feature information, wherein the road feature is a bridge.

In some implementations, wherein the recommended driving speed is based, at least partially, on an average driving speed at which vehicles traverse the road segment.

According to another aspect, the present disclosure provides a method for providing a recommended driving speed to a vehicle. The method includes obtaining, by one or more sensors of the vehicle, road data of a road segment on which the vehicle is traveling, determining, based on the road data, a current road profile of the road segment, sending, to a cloud database, the current road profile, receiving, from the cloud database, a set of candidate stored road profiles, determining, by a processor, a location of the vehicle based on the set of candidate stored road profiles and the current road profile, determining, by the processor, a recommended driving speed, the recommended driving speed being based, at least partially, on the location of the vehicle, and initiating, via an advanced driver assistance system of the vehicle, an alert to a driver to change a driving speed of the vehicle.

In some implementations, the alert includes at least one of a visual alert, an audio alert, or a tactile alert. In some instances, the alert is a visual alert and is presented on a display in the vehicle.

In some implementations, the recommended driving speed is based, at least partially, on road information for an upcoming portion of the road segment on which the vehicle is traveling. In some instances, road information for an upcoming portion of the road segment includes weather information. In some instances, road information for an upcoming portion of the road segment comprises road profile information. In some instances, the road profile information includes at least one of road slope information, road roughness information, road frequency content, road friction information, road curvature, or road grip information. In some instances, road information for an upcoming portion of the road segment includes road event information. In some instances, road event information includes a location of at least one of a pothole or a speedbump. In some instances, the road event information is based on road data that has been normalized by vehicle class. In some instances, road information for an upcoming portion of the road segment comprises road feature information, wherein the road feature is a bridge.

In some implementations, the recommended driving speed is based, at least partially, on an average driving speed at which vehicles traverse the road segment.

According to another aspect, the present disclosure provides a method for providing terrain-based insights to an automatic emergency braking system of a vehicle. The method includes obtaining a road profile of a road segment the vehicle is traveling on, determining a location of the vehicle based at least partly on the road profile, and determining one or more automatic emergency braking trigger point distances at least partly on the location of the vehicle.

In some implementations, the method also includes transmitting the one or more automatic emergency braking trigger point distances to the vehicle. In some instances, the method also includes operating the automatic emergency braking system based at least partly on the one or more transmitted automatic emergency braking trigger point distances.

According to another aspect, the present disclosure provides a method for determining an automatic emergency braking trigger point distance for a vehicle. The method includes obtaining, by one or more sensors of the vehicle, road data of a road segment on which the vehicle is traveling, determining, based on the road data, a current road profile of the road segment, sending, to a cloud database, the current road profile, receiving, from the cloud database, a set of candidate stored road profiles, determining, by a processor, a location of the vehicle based on the set of candidate stored road profiles and the current road profile, determining, by the processor, the automatic emergency braking trigger point distance, the automatic emergency braking trigger point distance being based, at least partially, on the location of the vehicle, and initiating, when the vehicle is within the automatic emergency braking trigger point distance from another vehicle or object, via an advanced driver assistance system of the vehicle, an alert to a driver to brake.

In some implementations, the method also includes initiating, when the vehicle is within the automatic emergency braking trigger point distance, via an advanced driver assistance system of the vehicle, a braking command configured to initiate braking of the vehicle.

In some implementations, the method also includes initiating, when the vehicle is within a second distance, smaller than the automatic emergency braking trigger point distance, via an advanced driver assistance system of the vehicle, a braking command configured to initiate braking of the vehicle.

In some implementations, the alert includes at least one of a visual alert, an audio alert, or a tactile alert. In some instances, the alert is a visual alert and is presented on a display in the vehicle. In some instances, the automatic emergency braking trigger point distance is based, at least partially, on road information for an upcoming portion of the road segment on which the vehicle is traveling. In some instances, road information for an upcoming portion of the road segment includes weather information. In some instances, road information for an upcoming portion of the road segment includes road profile information. In some instances, the road profile information includes at least one of road slope information, road roughness information, road frequency content, road friction information, road curvature, or road grip information. In some instances, road information for an upcoming portion of the road segment includes road event information. In some instances, road event information includes a location of at least one of a pothole or a speedbump. In some instances, the road event information is based on road data that has been normalized by vehicle class. In some instances, road information for an upcoming portion of the road segment includes road feature information, wherein the road feature is a bridge.

According to another aspect, the present disclosure provides a method for providing terrain-based insights to an adaptive cruise control system of a vehicle. The method includes obtaining a road profile of a road segment the vehicle is traveling on, determining a location of the vehicle based at least partly on the road profile,

and determining one or more following distances at least partly on the location of the vehicle.

In some implementations, the method also includes transmitting the one or more following distances to the vehicle.

In some implementations, the method also includes operating the adaptive cruise control system based at least partly on the one or more transmitted following distances.

According to another aspect, the present disclosure provides a method for determining a following distance for an adaptive cruise control system of a vehicle. The method includes obtaining, by one or more sensors of the vehicle, road data of a road segment on which the vehicle is traveling, determining, based on the road data, a current road profile of the road segment, sending, to a cloud database, the current road profile, receiving, from the cloud database, a set of candidate stored road profiles, determining, by a processor, a location of the vehicle based on the set of candidate stored road profiles and the current road profile, and determining, by the processor, the following distance, the following distance being based, at least partially, on the location of the vehicle.

In some implementations, the method also includes initiating, when the vehicle is within the following distance, a braking command configured to initiate braking of the vehicle.

In some implementations, the method also includes initiating, when the vehicle is within the following distance, a command configured to adjust a set speed of the adaptive cruise control.

In some implementations, the method also includes initiating an alert to a driver of a vehicle, wherein the alert comprises at least one of a visual alert, an audio alert, or a tactile alert. In some instances, the alert is a visual alert and is presented on a display in the vehicle.

In some implementations, the following distance is based, at least partially, on road information for an upcoming portion of the road segment on which the vehicle is traveling. In some instances, road information for an upcoming portion of the road segment includes weather information. In some instances, road information for an upcoming portion of the road segment includes road profile information. In some instances, the road profile information includes at least one of road slope information, road roughness information, road frequency content, road friction information, road curvature, or road grip information. In some instances, road information for an upcoming portion of the road segment includes road event information. In some instances, road event information includes a location of at least one of a pothole or a speedbump. In some instances, the road event information is based on road data that has been normalized by vehicle class. In some instances, road information for an upcoming portion of the road segment includes road feature information, wherein the road feature is a bridge.

According to another aspect, the present disclosure provides a method of adjusting an operating mode of a vehicle. The method includes obtaining, by one or more sensors of the vehicle, road data of a road segment on which the vehicle is traveling, determining, based on the road data, a current road profile of the road segment, sending, to a cloud database, the current road profile, receiving, from the cloud database, a set of candidate stored road profiles and other road information, determining, by a processor, a location of the vehicle based on the set of candidate stored road profiles and the current road profile, determining, by the processor, that a bridge exists on an upcoming portion of the road segment, determining, by the processor, that a slippery condition may be occurring on the upcoming portion of the road segment on the bridge, and determining, by the processor, a value of an operating parameter of the vehicle for traversing the bridge.

In some implementations, the operating parameter of the vehicle is at least one of a driving speed of the vehicle, a following distance of an adaptive cruise control of the vehicle, or an automatic emergency braking trigger distance.

In some implementations, the other road information comprises an ambient temperature at the location of the bridge.

In some implementations, the other road information comprises weather information at the location of the bridge. In some instances, the weather information includes precipitation information at the location of the bridge.

According to another aspect, the present disclosure provides a method for calculating a target travel path for a first vehicle traversing a road segment. The method includes determining a current location of a first vehicle, obtaining a target travel path for traversing the road segment based at least in part on the current location of the first vehicle, and determining an error between the current location of the first vehicle and the target travel path.

In some implementations, the method also includes operating one or more vehicle systems based at least in part on the determined error. In some instances, the one or more vehicle systems includes an autonomous driving trajectory planning system. In some instances, the one or more vehicle systems includes a lane keep assist system.

In some implementations, the method also includes comparing the error to a threshold and determining that a current path of the first vehicle is appropriate for traversing the road segment.

In some implementations, the method also includes comparing the error to a threshold and determining that a current path of the first vehicle is inappropriate for traversing the road segment. In some instances, the method also includes calculating, based on the error, a corrective action to bring the current trajectory to match the target travel path. In some instances, the method also includes initiating the corrective action with an advanced driver assistance system of the first vehicle that at least partially influences the steering of the first vehicle. In some instances, calculating the target travel path includes averaging at least one other path taken by the at least one other vehicle across the road segment.

According to another aspect, the present disclosure provides a steering correction system for a vehicle. The steering correction system includes a localization system configured to determine a location of the vehicle, at least one system configured to influence a direction of travel of the vehicle, and a processor configured to perform the steps of: obtaining the location of the vehicle from the localization system; obtaining a target path of travel based at least partly on the location of the vehicle; determining a current path of travel of the vehicle; and controlling the at least one system based at least partly on the target path of travel and the current path of travel.

In some implementations, the at least one system configured to influence the direction of vehicle travel is at least one rear steering actuator. In some instances, the localization system is a localization system having an accuracy within 0.3 meters. In some instances, the localization system uses global navigation satellite systems enhanced through real-time kinematic positioning. In some instances, the localization system uses inertial navigation enhanced by global navigation satellite systems. In some instances, the processor is further configured to perform the step of initiating transmission of the location of the vehicle to a cloud computing system. In some instances, the processor is further configured to perform the step of receiving the target path of the vehicle from a cloud computing system.

According to another aspect, the present disclosure provides a method of providing steering correction commands to a vehicle system. The method includes obtaining travel paths from at least two vehicles using high-accuracy localization, generating an aggregate path from the travel paths of the at least two vehicles, wherein the aggregate path is representative of one lane in a road, obtaining a current travel path of an operated vehicle obtained using a high-accuracy localization system, comparing the current travel path with the aggregate path, generating a corrective command to correct the current travel path of the vehicle in motion, and sending the corrective steering command to a steering controller.

In some implementations, during the generating of the aggregate path, the input travel paths are filtered to remove outliers and undesirable travel paths. In some instances, the travel paths from at least two vehicles are obtained using global navigation satellite systems enhanced through real-time kinematic positioning. In some instances, the travel paths from at least two vehicles are obtained using inertial navigation enhanced by global navigation satellite systems. In some instances, the current travel path is obtained using global navigation satellite systems enhanced through real-time kinematic positioning. In some instances, the current travel path is obtained using inertial navigation enhanced by global navigation satellite systems.

According to another aspect, the present disclosure provides a vehicle including a localization system configured to determine a location of the vehicle, a display, and a processor configured to perform the steps of: obtaining a location of the vehicle from the localization system; determining the presence of one or more road surface features on a road surface based at least in part on the location of the vehicle; and presenting on the display a position of the one or more road surface features on the road surface.

In some implementations, the position is determined at least partially based on road surface information downloaded from a cloud-based database.

In some implementations, the display is selected from the group consisting of a heads-up display and a monitor.

In some implementations, the controller is further configured to present, on the display, a projected tire path of at least one tire of the vehicle relative to the one or more road surface features.

In some implementations, the controller is further configured to present, on the display, a projected tire path of two front tires of the vehicle.

In some implementations, the one or more road surface features includes a pothole or a bump.

According to another aspect, the present disclosure provides a method of operating a vehicle. The method includes (a) while a vehicle is traveling along a road surface, determining a location of a road surface feature on the road surface the location of the road surface feature being relative to the vehicle, and (b) presenting, on a display, the location of the road surface feature on the road surface.

In some implementations, presenting the location of the road surface feature includes presenting a graphical representation of the road surface feature on the display.

In some implementations, the display is a heads-up display.

In some implementations, the method also includes presenting, on the display a projected tire path of at least one tire of the vehicle. In some instances, the method also includes, based on the projected tire path of the at least one tire of the vehicle, adjusting a steering angle of a steering wheel of the vehicle to avoid the road surface feature.

In some implementations, the road surface feature is a pothole.

According to another aspect, the present disclosure provides a method of operating a vehicle under conditions of poor visibility. The method includes (a) while the vehicle is traveling along a road surface, determining, using at least one remote sensor, a location, relative to the road surface, of at least one other vehicle, and (b) presenting, on a display, the determined location of the at least one other vehicle (a) relative to an image of the road surface.

In some implementations, the conditions of poor visibility are caused by fog and the at least one remote sensor is a radar detector.

In some implementations, the display is a heads-up display or a monitor.

In some implementations, presenting, on the display, the determined location of the at least one other vehicle includes presenting a graphical representation of the at least one other vehicle on the display.

According to another aspect, the present disclosure provides a method for providing terrain-based insights to an adaptive headlight system of a vehicle. The method includes obtaining road surface information of a road segment the vehicle is traveling on, determining a location of the vehicle based at least partly on the road surface information, and determining one or more target illumination areas based at least partly on the location of the vehicle.

In some implementations, the method also includes transmitting the one or more target illumination areas to the vehicle. In some instances, the method also includes operating the adaptive headlight system based at least partly on the one or more transmitted target illumination areas.

In some implementations, the road surface information comprises a road profile.

According to another aspect, the present disclosure provides a method for providing terrain-based insights to an adaptive ADAS sensor system of a vehicle. The method includes obtaining road surface information of a road segment the vehicle is traveling on, determining a location of the vehicle based at least partly on the road surface information, and determining one or more target sensing areas based at least partly on the location of the vehicle.

In some implementations, the method also includes transmitting the one or more target sensing areas to the vehicle. In some instances, the method also includes operating the adaptive headlight system based at least partly on the one or more transmitted target sensing areas.

In some implementations, wherein the road surface information includes a road profile.

Intelligent Speed Adaptation systems warn or enforce driving speed based on a speed limit and/or upcoming road information. The Inventors have recognized that driving speed recommendations for safety, comfort, and/or vehicle durability may be determined with foresight of one or more upcoming road conditions. Upcoming road conditions may include, but are not limited to, road events, road roughness, road frequency content, road friction, road curvature, weather dependent events, and/or average driving speed. With precise localization and data sharing with a database, a recommended driving speed, which may be based on foresight of upcoming road conditions, may be calculated, and served to an Intelligent Speed Adaptation system on vehicle. The Intelligent Speed Adaptation system then may warn and/or enforce the recommended driving speed to a driver of the vehicle to improve safety, comfort, fuel economy, range, and/or vehicle durability, or other desired metrics.

Advanced driver assistance systems (ADAS) in today's vehicles enhance the driver's ability to steer the vehicle to remain within a lane and avoid encroaching on adjacent lanes of travel on roadways. This safety feature commonly relies on vision-based sensor systems like forward- and sideways-facing cameras to identify lane markers and determine an appropriate path to take within the lane.

The sensor systems used for this application are vulnerable to multiple potential failures, including sensor obscurement through reflections or dirt on the glass; sensor function reduction due to environmental conditions such as rain, fog, snow; and a possible general inability to identify lane markers, for example due to lighting problems such as darkness.

The inventors have recognized that using additional inputs may enhance the function of such lane assistance systems. In one implementation, a high-definition map is used, containing details related to the road such as for example the terrain profile, road events, road content, and/or similar road characterization features; road signs and other distinctive landmarks in the vehicle's surroundings; mean, median, and/or typical heading; curvature, and/or path of previous drives; or any subset thereof, in addition to many other possible details. In one embodiment, this map may be crowd-sourced by gathering data from other vehicles and/or from previous drives. Next, an accurate estimate of the vehicle's current position may be made, for example using terrain-matching of road features or events from the high-definition map or using feature matching for landmarks in the road profile or the environment or using high precision global navigation system signals. Once an accurate location is known, and given the typical path driven by other vehicles, this information may be used to determine any undesired deviations from the path by the current vehicle. These deviations may be used as an additional input for the driver assistance feature, for example as a redundant sensor to confirm validity of the planned path, as a fallback sensor to bridge sections of road with insufficient markings (such as for example at intersections where the lane markings on one side of the road are discontinued), or as additional input into a sensor fusion to determine the vehicle's position and planned path. The input provided by this system has a much longer time horizon than the visual systems typically used and may thus serve as a low frequency correction signal.

An advanced driver assist feature or autonomous driving trajectory planning system may steer or aid the operator in steering a vehicle along a path. This safety feature commonly relies on vision-based sensor systems like forward and sideways-facing cameras, or distance- or range-based sensor systems like LiDAR or Radar, to identify lane markers and determine an appropriate path to take in order to remain within the travel lane.

Sensor systems used for this application may be vulnerable to multiple potential failures, for example where lane markings are obstructed, obscured, or not present for short stretches of road, and may lead to an incorrect trajectory being commanded by the assist feature or autonomous driving planner.

The inventors have recognized that by using precise localization and one or more trajectory paths from previous drives to provide an added error signal to the path planning controller or to the human operator, the impact of sensor failure on providing driver assistance may be decreased.

This compensation for sensor failures may be done, for example by using information based on previous drives in the same vehicle along the desired path or based on previous drives in at least one different vehicle along the desired path. This information may for example be the location of the vehicle in combination with a heading of each vehicle. In combination with accurate localization along the path, this information may be used to generate a reference trajectory or heading for each road segment.

As the vehicle traverses a path for which a reference trajectory or heading is known, and provided the vehicle is equipped with an accurate localization system and a connection to a database containing the reference trajectory information, which may be stored locally in the vehicle, or stored in the cloud and downloaded to the vehicle through an over-the-air connection at appropriate intervals, a reference path ahead of the vehicle may be provided.

Comparing this reference path to the trajectory determined by the vision-based system allows for fault detection and for a correction or a disengagement of the system if the trajectory is determined to be incorrect or not trustworthy, thus reducing the potential for causing harm to the vehicle, its occupants, or others in the vicinity.

Modern road vehicles have headlights configured to illuminate the road ahead of the vehicle. It is generally true that illuminating the road farther ahead of the vehicle is more beneficial, provided that the light source (i.e., the headlamps) is sufficiently strong. Illuminating the road far ahead of the vehicle though may also have a negative impact, because the headlights will then also shine strong light onto oncoming vehicles, potentially obstructing the visibility of operators of such vehicles. For this reason, maximum allowed headlight angles are generally regulated by authorities such as local departments of motor vehicles. Another problem occurs when a vehicle is rounding a turn and the headlights are illuminating the section of road straight ahead of the vehicle and not the section of road which the vehicle is about to traverse.

Some vehicle makers have begun using headlights with the ability to change the angle of their light beam from left to right and/or up and down. This may be done in multiple ways, for example including using an actuator system to move the headlight, headlight assembly, lenses, or reflectors that direct the light beam, or by using a plurality of light sources, each illuminating at least partially toward a different direction and engaging them selectively as desired. The selection of the desired angle may be guided at least in part by looking at the projected trajectory of the vehicle, or by using a predicted path based on map data, or by sensors that detect road path changes, for example cameras or lidar systems. The selection may also be at least partially guided by sensors that indirectly or directly measure the position of the vehicle with respect to the road.

When driving on a road with significant elevation change, the headlights are only illuminating parts of the road ahead of the vehicle. For example, when driving on a road that rises in front of the vehicle, the headlights illuminate a section of road that is closer to the vehicle and potentially smaller than if the road were flat. When driving on a road that falls away in front of the vehicle, the headlights illuminate a section of road that is farther in front of the vehicle and potentially larger, but also potentially illuminating oncoming vehicles in an undesired manner. Even using headlight systems described above, this problem cannot be solved, as the road ahead of the vehicle is not known and can, generally, not be sufficiently sensed with existing sensor systems such as vision-based systems, LiDAR, radar, or other known technologies.

The inventors have recognized that terrain-based advanced driver assistance systems (terrain-based ADAS) may take advantage of a known road profile ahead of the vehicle, for example including the road elevation change and/or the road curvature. Using a method to supply this information to the vehicle with enough advance notice, a vehicle controller may decide to request an actuation of the headlight mechanism, or a change in the headlight illumination pattern, with sufficient advanced notice to compensate for dynamics of the actuation, the upcoming path of the road, and the presence or absence of oncoming traffic.

The method described above for adjusting headlight beams may be used to modify the function of ADAS sensors in the vehicle, such as for example LiDAR, radar, or light-based sensors such as cameras, to account for upcoming road obstacles or road contour. If an ADAS sensor has a mechanism for adjusting its lateral and/or vertical directionality and/or sensitivity and/or range, or has other methods of modifying its optimal functionality, such as for example adjusting its focus range or the amount of background lighting or other parameters, then in a manner similar to what was described above, the optimal parameters may be adjusted based on upcoming road contour.

For example, in one embodiment, a LiDAR sensor may be able to detect objects at a distance and be calibrated for a vehicle on a level road and may have an actuation mechanism for adjusting its lateral and/or vertical directionality and/or sensitivity, or it may have a mechanism for adjusting its range based on internal settings. In the presence of a road feature such as a hill cresting or a bowl, the angle may be adjusted pre-emptively to correctly identify the features more relevant for the vehicle. On the other hand, understanding the road contour ahead of the vehicle may also be used to provide information to the operator or driving system that the sensor's detection range is expected to be lower, for example, due to road features ahead of the car, and that thus the vehicle speed or other settings (e.g., driving controller settings) may need to be adjusted.

Advanced driver assistance systems (ADAS) may use onboard sensors to provide steering corrections to a vehicle. This steering correction is often suggested to an operator through tactile feedback and/or performed by front steering actuators; however, this feedback may be intrusive or perceived by the driver as an uncomfortable pulling of the vehicle to one side or another. Systems and methods described herein may detect lane position by collecting driving data from numerous vehicle paths and creating an aggregate path and provide unintrusive steering correction based on the difference between the vehicle's current path and the aggregate path, using rear steering actuators. Localization methods may be used to determine a vehicle path within a travel lane. If the vehicle path diverges from the aggregate path, the system may create a command for a steering correction system, the steering correction system including one or more rear steering actuators, to influence the travel direction of the vehicle.

In some implementations, a vehicle may include a display unit, and a controller that is configured to display, on the display unit, a position of a road surface feature, where the position is determined at least partially based on road surface information downloaded from a cloud-based database. The display unit may be, for example, a heads-up display or a monitor. In some embodiments, the controller may be configured to also display the projected tire path of at least one tire of the vehicle relative to road surface feature. The controller may also be configured to display the projected tire path of the two front tires of the vehicle. The feature may be, for example, a pothole or a bump.

According to another aspect, the disclosure provides a method for operating a vehicle, where the method includes, determining a location, relative to the road surface, of a road surface feature while a vehicle is traveling along the road surface. The method may further include displaying, on a display unit, an image of the road surface and an image of the road surface feature at the determined location, relative to the road surface. In some implementations, display unit may be for example a heads-up display or a monitor. In addition, a projected tire path, of at least one tire of the vehicle, may also be shown relative to the road surface feature. The method may further include adjusting the steering angle of a steering wheel of the vehicle to avoid the road surface feature. This adjustment may be based on the projected tire path of at least one tire of the vehicle relative to the road surface feature. In some implementations the feature may be a pothole or a bump.

According to another aspect, the disclosure provides a method for operating a vehicle under conditions of poor visibility. The method may further include using at least one remote sensor to determine a location, relative to the road, of at least one other vehicle, while the vehicle is traveling along a road. The method may further include displaying, on a display unit, an image of the other vehicle at the determined location relative to an image of the road. In some implementations, the poor visibility may be caused by fog and the at least one remote sensor may be a radar detector.

According to one aspect, the disclosure provides a method including obtaining, from one or more sensors corresponding to a left wheel of a vehicle, left wheel data as the vehicle traverses a road segment. The method also includes obtaining, from one or more sensors corresponding to a right wheel of a vehicle, right wheel data as the vehicle traverses the road segment. The method also includes obtaining, from a cloud database, two or more road profiles, each road profile corresponding to a track on the road segment. The method also includes comparing the left wheel data and the right wheel data to the two or more road profiles. The method also includes determining, by a controller, at a first time, a first match between the left wheel data or the right wheel data and a first road profile of the two or more road profiles. The method also includes determining, by the controller, a first location the vehicle on the road segment based on the first match. The method also includes determining, by the controller, at a second time, a second match between the left wheel data or the right wheel data and a second road profile of the two or more road profiles. The method also includes determining, by the controller, a second location of the vehicle on the road segment based on the second match. The method also includes determining, based on a difference between the first location and the second location, that the vehicle has completed a lane drift behavior.

In some implementations, the difference between the first location and the second location indicates that the vehicle has drifted within a lane on the road.

In some implementations, the difference between the first location and the second location indicates that the vehicle has drifted into another lane on the road.

In some implementations, the one or more sensors representing the left wheel of the vehicle comprises a left wheel sensor, wherein the one or more sensors representing the right wheel of the vehicle comprises a right wheel sensor.

In some implementations, determining a second match between the left wheel data or the right wheel data and a second road profile of the two or more road profiles comprises reversing at least a portion of the second road profile prior to determining the second match.

In some implementations, the difference between the first location and the second location indicates that the vehicle has drifted into an oncoming lane on the road.

In some implementations, the method also includes sending, to another vehicle system, a signal indicating the lane drift behavior. In some instances, the other vehicle system is an ADAS configured to present, on a display, a warning to a driver of the vehicle. In some instances, the other vehicle system is an autonomous driving controller configured to initiate steering commands for the vehicle.

In some implementations, the right wheel data is right wheel vertical acceleration data and wherein the left wheel data is left wheel vertical acceleration data.

In some implementations, determining a first match comprises exceeding a predetermined correlation threshold between either the right wheel data or the left wheel data and the first road profile.

According to another aspect, the present disclosure provides a method of locating a lateral position of a vehicle traveling along a road. The method includes (a) receiving, from a cloud-based data storage, road surface profile information of at least two tracks located in a single lane of the road. The method also includes (b) collecting road profile information from a left wheel of the vehicle and a right wheel of the vehicle. The method also includes (c) determining the lateral position of the vehicle by comparing the information received in step (a) with the information collected in step (b).

In some implementations, collecting in step (b) includes using at least one sensor selected from the group consisting of: a wheel accelerometer, a body accelerometer, and a body IMU.

According to one aspect, the present disclosure provides a method of performing lane change guidance for a vehicle including determining, using terrain-based localization, a location of the vehicle. The method also includes transmitting, from the vehicle, the location of the vehicle to a cloud database comprising crowd sourced lane change data. The method also includes receiving, at the vehicle, data indicating that the vehicle is approaching an overtaking zone. The method also includes presenting an indication that the vehicle is approaching the overtaking zone.

In some implementations, the indication is at least one of a visual, audible, or tactile indication.

In some implementations, the indication that the vehicle is approaching an overtaking zone is presented via an advanced driver assistance system.

In some implementations, the data indicating that the vehicle is approaching an overtaking zone is based on data from other vehicles similar to the vehicle in at least one aspect. In some instances, the at least one aspect is vehicle body type.

In some implementations, the data indicating that the vehicle is approaching an overtaking zone is based on data from other vehicles driving in similar conditions to the vehicle. In some instances, driving in similar conditions comprises driving in similar weather conditions. In some instances, driving in similar weather conditions comprises driving in similar precipitation conditions. In some instances, driving in similar conditions comprises driving on the same day of the week. In some instances, driving in similar conditions comprises driving at the same portion of the day.

In some implementations, the method also includes presenting an indication that the vehicle is reaching the end of an overtaking zone. In some instances, the indication is at least one of a visual, audible, or tactile indication.

In some implementations, the vehicle is a semi-autonomous or an autonomous vehicle.

According to one aspect, the present disclosure provides a method for updating a cloud database of road data. The method includes obtaining, from one or more sensors, acceleration data, as a vehicle traverses a track on a road segment. The method also includes converting the acceleration data into a current road profile of the track on the road segment. The method also includes obtaining, from a cloud database, a stored road profile corresponding to the road segment. The method also includes cross-correlating the current road profile with the stored road profile. The method also includes determining that the current road profile and stored road profile do not match; and uploading the current road profile to the cloud database.

In some implementations, the one or more sensors comprises a wheel sensor.

In some implementations, the method also includes updating the stored road profile, wherein updating the stored road profile comprises overwriting at least a portion of the road data in the road profile or replacing the stored road profile with the current road profile.

According to another aspect, the present disclosure provides a method for updating a cloud database of road data. The method includes obtaining, by a vehicle sensor on a vehicle, road data corresponding to a track of a road segment on which the vehicle is traveling, the road data comprising a road profile. The method also includes receiving, from a cloud database, a location of the vehicle and a road segment maturity indication corresponding to the road segment on which the vehicle is traveling. The method also includes, based on the road segment maturity indication, determining a subset of the road data to upload to the cloud database. The method also includes uploading the subset of road information to the cloud database.

In some implementations, the road data comprises road event data. In some instances, the subset of road data comprises road event data.

In some implementations, the method also includes, based on the road segment maturity indication, determining a data rate for uploading the subset of road data.

In some implementations, the road segment maturity indication is determined based on a number of drives for which the cloud database has stored road data. In some instances, the road segment maturity indication is determined based on one or more of a level of traffic, a time of day, or a day of the week.

According to one aspect, the present disclosure provides a method of correcting a speed of a vehicle. The method includes obtaining a plurality of GPS coordinates and headings, the GPS coordinates and headings corresponding to a plurality of locations of the vehicle. The method also includes obtaining a reported speed of the vehicle. The method also includes determining, based on two or more of the plurality of GPS coordinates and headings, that the vehicle is traveling straight and at a constant speed. The method also includes calculating a speed correction factor based on the two or more of the plurality of GPS coordinates and headings. The method also includes applying the speed correction factor to the reported vehicle speed to determine a true speed of the vehicle.

In some implementations, the method also includes sending, to a terrain-based localization system, the true speed of the vehicle.

In some implementations, determining that the vehicle is traveling straight comprises determining that a plurality of consecutive vehicle headings differ from one another by less than 2%.

According to another aspect, the present disclosure provides a method of determining a location of a vehicle. The method includes obtaining a plurality of GPS coordinates and headings, the GPS coordinates and headings corresponding to a plurality of locations of the vehicle. The method also includes obtaining a reported vehicle speed of the vehicle. The method also includes determining, based on two or more of the plurality of GPS coordinates and headings, that the vehicle is traveling straight and at a constant speed. The method also includes calculating a speed correction factor based on the two or more of the plurality of GPS coordinates and headings. The method also includes applying the speed correction factor to the reported vehicle speed to determine a true speed of the vehicle. The method also includes determining, based on dead reckoning using the true speed of the vehicle, a location of the vehicle.

In some implementations, determining that the vehicle is traveling straight comprises determining that a plurality of consecutive vehicle headings differ from one another by less than 2%.

According to one aspect, the present disclosure provides a method of monitoring location-based suspension system commands. The method includes obtaining a force command for a suspension actuator of a vehicle. The method also includes obtaining road information for a road on which the vehicle is traveling. The method also includes determining one or more expected ride characteristics of the vehicle. The method also includes sensing, by one or more sensors, one or more actual ride characteristics of the vehicle as the vehicle travels on the road. The method also includes comparing the one or more expected ride characteristics with the one or more actual ride characteristics. The method also includes calculating a relative improvement score based on the comparison of the one or more expected ride characteristics with the one or more actual ride characteristics.

In some implementations, ride characteristics comprise vehicle body accelerations.

In some implementations, the method also includes determining, based on the relative improvement score, that the force command caused performance degradation. In some instances, the method also includes applying a gain to the force command. In some instances, the gain is applied to the force command over a limited frequency range.

In some implementations, the method also includes turning off force commands to the suspension actuator.

In some implementations, the suspension actuator is a semi-active suspension actuator or an active suspension actuator.

In some implementations, obtaining road information comprises using a high precision localization system to determine a road profile of the road.

According to one aspect, the present disclosure provides a method including obtaining road data from one or more vehicle sensors as a vehicle traverses a road segment. The method also includes determining, by a controller, based on the road data and using a set of parameters relating to the one or more vehicle sensors, an estimated road profile of the road segment. The method also includes obtaining, from a cloud database, a composite road profile of the road segment. The method also includes comparing the estimated road profile of the road segment with the composite road profile of the road segment. The method also includes determining an error between the estimated road profile of the road segment and the composite road profile of the road segment. The method also includes initiating, by the controller, a command to adjust one or more individual parameters within the set of parameters relating to the one or more vehicle sensors.

In some implementations, the one or more vehicle sensors comprises one or more wheel accelerometers.

In some implementations, the one or more vehicle sensors comprises at least one of one or more ride height sensors, one or more body accelerometers, or one or more body IMUs.

In some implementations, the composite road profile is compiled from sensor data from other vehicles previously traversing the road segment. In some instances, the composite road profile is compiled from road data from at least 5 vehicles previously traversing the road segment.

In some implementations, the one or more individual parameters comprises a correction factor on a sensor signal used to create the road data. In some instances, the correction factor comprises different corrections to the sensor signal at different frequencies. In some instances, the one or more sensors comprises a wheel accelerometer and the correction factor comprises a correction to data collected for low frequency road content. In some instances, the one or more sensors comprises a ride height sensor and the correction factor comprises a correction to data collected for high frequency road content. In some instances, the one or more individual parameters comprises a parameter of a physics model of the vehicle. The physics model may be used to fuse sensor information into the road estimate.

According to one aspect, the disclosure provides a method for operating a vehicle using data stored in a cloud-based database during a trip to a destination. The method may include downloading road surface information, before the trip has commenced, e.g., while the vehicle is parked. The information may be for a predetermined route to be travelled during a future trip. The information may be downloaded to a local information storage unit onboard the vehicle. Once the trip has begun the information may be used to determine the location of the vehicle and/or to control an aspect of a system on the vehicle during the trip. A WiFi or hardwired (e.g., ethernet) communication connection may be used. In some implementations, the vehicle may be an electric vehicle or a plug-in hybrid-electric vehicle and the ethernet connection may be integrated with the charging cable. In some implementations, a microprocessor may determine the road surface data, stored locally, is outdated by providing information, such as the time and date when the data was downloaded, to the data base. If the data is out-of-date, new data may be downloaded that is up-to-date. In some implementations, a microprocessor on the vehicle may determine the destination by accessing a predesignated calendar, a user interface, or a navigation device which may be on a cell phone.

According to another aspect, the disclosure provides a method for operating a vehicle using road surface information previously stored onboard a vehicle. This method may include determining a destination, using a navigation system to determine a route to the destination, determining that the road surface data for the route is available onboard the vehicle; and using the road surface data onboard the vehicle, while traveling along the route, to determine the location of the vehicle and/or control an aspect of the operation of a system onboard the vehicle. Under certain circumstances it may be determined that the onboard data is not up-to-date in which case the data may be updated by accessing data from a cloud-based data base.

According to another aspect, the disclosure provides a method of providing road preview information to a vehicle while maintaining the data privacy of information provided by the vehicle. The method may further include receiving, from the vehicle at a first cloud-based database, information based on data collected by at least one sensor on board the vehicle; receiving, from the vehicle at a first cloud-based database, vehicle-identifying data that identifies the vehicle providing the data; creating a data tag based on the vehicle-identifying data; associating the data tag with at least a portion of the data provided by the vehicle; supplying, to an independent second cloud-based database, at least a portion of the data received, for analysis, and the associated information tag; and receiving, from the independent second cloud-based database, road preview information, wherein the road preview information includes data characterizing at least an aspect of the road ahead of the vehicle. In some implementations, the sensor may be, for example, an accelerometer mounted on an unsprung mass of the vehicle, an accelerometer mounted on a sprung mass of the vehicle, and/or an IMU.

According to another aspect, the disclosure provides a method of providing for the exchanging data with a vehicle while maintaining data privacy. The method may further include receiving a first quantity of sensor data from a vehicle at a first cloud-based data base; receiving information that identifies the vehicle providing the data; generating a data tag for the data provided by the vehicle that is associated with the data; using the data tag instead of the identifying information provided by the vehicle; conveying the data received from the vehicle, and the generated data tag to an independent second cloud-based database; receiving, at the first data base, information from the second database, where the information is associated with the generated tag; and providing information, to the vehicle based that is at least partially based on the information received from the second data base. In some implementations, the data received from the vehicle is related to a performance metric of at least one system in the vehicle and the information to the vehicle is an indication of the level of performance the at least one system. In some implementations, the at least one system is, for example, a braking system, an ABS system, and/or an EPS system.

According to another aspect, the disclosure provides a method of operating a vehicle. The method includes determining a location of a vehicle and determining a value of a quality metric for the location of the vehicle. The method includes comparing the quality metric to an upper bound and a lower bound for the quality metric. The method includes initiating a command to a vehicle subsystem based on the comparison.

In some implementations, the method includes determining that the value of the quality metric is above the upper bound. In some instances, the command initiated to a vehicle subsystem is a full intended command.

In some implementations, the method includes determining that the value of the quality metric is between the upper bound and the lower bound. In some instances, the command initiated to the vehicle subsystem is a scaled command.

In some implementations, the vehicle subsystem is a variable damper system, an active suspension system, an active roll stabilizer system, or a rear steering system.

According to another aspect, the disclosure provides a method of measuring a value of a parameter related to a road surface feature using at least one inertial sensor; obtaining an image of the road surface feature by using a rear-facing camera; and confirming the value of the parameter by processing the image obtained by the rear-facing camera.

In some implementations, the feature may be a pothole and the parameter may be for example, the width, the length, and/or the depth of the pothole.

In some implementations, the feature is selected from the group consisting of speed bumps, surface cracks, manhole covers, storm drain grates, and frost heaves and the parameter is selected from the group consisting of a width, a length, and a depth of the feature.

According to another aspect, the disclosure provides a method of determining road camber. The method includes obtaining, from a plurality of vehicles, steering inputs and yaw rates of each of the plurality of vehicles as each of the plurality of vehicles traverses a road segment. The method also includes determining, for a steering input of a first vehicle of the plurality of vehicles, an uncorrelated steering component. The method also includes determining, by comparing the uncorrelated steering component with other uncorrelated steering components derived from crowd-sourced steering inputs, a road camber angle for the road segment.

In some implementations, the method includes determining a misalignment factor for the first vehicle.

According to another aspect, the disclosure provides a method of operating a vehicle. The method includes obtaining, from a plurality of vehicles, steering inputs and yaw rates of each of the plurality of vehicles as each of the plurality of vehicles traverses a road segment. The method also includes determining, for a steering input of a first vehicle of the plurality of vehicles, an uncorrelated steering component. The method also includes determining, by comparing the uncorrelated steering component with other uncorrelated steering components derived from crowd-sourced steering inputs, a road camber angle for the road segment. The method also includes determining a correction signal to compensate for the road camber angle.

In some implementations, the method includes initiating, based on the correction signal in (d), a command to a steering system of the first vehicle. In some implementations, the method includes initiating, based on the correction signal in (d), a command to a vehicle system configured to influence a heading of the first vehicle, wherein the vehicle system is an active suspension system or an aerodynamics system. In some implementations, the method includes initiating, based on the correction signal in (d), a recommendation to a driver of the first vehicle, to steer the first vehicle. In some instances, the recommendation is presented on a heads-up display or via tactile feedback through a steering wheel.

According to another aspect, the disclosure provides a method of operating a vehicle. The method includes determining a location of a vehicle and determining a value of a quality metric for the location of the vehicle. The method includes comparing the quality metric to an upper bound and a lower bound for the quality metric. The method includes initiating a command to a vehicle subsystem based on the comparison.

In some implementations, the method includes determining that the value of the quality metric is above the upper bound. In some instances, the command initiated to a vehicle subsystem is a full intended command.

In some implementations, the method includes determining that the value of the quality metric is between the upper bound and the lower bound. In some instances, the command initiated to the vehicle subsystem is a scaled command.

In some implementations, the vehicle subsystem is a variable damper system, an active suspension system, an active roll stabilizer system, or a rear steering system.

According to one aspect, a method of updating a road surface map is disclosed. The method includes (a) collecting, via a roving sensor, a first set of data while traversing a first area, (b) collecting, via a local sensor positioned in the first area, a second set of data, (c) comparing the first set of data with the second set of data, (d) adjusting the first set of data based on the comparison in (c) to generate a corrected first set of data, (e) uploading the corrected first set of data and the second set of data to a cloud database, and (f) generating, based on the corrected first set of data and the second set of data uploaded in (e), road surface information for a road surface reference map.

In some implementations, the first set of data and the second set of data include temperature information. In some implementations, the first set of data and the second set of data include precipitation information. In some instances, the road surface information includes road events dependent on precipitation or temperature, the road events being selected from the group consisting of puddles, snowbanks, snow drifts, snow cover, flood areas, and ice patches.

According to another aspect, a method of detecting erratic driving behavior by an operator of a vehicle is disclosed. The method includes (a) obtaining, via one or more vehicle sensors, a road profile of a road segment on which the vehicle is traveling and a GPS location of the vehicle, (b) comparing the road profile obtained in (a) with candidate road profiles, (c) determining a precise location of the vehicle on the road segment, (d) determining, based on data from one or more vehicle sensors, a current driving behavior profile of the operator of the vehicle, (e) obtaining, from a cloud database, a reference driving behavior profile, (f) comparing the current driving behavior profile with the reference driving behavior profile, and (g) determining an impairment level of the operator of the vehicle.

In some implementations, the method also includes determining a confidence score for the impairment level of the operator determined in (g).

In some implementations, the impairment level of the operator is above a threshold. In some instances, the method also includes alerting the operator of the vehicle of the impairment level of the operator. In some instances, the method also includes alerting a vehicle controller of the impairment level of the operator. In some instances, the method also includes changing an operating mode of the vehicle based on the impairment level of the operator. In some instances, changing an operating mode of the vehicle includes activating an autonomous driving mode, activating a semi-autonomous driving mode, activating a lane keep assist feature, activating an adaptive cruise control feature, reducing a driving speed of the vehicle, and/or reducing a maximum driving speed of the vehicle.

According to another aspect, a method of controlling an air suspension system of a vehicle is disclosed. The method includes determining a location of the vehicle on a current road segment using a terrain-based localization system. The method also includes obtaining road information including at least one of road characteristics, road events, or a road profile of an upcoming road segment. The method also includes calculating, based on the road information, an optimal state of the air suspension for traveling along the upcoming road segment, wherein the optimal state of the air suspension includes at least one of an optimal ride height or an optimal stiffness setting. The method also includes initiating a command to set the air suspension system at the optimal state for traversal of the upcoming road event.

In some implementations, the optimal ride height comprises a height profile for the air suspension.

In some implementations, the optimal stiffness setting comprises a stiffness profile for the air suspension system.

In some implementations, determining a location of the vehicle on a current road segment using a terrain-based localization system includes comparing a current road profile to candidate road profiles in a crowd-sourced database.

According to another aspect, a method of determining a swerve behavior of a vehicle is disclosed. The method includes obtaining historical heading data sourced from previous drives of a road segment, determining a current heading of a current vehicle traversing the road segment, comparing the current heading to the historical heading data, determining that a swerve behavior is occurring, and changing one or more operating parameters of the current vehicle based on the detected swerve behavior.

In some implementations, changing one or more operating parameters comprises suspending pothole mitigation.

In some implementations, changing one or more operating parameters comprises suppressing event detection.

According to another aspect, a method of controlling travel of an actuator of a suspension system of a vehicle is disclosed. The method includes (a) obtaining, from a terrain-based localization system, road information for a road segment on which the vehicle is traveling, (b) obtaining passive suspension element parameters of the suspension system, (c) determining, a position of an actuator of the suspension system, (d) determining, based on the road information, the passive suspension element parameters, and the position of the actuator, optimal positions for the actuator for traversing the road segment, and (e) initiating, by an actuator controller, one or more actuator commands to position the actuator at the optimal positions as the vehicle traverses the road segment.

In some implementations, the passive suspension element is selected from the group consisting of end stops and secondary springs.

In some implementations, the actuator is an active suspension actuator.

In some implementations, the determination in (d) is also based on occupant comfort, fuel efficiency, and/or vehicle durability.

In some implementations, the one or more actuator commands causes the actuator to preemptively engage one or more of the passive suspension elements.

In some implementations, wherein the road information comprises information on road events.

According to another aspect, a method of creating a road profile estimate is disclosed. The method includes (a) obtaining multiple datasets, each of the multiple datasets representing a road profile estimation for a road segment, the multiple datasets originating from either different vehicles, different sensor sets, or operation at different speeds, (b) determining a range of spatial frequency where each of the multiple datasets have high fidelity, (c) blending the multiple datasets into a single road profile estimate in the spatial frequency domain, and (d) storing the single road profile estimate in a database.

According to another aspect, a method of localizing a vehicle is disclosed. The method includes (a) obtaining a road profile from a map layer for a road segment, (b) obtaining, via one or more sensors of the vehicle, a new dataset representing a road profile estimate for the road segment, (c) determining a range of validity in spatial frequency of the road profile from the map layer, (d) determining a range of validity in spatial frequency of the new dataset, and (e) localizing the vehicle based on comparing the road profile from the map layer and the new dataset in an overlapping range of spatial frequency where both the new dataset and the road profile from the map layer have high fidelity.

According to another aspect, a method of localizing a vehicle is disclosed. The method includes sensing, based on a first sensor system of a vehicle, a first signal corresponding to a first parameter, the first signal having a first availability and a first accuracy. The method also includes sensing, based on a second sensor system of the vehicle, a second signal corresponding to a second parameter, wherein the second sensor system is a terrain-based localization system and the second signal is based on a road profile of a road segment on which the vehicle is traveling, the second signal having a second availability and a second accuracy. The method also includes blending the first signal and the second signal based on the first and second availabilities and the first and second accuracies, wherein a blended signal has a third availability higher than the first availability or the second availability.

In some implementations, the first sensor system comprises at least one of a GPS localization system, a vision-based localization system, a distance-based localization system (e.g., LIDAR/RADAR), or a vehicle motion sensing system (e.g., dead reckoning).

In some implementations, the terrain-based localization employs crowd-sourced terrain maps.

According to another aspect, a method of localizing a vehicle traversing a road segment is disclosed. The method includes (a) determining a first vehicle circumstance at a first time, (b) choosing a first localization method to employ based on the first vehicle circumstance, (c) localizing the vehicle using the first localization method, (d) determining a second vehicle circumstance at a second time, (e) choosing a second localization method to employ based on the second vehicle circumstance, and (f) localizing the vehicle using the second localization method.

In some implementations, the first localization method and the second localization method are selected from the group consisting of GNSS localization, terrain-based localization, and dead reckoning.

In some implementations, the vehicle circumstance and the second vehicle circumstance are selected from the group consisting of weather conditions, overhead obstructions, cellular data availability, and GNSS satellite availability.

According to another aspect, a method of adaptively tuning a vehicle is disclosed. The method includes (a) identifying a tuning parameter relating to one or more modifiable settings for vehicle performance, (b) obtaining, from a terrain-based localization system, road event information for a road segment on which the vehicle is traveling, (c) localizing the vehicle on the road segment, (d) determining that the vehicle has interacted with the road event, (e) determining a performance metric for the tuning parameter during the interaction of the vehicle with the road event, (f) comparing the performance metric with one or more stored performance metrics, (g) determining a new value for the tuning parameter based on the comparison in (f), and (h) updating a value of the tuning parameter.

In some implementations, comparing the performance metric with one or more stored performance metrics comprises using stored performance metrics from the vehicle or a similar vehicle traversing a similar event with a different tuning parameter.

In some implementations, comparing the performance metric with one or more stored performance metrics comprises using stored performance metrics from the vehicle or a similar vehicle traversing a similar event with the same tuning parameter.

According to another aspect, a method of controlling a vehicle is disclosed. The method includes determining a location of the vehicle on a road segment using a terrain-based localization system, wherein the road segment includes multiple lanes. The method also includes identifying a lane of the multiple lanes corresponding to the location of the vehicle. The method also includes determining that the lane includes a road event. The method also includes initiating a command to employ an event-specific control strategy for the road event. The method also includes recording road data associated with the road event as the vehicle interacts with the road event. The method also includes uploading the road data associated with the road event to a cloud database.

According to one aspect, the disclosure provides a method of monitoring a condition of a segment of a road surface. The method includes: receiving, from at least one vehicle that interacts with the segment, information about an aspect of the segment at a cloud-based database; processing the received information; determining a value of a parameter associated with the aspect of the segment, based on the processed information; comparing the value determined with a threshold value; and based on the comparison, determining the condition of the segment of the road surface. In some embodiments the parameter may be a physical dimension, such as, a depth, a width or a length of a pothole, or a height, a width or a length of a frost heave. In some implementations of the disclosed method, the number of vehicles from which information is received may be greater that a preset number of vehicles. In some implementations of the disclosed method, the duration of time, during which information is received from the vehicles is received, is greater is a predetermined time period. Such a time period may be: an hour, a day a week, a month, or a year. In some implementations of the disclosed method, the aspect may be a pothole, a bump, a surface crack, surface roughness, coefficient of friction, road camber, or road slope. In some implementations of the disclosed, method, information is received from at least two vehicles and the processing involves averaging data received from the at least two vehicles. In some implementations of the disclosed method, the aspect of the road segment is a pothole, a bump, a surface crack, a manhole cover, a storm drain grate, a frost heave. In some implementations of the disclosed method, the aspect of the road segment may be roughness of the road segment, coefficient of friction of the road segment, camber of the road segment, or slope of the road segment, here the parameter may be the magnitude or degree of road roughness, road coefficient of friction, road camber, or road slope. In some implementations, the disclosed method may include reporting the condition of the road to a client, when the value of the parameter is greater than a threshold value. In some implementations of the disclosed method, the parameter may be the rate of change of a quantity associated with the aspect.

According to one aspect, the disclosure provides a method of tracking a rate of change, over time, of at least one parameter associated with a segment of a road surface. The method may include: receiving data from at least two vehicles, where the data includes information obtained using one or more sensors, when each of the at least two vehicles interacts with the segment of the road surface; determining a rate at which the parameter is changing, based on the data received; and reporting the determined rate entity that may be a client. Some implementations of the disclosed method include comparing the rate determined with a preset threshold rate and reporting the rate when the rate is greater than the threshold value. In some implementations of the disclosed method the parameter associated with the segment of a road surface may be a dimension of a road surface anomaly. In some implementations where the anomaly is a pothole, the dimension may be the length, the width, and/or the depth of the pothole.

According to one aspect, the disclosure provides a method of characterizing an aspect of a road surface anomaly. The method may include: receiving, in the cloud, data from at least two vehicles, where the received data from each of the vehicles is obtained using sensors, on-board the vehicles, when each of the vehicles is interacting with the road surface anomaly; processing the data received in the cloud; based on the processed data, determining at least one dimension of the anomaly; and reporting information about the anomaly to a client entity, when the dimension is greater that a threshold value. In some implementations of the disclosed method, the information includes the location of the anomaly and at least one dimension of the anomaly. In some implementations of the disclosed method, the anomaly may be a pothole and the dimension may be the length, the width, or the depth of the pothole.

According to another aspect, a method of operating a vehicle traveling along a road is disclosed. The method includes (a) at the motor vehicle, receiving data about an upcoming road content, (b) at the motor vehicle, receiving data about a state of the vehicle, (c) based on the data received in (a) and (b), determining whether a cue should be given to at least one occupant of the vehicle about the upcoming road content, and (d) based on the determination in (c) providing a cue to the at least one passenger.

In some implementations, the upcoming road content is selected from the group consisting of a pothole, a bump, and a turn. In some instances, the state of the vehicle includes the vehicle's speed. In some instances, the cue in step (d) includes a cue selected from the group consisting of visual, audio, or tactile cues. In some instances, the method also includes using an actuator, wherein the actuator is used to provide the cue in step (d), and wherein the actuator is selected from the group consisting of a suspension actuator, a seat actuator, an air-spring.

According to another aspect, a method of operating a vehicle traveling along a road is disclosed. The method includes (a) at the motor vehicle, receiving data about an upcoming road content, (b) at the motor vehicle, receiving data about a state of the vehicle, (c) based on the data received in (a) and (b), determining whether a cue should be given to at least one occupant of the vehicle about the upcoming road content, (d) based on the determination in (c), travelling along the road without providing any cue about the upcoming road content to the at least one occupant of the vehicle.

According to one aspect, the disclosure provides a method of operating a vehicle while the vehicle is traveling along a road. The method may include receiving information from an external source, such as for example, a cloud-based database, regarding the position of a road feature (e.g., pothole, a bump, a speed bump, a crack, a manhole cover, a storm-drain grate) and the probability of interacting with the feature; and, at least partially based on the probability, adjusting the operation one or more systems in the vehicle. In some implementations of the disclosed method, the one or more systems may be a propulsion system, a steering system, an active suspension, a semi-active suspension system, or the braking system.

According to another aspect, a method of operating a vehicle is disclosed. The method includes (a) collecting local ambient temperature information from a multiplicity of sources, (b) correlating the information in (a) in a cloud-based map, (c) providing access to the collated information in (b) to a vehicle based on its location, and (d) adjusting the operation of at least one vehicle system based on the information provided in (c).

According to one aspect, the disclosure provides a method of controlling the response of a vehicle to a road induced disturbance, such as for example, a disturbance that may be caused by an interaction between a vehicle and a road surface feature. Road surface features may include, without limitation, potholes, bumps, cracks, frost heaves, road friction gradients, road pitch gradients, and road camber gradients. The method may include receiving information about at least one aspect of a feature, from an external source (e.g. crowd-sourced data from a cloud-based source), before interacting with the feature with the vehicle; generating a first output and a second output with a proactive controller on-board the vehicle, at least partially based on the a priori information about the feature, where the first output is a first command signal for an actuator on-board the vehicle and the second output is a predicted response of a sensor, on-board the vehicle, to the disturbance; generating a third output, with a reactive controller, at least partially based on an error signal received by the reactive controller, where the third output is a second command signal for the on-board actuator, and where the error signal is based on the difference between the second output and the signal generated by the on-board sensor as a result of the disturbance; and operating the actuator based to the first output and the third output.

It should be appreciated that the foregoing concepts, and additional concepts discussed below, may be arranged in any suitable combination, as the present disclosure is not limited in this respect. Further, other advantages and novel features of the present disclosure will become apparent from the following detailed description of various nonlimiting embodiments when considered in conjunction with the accompanying figures.

**BRIEF DESCRIPTION**

The accompanying drawings are not intended to be drawn to scale. In the drawings, each identical or nearly identical component that is illustrated in the various figures may be represented by a like numeral. For purposes of clarity, not every component may be labeled in every drawing. In the drawings:

FIG. 1 is a schematic of a terrain-based advanced driver assistance system configured to alert a driver of a vehicle and/or change one or more aspects of vehicle behavior.

FIG. 2 shows a vehicle equipped with a terrain-based advanced driver assistance system traversing a road segment including a plurality of road events such as ice, a puddle, and an area of high amplitude input content.

FIG. 3 shows a vehicle equipped with a terrain-based advanced driver assistance system traversing a road segment including a plurality of road events including a speed bump, a pothole, and a change in elevation.

FIG. 4 is a flowchart showing a system and method for determining an optimal speed operating parameter for a vehicle.

FIG. 5 shows a vehicle equipped with a terrain-based advanced driver assistance system traversing a road segment including a bridge.

FIG. 6 is a flowchart showing a method for determining a following distance for an adaptive cruise control system of a vehicle.

FIG. 7 is a flowchart showing a method for determining a braking trigger distance for an automatic emergency braking system of a vehicle.

FIG. 8 shows a vehicle equipped with a terrain-based advanced driver assistance system traveling on a road segment and approaching a road event, e.g., a pothole.

FIG. 9 shows the vehicle of FIG. 8 performing an intra-lane event avoidance behavior to straddle the pothole.

FIG. 10 shows the vehicle of FIG. 8 performing an avoidance behavior to navigate around the pothole.

FIG. 11 is a flowchart showing a method of operating a terrain-based lane keep assist system of a vehicle.

FIG. 12 shows a vehicle equipped with a terrain-based advanced driver assistance system traveling on a road segment on a path offset from a center of a lane.

FIG. 13 shows a vehicle equipped with a terrain-based advanced driver assistance system traveling on a road segment with an exit lane.

FIG. 14 shows a vehicle equipped with a terrain-based advanced driver assistance system traveling on a road segment with a left-hand turn.

FIG. 15 is a flowchart showing a method of operating a trajectory planning system of a vehicle.

FIG. 16 shows a zone of headlight illumination for a vehicle traveling on a flat road surface.

FIG. 17 shows a zone of headlight illumination for a vehicle with a terrain-based adaptive headlight system turned off.

FIG. 18 shows a zone of headlight illumination for a vehicle with a terrain-based adaptive headlight system turned on.

FIG. 19 is a flowchart showing a method for providing a terrain-based insights to an adaptive headlight system of a vehicle.

FIG. 20 illustrates a vehicle with a sensor system configured to be adapted based on terrain-based information.

FIG. 21 is a flowchart showing a method for providing terrain-based insights to an adaptive ADAS sensor system of a vehicle.

FIG. 22 shows a vehicle traveling on a road segment where a plurality of paths of previous drives have been combined into an aggregate path.

FIG. 23 depicts a vehicle utilizing the aggregate path in conjunction with a rear steering correction system to avoid an obstacle.

FIG. 24 is a flowchart of a method using crowd-sourced travel path data to generate a command for a rear steering correction system.

FIG. 25 illustrates a vehicle with a heads-up display configured to illustrate obscured road surface features.

FIG. 26 is a flowchart showing a method of presenting obscured road surface features on a display.

FIG. 27 shows a lane detection system operating in an oncoming traffic lane drift scenario.

FIG. 28 shows a lane detection system operating in a multi-lane lane drift scenario.

FIG. 29 shows a lane drift detection system operating in an intra-lane lane drift scenario.

FIG. 30 shows two graphs of correlations between driven and expected tracks during a lane drift maneuver.

FIG. 31 shows an example of a first vehicle preparing to perform a lane change maneuver near an oncoming vehicle.

FIG. 32 is a flowchart showing a process of alerting a driver of a vehicle that the vehicle is approaching an overtaking zone.

FIG. 33 shows a vehicle uploading a new recorded road profile to a database.

FIG. 34 shows a vehicle not uploading a recorded road profile to a database because the recorded road profile matches an existing road profile in the database.

FIG. 35 show a vehicle uploading a recorded road profile to a database because the recorded road profile does not match an existing road profile in the database.

FIG. 36 shows a schematic of uploading road information based on a maturity level of the database.

FIG. 37 is a flowchart showing a process of updating a cloud database of road data.

FIG. 38 is a diagram of a vehicle traveling along a road with GPS sampling where an error associated with each end point is $\pm$ 5 meters.

FIG. 39 is a block diagram of a speed correction system configured to determine road slope for terrain-based localization.

FIG. 40 is a diagram of an actual vehicle path compared to a straight-line path between two GPS coordinates.

FIG. 41 is a schematic of a force command generated based on terrain-based localization that dampens vehicle body motion caused while traversing a road surface.

FIG. 42 is a block diagram of a model supervisor for a terrain-based localization system.

FIG. 43 is a block diagram of a system for optimization of a real-time road estimator.

FIG. 44 is a graph showing individual road estimates, an average road estimate, and the true road.

FIG. 45 illustrates vehicle routes to various frequent and non-frequent destinations.

FIG. 46 illustrates a block diagram of the process of downloading road surface data for a new or infrequent destination.

FIG. 47 illustrates a cloud-based vehicle localization and control system where data privacy is maintained.

FIG. 48 illustrates a vehicle approaching a pothole,

FIG. 49 illustrates the vehicle in FIG. 48 interacting with the pothole,

FIG. 50 illustrates the vehicle monitoring the pothole shown in FIG. 48 with a rear facing video camera.

FIG. 51 is a flow chart depicting a method of obtaining road surface information.

FIG. 52 illustrates a vehicle traveling on a flat road.

FIG. 53 illustrates a vehicle traveling on a cambered road, the vehicle being in communication with a cloud database.

FIG. 54 is a flow chart depicting a method of determining a correction signal for a vehicle system.

FIG. 55 illustrates a block diagram of a process for changing consumption based on a confidence level of location accuracy.

FIG. 56 shows a location including multiple vehicles and a stationary unit all in communication with a cloud database including mapping information for the location.

FIG. 57 is a flow chart depicting a method of updating a road surface map using roving and local sensors.

FIG. 58 is a flowchart of a process for detecting erratic driving behavior by an operator of a vehicle.

FIG. 59 is a flowchart of a process for proactively controlling an air suspension system of a vehicle.

FIG. 60 is a graph showing an estimate of a vehicle heading from a plurality of traversals of a road segment.

FIG. 61 is a flowchart of a method of determining a swerve behavior of a vehicle.

FIG. 62 shows a vehicle with a travel management system including a suspension actuator that is configured to be controlled based on information from a terrain-based localization system.

FIG. 63 is a flow chart of a method of controlling travel of an actuator of a suspension system of a vehicle.

FIG. 64 is a flowchart of a process for blending datasets into a single road profile estimate.

FIG. 65 is a block diagram of a sensor fusion method for localization of a vehicle.

FIG. 66 is a flow chart of a method of localizing a vehicle traversing a road segment.

FIG. 67 shows a vehicle using different methods for localization based on vehicle circumstances.

FIG. 68 shows a vehicle with an adaptive tuning system traversing a road segment with multiple road events.

FIG. 69 is a flow chart depicting a method of adaptively tuning a vehicle.

FIG. 70 shows vehicles traveling in different lanes of a multi-lane road where each lane includes differing road events.

FIG. 71 is a flow chart depicting a method of controlling a vehicle based on multi-lane event awareness.

FIG. 72 illustrates a vehicle approaching traveling along a road and approaching a pothole and a bump.

FIG. 73 illustrates the vehicle of FIG. 72 interacting with the pothole shown in FIG. 72 and communicating with the cloud.

FIG. 74 illustrates the vehicle of FIG. 72 interacting with the bump shown in FIG. 72 and communicating with the cloud.

FIG. 75 illustrates a vehicle interacting with the pothole shown in FIG. 72 when the pothole has gotten larger.

FIG. 76 shows a block diagram of a method for receiving, processing, and reporting data about a road surface.

FIG. 77 shows a block diagram of a method for providing a cue to at least one vehicle occupant.

FIG. 78 illustrates a vehicle travelling along a two-lane road and approaching a pothole that spans the entire road.

FIG. 79 illustrates a vehicle travelling along a road and approaching a pothole that spans the entire road.

FIG. 80 illustrates a vehicle travelling along a road and approaching a pothole that may be avoided by performing a maneuver.

FIG. 81 shows one embodiment of a layout of a proactive control block in a feedback loop.

FIG. 82 shows one embodiment of content of a proactive control calculation block.

FIG. 83 is a flow chart depicting a method of controlling a response of a vehicle to a road induced disturbance caused by a surface feature of the road.

FIG. 84 is a flow chart depicting a method of operating a vehicle using ambient temperature information.

## DETAILED DESCRIPTION

A vehicle traveling along a road, autonomously or under the control of a driver, may interact with one or more road surface features that may expose the vehicle and/or one or more vehicle occupants to certain forces or accelerations. Such road features may affect the comfort of vehicle occupants as well as wear-and-tear of the vehicle. The magnitude, direction, and/or frequency content of such forces or accelerations may be a function of the characteristics of one or more road surface features. A typical road may include various types of road surface features, such as for example, road surface anomalies including, but not limited to potholes, bumps, surface cracks, expansion joints, frost heaves, rough patches, rumble strips, storm grates, etc.; and/or road surface properties, including but not limited to road surface texture, road surface composition, surface camber, surface slope, etc. Road surface properties may affect road surface parameters, such for example, the friction coefficient between the tires of a vehicle and the road, traction and/or road-grip. Such parameters may determine how effectively certain maneuvers, such as turning and stopping, may be performed at various speeds and vehicle loading.

The inventors have recognized the benefits of controlling operation of various systems of a vehicle based on the above-noted road surface properties and features. However, the types and characteristics of road surface features and/or properties may vary, for example, from road to road, as a function of longitudinal and/or lateral location on a given road. The effect of vehicle interaction with a given road surface feature, on the vehicle and/or an occupant, may also vary as a function of vehicle speed at the time of the interaction between the vehicle and the road surface feature. The characteristics of a road surface feature may also vary, for example, based on weather conditions, and/or as a function of time. For example, if the road surface feature is a pothole, it may gradually appear and grow, in length, width, and/or depth, over the winter months because of repeated freeze/thaw cycles and then be repaired in a matter of hours or less and effectively disappear. Due to the changing nature, and previously unmapped layout, of a road surface, typically vehicles have sensed the interactions of a vehicle with the road surface and then operated the various autonomous and/or semi-autonomous systems of the vehicle in reaction to the detected characteristics and road surface features the vehicle encounters.

Properties and road surface features of a road surface a vehicle might be driven over may be mapped to provide forward-looking information about the road surface features located along a path of travel of a vehicle. This information about the road surface features ahead of the vehicle may be used to, for example, dynamically tune, prepare, and/or control various automated or partially automated systems in the vehicle (such as for example, suspension systems (e.g., semi or fully active), propulsion systems, adaptive driver assistance systems (ADAS), electric power steering systems (EPS), antilock braking systems (ABS), etc.). The inventors have recognized that when there is a physical interaction between a vehicle and a road surface feature, the vehicle is exposed to one or more perceptible forces that are induced by the interaction. Thus, with a preview of the road ahead, a vehicle controller may more effectively react to road surface features when there is a physical interaction between the road surface feature and the vehicle.

While information about a road surface may be useful for the control of various systems of a vehicle, the inventors have recognized that there are challenges to obtaining and using such road surface information. One such challenge is knowing with sufficient accuracy and resolution the location of the vehicle, so that the information regarding road features ahead of the vehicle may be used to more effectively control the vehicle. For example, if the location of the vehicle is not sufficiently accurate, a vehicle controller may take an action that does not mitigate a physical interaction between the vehicle and the road feature. As another example, if the location of the vehicle is not sufficiently accurate, a vehicle controller may take an action that worsens a physical interaction between the vehicle and the road feature or otherwise worsens a vehicle occupant's comfort. For example, an accuracy on Global Navigation Satellite Systems (GNSS) location tends to be on the order of about 7 m to 30 m. With such an accuracy, a vehicle would not only be unable to tell when a vehicle would interact with a particular road surface feature (e.g., a pothole) but it also would be unable to tell if the vehicle would interact with that road surface feature in any manner.

In view of the above, the inventors have recognized that localization systems and methods incorporating terrain-based localization may offer better resolution than a purely GNSS based system. In a terrain-based localization system, as a vehicle travels along a road, a measured road profile may be obtained by measuring vertical motion of a portion of the vehicle using one or more motion sensors attached to the vehicle. This measured road profile may be compared with a reference road profile, and based at least in part on this comparison, the position of the vehicle along the road may be determined. However, the inventors have recognized that continuous pattern matching between a measured profile and a reference profile may require substantial data transmission and/or manipulation. That is, a single vehicle may need to stream sufficient road information such that the measured road profile may be continuously compared to the reference road profile while the vehicle is controlled based on the forward road information. The network bandwidth requirements may be substantial for a system employing a plurality of vehicles across an entire road network such that implementing such a network may not be commercially feasible. Additionally, continuous pattern matching between a measured profile and a reference profile may require computing power beyond what is commercially feasible to employ in a vehicle. If the computation is done remotely, such continuous pattern matching further requires network bandwidth which may already be commercially unfeasible.

In view of the above, the inventors have recognized the benefits of a road segment organizational structure for road information and related methods that provide accurate terrain-based localization in a discretized manner, thereby reducing network and computational requirements to implement terrain-based localization. Each road segment may have a predetermined length, such that a road is broken into multiple road segments. As a vehicle approaches an end point of a road segment, a road profile of the road segment may be compared with the last portion of a measured road profile with an approximately equivalent length. In this manner, a vehicle may verify its precise position based on terrain once per road segment of a predetermined length, a method which is less computationally and network bandwidth intensive.

The inventors have recognized that, given computational and/or bandwidth limitations, it may be advantageous to implement a terrain-based localization method such that the comparison between observed data and reference data occurs only at predetermined intervals (e.g., time or distance intervals). However, in between these precise determinations of a vehicle's location using terrain-based localization, a vehicle's location may become less certain as the vehicle travels further away from the last recognized road surface feature. Thus, in certain embodiments, in between these predetermined intervals and/or road surface locations, dead-reckoning may be used to estimate the location of the vehicle (e.g., the position of the vehicle along a road) based on the previously identified location (e.g., the previously identified position along the road). For example, in certain embodiments and as described in detail herein, a terrain-based localization method may include first collecting, as a vehicle travels along a road, data from one or more sensors attached to the vehicle. The collected data may be processed (e.g., transformed from time to distance domain, filtered, etc.) to obtain measured data (e.g., a measured road profile). The measured data may then be compared with reference data associated with the road (e.g., a reference or stored road profile) and, based at least in part on this first comparison, a position of the vehicle along the road at a first point in time may be determined. Once the position of the vehicle along the road at the first point in time is determined, dead reckoning may be used to track the vehicle's position as it subsequently travels along the road. During the period of dead reckoning, new data from the one or more sensors may be collected and optionally processed to yield new observed data. In certain embodiments, upon determining that the vehicle has traveled a predetermined distance since the first point in time, the new observed data may be compared with reference data. Based at least upon this second comparison, the position of the vehicle along the road at a second point in time may be determined. The process may then be repeated as the vehicle traverses sequentially located road segments, such that dead reckoning is used to track further movement of the vehicle, until it is determined that the vehicle has traveled the predetermined distance since the second point in time the location was determined. Upon this determination, terrain-based localization may be used to localize the vehicle at a third point in time. Thus, in some embodiments comparisons may be carried out intermittently at predetermined distance intervals, which may be constant intervals, instead of continuously comparing measured (e.g., the collected data and/or the processed data) data with reference data. Alternatively or additionally, terrain-based localization may be carried out upon determining that a predetermined time interval has passed since the first or previous point in time, rather than a predetermined distance interval. During these time/distance intervals, dead-reckoning may be used, exclusively or in addition to other localization systems that may be used to track the location (e.g., coordinates or position) of the vehicle based on a previously established location. Additionally, while the use of constant time and/or distance intervals are primarily disclosed herein, it should be understood that predetermined time and/or distance intervals used when determining a vehicle's location on different road segments may either be constant and/or variable between each other along different road segments as the disclosure is not limited in this fashion.

The inventors have also recognized that terrain-based determination of location for a vehicle may be supplemented by GNSS location estimations and the use of discretized road segments. That is, rather than using dead reckoning to perform terrain-based comparisons in discrete time and/or distance intervals, a location estimation from a GNSS system may be employed. For example, in certain embodiments and as described in detail herein, a terrain-based localization method may include first collecting, as a vehicle travels along a road, data from one or more sensors attached to the vehicle. The collected data may be processed (e.g., transformed from time to distance domain, filtered, etc.) to obtain measured data (e.g., a measured road profile). The measured data may then be compared with reference data associated with the road (e.g., a reference or stored road profile) and, based at least in part on this first comparison, a position of the vehicle along the road at a first point in time may be determined. Once the position of the vehicle along the road at the first point in time is determined, a GNSS may be used to track the vehicle's position as it subsequently travels along the road which may be used to determine a distance the vehicle has traveled along the road since the vehicle location was determined. During the period of GNSS tracking, new data from the one or more sensors may be collected and optionally processed to yield new observed data. In certain embodiments, upon determining that the vehicle has traveled a predetermined distance since the first point in time based at least in part on the GNSS tracking data, the new observed data may be compared with reference data. Based at least upon this second comparison, the position of the vehicle along the road at a second point in time may be determined. The process may then be repeated, such that GNSS tracking is used to track further movement of the vehicle, until it is determined that the vehicle has traveled the predetermined distance since the second point in time. Upon this determination, terrain-based localization may be used to localize the vehicle at a third point in time. Thus, in some embodiments, comparisons may be carried out intermittently at predetermined distance intervals, which may be constant intervals, or in some instances non-constant predetermined distance intervals associated with the different road segments, instead of continuously comparing measured (e.g., the collected data and/or the processed data) data with reference data. In some cases, employing a GNSS instead of dead reckoning may reduce error related to the predetermined distance. In some embodiments, GNSS may be used in combination with dead reckoning to further reduce error related to the predetermined distance, as the present disclosure is not so limited.

In some embodiments, in a road segment architecture, a given road may be segmented into a series of road segments of predetermined lengths that in some embodiments may be equal to each other, though embodiments in which road segments of unequal predetermined lengths are used are also contemplated. Each road segment may include one or more road profiles that may be employed for terrain-based localization as described herein.

The road profiles may be obtained by measuring vertical motion of a portion of a vehicle using one or more motion sensors attached to the vehicle as the vehicle traverses the road segment. The road segments of predetermined equal lengths or unequal lengths may be referred to as "slices". In certain embodiments, consecutive road segments may be arranged in a contiguous fashion such that the end point of one road segment approximately coincides with the starting point of a subsequent road segment. In some embodiments, the consecutive road segments may be non-overlapping, such that an end point of one road segment coincides with a starting point of a subsequent road segment. Alternatively, in some embodiments, road segments may overlap, such that the start point of a subsequent road segment may be located within the boundaries of a previous road segment. Road segments may be, for example, any appropriate length, including, but not limited to, ranges between any combination of the following lengths: 20 meters, 40 meters, 50 meters, 60 meters, 80 meters, 100 meters, 120 meters, 200 meters or greater. In some embodiments, a road segment may have a length between 20 and 200 meters, 20 and 120 meters, 40 and 80 meters, 50 and 200 meters, and/or any other appropriate range of lengths. Other lengths that are longer or shorter than these lengths are also contemplated, as the present disclosure is not so limited. In certain embodiments, the length of the road segment into which a road is divided may depend on the type of road and/or the average speed travelled by vehicles on the road or other appropriate considerations. For example, on a single lane city road, vehicles may generally travel at relatively low rates of speed as compared to multilane highways. Therefore, on a city road (or other road with relatively low travel speeds) it may be advantageous or otherwise desirable to have relatively shorter road segments (e.g., between 20 and 60 meters) than on highways or other roads with relatively high travel speeds (e.g., between 80 and 120 meters), such that each road segment may correspond to an approximate average travel time from start to end of the road segment regardless of average travel speed on the road.

In some embodiments, a method of localizing a vehicle using road segments includes measuring a road profile with a vehicle. The method may also include determining is a vehicle is within a threshold distance of a road segment end point. For example, in some embodiments, determining the vehicle is within a threshold distance of a road segment endpoint includes estimating a location of the vehicle with a GNSS, dead reckoning from a last known vehicle location, and/or any other appropriate localization method. The method may also include comparing a reference road profile corresponding to the end portion of the road segment along a vehicle's path of travel to the measured road profile. In some embodiments, a last portion of the measured road profile may be compared to the reference road profile as the vehicle traverses the road segment, where the last portion of the measured road profile and reference road profile have approximately equal (e.g., equal) lengths. The method may include determining a correlation between the measured road profile and the reference road profile, for example, using a cross-correlation function or another appropriate function that assesses similarity between the measured road profile and the reference road profile (e.g., dynamic time warping, etc.). The method may also include determining if the correlation between the measured road profile and the reference road profile exceeds a threshold correlation. The threshold correlation may be predetermined based at least in part on a road type, as will be discussed in detail further below. If the correlation exceeds the threshold correlation, the location of the vehicle may be determined, as the position of the vehicle may correspond to the location of the road segment end point. If the correlation does not exceed the threshold correlation, the location of the vehicle may not be determined, and the method may continue with the vehicle advancing down the road and re-determining a correlation between the measured road profile (including additional data measured while advancing down the road) and the reference road profile. In addition to the above, as the vehicle approaches the endpoint of the last portion of the road profile, the correlation between the measured road profile and the reference road profile may increase to a peak at a location corresponding approximately to the endpoint of the reference road profile. Accordingly, in some embodiments, the method may include detecting a peak in the correlation between the measured road profile and the reference road profile while the vehicle moves through an area within a threshold distance of the road segment end point. Additional details of such peak detection are discussed in further detail below.

The various embodiments disclosed herein are related to determining the location of a vehicle on a road surface and/or for creating maps of road segments including information that may be used to locate a vehicle on a road surface. Such information may provide a priori information to a vehicle about one or more road surface features and/or road surface properties located on the road segment along an upcoming portion of the path of travel of the vehicle. As noted previously, by knowing this information prior to the vehicle encountering a given portion of a road segment, operation of one or more systems of a vehicle, e.g., autonomous and/or semi-autonomous systems of the vehicle, may be at least partly controlled based on this information. Accordingly, any of the embodiments disclosed herein may provide information, e.g., vehicle, road surface feature, and/or road parameter locations, that may be used by one or more vehicles to control one or more vehicle systems. Thus, in some embodiments, one or more systems of a vehicle may be controlled based at least in part on a determined location of a vehicle, dead reckoning, a reference profile of a road segment, and combinations of the foregoing. Examples of systems that may be controlled may include suspension systems (semi or fully active), propulsion system, advanced driver assistance systems (ADAS), electric power steering (EPS), antilock braking systems (ABS), navigation systems of autonomous vehicles, and/or any other appropriate type of vehicle system.

According to exemplary embodiments described herein, a vehicle may include one or more wheels and one or more vehicle systems that are controlled by a vehicle control system. A vehicle control system may be operated by one or more processors. The one or more processors may be configured to execute computer readable instructions stored in volatile or non-volatile computer readable memory that when executed perform any of the methods disclosed herein. The one or more processors may communicate with one or more actuators associated with various systems of the vehicle (e.g., braking system, active or semi-active suspension system, driver assistance system, etc.) to control activation, movement, or other operating parameter of the various systems of the vehicle. The one or more processors may receive information from one or more sensors that provide feedback regarding the various portions of the vehicle. For example, the one or more processors may receive location information regarding the vehicle from a Global Navigation Satellite System (GNSS) such as a global positioning system or other positioning system. The sensors on board the vehicle may include, but are not limited to, wheel rotation speed sensors, inertial measurement units (IMUs), optical sensors (e.g., cameras, LIDAR), radar, suspension position sensors, gyroscopes, etc. In this manner, the vehicle control system may implement proportional control, integral control, derivative control, a combination thereof (e.g., PID control), or other control strategies of various systems of the vehicle. Other feedback or feedforward control schemes are also contemplated, and the present disclosure is not limited in this regard. Any suitable sensors in any desirable quantities may be employed to provide feedback information to the one or more processors. It should be noted that while exemplary embodiments described herein may be described with reference to a single processor, any suitable number of processors may be employed as a part of a vehicle, as the present disclosure is not so limited.

According to exemplary embodiments described herein, one or more processors of a vehicle may also communicate with other controllers, computers, and/or processors on a local area network, wide area network, or internet using an appropriate wireless or wired communication protocol. For example, one or more processors of a vehicle may communicate wirelessly using any suitable protocol, including, but not limited to, WiFi, GSM, GPRS, EDGE, HSPA, CDMA, and UMTS. Of course, any suitable communication protocol may be employed, as the present disclosure is not so limited. For example, the one or more processors may communicate with one or more servers from which the one or more processors may access road segment information. In some embodiments, one or more servers may include one more server processors configured to communicate in two-way communication with one or more vehicles. The one or more servers may be configured to receive road profile information from the one or more vehicles, and store and/or utilize that road profile information to form road segment information. The one or more servers may also be configured to send reference road profile information to one or more vehicles, such that a vehicle may employ terrain-based localization according to exemplary embodiments described herein, and one or more vehicle systems may be controlled or one or more parameters of the one and/or more vehicle systems may be adjusted based on forward looking road profile information.

In the various embodiments described herein, in some instances, a method of terrain-based localization may be based on peak detection of a cross-correlation between a reference road profile and a measured road profile as a vehicle passes through a road segment end point. In some embodiments, a measured road profile of a predetermined length approximately equivalent to that of the reference road profile may be cross correlated to the reference road profile once the vehicle enters a threshold range of the road segment end point to obtain a correlation between 0 and 1. In some embodiments, the threshold range of the road segment end point may be less than 15 m, 10 m, 5 m, and/or any other appropriate range. In some embodiments, the threshold range of the road segment end point may be based at least partly on a resolution of a GNSS onboard the vehicle. In such embodiments, the threshold range may be approximately equal (e.g., equal) to the resolution of the GNSS.

According to exemplary embodiments described herein, once a vehicle enters the threshold range of the road segment end point, a cross correlation between the measured road profile and reference road profile may be performed and the correlation determined. If the correlation does not exceed a threshold correlation, the vehicle location may not be determined, and the process of terrain-based localization may continue with the vehicle continuing to move down the road. While the vehicle is within the threshold range of the road segment end point, a correlation may be re-determined effectively continuously (e.g., at each time step) as the measured road profile includes the most recent data from the vehicle and removes the oldest data falling outside of the predetermined length. Each time a correlation is determined, it may be determined if the correlation exceeds the threshold correlation. Once the correlation exceeds the threshold correlation at a given time step, it may be determined that the vehicle was located at the road segment end point at that time step. In some embodiments, a peak detection algorithm may be applied to determine if the correlation between the measured road profile and reference road profile is a maximum correlation. In some such embodiments, a slope of the correlation may be determined between the most recent time step and earlier time steps. In some embodiments, a peak may be determined where the slope is negative, and the correlation is decreasing after the correlation exceeded the threshold correlation. Of course, any suitable peak detection function may be applied, as the present disclosure is not so limited. In some embodiments, a threshold correlation may be greater than or equal to 0.6, 0.7, 0.8, 0.9, and/or any other appropriate value. In some embodiments, the threshold correlation may be based at least party on the type of road segment. For example, a highway or high-speed road may have a greater threshold correlation than a low-speed road where more variations in a path taken by a vehicle may be present. According to this example, in some embodiments, a threshold correlation for a highway may be greater than or equal to 0.8, and a threshold correlation for a non-highway road may be greater than or equal to 0.5.

According to exemplary embodiments described herein, road segment information may be stored in one or more databases onboard a vehicle and/or in one or more remotely located servers. In some embodiments, a database may be contained in non- transitory computer readable memory. In certain embodiments, the database may be stored in memory that is exclusively or partially located remotely (e.g., "in the cloud") from the vehicle, and the database and the vehicle may exchange information via a wireless network (e.g., a cellular network (e.g., 5G, 4G), WiFi, etc.). Alternatively, in some embodiments, the database may be stored in non-transitory memory that is located on the vehicle. In certain embodiments. Road segments may be specific for a direction of travel, such that for "two- way" roads (i.e., roads which support simultaneous travel in opposing directions), there may be a distinct set of road segments for each direction of travel (e.g., a first set of road segments for travel in a first direction and a second set of distinct road segments for travel in a second direction).

As used herein, road profile refers to any appropriate description or characterization of a road surface as a function of distance. For example, a road profile may refer to a road height profile that describes variations of height of a road's surface as a function of distance along a given road segment. Alternatively or additionally, a road profile may refer to mathematically related descriptions of road surface. For example, a road profile may refer to a "road slope" profile that describes road slope as a function of distance along a road segment. A road profile of a road segment may be obtained, for example, by measuring - as a vehicle traverses the road segment - vertical motion (e.g., acceleration data, velocity data, position data) of a portion of the vehicle (e.g., to the vehicle's wheel, wheel assembly, or other part of the unsprung mass; or a portion of the vehicle's sprung mass), and optionally processing this data (e.g., transforming it from time to distance domains based on operating speed, integrating the data with respect to time, filtering it (e.g., to remove wheel hop effects), etc.). For example, if vertical acceleration of a wheel is measured using an accelerometer attached to the wheel, then vertical velocity of the wheel may be obtained through integration, and vertical height obtained through further integration. With knowledge of the operating speed of the vehicle (that is, the speed at which the vehicle traverses the road segment), vertical height with respect to distance travelled may be obtained. In some embodiments, further filtering may be advantageous. In one example, a road height profile may be obtained from the wheel's vertical height data (e.g., as determined by measuring acceleration of the wheel) by applying a notch filter or low-pass filter (to, e.g., measured vertical acceleration of the wheel) to remove effects of wheel hop. A road profile may incorporate information describing or characterizing discrete road surface anomalies such as, for example, potholes (or other "negative" events) and/or bumps (or other "positive" events). Additionally or alternatively, a road profile may incorporate information about distributed road surface characteristics such as road roughness and/or road surface friction. Additionally or alternatively, a road profile may incorporate information about any parameter that may be measured that is related to a motion and/or response of the vehicle to inputs from the road to the vehicle (e.g., forces, accelerations, heights, etc.).

According to exemplary embodiments described herein, if a vehicle travels on a road (or section of a road) for which no reference road profile data exists, reference data (including, e.g., a reference road profile, characterization of the road's surface, and/or the presence of irregular events such as bumps or portholes) may be generated by collecting motion data from one or more motion sensors (e.g., accelerometers, position sensors, etc.) attached to one or more points of the vehicle (e.g., attached to a wheel of the vehicle, a wheel assembly of the vehicle, a damper, another part of the unsprung mass of the vehicle, or a part of the sprung mass of the vehicle). Data collected from a first traversal of the road or road section may then be used to generate the reference data that may be stored in a database and associated with the particular road segment of the road or road section. Alternatively, data may be collected from a plurality of vehicle traversals and merged (e.g., averaged using a mean, mode, and/or median of the reference data) together to generate reference data.

According to exemplary embodiments described herein, the location of a vehicle may be estimated or at least partially determined by, for example, absolute localization systems such as satellite-based systems. Such systems may be used to provide, for example, absolute geocoordinates (i.e., geographic coordinates on the surface of the earth such as longitude, latitude, and/or altitude) of a vehicle. Satellite based systems, generally referred to as a Global Navigation Satellite System (GNSS), may include a satellite constellation that provides positioning, navigation, and timing (PNT) services on a global or regional basis. While the US based GPS is the most prevalent GNSS, other nations are fielding, or have fielded, their own systems to provide complementary or independent PNT capability. These include, for example: BeiDou / BDS (China), Galileo (Europe), GLONASS (Russia), IRNSS / NavIC (India) and QZSS (Japan). Systems and methods according to exemplary embodiments described herein may employ any suitable GNSS, as the present disclosure is not so limited.

According to exemplary embodiments described herein, dead reckoning may either be used to determine a location of the vehicle at a time point after the vehicle's last known location using the vehicle's measured path of travel and/or displacement from the known location. For example, the distance and direction of travel may be used to determine a path of travel from the known location of the vehicle to determine a current location of the vehicle. Appropriate inputs that may be used to determine a change in location of the vehicle after the last known location of the vehicle may include, but are not limited to, inertial measurement units (IMUs), accelerometers, sensor on steering systems, wheel angle sensors, relative offsets in measured GNSS locations between different time points, and/or any other appropriate sensors and/or inputs that may be used to determine the relative movement of a vehicle on the road surface relative to a previous known location of the vehicle. This general description of dead reckoning may be used with any of the embodiments described herein to determine a location of the vehicle for use with the methods and/or systems disclosed herein.

In some cases, roads may include more than one track (e.g., lane) for each direction of travel, and the road profile may differ for each track. It may not be known in a reference database how many tracks (e.g., lanes) are in a road or road segment, which may lead to difficulties when generating reference data for the road or road section. For example, if a reference road profile for a given road is generated by a vehicle travelling in the left-most lane of a multi-lane road, subsequent attempts to use said reference road profile to localize a vehicle travelling in the right-most lane may fail due to differences in road surface between the left-most lane and the right-most lane. Thus, knowing both how many tracks a road has, and in which track a vehicle is travelling, is desirable for both generating reference road profiles, subsequent localization, and for using the information for controlling a vehicle and/or one or more vehicle systems. Prior attempts at determining a track of a road profile have raised computational challenges, such as data storage for road profiles of multi-lane use (e.g., a lane change) which are not useful for the majority of vehicle traversals of a road segment which occur in a single lane.

In view of the above, the inventors have recognized the benefits of a road segment organizational structure in which multiple road surface profiles may be associated with a single road segment. The road segment structure allows multiple road profiles to be associated with a road segment in a manner that is less data and computationally intensive. Additionally, the inventors have recognized the benefits of a road segment organizational structure which employs a threshold-based approach to collecting and storing road profiles that may be associated with a road track. In particular, the inventors have appreciated that until a sufficiently large number of stored road profiles is reached, clustering and/or merging road profiles may result in inaccurate road profile information.

In some embodiments, a method of identifying a track (e.g., a lane) of a road profile for a road segment includes measuring a road profile of the road segment with any appropriate onboard sensor as disclosed herein as the vehicle traverses the road segment (e.g., employing a vehicle according to exemplary embodiments described herein). A measured road profile may be transmitted to a server each time a vehicle traverses the road segment, such that a plurality of vehicles may transmit a plurality of measured road profiles to the server. The method may also include determining if the number of stored road profiles exceeds a threshold number of road profiles. The threshold number of road profiles may be predetermined to allow a sufficient number of road profiles to be collected prior to data manipulation. In some cases, the threshold number of road profiles may be based on the type of road segment. For example, a high-speed road such as a highway may have a greater threshold number of road profiles as highways typically include more lanes than low speed roads. In some embodiments, the threshold number of road profiles may be between 2 and 64 road profiles, between 8 and 12 road profiles, and/or any other suitable number. If the server receives a road profile from the vehicle and the threshold number of stored road profiles is not exceeded, the received measured road profile may be stored and associated with the road segment. However, if the threshold number of road profiles is exceeded by the received measured road profile, the method may include identifying the most similar two road profiles of the measured road profile and stored road profiles. The most similar two road profiles may be identified based on a cross-correlation function performed on each pair of road profiles, and comparing the resulting degree of similarity values. If the degree of similarity of the two most similar road profiles exceeds a predetermined similarity threshold, the two most similar road profiles may be merged into a merged road profile. If the degree of similarity of the two most similar profiles does not exceed a similarity threshold, the oldest road profile may be discarded, and the newly measured road profile stored. In this manner, similar road profiles may be retained by the server, whereas outlying road profiles will be eventually removed. As similar road profiles are merged, information regarding how many road profiles have been merged into a single merged profile may be kept as metadata, with greater numbers of road profiles in a single merged profile representing a track (e.g., lane) of a road segment.

In some embodiments, a degree of similarity may be a value between 0 and 1 which is the output of a cross-correlation function. In some embodiments, a similarity threshold for merging road profiles may be greater than or equal to 0.6, 0.7, 0.8, 0.9, and/or any other appropriate value. In some embodiments, the similarity threshold may be based at least party on the type of road segment. For example, a highway or high-speed road may have a greater threshold correlation than a low-speed road where more variations in a path taken by a vehicle may be present. According to this example, in some embodiments, a threshold correlation for a highway may be greater than or equal to 0.8, and threshold correlation for a non-highway road may be greater than or equal to 0.5.

In some embodiments, if a set of road profiles includes a sufficiently large number of road profiles (e.g., exceeding a threshold number of road profiles), a correlation clustering algorithm is conducted on the set of road profiles. A number of appropriate correlation clustering algorithms are known in the art, including, for example, hierarchal or partitional clustering methods (e.g., k-means clustering, c-means clustering, principal component analysis, hierarchal agglomerative clustering, divisive clustering, Bayesian clustering, spectral clustering, density-based clustering, etc.) Subsequent to a correlation clustering process, the set of road profiles may be divided into one or more clusters, where each road profile contained within a given cluster is substantially similar to each other road profile contained within the given cluster. For example, the set of road profiles in a road segment may be divided into at least a first cluster of road profiles and a second cluster of road profiles, where each road profile in the first cluster is substantially similar to each other road profile in the first cluster, and each road profile in the second cluster is substantially similar to each other road profile in the second cluster. In some embodiments, a similarity of the plurality of road profiles in each cluster may be more similar to other road profiles in the same road profile as compared to road profiles in other clusters as determined using any appropriate comparison method including, for example, a cross correlation function as described herein. In certain embodiments, each cluster may be considered as corresponding to a track (e.g., a lane) of the road, road segment, or road segment. In certain embodiments, all of the road profiles within a given cluster may be merged (e.g., averaged), in order to obtain a single track-merged road profile. This merged road profile may serve as the reference road profile for a given track within a road segment (e.g., for future terrain-based localization or future preview control of vehicles (e.g., controlling one or more vehicular systems based on knowledge of upcoming road characteristics)), and may be stored in the database and associated with a specific track in a road segment. This merging may be carried out for each identified cluster. In certain embodiments, the clustering algorithm may be periodically repeated (e.g., after a certain number of new road profiles are collected for a given road segment), Alternatively, the clustering algorithm may be repeated after each new road profile is collected to determine which cluster the new profile belongs in.

In some embodiments, rather than considering each cluster to correspond to a track, only clusters having a number of road profiles that exceed a threshold number of road profiles are considered to correspond to tracks. A track represents a path that vehicles take when traversing a road segment. For example, a cluster with a single road profile or a small number of profiles less than the threshold number of road profiles, may be considered an outlier, rather than a separate track. Outliers may occur, for example, when a vehicle experiences an atypical event while traversing a road segment (e.g., the vehicle may change lanes within a road segment, or may traverse some temporary debris or garbage on the road that is not typically present). In certain embodiments, road profiles considered outliers may be deleted after some amount of time in order to save space, not cause confusion, or other appropriate reasons.

According to exemplary embodiments described herein, one or more road profiles may be merged into a merged road profile. In some embodiments, merging two or more road profiles may include averaging the two or more profiles. In some embodiments, merging the two or more road profiles may include accounting for the range of frequencies over which the information provided in a measured road profile is valid. In some instances, two or more measured road profiles may have overlapping, but not identical, valid frequency ranges. In such instances, the overlapping portions may be averaged while the non-overlapping portions may be left unchanged. A reference profile created from multiple overlapping, but not identical, measured road profiles may have a wider valid frequency range than an individual measured road profile. According to such an embodiment, sensors of varying quality and frequency may be merged into a merged profile without distorting the merged road profile, as the most useable data from each measure profile may be combined.

Of course, any suitable technique for merging two or more road profiles may be employed, as the present disclosure is not so limited.

In some embodiments, tracks of consecutive road segments may be linked in the database. These links may form a directed graph showing how tracks on consecutive road segments are visited. For example, a given road may include a first road segment and a second road segment, where the first road segment and second road segment are consecutive. If it is determined that the first road segment contains two tracks (which, in some embodiments, may correspond to physical lanes on a roadway) and the second road segment contains two tracks, each track of the first road segment may be linked in the database to a respective track in the second road segment. This "track linking" may be carried out based on historical trends-for example, if it is observed that a majority of vehicles, or other appropriate threshold, travel from one track (i.e. first road profile) in a first road segment to a corresponding track (i.e. second road profile) in the second road segment those tracks may be linked together in a database containing the road profiles of the various road segments. For example, if vehicles preferably travel from "track 1" in the first road segment to "track 1" in the second road segment, then track 1 of the first road segment may be linked to track 1 in the second road segment. These linkages may be used to predict travel, such that if a vehicle at a given time is localized to "track 1" in the first road segment, it may be assumed that the vehicle is likely to continue to "track 1" in the second road segment. Accordingly, a vehicle may use a track identification to prepare and/or control one or more vehicle systems for an upcoming road profile.

In some embodiments, a road profile may include additional information regarding the vehicle traversal to assist with clustering and/or lane identification according to exemplary embodiments described herein. For example, in some embodiments, a road profile may include an average speed which may be determined by averaging the speeds of vehicles traversing the road segment when measuring the various measured profiles used to determine the road profile. According to such an example, the average speed may assist in lane identification and clustering, as lanes may differ in average speed. For example, in the U.S. a right-most lane may have the lowest average speed whereas the left-most land has the highest average speed. Accordingly, a first track with a lower average speed may be associated with a right-most lane and a second track with a higher average speed may be associated with a left-most lane of a roadway. Of course, any suitable information may be collected and employed to identify a vehicle lane of a road segment, as the present disclosure is not so limited.

As used herein, the term "location" may refer a location of a vehicle expressed in absolute coordinates, or it may refer to a position of a vehicle along a road. A position of a vehicle may be expressed as a distance relative to some feature of a road (e.g., as a distance relative to the start of a road, relative to some intersection, relative to some feature located on the road, etc.).

It should be understood that while specific types of sensors for measuring a road profile are described in the embodiments below, any appropriate type of sensor capable of measuring height variations in the road surface, or other parameters related to height variations of the road surface (e.g., accelerations of one or more portions of a vehicle as it traverses a road surface) may be used as the disclosure is not so limited. For example, inertial measurement units (IMUs), accelerometers, optical sensors (e.g., cameras, LIDAR), radar, suspension position sensors, gyroscopes, and/or any other appropriate type of sensor may be used in the various embodiments disclosed herein to measure a road surface profile of a road segment a vehicle is traversing as the disclosure is not limited in this fashion.

As used herein, an average may refer to any appropriate type of average used with any of the parameters, road profiles, or other characteristics associated with the various embodiments described herein. This may include averages such as a mean, mode, and/or median. However, it should be understood that any appropriate combination of normalization, smoothing, filtering, interpolation, and/or any other appropriate type of data manipulation may be applied to the data to be averaged prior to averaging as the disclosure is not limited in this fashion.

As used herein, a road profile may correspond to a "track" or a "lane", and in some instances these terms may be used interchangeably. As used herein, a "track" may be a path that one or more vehicles take to traverse a road segment. In some embodiments, "clusters" correspond to "tracks" and/or "lanes". In some embodiments, "tracks" correspond to physical "lanes" on a road. In other embodiments, "tracks" do not correspond to physical "lanes" on a road.

In the various embodiments disclosed herein, reference may be made to obtaining particular forms of data including, for example, road profiles, road surface information, road event data, road condition data, weather information, vehicle information, etc. It should be understood that obtaining the desired data may correspond to any appropriate manner in which the data may be obtained. This may include, for example: recalling data previously stored in non-transitory computer readable media; receiving real-time measurement signals from one or more associated sensors or systems; receiving transmissions from a remotely located server, vehicle, or other system; and/or any other appropriate method of obtaining the desired data as the disclosure is not limited in this fashion.

In the various embodiments described herein, reference may be made to outputting a particular parameter, indication, or other appropriate type of information. It should be understood that outputting may refer to any appropriate type of output of the indicated information including, for example: outputting the information to a user using a display system; storing the information in non-transitory computer readable media; transmitting the information to another computing device such as a remotely located vehicle and/or server; providing the information to another system and/or computing module for subsequent use; and/or any other appropriate method of outputting the information as the disclosure is not limited in this fashion.

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein.

*TERRAIN-BASED ADVANCED DRIVER ASSISTANCE SYSTEMS*

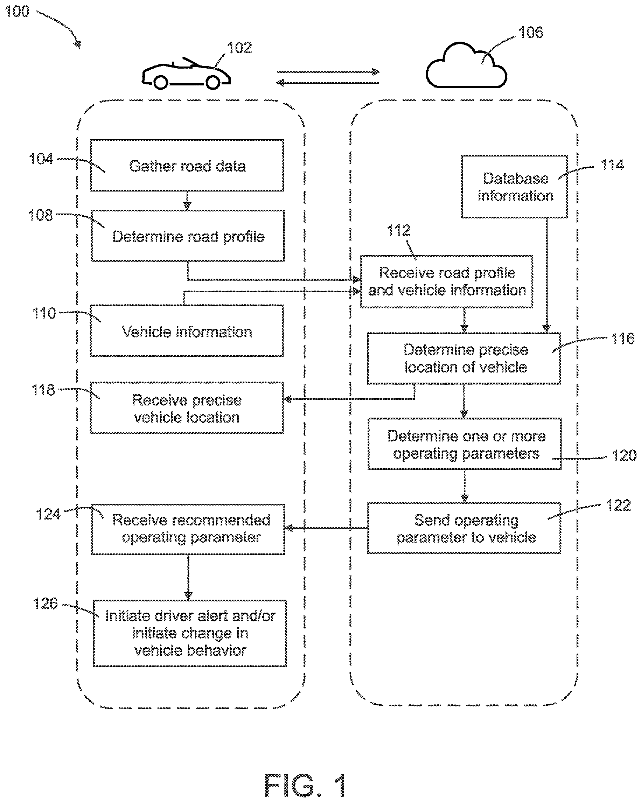

Referring to FIG. 1, a system 100 including an Advanced Driver Assistance System (ADAS) configured to operate based on terrain-based insights is shown. A vehicle 102, is configured to gather (104) road data (e.g., using one or more sensors (e.g., wheel accelerometers, body accelerometers, IMUs, etc.)) and determine a road profile 108 based on that road data using one or more microprocessors. The vehicle 102 is also configured to send road profile information to a cloud computing system 106 which may include a cloud database. In some instances, the road data, or some adaptation of the road data, is sent to the cloud computing system and a road profile is determined at the cloud computing system. The vehicle 102 is also configured to send vehicle information 110 to the cloud computing system 106. Vehicle information 110 may include a GPS location of the vehicle 102. Vehicle information 110 may include, for example, a make of the vehicle, a model of the vehicle, a type of vehicle (e.g., sports car, sedan, SUV, pickup truck, etc.), information on equipment of the vehicle (e.g., sensor positioning, sensor details, etc.), a driving type of the vehicle (e.g., autonomous, semi-autonomous, human-driven, etc.), an estimated tire type, an estimated tire wear condition, etc. Vehicle information 100 may also include, for example, information about a driver of the vehicle (e.g., a driver profile, an average reaction time, etc.).

The cloud computing system 106 receives (112) the road profile 108 and at least one piece of vehicle information 110. Based on the received road profile 108, the vehicle information 110, and cloud database information 114, the cloud computing system 106 determines (116) a precise location of the vehicle 102. In some implementations, the receiving step 112 may not occur and the database information 114 may be sent to the vehicle where the determination step 116 may occur locally at the vehicle. In some implementations, the entire database or parts of the database may be locally stored at a preceding time, and the process described here may be entirely performed locally with no need to connect to the cloud until more up-to-date information is desired. The database information 114 may include stored road profiles from previous drives over road segments performed by the vehicle 102 or other vehicles. Determining a precise location of the vehicle may include matching the received road profile 108 and with a stored road profile from the cloud database using the received road profile 108 and a GPS location of the vehicle 102 received by the cloud computing system 106. As used herein, the term "precise location" refers to being within 1-meter and/or a location accuracy that is more precise than a typical GPS or other GNSS system, for example by one or more orders of magnitude. The precise location is received (118) by the vehicle 102.

The cloud computing system 106 is configured to determine (120), using the road profile 108, and vehicle information 110, a recommended vehicle operating parameter for traversing at least a portion of an upcoming road segment, an upcoming road event, etc. The recommended vehicle operating parameter may be calculated (120) in the cloud computing system 106 using previous road data (e.g., road condition information, road event information, etc.) from other vehicles that previously drove on the upcoming road segment (or from the present vehicle's previous traversals of the upcoming road segment), which may be contained in the database information 114. In some implementations, the cloud computing system may be stored locally in the vehicle and may connect to a remote server only sporadically or not at all. The cloud computing system 106 may send (122) the recommended vehicle operating parameter to the vehicle 102. Upon receiving (124) the recommended vehicle operating parameter, the vehicle 102 may initiate (126) a driver alert (e.g., by presenting a graphic on a screen in the vehicle, a heads-up display, via an audible sound, via haptic feedback, etc.) and/or initiate a change in vehicle behavior. In some implementations, initiating a change in vehicle behavior may include, for example, initiating a command at an autonomous driving controller of the vehicle to change a speed of the vehicle. In some implementations, initiating a change in vehicle behavior may include initiating a braking command to slow down the vehicle or limiting power to a propulsion engine or ICE motor.

### INTELLIGENT SPEED ADAPTATION SYSTEMS

Current intelligent speed adaptation systems warn or enforce driving speed based on a speed limit and/or driving hazard information (e.g., high pedestrian traffic areas, railway crossings, schools, hospitals, etc.) associated with a road segment. Such speed limit and/or driving hazard information may be sourced from various mapping databases, such as, for example, Open Street Maps (OSM). This speed limit and/or driving hazard information is typically static (i.e., speed limits and locations of schools, hospitals, railways, etc. do not change often) and boundaries may be imprecisely defined.

The inventors have recognized that driving speed recommendations for safety, comfort, and/or vehicle durability may be determined using foresight of one or more upcoming road conditions. In some implementations, upcoming road conditions may be specific to a lane or a track in which a vehicle is traveling on a multilane road. Upcoming road conditions may include, but are not limited to, road events, road roughness, road frequency content, road friction, road curvature, weather dependent events, and/or average driving speed. With precise localization and data sharing with a cloud-based or local database, a recommended driving speed, which may be based on foresight of upcoming road conditions, may be calculated and served to an Intelligent Speed Adaptation system on a vehicle. The Intelligent Speed Adaptation System may be a part of an Advanced Driver Assistance System (ADAS) of the vehicle. The Intelligent Speed Adaptation system then may warn and/or enforce the recommended driving speed to a driver of the vehicle to improve safety, comfort, fuel economy, range, vehicle durability, and/or other desired metrics.

A recommended driving speed calculation may consider upcoming road events including, but not limited to, deep potholes, speed bumps, deep manhole covers, dips, washboards, and/or frost heaves. Driving over these large road events at a speed that is too high or too low may degrade safety, comfort, and/or vehicle durability. Generally, drivers are unaware of upcoming road events in advance and, in some cases, even if the upcoming road event is identified prior to the vehicle traversing the upcoming road event, a driver may not be able to effectively choose a driving speed that will reduce adverse effects on safety, comfort, and/or vehicle durability as the upcoming road event is traversed. For example, a driver may assess a parameter (e.g., depth of a pothole, height of a speed bump, positioning of a pothole, slipperiness of a wet or icy road, etc.) of an upcoming road event too late to adjust a vehicle speed appropriately. A recommended driving speed that may be served to the vehicle and/or the driver of the vehicle prior to traversing the upcoming road event may help a vehicle (e.g., via an autonomous or semi-autonomous driving controller) and/or driver of the vehicle react in a timely manner and adjust driving speed for better safety, comfort, and/or vehicle durability.

A recommended driving speed may be determined in multiple ways. First, a physical model may be used, the physical model being based on road event information contained in road data in a database that may be locally stored on the vehicle or may be retrieved from the cloud at appropriate intervals. The road event information may include an event type (e.g., pothole, speed bump, frost heave, etc.), an event size (e.g., a large event, a medium event, a small event, etc.), an event length, (e.g., a length of a pothole, a length of a speed bump), an event height (e.g., a height of a speed bump, a depth of a pothole, etc.), etc. In some implementations, the road event information may be based on road data that has been normalized by vehicle class (e.g., vehicle characteristics of the vehicle that gathered the data have been removed). In some implementations, road event information may be associated with a class of a vehicle (e.g., sports car, SUV, sedan, etc.) that collected road data contributing to that road event information. In some implementations, a recommended driving speed may be calculated at least partially based on vehicle characteristics of the vehicle that will consume the driving speed recommendation. For example, a sports car with a low ground clearance may receive a different driving speed recommendation than an SUV with a high ground clearance.

Similarly, foresight of road frequency content, road roughness, road friction, road curvature, and weather dependent events (e.g., ice/snow cover and puddles) may be inputs to determining a recommended driving speed. A recommended driving speed takes in foresight of road condition because a vehicle's response (e.g., braking distance, tire grip, handling, traction, etc.) may be significantly different during different weather dependent events. Because vehicle response (e.g., braking distance, tire grip, handling, traction, etc.) may change with varying weather dependent events, a recommended driving speed may change in view of these weather dependent events. The impact of road surface friction (which may change based on the occurrence of weather dependent events) on a recommended driving speed may depend, at least partially, on road characteristics (e.g., road roughness, road frequency content, road friction, road curvature, road slope, etc.) of the road on which the vehicle is traveling. Foresight of these weather dependent events (which are often fast-changing), may be accomplished with precise localization (as described previously) and information sharing between vehicles and a cloud server. A recommended driving speed with road condition foresight may be calculated by using a physical model and/or by using historical vehicle response data from other vehicles traveling at varying driving speeds under the same or effectively the same conditions.

In some implementations, an average driving speed (e.g., an average speed of multiple vehicles traversing the same road segment) may be used to determine a recommended driving speed for a road segment to be recommended by the Intelligent Speed Adaptation System. In one example, if an average driving speed for a specific road segment has dropped (i.e., vehicles have been traveling slower across the road segment) below a certain threshold (e.g., a percentage reduction in speed (e.g., 10%, 20%, 50%, or more reduction in speed) or a particular speed (e.g., 10 mph, 20 mph, 30 mph, 40 mph, 50 mph, etc.), etc.), it may be inferred that there may be an irregular road event (e.g., a road feature, an accident, a weather dependent event (e.g., snow, ice, rain, fog, etc.)) located on the road segment or that there may be slow traffic on that road segment. In such situations, a recommended driving speed may be adjusted accordingly (e.g., to match a recently computed average driving speed).

Referring back to FIG. 1, the system 100 including an Advanced Driver Assistance System (ADAS) configured to operate based on terrain-based insights may include an intelligent speed adaptation system.

In instances where the system 100 includes an intelligent speed adaptation system, the cloud computing system 106 is configured to determine (120), using the road profile 108, and vehicle information 110, a recommended a recommended driving speed for traversing at least a portion of an upcoming road segment or road event. The recommended driving speed may be calculated (120) in the cloud computing system 106 using previous road data (e.g., road condition information, road event information, etc.) from other vehicles that previously drove on the upcoming road segment (or from the present vehicle's previous traversals of the upcoming road segment), which may be contained in the database information 114. In some implementations, the cloud computing system may be stored locally in the vehicle and may connect to a remote server only sporadically or not at all. The recommended driving speed for a specific road condition may be calculated, for example, by using a physical model or from previous vehicle response data from other vehicles or from the same vehicle on the specific road condition as a function of vehicle speed. The cloud computing system 106 may send (122) the recommended driving speed to the vehicle 102. Upon receiving (124) the recommended driving speed, the vehicle 102 may initiate (126) a driver alert (e.g., by presenting a graphic on a screen in the vehicle, a heads-up display, via an audible sound, via haptic feedback, etc.) and/or initiate a change in vehicle behavior. In some implementations, initiating a change in vehicle behavior may include, for example, initiating a command at an autonomous driving controller of the vehicle to change a speed of the vehicle. In some implementations, initiating a change in vehicle behavior may include initiating a braking command to slow down the vehicle or limiting power to a propulsion engine or ICE motor.

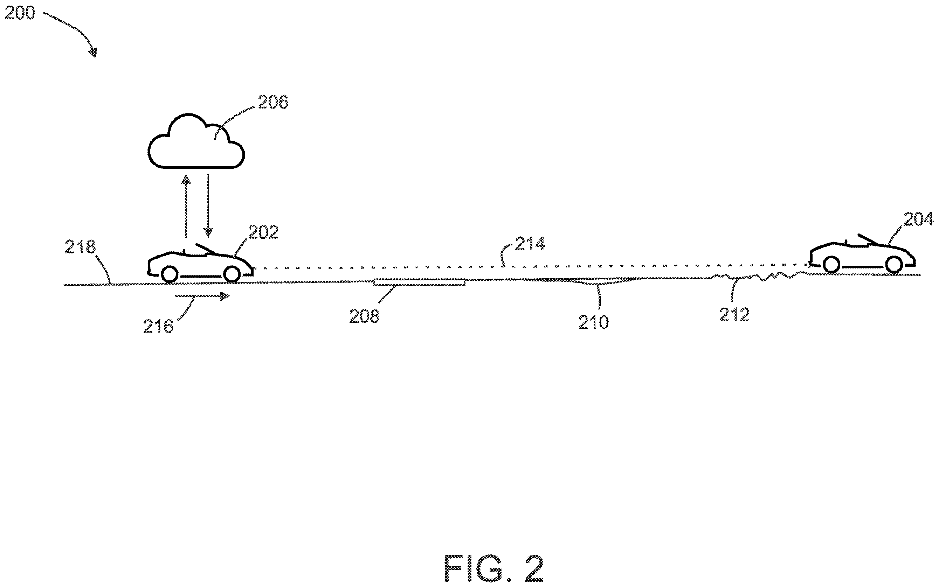

Referring to FIG. 2, in scenario 200, a vehicle 202 traveling on a road segment 218 may communicate with a cloud database 206 to determine the vehicle's precise location and receive driver alerts and/or recommendations for operating in an autonomous driving mode. In some cases, the driver may initiate communication with the cloud that the driver is switching to an autonomous mode. The road segment 218 on which the vehicle is traveling may include weather dependent events, such as ice 208 and puddle 210. The road segment 218 may also include a high amplitude input section 212. These road conditions and road events may impact vehicle safety, durability, and comfort as they are traversed. A cloud database, as discussed previously, may include data on these road conditions and road events, which, as previously discussed, may have been sourced from other vehicles, prior trips of the present vehicle, and/or other databases, (e.g., NOAA, etc.).

A terrain-based advanced driver assistance system, as shown and described in FIG. 1 and the accompanying prior text, may have advance knowledge of and/or may predict the existence of these road conditions, and may alert a driver of the vehicle 202 or an autonomous driving controller of the vehicle 202 accordingly. The terrain-based advanced driver assistance system may initiate modification of a driving speed 216, a following distance 214 behind another vehicle 204, and/or another vehicle operating parameter (e.g., initiating a four-wheel driving mode) to improve vehicle safety and/or comfort and/or durability.

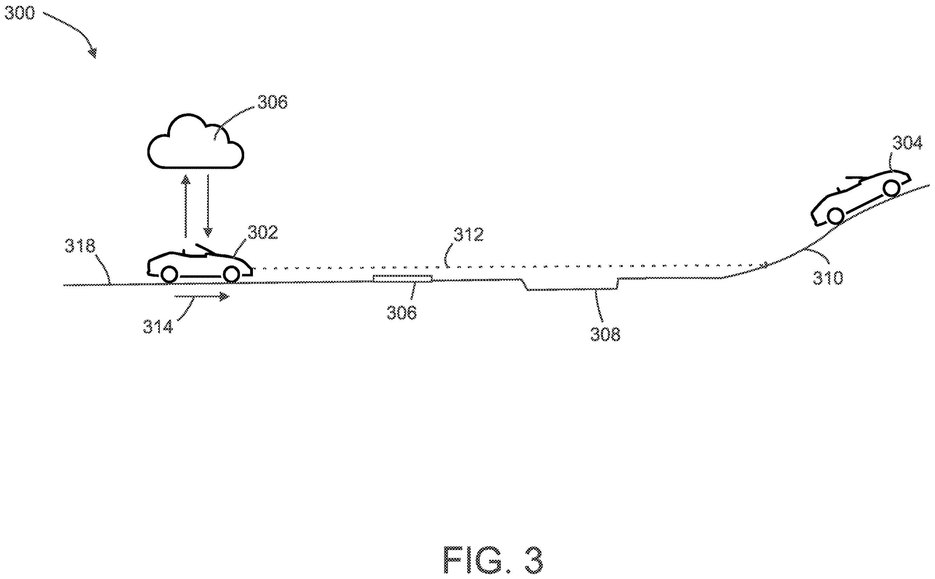

Referring to FIG. 3, in scenario 300, a vehicle 302 traveling on a road segment 318 communicates with a cloud database 306 to determine its precise location and receive driver alerts and/or recommendations for operating in an autonomous driving mode. The road segment 318 may include road events, such as speed bump 306, pothole 308, and hill 310. These road events may impact vehicle safety, durability, and comfort as they are traversed. A cloud database, as discussed previously, may include data on these road events, which, as previously discussed, may have been sourced from other vehicles, prior trips of the present vehicle, etc.

A terrain-based advanced driver assistance system may have advance knowledge or and/or may predict the existence of these road conditions and may alert a driver of the vehicle 302 or an autonomous driving controller of the vehicle 302 accordingly. The terrain-based advanced driver assistance system may initiate modification of a driving speed 314, a following distance 312 behind another vehicle 304, and/or another vehicle operating parameter to improve vehicle safety and/or comfort and/or durability.

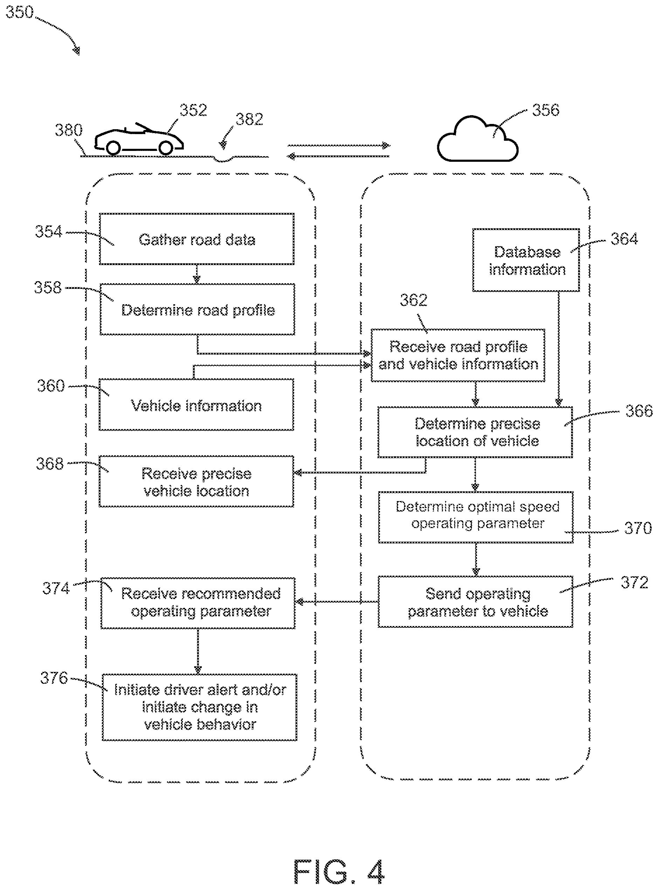

As an example, as shown in FIG. 4, in scenario 350, a vehicle 352 is traveling on road segment 380 that includes a large pothole 382. In the absence of the terrain-based advanced driver assistance systems described herein providing advanced notice and vehicle operating instructions to one or more vehicle systems and/or an operator the vehicle, the vehicle's response to the pothole may damage tires, rims, and/or other suspension components of the vehicle 352. This damaging impact may occur due to a variety of causes. In some instances, a human or automated operator (e.g., an autonomous or semi-autonomous vehicle controller) may not be able to see the pothole 382 with sufficient warning to be able to reduce speed (or avoid the pothole). In some instances, a human or automated operator (e.g., an autonomous or semi-autonomous vehicle controller) may not be able to correctly judge the severity of the event. In some instances, a human or automated operator (e.g., an autonomous or semi-autonomous vehicle controller) may be forced to reduce or increase vehicle speed at a high rate of deceleration or acceleration in anticipation of the pothole, thus leading to discomfort. In some scenarios, a human or automated operator (e.g., an autonomous or semi-autonomous vehicle controller) may not be able to judge or execute operation of the vehicle within an optimal speed range for traversing the pothole. For example, there may be a speed cutoff below which the vehicle may travel, based on parameters (e.g., ground clearance, tire parameters, etc.) of the vehicle, where traversing the pothole 382 may not cause damage. In another example, there may be a speed cutoff above which the vehicle may travel, based on parameters of the vehicle (e.g., ground clearance, tire parameters, etc.) of the vehicle, where the traversing the pothole may not cause damage due to the vehicle skipping over the pothole at a sufficiently high speed.

The terrain-based advanced driver assistance system of vehicle 352, as shown in FIG. 4 and described herein, may be used to determine an optimal speed range for traversing an event (e.g., pothole 382), and alert (376) the operator or autonomous systems in the vehicle with sufficient time to allow for a smooth deceleration or acceleration to within the target speed range. The optimal speed may for example be determined (370) based on measured vehicle responses for the same vehicle, or other vehicle of similar class, or other vehicles of different classes over the same event, or it may be determined by using models and the road information collected by the same vehicle during a previous traversing of the event, or by other vehicles that traversed the event. The information 364 about the event may be collected in a cloud database or in a local database, may be assembled from multiple drives and/or multiple vehicles, and may be stored on the local vehicle or recalled from the cloud 356 at a time sufficiently ahead of the expected traversal. Steps 354-368 regarding localization of the vehicle are analogous to steps previously discussed in relation to FIG. 1.

### BRIDGE RECOGNITION AND ADJUSTMENT

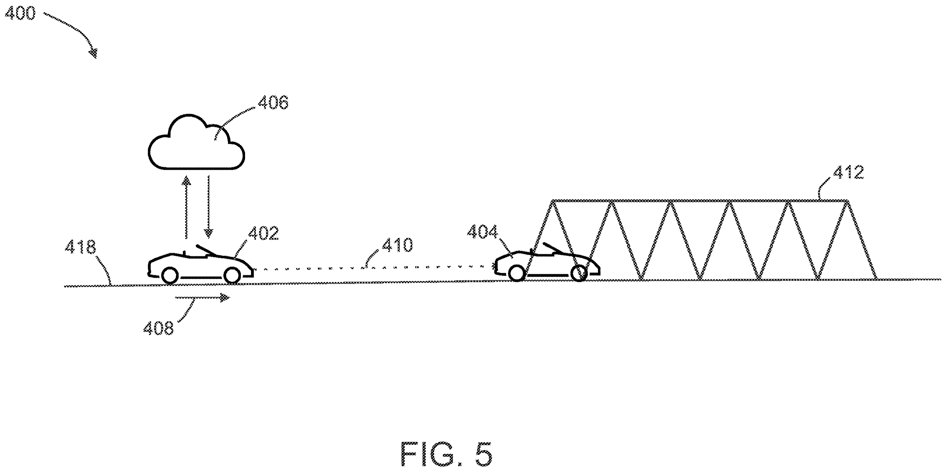

In some instances, such as the implementation shown in FIG. 5, some individual road features may be particularly affected by environmental factors. For example, road surfaces on bridges may ice prior to non-bridge road surfaces in low temperature conditions. In FIG. 5, a vehicle 402 is traveling on a road surface 418 and a portion of the road surface crosses a bridge 412. A cloud computing system 406 may predict the occurrence of a bridge icing event based on, for example, weather information, road profile data, road event information, and/or historic data. Such weather information, road profile data, road event information, and or historic data may be stored in a cloud database 406 (analogous to cloud database 106 including database information 114 in FIG. 1) and may be used as an input to the advanced driver assistance systems using terrain-based insights as described with reference to FIG. 1. If a bridge icing event may be occurring on the bridge 412, a terrain based adaptive cruise control system, a terrain-based collision warning and avoidance system, a terrain-based intelligent speed adaptation system, etc., may alert a driver and/or an autonomous driving controller of the vehicle 402 to increase a safe following distance 410 behind another vehicle 404, change a driving speed 408, and/or change any other appropriate vehicle operating parameter, accordingly.

### ADAPTIVE CRUISE CONTROL

In general, adaptive cruise control systems may be configured to control a vehicle to maintain a safe following distance behind another vehicle to allow a driver, or autonomous driving controller, of a vehicle to have enough time to react to incidents on the road without colliding with another vehicle that the vehicle is following. The inventors have recognized that a terrain-based adaptive cruise control system, examples of which are described herein, may implement a safe following distance that is configured to vary based on road conditions (e.g., road friction, road roughness, road frequency content, road curvature, road slope, localized weather, etc.). For example, a braking distance of a vehicle is typically longer on an icy road as compared to a dry asphalt road. Therefore, a safe following distance executed by a terrain-based adaptive cruise control system may be configured to lengthen if the vehicle is traveling on, or will be traveling on, a road segment that is known to be or may be icy. By knowing road conditions on road segments ahead of the vehicle, based on precise localization and data sharing with a cloud computing system, as discussed previously with reference to FIG. 1, an adaptive cruise control system using terrain-based insights may adjust the safe following distance accordingly. In some implementations, a braking distance may be estimated based on past performance of the vehicle. In some implementations, the vehicle's own past performance may be predictive of upcoming performance due to current vehicle parameters being close to previous vehicle parameters. Examples of vehicle parameters include vehicle class, vehicle make/model, tire type, tire wear, tire tread depth, tire inflation level, vehicle weight, brake wear, etc.

Road surface friction may significantly affect braking distance and may, therefore, be an important road condition for determining a safe following distance for an adaptive cruise control system. For example, on snowy surfaces, braking distance may increase by approximately 50% and on icy surfaces, braking distance may increase by approximately 150%. When, based on knowledge of a vehicle's precise location and the road conditions at that location or upcoming locations, a predicted braking distance increases due to reduced road surface friction, a terrain-based adaptive cruise control system may increase the safe following distance before or upon entering a road segment with known or predicted low surface friction.

Generally, road surface friction may be difficult to estimate in real-time under normal driving conditions because excitation (throttling and braking higher than a threshold) is needed to estimate road surface friction accurately. A cloud database may store road surface friction information based on estimations from other vehicles that have traveled over the same road segment and/or a vehicle's own past trips over the road segment. An example is shown in FIG. 1 which includes a cloud computing system 106 including database information 114.

The road surface friction estimations stored in the cloud database may be gathered from multiple sources and in some instances, may be assigned a quality or confidence metric. In some instances, road data from vehicles that performed more aggressive driving behaviors may provide better quality road surface friction estimation. In some instances, aggregation of large amounts of lower quality road surface friction estimations from multiple vehicles performing less aggressive driving behaviors on the same road segment may provide better accuracy road surface friction estimation. In some instances, road surface friction estimations may be measured directly or indirectly from vehicle equipped sensors, including but not limited to optical sensors, acoustic sensors, etc. In some instances, road surface friction estimations may also be created based on models that incorporate information on environmental factors.

Environmental factors may include, but are not limited to, atmospheric temperature, road surface temperature, humidity, wind speed, daylight, time, precipitation intensity, accumulative precipitation, road surface water layer thickness, road surface snow layer thickness, road surface ice layer thickness, traffic, road type, road class, road roughness, road slope, etc. In some implementations, one or more sensors for measuring one or more of these environmental factors may be located on the vehicle and data gathered by the one or more sensors may be used to make a road surface friction prediction. In some implementations, one or more sensors for measuring one or more of these environmental factors may be located on other vehicles and data gathered by such other vehicles may be crowd-sourced and incorporated into a database which may be referenced for making a road surface friction prediction. In some implementations, data on one or more environmental factors may be sourced from outside the vehicle and used to make a road surface friction prediction. External sources may include weather or climate information databases (e.g., NOAA databases) which may include current or historical data. In some implementations, road surface friction prediction based on environmental factors may be used when a database is lacking recent high confidence surface friction estimation from drives over a road segment.

Weather dependent single events such as snow cover and puddles may create slippery areas on the road surface that may affect braking distance significantly. A cloud computing system may predict the occurrence of these weather dependent single events based on weather information, road profile information, and/or historical data. If these weather dependent single events are predicted to occur in an upcoming road segment, a terrain based adaptive cruise control system may, for example, increase a safe following distance, reduce speed, limit vehicle excitation, etc., accordingly.

Severe localized weather, such as fog, heavy rain, and/or a snow squall, may significantly affect visibility. In such instances, a cloud computing system may provide information of upcoming localized weather based on precise localization. A terrain-based adaptive cruise system may, for example, increase follow distance, reduce maximum driving speed, for upcoming severe localized weather to minimize effect of degraded visibility. In some implementations, instances of severe localized weather may also cause the system to initiate turning on fog lights.

Road frequency content and road roughness may affect braking distance and driver behavior. For example, when a road is rough and has a high amplitude of input content, braking distance may increase due to tire bouncing (i.e., braking does not occur when the tire and the road surface are not in contact). Also, generally, drivers tend to decelerate rapidly on road sections with such characteristics. If the upcoming road surface is rough and has a high amplitude of input content, a terrain based adaptive cruise control may, for example, increase a safe following distance, reduce maximum speed, reduce driving speed, etc., accordingly.

Terrain-based adaptive cruise control may increase following distance to enhance safety when upcoming road curvature is steep and/or when upcoming road slope is steep. In such situations, another vehicle in front of the vehicle may be expected to decelerate rapidly. Also, a radar of the adaptive cruise control system may more easily lose track of the other vehicle during steep road curvature and/or steep road slope.

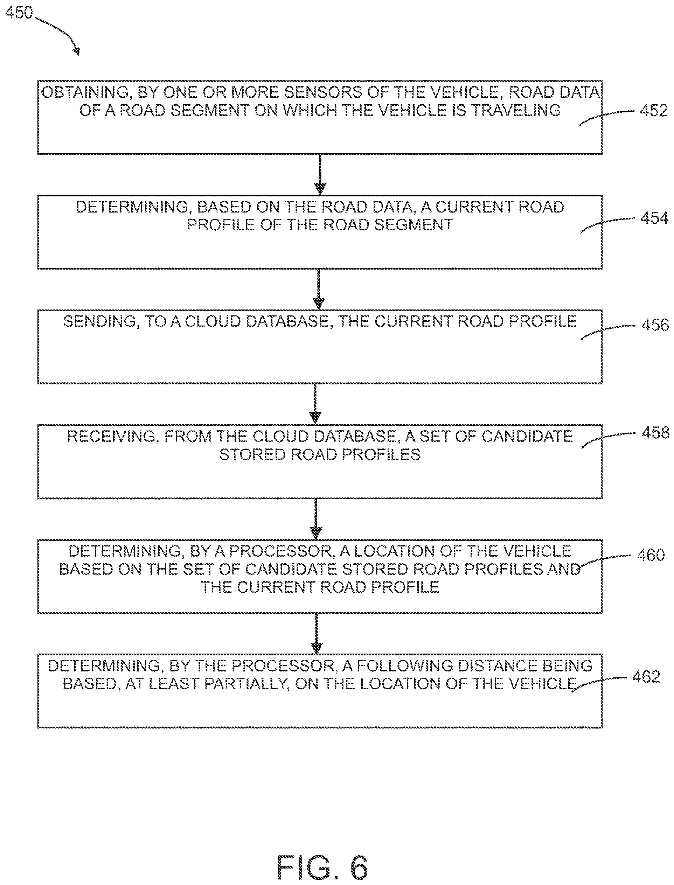

Referring to FIG. 6, a method 450 for determining a following distance for an adaptive cruise control system of a vehicle is shown. The method includes obtaining (452), by one or more sensors of the vehicle, road data of a road segment on which the vehicle is traveling, determining (454), based on the road data, a current road profile of the road segment, sending (456), to a cloud database, the current road profile, receiving (458), from the cloud database, a set of candidate stored road profiles, determining (460), by a processor, a location of the vehicle based on the set of candidate stored road profiles and the current road profile, and determining (462), by the processor, the following distance, the following distance being based, at least partially, on the location of the vehicle. Many steps of this method may be mirrored in the flow chart of FIG. 1 and its accompanying description.

*COLLISION WARNING AND AVOIDANCE AND AUTOMATIC EMERGENCY BRAKING AND STEERING*

In general, Collision Warning and Avoidance systems, which may include for example Forward Collision Warning, Automatic Emergency Braking, and Automatic Emergency Braking and Steering, detect an imminent collision and attempt to eliminate or mitigate the effects of an imminent collision. Attempting to mitigate or eliminate an imminent collision may include warning (via a visual, audible, haptic, and/or other alert) a driver of the vehicle to brake, autonomously performing emergency braking, and/or autonomously perform steering to avoid the collision.

The inventors have recognized that foresight of lane or track specific road conditions of upcoming road segments, including but not limited to road surface friction, road frequency content, road roughness, road events, and weather dependent events, a terrain-based collision warning and avoidance system may estimate braking distance more accurately than traditional systems. A terrain-based collision warning and avoidance system may therefore adjust warning trigger points and/or automatic braking trigger points according to these more accurate braking distance predictions and provide alerts tailored to the vehicle's precise location. Foresight of road conditions of the vehicle's current lane and any adjacent lane(s) may also help in deciding between using automatic emergency braking, automatic emergency steering, or both when a potential collision is predicted.

By knowing or making an accurate prediction of road surface friction of the vehicle's current lane and one or more adjacent lanes of an upcoming road, Collision Warning and Avoidance system may improve warning timing, braking trigger timing, and accuracy of deciding between automatic emergency braking and automatic emergency steering. For example, if an adjacent lane has a higher surface friction than the current lane of travel (e.g., by an amount greater than a predetermined threshold, etc.), a terrain-based collision warning and avoidance system may prioritize an operating mode that would avoid a collision by steering into the adjacent lane (assuming that the adjacent lane is open, which may be determined in some instances by on-board vehicle sensors) as compared to an operating mode that would perform emergency braking on the current, lower surface friction lane. The road surface friction estimation may be based on recent driving data from other vehicles recently having traveled on the specific lane of the upcoming road segment from other vehicles, and/or from prediction with model built from weather nowcast information, information on environmental factors, and/or historical data, or any combination thereof. Driving data from other vehicles may be estimated from vehicle dynamics data, measured from one or more on-board vehicle sensors, etc.

In some implementations, a terrain-based Collision Warning and Avoidance system may be configured to assume high road surface friction to minimize the system false trigger rate. In such implementations, road surface friction estimations for upcoming road segments may be provided together with a confidence level of such estimations. Therefore, in some implementations, the Collision Warning and Avoidance system may be configured to adjust a warning timing, a warning type, and/or an action trigger timing based on a road surface friction estimation only when the confidence level of the estimation is higher than a threshold. In some implementations, the Collision Warning and Avoidance system may adjust a warning timing, a warning type, and/or an action trigger timing according to the combinations of road surface friction estimation and the confidence level of the estimation, to minimize the false trigger rate while avoiding collisions in low road surface friction conditions.

In some implementations, the Collision Warning and Avoidance system may be configured to assume low road surface friction to default to acting earlier and may therefore potentially avoid more collisions. Such Collision Warning and Avoidance systems may also adjust warning and/or action trigger timing based on combinations of road surface friction estimations and the confidence level of such estimations, to avoid collisions while also reducing false trigger rate.

In some scenarios, upcoming road segments may include mixes of surface conditions. For example, there may be wet, slushy, snowy, and icy road conditions mix in the same road segment in the same lane in wintertime, especially after multiple vehicles have traversed the same lane. In such scenarios, the actual road surface friction of the road segment will not be a single value. In these scenarios, the road surface friction estimations from vehicle driving on such road segment may have large variance as the estimation values would depend on which condition (wet, slushy, snowy, icy, etc.) on the road segment the vehicle generating the estimation traversed. In this case, some smart clustering methods designed with confidence level of road surface friction estimations may be used to predict the highest and lowest road surface friction values of the mix conditions. In some implementations, a terrain-based Collision Warning and Avoidance system may be configured to act based on a lowest road friction, a highest road friction estimation, an average road friction estimation, or any other appropriate metric determined based on the varying data collected. The confidence level of the estimations in these scenarios may be lowered to indicate uncertainty of which surface condition the surface of the road segment is experiencing as the current vehicle traverses the road segment.

Besides road surface friction, weather dependent single events such as snow cover, ice formation, and puddle formation, which may create slippery patches, road frequency content, and road roughness all may be lane specific road conditions that may affect braking distance. Foresight of such road conditions of upcoming road segments may help the Collision Warning and Avoidance system make better decision to enhance safety of the vehicle.

Referring back to FIG. 1, a process of communicating between a vehicle 102 and a cloud computing system 106 may be used to determine if an appropriate vehicle has terrain-based localization that may be used to determine a precise location of the vehicle. As the vehicle travels, the vehicle may report its location and upload a road condition estimation (and/or road data that may be used to determine such an estimation) of the road segment that the vehicle traversed to the server. The server may transmit the lane specific upcoming road condition prediction to the vehicle based on estimation from another vehicle which recently drove on upcoming road, and/or based on predictive model using weather data and environmental factors data, and/or based on historical data from other vehicles gathered under similar conditions. The Collision Warning and Avoidance system may then estimate, for example, braking distance based on road condition foresight and/or adjust the system trigger point and decision making accordingly to enhance safety. For example, if foresight of low friction surface on upcoming road is determined, the system may also determine that braking distance is going to increase. The system may then adjust system trigger point to warn the driver or engage automatic braking earlier before entering low friction surface section, to avoid collision or reduce collision impact even with longer braking distance when an emergency occurs. The system may reset the vehicle to a normal driving mode after the vehicle has completed traversing the low surface friction section.

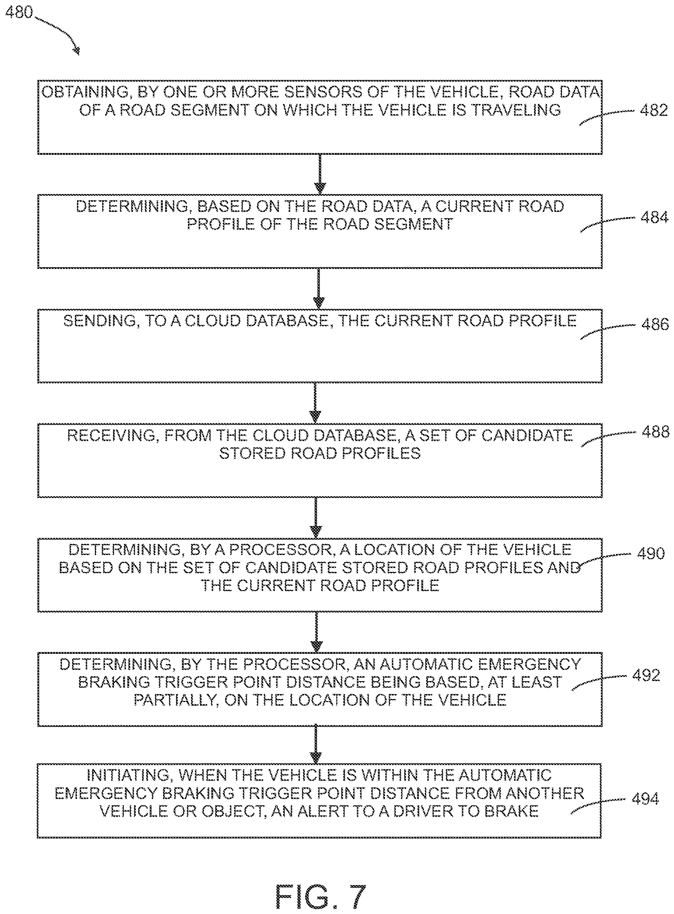

Referring to FIG. 7, a method 480 for determining an automatic emergency braking trigger point distance for a vehicle is shown. The method 480 includes obtaining (482), by one or more sensors of the vehicle, road data of a road segment on which the vehicle is traveling, determining (484) based on the road data, a current road profile of the road segment, sending (486), to a cloud database, the current road profile, receiving (488), from the cloud database, a set of candidate stored road profiles, determining (490), by a processor, a location of the vehicle based on the set of candidate stored road profiles and the current road profile, determining (492), by the processor, the automatic emergency braking trigger point distance, the automatic emergency braking trigger point distance being based, at least partially, on the location of the vehicle, and initiating (494), when the vehicle is within the automatic emergency braking trigger point distance from another vehicle or object, via an advanced driver assistance system of the vehicle, an alert to a driver to brake.

*LANE KEEP ASSIST SYSTEMS*

Advanced driver assistance systems (ADAS) in today's vehicles enhance a driver's ability to steer the vehicle to remain within a lane and avoid encroaching on adjacent lanes of travel on roadways (both lanes of travel intended for same direction and opposite direction travel). This safety feature commonly relies on vision-based sensor systems like forward and sideways-facing cameras to identify lane markers and determine an appropriate path to take to remain within the lane.

The sensor systems used for this application are vulnerable to multiple potential failures, including sensor obscurement through reflections or dirt on the glass; sensor function reduction due to environmental conditions such as rain, fog, snow and/or other materials covering the roadway and/or the sensors; and a possible general inability to identify lane markers due either to an absence of markers, or a poor quality of the lane markers themselves, or due to obscurement of the lane markers through interference, occlusion, or lighting problems such as darkness. Such obscurement and/or inability to identify lane markers leads to the lane keep assist system being unable to function (e.g., being unable to provide lane keep assist instructions), or in some scenarios, being prone to misidentification errors, which may lead to incorrect lane keep commands being instructed.

The inventors have recognized that using additional inputs may enhance the function of such lane keep assist systems. In some implementations, a high-definition map may be used, where the high-definition map contains details related to the road such as for example the terrain profile, road events, road content, and/or similar road characterization features; road signs and other distinctive landmarks in the vehicle's surroundings; mean, median, and/or typical heading; curvature, and/or path of previous drives; or any subset thereof, in addition to many other possible details. In some implementations, a database of such road-related information (e.g., the cloud computing system 106 including database information 114 shown in FIG. 1) may be considered a high-definition map. In some implementations, this high-definition map may include crowd-sourced information sourced by gathering data from other vehicles and/or from previous drives.

As described previously, an accurate estimate of a vehicle's current position may be made, for example using terrain-matching of road features, road profile information, and/or events from the high-definition map. In some implementations, an accurate estimate of a vehicle's current position may be mad using feature matching for landmarks in the road profile or the environment, and/or using high precision global navigation system signals in addition to or in place of terrain-based localization.

Once a precise location is known, and given the typical path driven by other vehicles traversing the road segment, this information may be used to determine undesired deviations from the typical path by the current vehicle. In some implementations, a determination by the terrain-based localization system that the vehicle has deviated from the typical path may be used as an additional input into the lane keep assist system. Such an input may be in the form of an error signal fed to the control system, in the form of a reference signal used to identify faults in the control system, or in the form of a warning to the driver or operator through tactile or visual cues such as for example a heads-up display or a modification of the steering effort torque felt by the driver.

In some implementations, the system may recognize the presence of features in the travel lane that one might want to avoid, such as for example large potholes, sections of low friction road surface, truck ruts, etc. These features may be derived from a high-definition map, for example a crowd sourced road map or a map built through computer vision analysis of street-level images or a map derived from other unrelated sources, or they may be inferred from past driving data in the same vehicle, or any combination thereof.

Given a precise location of the vehicle and a known location of road features (e.g., road events, road conditions, etc.) to be avoided on a given road segment, the system decides how to act. If for example the road feature is small in the lateral direction (the direction normal to the general travel direction), then a recommendation to the steering system may be made to deviate the target path from the intended path to avoid the feature. This desired deviation is weighed against safety considerations, for example related to the width of the lane and the presence of other vehicles nearby, and is then used as an input, if appropriate, to calculate a new desired path. For example, if a small but deep pothole is present in the lane and is in line with one set of tires (right or left side of the vehicle) when the vehicle is driving in the center of the lane, then an offset may be commanded to shift the vehicle toward one side or the other depending on safety considerations (for example the presence or absence of an additional travel lane to each side) over a safe period of time, for example 5 seconds or more, and the vehicle may avoid the obstacle for example by simply driving such that the wheels straddle the obstacle, or by driving such that the obstacle is left to one side or the other of the vehicle. In some instances, when the feature cannot be avoided, the system may recommend a speed for interacting with the feature (e.g., a reduced speed, an increased speed, etc.).

The location of a road event in a lane may be determined using a terrain-based localization system that employs a clustering method, as described previously. Individual lanes of travel may contain multiple tracks within them, and an event may exist on one or more of these tracks. In some instances, the cloud database may understand the spatial orientation of the tracks in relation to one another. A terrain-based lane keep assist or path planning system may employ this information to recommend that a vehicle switch tracks to avoid an event located on one track that is not located on another.

Depending on the level of autonomous driving capability present and engaged in the vehicle at that time, the system may intervene to steer the vehicle, may provide tactile or audible feedback to the driver or operator, or may alert the driver or operator through visual cues such as an indication on a heads-up display. This may be useful even in driving situations where the vehicle is being driven by a human operator, as road features may often be seen too late to properly respond (for example due to vehicles in front obstructing them) or not evaluated accurately (for example a pothole may be mis-judged as being shallow when it really is deep).

In some implementations, the map detail and location information as described above may be used to help decide what travel lane is best, for example at a given speed or under certain weather conditions. As an example, one or more road features may be present in one lane or track on a multi-lane road, and this information, along with information about the current location of the vehicle, may be used to recommend avoiding a particular lane or track of travel.

In some implementations, this information may be relayed to a path planning component of an autonomous or partially autonomous vehicle and the vehicle may attempt to change lanes ahead of the indicated section as long as it is safely able to do so. In another implementation, the information may be relayed to the human operator in the form of visual (e.g., a heads-up display, a navigation display, etc.), tactile (e.g., steering wheel torque feedback, haptic vibration feedback), and/or audible (e.g., directional warning sound) cues, allowing the operator to select a course of action. In another implementation, the upcoming road content in each of the travel lanes on a multi-lane road may be categorized and analyzed. For example, a vehicle may be more inclined to causing uncomfortable motions, or motions that have a propensity to cause motion sickness, or motions that are more likely to damage the vehicle or its components, on roads with a certain type of content. This content may be qualified by analyzing past drives of the same vehicle, or a vehicle of the same type or category, against metrics relating to comfort, motion sickness, or damage propensity, and an analysis of upcoming road segments at any given travel speed may then be used to select the best lane to drive in. This information is then provided to the path planning component of the autonomous system, or to the human operator in the form of visual, tactile, or audible cues.

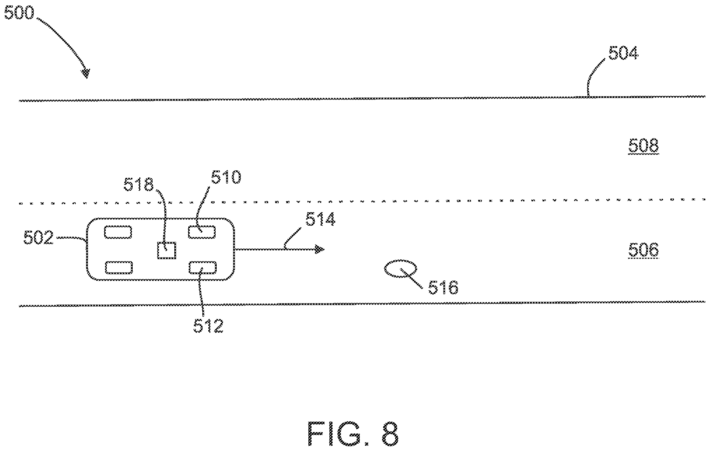

Referring to FIG. 8., a driving scenario 500 shows a vehicle 502 traveling on a roadway 504 in lane 506. The vehicle 502 has a left wheel 510 and a right wheel 512. Feature 516 is recognized as being in the path 514 of the vehicle 502. Specifically, the right wheel 512 is anticipated to impact the feature 516 if the vehicle 502 continues along the path 514. With this knowledge, a path controller 518 of the vehicle 502 may modify the path 514 so that the anticipated impact between the right wheel 512 and feature 516 does not occur. The modified path may move the vehicle into another lane (e.g., lane 508) or may keep the vehicle within the lane 506. Both of these scenarios are illustrated and described herein.

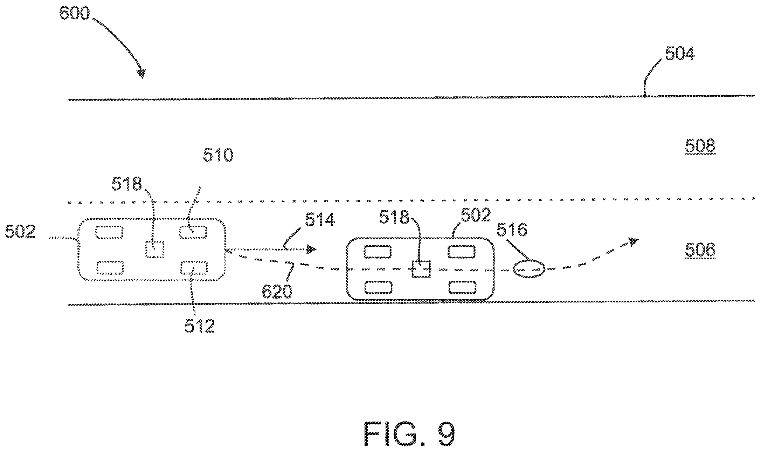

Referring to FIG. 9, in scenario 600, a terrain-based lane keep assist system initiates a command or a recommendation that the vehicle 502 move along path 620 to straddle the feature 516 in the roadway 504 without leaving the travel lane 506. The command may be an input to the path planning controller 518 or a recommendation or suggestion (e.g., via visual cues, audio cues, heads-up display instructions, tactile alerts, etc.) to the operator of the vehicle 502.

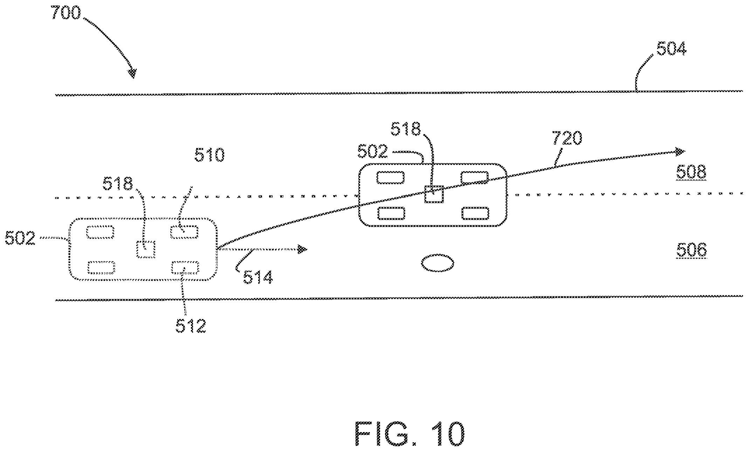

Referring to FIG. 10, in scenario 700, a terrain-based lane keep assist system of a vehicle 502 initiates a command or a recommendation that the vehicle 502 move along path 720 to navigate around the feature 516 in the roadway 504. Taking the path 720 causes the vehicle 502 to deviate from the current travel lane 506 into an adjacent travel lane 508 in the same travel direction. The command may be an input to the path planning controller 518 or a recommendation or suggestion (via visual cues, audio cues, heads-up display instructions, tactile alerts, etc.) to the operator of the vehicle 502. The vehicle 502 may continue traveling in the adjacent travel lane 508 or may change back into lane 506 after the feature 516 has been navigated around.

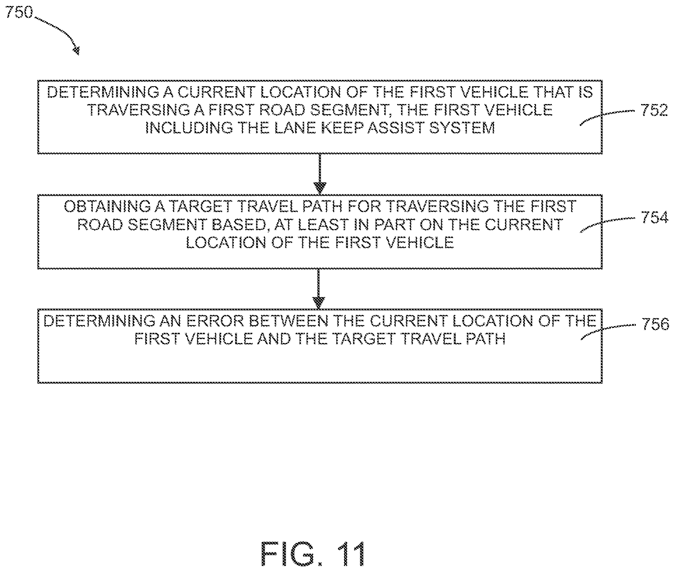

Referring to FIG. 11, a method 750 for calculating a target travel path for use by a lane keep assist system, the travel path being for a first vehicle traversing a road segment. The method includes determining (752) a current location of a first vehicle, obtaining (754) a target travel path for traversing the road segment based at least in part on the current location of the first vehicle, and determining (756) an error between the current location of the first vehicle and the target travel path.

*A UTONOMO US DRIVING TRAJECTORY PLANNING*

Advanced driver assistance systems (ADAS) in vehicles enhance the driver's ability to steer the vehicle to remain within a lane and avoid encroaching on adjacent lanes of travel on roadways (both lanes of travel intended for same direction and opposite direction travel). This safety feature commonly relies on vision-based sensor systems like forward and sideways-facing cameras to identify lane markers and determine an appropriate path to take to remain within the lane.

Sensor systems used for this application may be vulnerable to multiple potential failures, including sensor obscurement through reflections or contamination of the sensor (e.g. dirt); sensor performance degradation due to environmental causes such as rain, fog, snow or other materials covering the roadway; and a possible general inability to identify lane markers due either to an absence thereof or a poor quality of the lane markers themselves, or due to obscurement of the lane markers through interference, occlusion, or lighting problems such as darkness. Such obscurement and/or inability to identify lane markers leads to the lane keep assist system being unable to function (e.g., being unable to provide lane keep assist instructions), or in some scenarios, being prone to misidentification errors, which may lead to incorrect trajectories being planned and/or instructed.

The inventors have recognized that by using precise localization and one or more trajectory paths from previous drives to provide an added error signal to the path planning controller or to the human operator, the impact of sensor failure on providing driver assistance may be decreased. A terrain-based advanced driver assistance system may provide a warning to an autonomous driving trajectory planning system if a commanded trajectory deviates from a typical driving path. A typical driving path may be, for example, a driving path that is commonly traversed on the road segment based on crowd-sourced data.

The inventors have recognized that compensation for sensor failures may be accomplished in multiple ways, for example by 1) having advance knowledge of the desired path based on a high-definition map or 2) by using information based on previous drives in the same vehicle along the desired path or based on previous drives in at least one different vehicle along the desired path. This information may for example be the precise location of the driven and/or other vehicles, and/or may be a location in combination with a heading of the driven and/or other vehicles, and/or may be information from a vision-based sensor or other sensor that is able to detect location in relation to landmarks such as lane markers, road delimiters, and/or buildings nearby. From these sources, a desired path may be derived, for example by calculating an average path from a multitude of drives, or by using a path from a reference drive that was either created for the specific purpose of mapping or was deemed accurate enough based on reference criteria. An average calculation may, for example, include removing outliers, and may remove vehicles measuring high rates of change in heading over any given segment. The average calculation may also include accounting for the speed of each vehicle and weigh drives at abnormally high or low speed differently and may also take into account speed and vehicle type to calculate multiple paths that are each appropriate for a given speed range, vehicle type, a combination thereof, and/or other factors. Any of these factors may be included and used to create a desired reference path for the vehicle driving a given road.

An accurate localization system may be used to determine the current position of the vehicle along the road. This accurate system may use several technologies, for example global navigation system satellites, real-time kinematic corrections from a base station, and similar technologies known in the industry that are able to create a precise localization service; as another example they might use dead reckoning based on vehicle-based motion sensors such as an inertial measurement unit, or a combination of global navigation system satellites and dead reckoning techniques, for example blended using a Kalman filter; as yet another example they might use terrain-based localization services that recognize features or components of the road or surroundings, such as for example vision-based event recognition of buildings, trees, signs and other features, sensor-based recognition of road features or events, or ground-penetrating laser enabling recognition of road substrate composition. Many other localization systems are understood to be useful. Greater accuracy in the localization enables better functionality of the systems described herein, especially along the direction of travel. **In** some instances, a localization accuracy of less than 1 m, but preferably less than 20 cm in the direction of travel and along the road surface may be employed, while an accuracy of less than 5 m, but preferably less than 1 m, may be employed in the direction normal to the direction of travel of the vehicle.

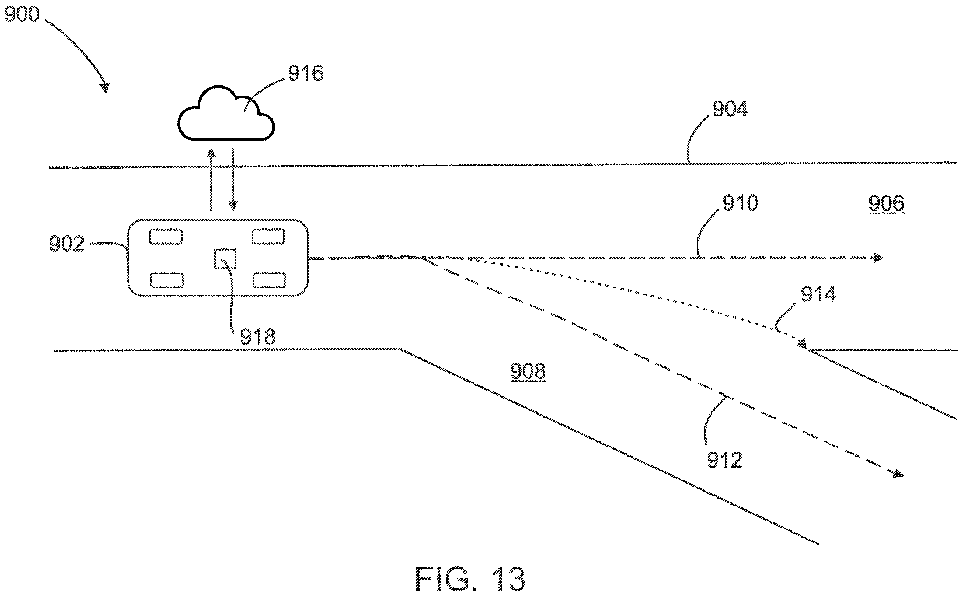

Typical advanced driver assistance systems use multiple sensors to determine if a correction should be made to the current path. Under ideal circumstances, a lane marker may be recognized on either side of the vehicle and a path may be calculated to be close to the same distance away from both, in order to travel in the center of the marked lane. The inventors have recognized that this method of determining a path may be problematic, for example when at least one lane marker is not visible or is poorly marked, or for example in the very common scenario shown in FIG. 13, where an exit lane 908 branches off the main travel lane 906, and the lane markings on one side of the road follow the exit lane. In this scenario, a calculated center between the two-lane markings on each side of the vehicle would appear to veer partially into the exit lane, before snapping back into the travel lane abruptly where the exit lane departs the roadway.

In these and other special cases, where the lane markings alone are not sufficient to plan a trajectory for the vehicle, a desired trajectory may be derived by a terrain-based autonomous driving trajectory planning system using the high-definition map (which includes including road surface information as described above), along with the precise location of the vehicle as described above. The terrain-based autonomous driving trajectory planning system may calculate an error between a trajectory indicated by the vision-based system and a trajectory determined based on information contained in the high-definition map. This error may be used in multiple ways. For example, in situations where there is high confidence in the road information contained in the high-definition map, due to, for example, the existence of data from many previous drives, or low confidence in the visual data, for example due to weather conditions, sensor obscurement, etc., the trajectory determined based on the road information data in the high-definition map may be used as a replacement, thus applying all of the calculated error as a correction to the original command. If, on the other hand, the confidence in the high-definition map data is low or there are no indications of problems with the vision data, a more cautious approach may be warranted where either only part of the error or none of the error is applied as a correction signal. The decision of weighting or selecting a source of trajectory planning data, whether visual, terrain-based, or some combination of the two, may be made, for example, by the trajectory planning controller. The trajectory planning controller may be a component of an autonomous or a semi-autonomous driving system of the vehicle. In one implementation, the trajectory planning controller may calculate the error and look for large discrepancies. In instances of such discrepancies, the trajectory planning controller may execute instructions to may warn the driver of these discrepancies (e.g., by initiating an audible, visual, haptic, and/or another alert) and may turn off automatic steering and/or other autonomous driving features if the discrepancy is high and cannot be explained through sensor fusion or other signals.

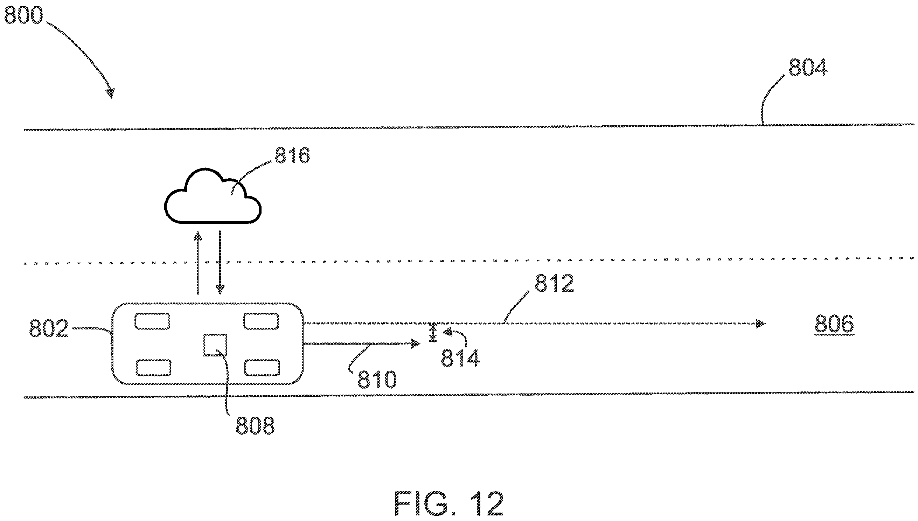

Referring to FIG. 12, in scenario 800, a vehicle 802 is traveling along a measured path 810 in lane 806 of roadway 804. The measured path 810 is determined, by a controller 808, to be offset from a desired path 812 by offset 814. The controller 808 may initiate a command or a recommendation to an operator to correct the vehicle's path so that the vehicle follows path 812. For example, in some implementations, the controller may initiate an alert (e.g., an audio, visual, and/or tactile alert) to a driver of the vehicle 502 to steer to the vehicle toward the desired path 812.

Referring to FIG. 13, in scenario 900, a vehicle 902 approaches a split in the roadway 904 where a first lane 906 proceeds straight and a second lane 908 (which may be, for example, an exit lane) splits off to the right from the first lane 906. In some trajectory planning control schemes, a controller 918 may calculate a desired path as being the same distance from lane markings on the left and right sides of a lane in which a vehicle is traveling. If such a control scheme is used, as the vehicle 902 approaches the split in the roadway 904, the controller 918 may calculate pathway 914 as the desired path for the vehicle 902. However, this path 914 would cause the vehicle 902 to operate along a trajectory which does not match a lane (either first lane 906 or second lane 908) of the roadway 904 and may result in a dangerous situation for the vehicle as it veers off the travel lane.

In a terrain-based trajectory planning system, a cloud computing system 916, which includes a cloud database that may be locally stored on the vehicle or may be remotely located and accessed at appropriate intervals through an over-the-air connection, may provide the vehicle 902 with terrain-based information. For example, when the vehicle 902 approaches the split in the roadway 904 and begins to take path 914, the cloud computing system may recognize that a road profile (derived from road data gathered by vehicle sensors (e.g., accelerometers)) corresponding to path 914 does not match any valid road profile (e.g., road profiles corresponding with proceeding straight along path 910 in lane 906 or taking the exit lane 908 along path 912) for the area in which the vehicle is traveling. In such situations, the controller 918 may steer the vehicle to bring the vehicle back to traveling on either path 910 or path 912, may alert a driver of the vehicle (e.g., via a visual, an audio, or a tactile alert), and/or may apply the brakes to reduce travel speed and thus decrease the potential for harm.

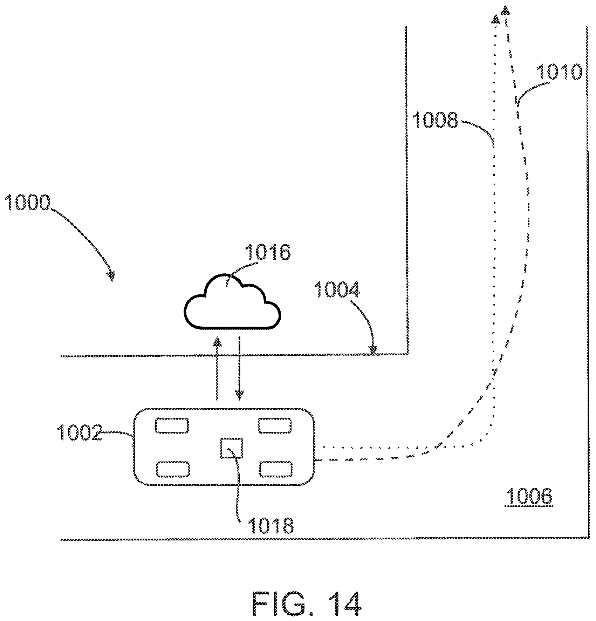

In some implementations, a terrain-based trajectory planning system may choose paths that reduce sharpness and/or improve comfort for occupants of the vehicle. Referring to FIG. 14, a vehicle 1002 approaches a turn on roadway 1004, where keeping the vehicle at an equal distance between line markings on either side of lane 1006 would cause the vehicle 1002 to take a sharp turn along path 1008. The terrain-based trajectory planning system may instead communicate with a cloud computing system 1016 to receive information on a typical path 1010 driven by a human operator through the turn and how far off of the typical path 1010 the vehicle 1012 is currently traveling. A controller 1018 may initiate a command to steer the vehicle 1002 to move the vehicle 1002 onto path 1010 and/or may alert a driver of the vehicle (e.g., via a visual, an audio, or a tactile alert).

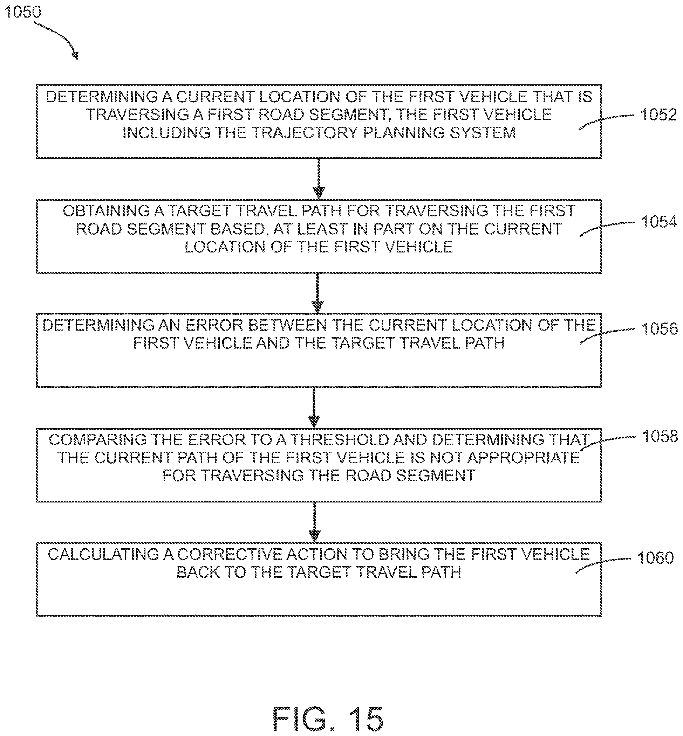

Referring to FIG. 15, the flow chart 1050 illustrates a method for calculating a target travel path for a first vehicle traversing a road segment, the vehicle having a terrain-based trajectory planning system. The method includes determining (1052) a current location of a first vehicle, obtaining (1054) a target travel path for traversing the road segment based at least in part on the current location of the first vehicle, and determining (1056) an error between the current location of the first vehicle and the target travel path. The method also includes comparing (1058) the error to a threshold and determining that a current path of the first vehicle is not appropriate for traversing the road segment. The method also includes calculating (1060), based on the error, a corrective action to bring the current trajectory to match the target travel path. In some instances, the method also includes initiating the corrective action with an advanced driver assistance system of the first vehicle that at least partially influences the steering of the first vehicle.

*ADAPTIVE HEADLIGHTS*

Modern road vehicles have headlights configured to illuminate the road ahead of the vehicle. It is generally true that illuminating the as much of the road ahead of the vehicle as possible is beneficial to the operator of the vehicle, provided that the light source (i.e., the headlamps) is sufficiently strong. However, illuminating the road far ahead of the vehicle though may also have a negative impact, because the headlights will then also shine strong light onto oncoming vehicles, potentially obstructing the visibility of operators of such vehicles. For this reason, maximum allowed headlight angles are generally regulated by authorities such as local departments of motor vehicles. A challenge is however introduced by the fact that weight changes in the vehicle may lead to the vehicle pitching up or down and thus to a change in the headlight angle with respect to the road. In some localities, adaptive systems that control for pitch changes in the vehicle above the road and maintain a maximum allowable headlight angle are also mandated. Another problem occurs when a vehicle is rounding a turn and the headlights are illuminating the section of road (or a non-road area) straight ahead of the vehicle and not the section of road which the vehicle is about to traverse.

Some vehicle makers have begun using headlights with the ability to change the angle of their light beam from left to right and/or up and down. This may be done in multiple ways, for example including using an actuator system to move the headlight, headlight assembly, lenses, or reflectors that direct the light beam, or by using a plurality of light sources, each illuminating at least partially toward a different direction and engaging them selectively as desired. The selection of the desired angle may be guided at least in part by looking at a projected trajectory of the vehicle, using for example a model based on steering angle, speed, yaw rate and/or lateral acceleration measurements and/or model states, for example using a bicycle model or a Kalman filter. The selection may also be guided at least partially by using a predicted path based on map data, for example by using a navigation input and a map layer to predict upcoming curvature. The selection may also be at least partially guided by sensors that detect road path changes, for example cameras or LiDAR systems. The selection may also be at least partially guided by sensors that indirectly or directly measure the position of the vehicle with respect to the road. The selection may also be at least partially guided by sensors that detect oncoming traffic to allow lowering or appropriately directing the light beam such as to avoid interfering with the operators of the oncoming vehicles.

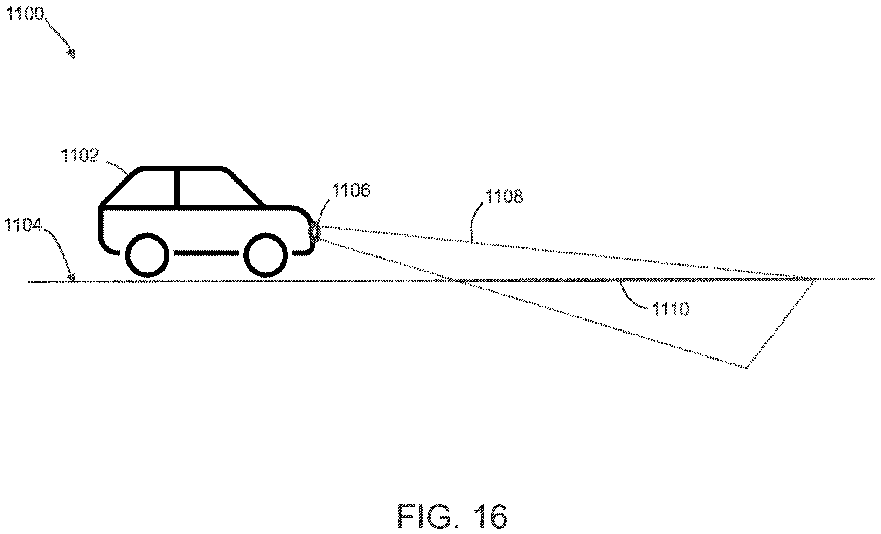

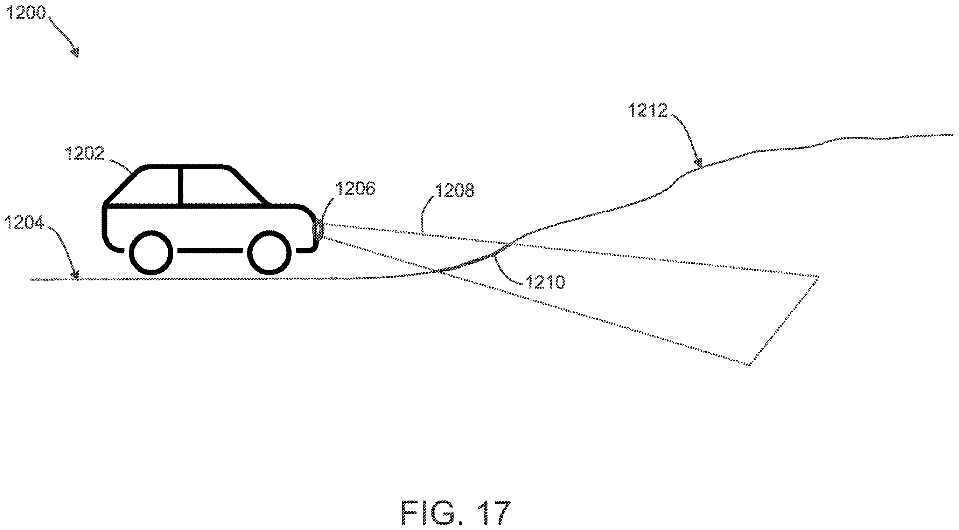

When driving on a road with significant elevation change, the headlights may only illuminate parts of the road ahead of the vehicle. For example, when driving on a road that rises in front of the vehicle, the headlights may illuminate a section of road that is closer to the vehicle and potentially smaller than if the road were flat (see, for example, the illustrations of FIGs. 16 and 17). When driving on a road that falls away in front of the vehicle, the headlights may illuminate a section of road that is farther in front of the vehicle and potentially larger, but also may potentially illuminate oncoming vehicles in an undesired manner. Even using headlight systems described above (e.g., actuating the headlight beams mechanically up or down or side to side, changing the vertical and/or lateral angle of the light beam by selectively turning individual light sources on and off, etc.) this problem persists, as the road ahead of the vehicle is not known and can, generally, not be sufficiently sensed with existing sensor systems such as vision-based systems, LiDAR, radar, or other known technologies.

The inventors have recognized that terrain-based advanced driver assistance systems (terrain-based ADAS) may employ knowledge of or make a prediction based on terrain-based road information (e.g., a road profile, road event information, etc.) ahead of the vehicle. This terrain-based road information may include, for example road elevation change and/or the road curvature. Using a method to supply this information to the vehicle with enough advance notice, a vehicle controller may request an actuation of the headlight mechanism, or a change in the headlight illumination pattern based on the terrain-based road information.

In some implementations, a vehicle approaching a hill may receive road elevation information from a road preview system. A calculation may be made as to the current angle of the vehicle with respect to the upcoming road by projecting the slope of the road under the vehicle (as provided by a road preview elevation map and knowing the precise location of the vehicle or as provided by a sensor installed on the vehicle) forward to calculate its intercept with the roadway ahead of the vehicle. Keeping in mind that there may be multiple intercepts due to the road contour, which may be known as a portion of the terrain-based road information, a calculation may be made as to the optimal angle of the headlights with respect to the vehicle itself. An optimal angle might for example be calculated by establishing a priori a desired maximum distance in front of the vehicle to be illuminated, or a desired minimum distance, or both, and then comparing the distances expected with a given road elevation profile and vehicle angle at any given moment. An optimal angle might also be calculated by determining a desired length of roadway to be illuminated, or other parameters about the illumination provided by the headlights and comparing this to the expected result on a given roadway. It should be noted that this optimal angle may depend on factors such as the vehicle speed and the vehicle type, and on the presence or absence of oncoming traffic.

In some implementations, an assumption may be made that the vehicle elevation angle is close to the slope of the roadway, for example on average within 1 degree, and thus an angle of the vehicle may be calculated for all upcoming road segments that are provided to the vehicle, thus allowing this calculation to be performed sufficiently ahead of time to allow time to actuate the headlights. In this context, a vehicle elevation angle may be understood to be the angle between a line connecting a point on the front of the vehicle chassis and a point on the rear of the vehicle chassis, and a line representing level ground. It should also be understood that in this definition, an absolute reference value may be set by the designers of the vehicle to define an elevation angle of zero to be such that the vehicle is at that angle when loaded to its design operating weight and standing still on level ground. In that manner, a typical elevation angle of the vehicle when travelling on a roadway will be near the reference value unless the roadway is not level. An elevation angle defined in this manner may be calculated for example by comparing a front and rear suspension height sensor reading and subtracting the values measured at the reference position when standing still on level ground. An elevation angle defined in this manner may also for example be inferred by measuring the current relative heights of the front and rear of the vehicle with respect to a pre-defined reference position (e.g., a mid-point of suspension travel or another point defined by the vehicle designers, or a point defined during operation based on current conditions), for example using ride heigh sensors on at least one front and one rear suspension link.

In some implementations, the calculation of the effects of headlight angle changes, or illumination pattern changes, may be predicted more effectively based on knowledge of a particular vehicles' headlight function. Many vehicles, for example, use high beam headlights that have a focused beam, thus strongly illuminating some areas ahead and to the side while poorly illuminating others, while other vehicle might have less clearly defined cones of illumination. In either case, the method described herein creates a definition or mapping of what is declared as illuminated at a given headlight angle or pattern. This definition or mapping may also be adaptive and use sensor feedback to modify its functionality.

Actuation of headlights may be varied. Some headlight systems use mechanical actuators to move beams or reflectors up and down and side to side. These mechanical actuators may be fairly slow and operate in a matter of 1 second, 0.5 seconds, etc. In some modern vehicles, the mechanical actuators may operate in less than half a second. Other headlight systems use multiple light sources, for example multiple LEDs, and have control systems enabling a change in which light sources are illuminated at any given time. A simple example of this is a high beam/low beam setup that is common in most vehicles, where the illuminated area in front of the vehicle may be modified quickly. Another example includes laterally positioned headlamps or LEDs that are configured to illuminate the road in the direction of a turn.

As an example, a vehicle may receive elevation information for a long stretch of road ahead and desire to illuminate up to 100m in front of the vehicle at the current driving speed. Using the road elevation profile, a calculation may be made of the vehicle angle at any given point along that road, and the angle of the headlights with respect to the vehicle may be determined in order to meet the desired illuminated distance. A headlight angle command sequence may be created. The vehicle's location may be estimated based on sensors (for example GNSS or LiDAR, radar, or others), based on map matching of features, and/or based on any other appropriate method. Given the current location along the headlight angle command sequence, a prediction as to when to command the next headlight angle or headlight pattern based on the known functionality of the headlight system, or based on a model thereof, may be made. For example, for a headlight with a known delay in actuation function, this delay could be considered when commanding the motion, for example by commanding the motion ahead of when it is needed.

Other factors may be considered at the time of actuation of the headlights, such as for example the presence of a vehicle in the oncoming traffic lane (which may for example be sensed by a light sensor) and the vehicle speed, personalized settings, the type of roadway, and others. The output may be a command to the headlight system to adjust the beam location, intensity, or both as appropriate, or may be an indication to the operator to adjust settings, for example in the form of a high beam adjustment warning on a heads-up display or dashboard.

In some implementations, a similar decision may be made for road elevation changes that cause the ground to dip away, where it may be preferrable to illuminate the road at a more downward angle, for example to allow improved visibility once the vehicle crests a hill. Other examples include road content such as bumps that may require a stronger illumination or a wider cone of light to provide optimal visibility to the operator; uneven road content on one side versus the other side of the road that may require individual headlight angle adjustments; road curvature changes that may be better illuminated by light sources pointing toward the road rather than in the direction the vehicle is heading; and others.

The challenge of illuminating the path ahead in a turn is, in some modern vehicles, addressed by using the vehicle's steering angle and speed to indicate a turn and consequently either engaging additional light sources in the direction of the turn, or rotating the headlight beam into the direction of the turn. This has the disadvantage that the light only illuminates the upcoming road segment once the steering wheel is turned, but also the disadvantage that it may only respond to the steering input and not to the actual road ahead, such that the operator will not see the road curving until they initiate a turning maneuver, but they may not initiate a turning maneuver if they do not see the road curving. With terrain-based ADAS, as described herein, a predicted direction from a terrain-based preview map would enable an optimal light beam direction to be determined for an upcoming road segment. In some implementations, a driver's intention may be considered alongside of terrain-based information on the upcoming road segment. For example, if the driver intends to steer toward an edge of the road (which may be determined based on known past trajectories, track direction, etc. from the terrain-based road information) the light beam is not only directed toward the road's direction, but also specifically illuminates the path the driver desires to take. This decision may be made based on safety criteria that enables optimal operation and may consider speed, steering angle and steering angle rate, and a model of typical and extreme maneuvers to allow the best choice. A possible implementation of this system may include at least partially illuminating in the direction the vehicle is heading, but also or preferentially illuminating a direction of the roadway.

Referring to FIG. 16, in scenario 1100, a vehicle 1102 is traveling along a road surface 1104. The headlights (see, e.g., headlight 1106) of the vehicle 1104 create an area of light 1108 that illuminates a stretch of road 1110 ahead of the vehicle 1102.

Referring to FIG. 17, in scenario 1200, a vehicle 1202 is traveling along a road surface 1204 that has an elevation change (e.g., hill 1212) in front of the vehicle 1202. The headlights (see, e.g., headlight 1206) create an area of light 1208 that, due to the elevation change in the terrain, illuminates only a small stretch of road 1210 that is closer to the vehicle than if the vehicle 1202 had been traveling on a flat road surface.

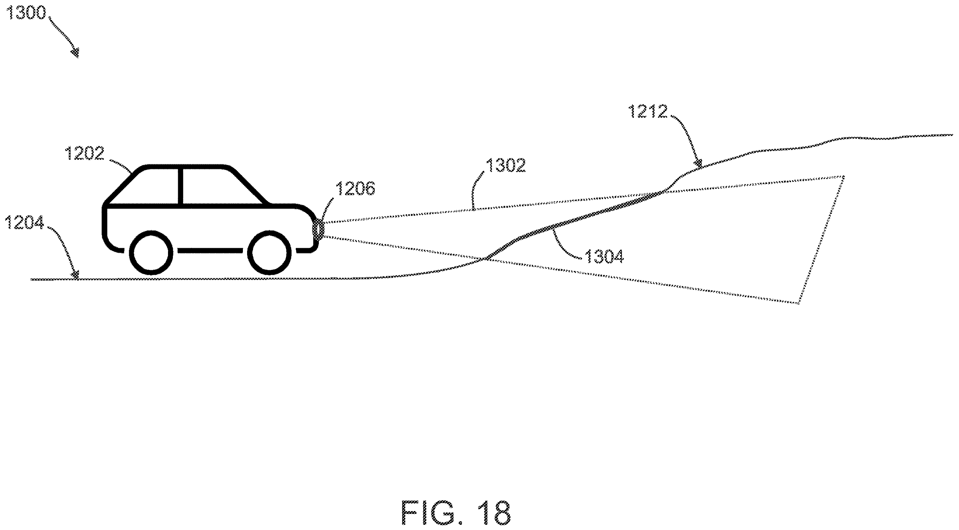

Referring to FIG. 18, in scenario 1300, the vehicle 1200 approaches the same hill 1212 as shown in FIG. 17. However, with advance knowledge of the road surface 1204 (including elevation change indicating hill 1212 exists), the headlights (e.g., headlight 1206) have been adjusted to create an area of light 1302 that is pointing higher than the normal position (see, e.g., area of light 1208 in FIG. 17). As such, a stretch of road 1304 that is illuminated by the area of light 1302 includes a larger portion of road segment 1204 that is further ahead of the vehicle 1202 than the stretch of road 1210 illuminated by area of light 1208 in FIG. 17.

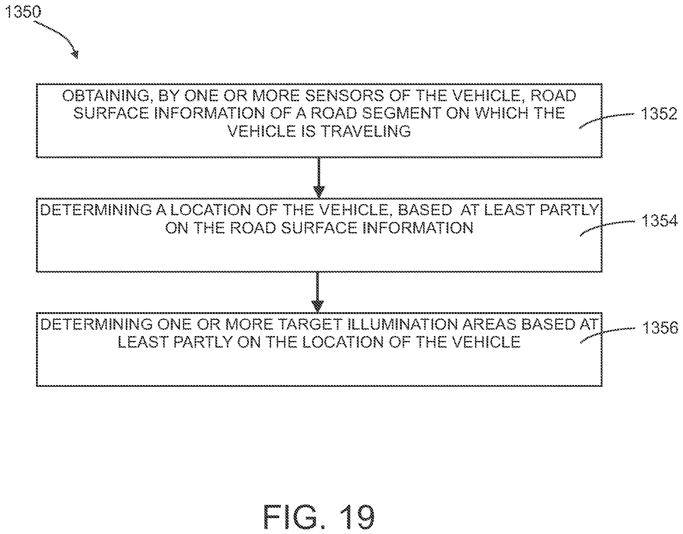

Referring to FIG. 19, the flowchart shows a method 1350 for providing terrain-based insights to an adaptive headlight system of a vehicle. The method includes obtaining (1352) road surface information of a road segment the vehicle is traveling on, determining (1354) a location of the vehicle based at least partly on the road surface information, and determining (1356) one or more target illumination areas based at least partly on the location of the vehicle.

*ADAS SENSOR RANGE ADAPTATION*

Traditional advanced driver assistance system sensors, which may include LiDAR, radar, or light-based sensors such as cameras, provide sensor readings to a controller which may inform initiation of warnings to a vehicle operator, initiation of autonomous or semi-autonomous driving commands or maneuvers, and/or a combination thereof. These ADAS sensors may have limited mechanisms for calibration, which may lead to sensor errors due to sensor obstruction, a sensor's field of view being incorrect to provide valuable information to the controller, etc.

The inventors have recognized that terrain-based road information and localization may allow adjustment of function of ADAS sensors in a vehicle, such as for example LiDAR, radar, or light-based sensors such as cameras, by, for example accounting for upcoming road obstacles, road events, road contour, etc. If an ADAS sensor has a mechanism for either adjusting its angle in the vertical direction, or its angle in the lateral direction, or both, or has other methods of modifying its optimal functionality, such as for example adjusting its focus range or the amount of background lighting or other parameters, then in a manner similar to that previously described for adaptive headlight control, the optimal sensor parameters may be adjusted based on terrain-based information and the precise location of the vehicle.

For example, in some implementations, a Li-DAR sensor may be able to detect objects at a distance and be calibrated for a vehicle on a level road and may have an actuation mechanism for adjusting its lateral and/or vertical directionality and/or sensitivity, or it may have a mechanism for adjusting its range based on internal settings and may be guided to do so. In the presence of a road feature such as a hill cresting or a bowl, the angle may be adjusted pre-emptively to correctly identify the features more relevant for the vehicle. On the other hand, understanding the road contour ahead of the vehicle may also be used to provide information to the operator or driving system that the sensor's detection range is expected to be lower, for example, due to road features ahead of the car, and that thus the vehicle speed or other settings (e.g., autonomous or semi-autonomous driving controller settings) may need to be adjusted.

In some implementations, a range sensor such as a radar may be used to detect the distance to the nearest obstacle ahead of the vehicle and may have a method for adapting its lateral and/or vertical directionality and/or sensitivity and/or range. For example, when travelling around a turn or over a hill crest, a basic sensor may not detect an obstacle in the roadway before the obstacle is directly ahead of the vehicle, since the vehicle direction may not align with the obstacle due to the turn or hill until the vehicle is very close. In this scenario, a terrain-based ADAS system may provide information that the roadway is curved or has vertical elevation change to the sensor system, and the sensor system may adapt its functionality by, for example, moving its range beam or modifying its sensitivity settings.

In some implementations, a vehicle may be travelling along a turn and the range sensor may detect an obstacle that is directly ahead of the vehicle but not along the path the vehicle is travelling, for example by being in an adjacent lane or even in an oncoming traffic lane. In this scenario, the information about the upcoming road direction may be used to avert a false warning from the range system and a proper warning may be provided if the system is able to modify its settings.

In some implementations, an ADAS or range sensor assembly may consist of a plurality of individual sensors or sensor components, and a sensor output, for example a distance to an obstacle, may typically be calculated by using a combination of them with appropriate weighting for each. If a different directionality of sensing is desired, a modified weighting may be applied, for example to prioritize the signal coming from individual sensors or sensor components that detect at an angle that is more toward one side or more upward or downward, depending on the desired effect.

In some implementations, an ADAS or range sensor assembly may have an actuation method that may move a sensor component, such as a light source, a reflector, a lens, or other, and this actuation method may be employed to alter the direction of sensing of the assembly.

It should also be understood that in a situation where the ADAS sensor directionality cannot be modified, either because the sensor lacks the ability to do so, or because of insufficient time or directional range, a warning may be provided to an operator of the vehicle, and/or a modification may be applied to any systems (e.g., autonomous or semi-autonomous driving systems, blind spot warning systems, automatic emergency braking or steering systems, lane keep assist systems, etc.) utilizing the sensor or sensor assembly to take into account that the data provided may not be accurate. As an example, this may prevent an automatic braking system from decelerating a vehicle when a range sensor senses a vehicle in an adjacent lane during a turn on a multi-lane road.

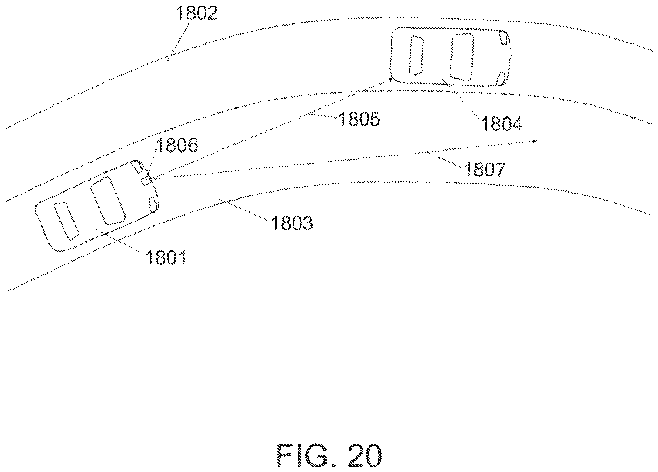

Referring to FIG. 20, a vehicle 1801 is travelling along a roadway with two adjacent travel lanes 1802 and 1803. The roadway follows a curved path ahead of the vehicle 1801. The vehicle 1801 is equipped with a range sensor 1806 that is configured to measure distance from an object straight ahead of the vehicle, following direction 1805, and at a different angle ahead of the vehicle, following direction 1807. A vehicle 1804 is located ahead of vehicle 1801 but in a different travel lane. A traditional range sensor senses vehicle 1804 as an obstacle ahead in the travel path and may engage warnings or actions up to emergency braking. Using a terrain-based ADAS feature configured to precisely predict the curvature of the roadway ahead of the vehicle, and/or the path the vehicle is likely to take based on information from a database including terrain-based information, the system is configured to alert the driver that the sensor reading may be inaccurate, and/or modify the warning settings or actions taken in response to the original sensor along direction 1805. If the sensor system may be configured to modify its sensitivity, range, or directionality, for example to prioritize the signal along direction 1807, then the notion of the curvature of the travel path may be used to select this modified sensor signal as the signal to use for actions related to the range sensor. **In** the example in the figure, a selection of the sensing signal along direction 1807 would signal that the path that vehicle 1801 is travelling on is not obstructed and would take the appropriate actions for that signal.

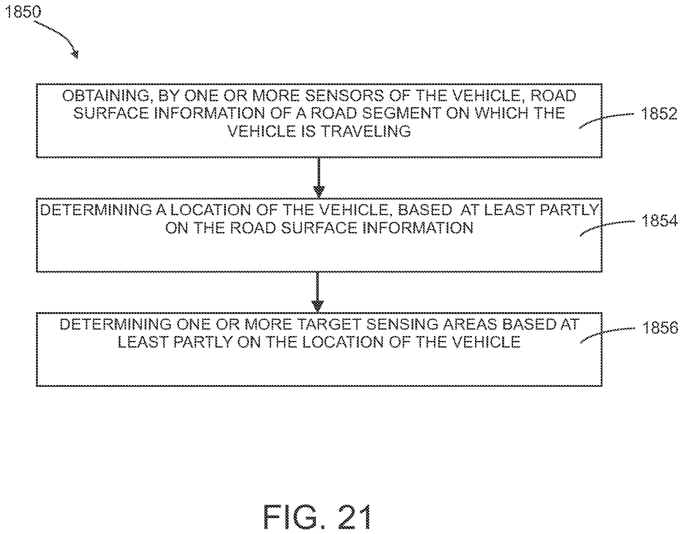

Referring to FIG. 21, the flow chart shows a method 1850 for providing terrain-based insights to an adaptive ADAS sensor system of a vehicle. The method includes obtaining (1852) road surface information of a road segment the vehicle is traveling on, determining (1854) a location of the vehicle based at least partly on the road surface information, and determining (1856) one or more target sensing areas based at least partly on the location of the vehicle.

*REAR AXLE STEERING*

Advanced driver assistance systems (ADAS) may use onboard sensors to provide steering correction, for example, in the case of lane drift. This steering correction may be suggested to a driver through tactile feedback and/or performed by front steering actuators. However, this feedback may be intrusive or perceived by the driver as an uncomfortable pulling of the vehicle to one side or another. This uncomfortable pulling may cause drive discomfort while operating the vehicle and/or may cause the driver to disable steering correction features of their vehicle's ADAS system.

The inventors have recognized that systems and methods using terrain-based insights described herein may detect lane position and provide unintrusive steering correction using rear steering actuators. Systems and methods described herein may collect driving data from numerous vehicle paths and create an aggregate path (e.g., a path associated with an average of driven paths taken by the numerous vehicles) associated with a road lane. Any appropriate localization method, including those described elsewhere herein, may be used to determine a vehicle path within the lane. If the vehicle path diverges from the aggregate path, the system may create a command for a steering correction system, the steering correction system including one or more rear steering actuators, to influence the travel direction of the vehicle.

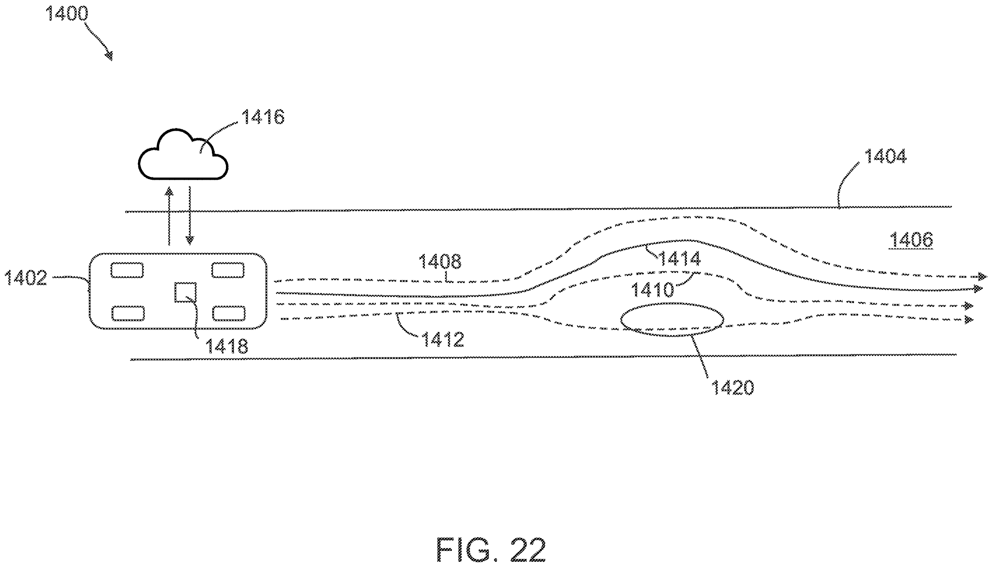

Referring to FIG. 22, in scenario 1400, for a given lane 1406 on a road segment 1404 the travel paths 1408, 1410 of a plurality of vehicles traversing the road segment, or by the same vehicle traversing the road segment at different times, may be obtained. These paths may be obtained through global navigation satellite systems (GNSS), inertial navigation, terrain-based navigation, and/or any other localization method or combination of localization methods. If a combination of localization methods is used, individual methods may be enhanced through the use of a Kalman filter, through real-time kinematic (RTK) positioning, and/or through other enhancement means.

After the plurality of travel paths 1408, 1410 are obtained, the plurality of travel paths may be combined to create an aggregate path 1414 that accounts for drivers' preferences of intra-lane positioning (i.e., where laterally within the lane do drivers operate their vehicles at each given longitudinal position along the path). Specifically, such an aggregate path may be created for each lane on a road. In creating the aggregate path 1414, some suboptimal data may be filtered out by, for example, accounting for erratic driving, removing outlier data, or through other filtering means. In one implementation, for example, in the case of a pothole 1420 situated in the lane 1406, an outlier path 1412 that fails to avoid the pothole may not be included in creating the aggregate path 1414.

In some instances, the plurality of travel paths 1408, 1410 may be sent to a cloud database 1416 that may be located on the vehicle, on a different vehicle, or in a remote location. Any filtering performed on the path data may be performed within the cloud after receiving the data. In some instances, the aggregate path 1414 may be stored in the cloud database 1416 and communicated to vehicles on an on-demand basis. For example, a vehicle 1402 driving down the lane 1406 on the road 1404 may send a request to receive the aggregate path 1414 associated with the lane 1406. Such a request may be initiated manually by a driver, or automatically by an ADAS or operating system in the case of a self-driving vehicle. A controller 1418 of the vehicle may initiate that the request be sent to the cloud database 1416.

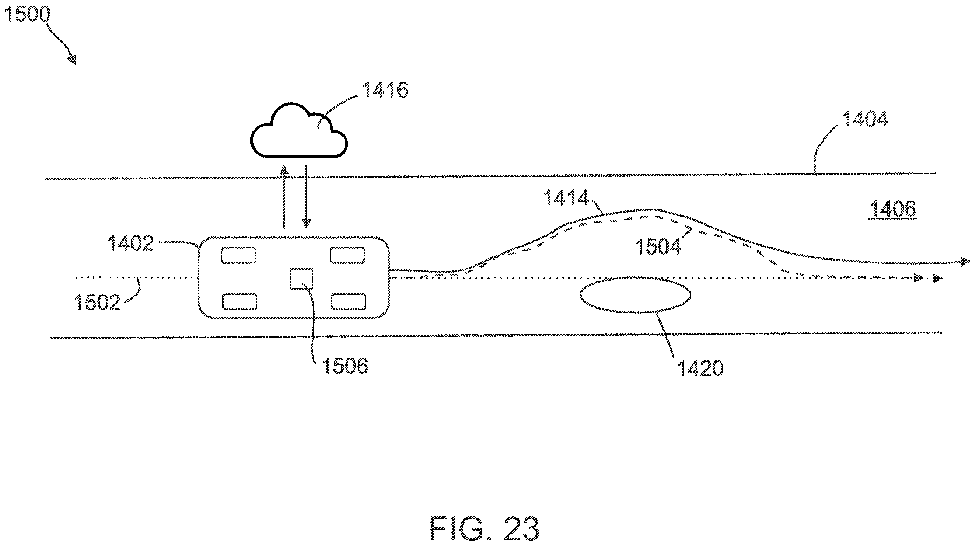

Referring to FIG. 23, in scenario 1500, once the aggregate path 1414 is created, a travel path 1502 of the vehicle 1402 may then be determined using a localization method capable of ascertaining the vehicle's instantaneous location, speed, and heading. In some implementations, because the travel paths may be indicative of travel within each lane of a road, the localization method may have an accuracy high enough to ascertain in which lane the vehicle is traveling. In some instances, this accuracy may be within 0.3 meters. An enhanced localization method may be used, such as through GNSS combined with RTK positioning, or through other combinations of multiple localization methods such as utilization of inertial navigation or terrain-based navigation in combination with GNSS. In the case of multiple localization methods, data sets may be combined using Kalman filtering to remove statistical noise and other inaccuracies. Other methods of obtaining the preferred accuracy are also contemplated and the disclosure is not so limited.

The travel path 1502 of the vehicle 1402 may then be compared to the aggregate path 1414. In the case where the travel path 1502 diverges from the aggregate path 1414, a corrective signal may be sent to a steering controller 1506, such as a controller for a rear steering actuator, to influence the travel direction of the vehicle 1402 such that the vehicle 1402 will follow a new, corrective path 1504 that approximates the aggregate path 1414. This may allow the vehicle 1402 to correct for lane drift, or to avoid common obstacles such as the pothole 1420, without further input from the driver. The corrective steering controller 1506 may be configured such that corrections to steering are sized to gently prevent deviation from the aggregate path 1414, while also considering the steering inputs coming from the driver or operating system of the vehicle 1402. In this way, the vehicle may maintain the trajectory intended by the operator, for example, in the case of an intentional lane change or shift to avoid objects in the road.

In some instances, the vehicle 1402 may include a localization system capable of locating the vehicle to a high degree of accuracy, for example, within 0.3 meters. In some instances, the vehicle 1402 may include at least one system capable of influencing the direction of vehicle travel. Such a system may be a steering system, a suspension system, or a rear steering actuator. Other systems may also be appropriate, and the disclosure is not so limited. In some instances, the vehicle 1402 may include a controller 1418 capable of receiving data from a cloud system and from the localization system. The controller 1418 may be capable of comparing the data received from both systems to generate a command that is then sent to the system capable of influencing the direction of vehicle travel.

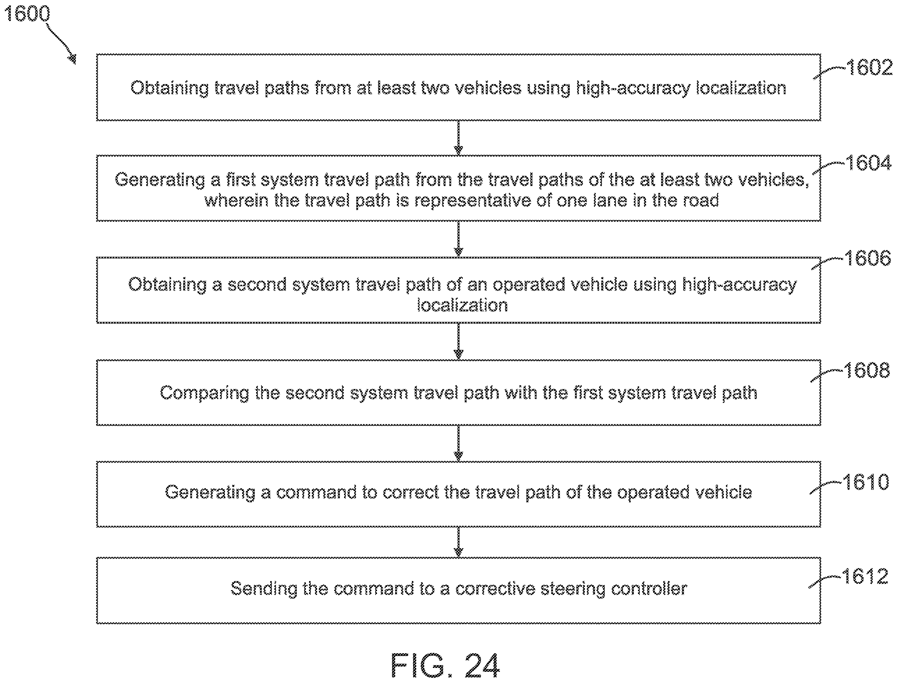

Referring to FIG. 24, a method 1600 of providing corrective steering is shown in a flowchart 1600. The method includes obtaining (1602) using a high-accuracy localization system (e.g., terrain-based localization) to gather travel paths of at least two vehicles, or of at least two traversals by the same vehicle. In some instances, the travel paths may be created using instantaneous location data, speed data, and heading data. The method also includes generating (1604), using the at least two travel paths, a first system travel path (also called an aggregate path) representative of an operators' preferred path in one lane on a road. In some instances, the aggregate path may be generated using a data set filtered to remove outliers or non-optimal travel paths. Such non-optimal travel paths may represent erratic drivers, paths obtained at abnormal speeds, paths obtained from vehicles not in a similar vehicle class, or paths obtained during high-traffic conditions, as well as paths that are considered mathematical outliers based on their data compared to the remaining paths, for example by using a clustering method on the set of paths. The method also includes obtaining (1606) a second travel path of a vehicle (the current path that the vehicle is taking while traversing the road segment), for which corrective steering is desired, using high-accuracy localization. In some instances, the high-accuracy localization method employed may have an accuracy within 0.3 meters. The method also includes comparing (1608) the travel path of the operated vehicle to the aggregate path, and based on this comparison, generating (1610) a command to correct the travel path of the driven vehicle. The method also includes sending (1612) the command to a corrective steering controller. In some instances, the controller may be configured to initiate steering commands to control a rear steering actuator.

In some implementations, the information regarding the position of the vehicle versus the average travel lane may also be used to determine the state of the operator themselves. If the operator is a human driver, a deviation from the preferred path that is repeated and/or has certain characteristics may be used to diagnose the driver's state. For example, a deviation from the average travel lane characterized by long periods of drift, for example 5 sec long, or 1 sec long, with abrupt corrections, may be an indication of the driver not being fully alert, distracted, in an impaired state due to drugs or alcohol, or falling asleep. If the operator is a machine (e.g., an autonomous or semi-autonomous driving system), then a deviation from the path may be used to diagnose sensor and/or actuator functions, calibrations, and offsets. For example, a constant offset to one side may be an indication of a camera malfunction or calibration error in systems using a camera as the primary feedback sensor for lane keeping.

### SYSTEM AND METHOD FOR AVOIDING OBSCURED ROAD SURFACE FEATURES

Road surface features, road anomalies, or road events, which may include without limitation, a pothole, a bump, a road surface crack, an expansion joint, a frost heave, etc., may be obscured to a driver of a vehicle due to poor lighting, weather conditions (e.g., fog, heavy rain, snow, etc.), and/or other vehicles. This obscuring of road surface features may cause a driver to operate the vehicle in a manner that is suboptimal for interacting with the road surface feature (e.g., driving too fast) or may cause a driver to miss an opportunity to navigate the vehicle around the road surface feature. Such suboptimal vehicle operation may cause discomfort, vehicular damage (e.g., to tires, chassis components, etc.), and/or may be less safe than optimal operation.

The inventors have recognized that road surface information may be used to help drivers avoid various road surface features or anomalies and/or minimize their impact on a vehicle when and if there is an interaction with a road surface feature or anomaly. Road surface features or anomalies may include, without limitation, a pothole, a bump, a road surface crack, an expansion joint, or a frost heave. Location of an anomaly or road surface feature may be determined by, for example, terrain-based localization systems. However, the inventors have recognized that once the relative location of a road surface feature or anomaly is available to an on-board controller, a heads-up display may be used to display the feature or anomaly and its position relative to the vehicle, even if the feature or anomaly may be obscured or concealed by poor lighting, weather conditions (e.g., fog), and/or other vehicles.

The inventors have also recognized that once the relative location of a road surface feature or anomaly is available to an on-board controller, a monitor may be used to display the feature or anomaly and its position relative to the vehicle instead of or in addition to using a heads-up display.

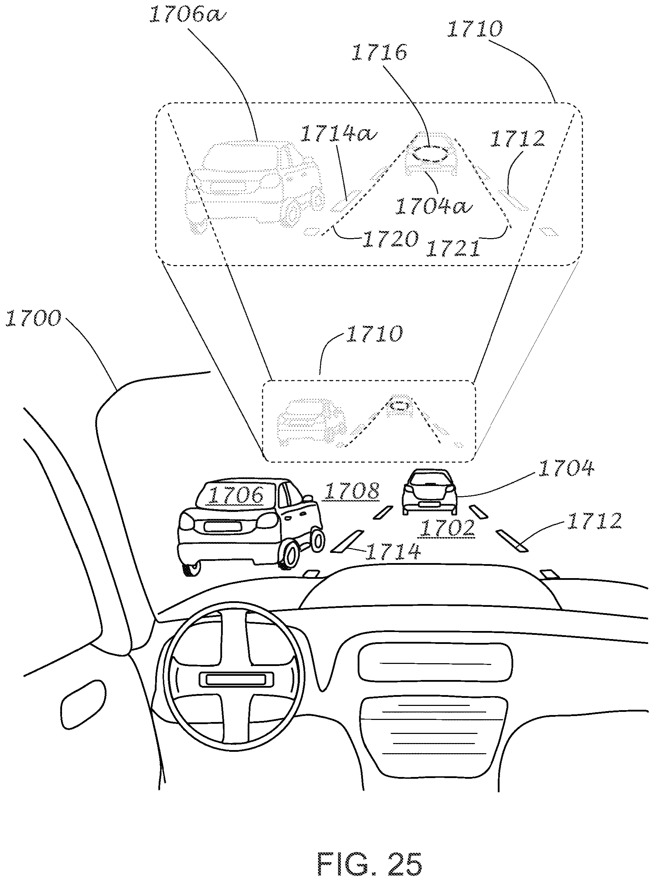

FIG. 25 illustrates a vehicle travelling in lane 1702. Vehicles 1704 and 1706 are travelling ahead of vehicle 1700 in lanes 1702 and 1708, respectively. Under the conditions illustrated in FIG. 25, a controller (not shown) on board vehicle 1702 may be aware that there is a pothole ahead in lane 1702. However, the pothole may be obscured by vehicle 1704. The controller may further be aware of the size of the pothole and that it may be avoided by straddling it with the wheels of vehicle 1700. FIG. 25 illustrates a heads-up display that shows: image 1706a of vehicle 1706, image 1704a of vehicle 1704, images 1712a and 1714a of lane markers 1712 and 1714 respectively. Additionally, the heads-up display also displays the image of pothole 1716 and its relative position to the prospective path of the left and right tires 1720 and 1721, respectively, of vehicle 1700, if the existing steering angle is maintained. If the steering angle is altered, the heads-up display 1710 may be adjusted to show the new tire paths relative to pothole 1716.

With this data a driver may be able to adjust the steering angle of vehicle 1700 to avoid the anomaly and/or road feature. With advance notice, the driver may avoid the pothole, or any road surface feature, by taking evasive measures without having to wait until the feature is visible.

It is noted that under certain conditions such as, for example, heavy fog, vehicles 1706 and/or 1704 may also be obscured. In some implementations, sensors such as radar detectors may be used to locate the vehicles and display their image(s) in the heads-up display even if the vehicles themselves are not visible to the naked eye.

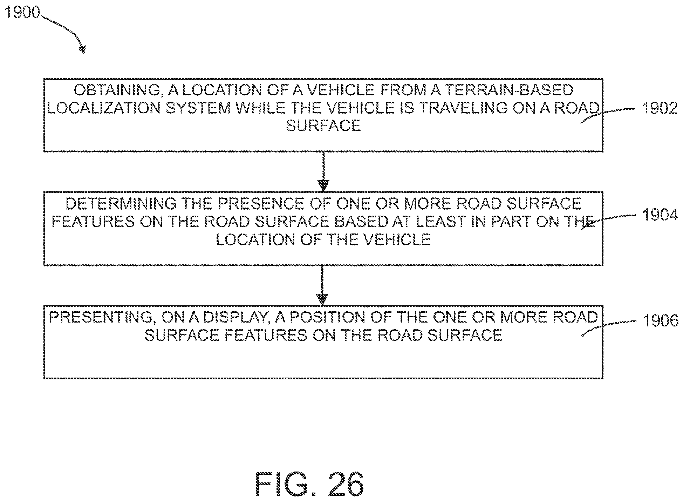

Referring to FIG. 26, the flow chart shows a method (1900) executed by a vehicle including a localization system configured to determine a location of the vehicle, a display, and a processor configured to perform the steps of: obtaining (1902) a location of the vehicle from the localization system (the steps of such localization have been previously discussed in relation to FIG. 1 and implementations of other terrain-based insights); determining (1904) the presence of one or more road surface features on a road surface based at least in part on the location of the vehicle; and presenting (1906) on the display a position of the one or more road surface features on the road surface.

### TERRAIN-BASED LANE DRIFT DETECTION

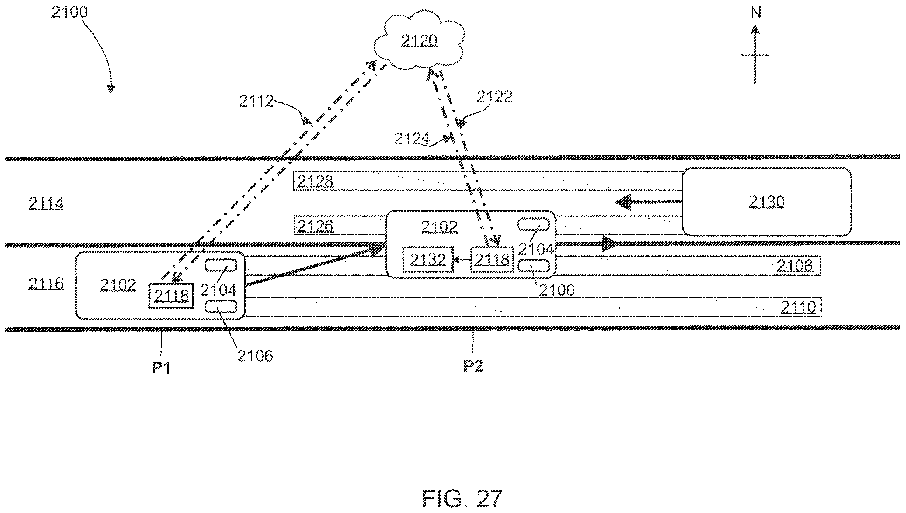

Referring to FIG. 27, an oncoming lane drift scenario 2100 shows a vehicle 2102 traveling, for example, in an eastward lane 2116 at position P1. The vehicle 2102 has a left wheel 2104 and a right wheel 2106 which are traveling in the eastward lane 2116 on left track 2108 and right track 2110, respectively. A track is a portion of a road on which one or more wheels of a vehicle may travel. In general, road segments may include multiple tracks which may be laterally offset from one another. A track may be represented by a sequence of road data (e.g., a road profile). As the vehicle 2102 travels in the eastward lane 2116, sensors on the left wheel 2104 and right wheel 2106 gather wheel data (e.g., wheel speed, wheel acceleration, etc.). In some implementations, instead of (or in addition to) a wheel sensor (e.g., a wheel accelerometer), a body accelerometer, and/or a body IMU may be used to gather data relating to the right side and left side of the vehicle. It should be understood that such right side and left side data may be used instead of or in addition to road data gathered by wheel sensors (sometimes referred to as wheel data), as described herein. The wheel data from both the left wheel 2104 and the right wheel 2106 is compared, by a controller 2118, to road profile data from a cloud database 2120 to localize the vehicle 2102 on the road surface. The controller 2118 and the cloud database 2120 may communicate (represented by arrow 2112) with one another to send and/or receive data. When the current left wheel data matches previously obtained road profile data for left track 2108 and the current right wheel data matches previously obtained road profile for right track 2110, the vehicle 2102 may be localized to eastward lane 2116.

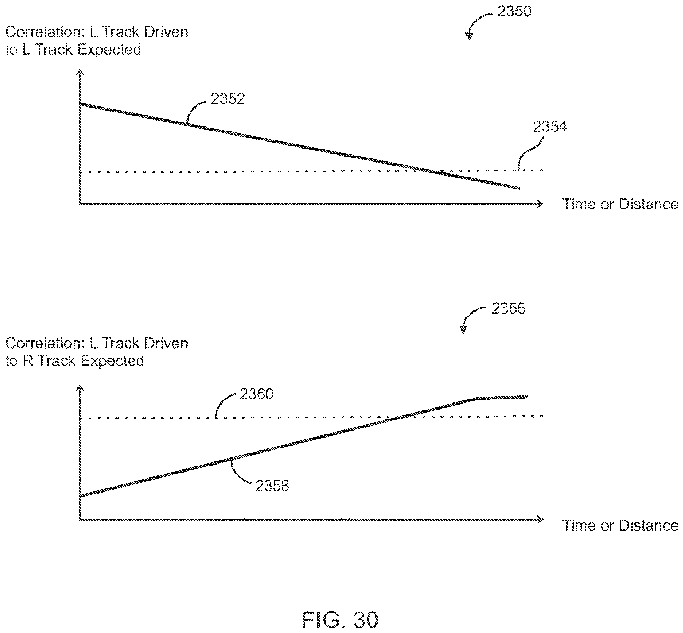

In some implementations, as the vehicle 2102 begins to drift into westward lane 2114 as the vehicle 2102 moves from position P1 to position P2, the left wheel data and right wheel data may no longer match road profiles for the left track 2108 and the right track 2110 of eastward lane 2116. During the lane drift, as the vehicle 2102 loses the match between wheel data gathered by sensors corresponding to wheels 2104 and 2106 and tracks 2108 and 2110, respectively, the controller 2118 of the vehicle 2102 may request (represented by arrow 2124) more road profile information from the cloud database 2120. FIG 30. and its related description discuss losing a match in further detail. Additional road profile information may be sent (represented by arrow 2122) by the cloud database 2120 to the controller 2118 and may include road profile information for adjacent lanes (here, such road profile information may include information on westward lane 114). In FIG. 27, road profile information for the oncoming westward lane 2114, including information on a left track 2126 and a right track 2128 corresponding to westward lane 2114, may be included in the additional road profile information. Clustering and tagging techniques may be used to organize tracks in relation to one other (e.g., within physical lanes, in adjacent lanes, laterally offset from one another, etc.), within the cloud database, as previously discussed.

In some implementations, the terrain-based lane drift detection system may perform a cross correlation between current data collected that represents left wheel 2104 and/or right wheel 2106 and data from multiple candidate tracks (e.g., tracks 2108, 2110, 2126, 2128) to determine if there is a match. The candidate tracks may be selected based on a general location of the vehicle, which, in some instances, may be a GPS location of the vehicle. The data representing the left wheel 2104 and/or the right wheel 2106 is said to match a single track of the multiple tracks when the correlation is above a threshold. The threshold may be set based, at least in part, on the uniqueness of the multiple candidate tracks from one another. For example, in a lane or a road with a lot of lateral uniqueness, the threshold for correlation to determine a match may be lower than the threshold for correlation to determine a match in a lane or on a road with less lateral uniqueness. The terrain-based lane drift detection system may dynamically very the threshold based on knowledge of the road profiles of each of the multiple tracks with each other as the vehicle travels along the road segment or across multiple road segments.

In some implementations, data from the tracks (e.g., tracks 2108, 2110, 2126, 2128) may be reversed to determine potential matching with tracks of an opposite direction lane. Reversing a track means that road data of the track is sequenced in the opposite direction from the expected vehicular travel in the lane in which the track is located. For example, a vehicle 2130 travels westward in lane 2114. Sequencing road data for track 2126 typically proceeds from east to west (i.e., in the order that the vehicle 2130 will experience the road), while sequencing track 2126 in reverse would sequence road data from west to east (i.e., in the opposite order that the vehicle 2130 would experience the road).

For the vehicle 2102, which is depicted as traveling eastward in lane 2116, data from left track 2126 and right track 2128 may be sequenced in reverse to determine if there is a match with wheel data gathered by sensors corresponding to wheels 2104 and 2106 of the vehicle 2102. As shown in FIG. 27, for example, as the vehicle 2102 moves from position P1, to position P2, while drifting from eastward lane 2116 into westward lane 2114, data corresponding to left wheel 2104 and data corresponding to right wheel 2106 may change from matching with a right track 2110 and a left track 2108, respectively, at position P1 to matching with track 2108 and a reverse of track 2126, respectively, at position P2. In such an instance, when the controller 2118 determines that the vehicle 2102 is matching reverse track 2126, the controller 2118 may identify the behavior as a lane drift and may send a message to another vehicle system 2132 (e.g., an ADAS, an autonomous vehicle controller, etc.) that a lane drift behavior may be occurring. Communication between the controller 2118 and the cloud database 2120 (represented by arrows 2122 and 2124) may enable identification of a lane drift behavior.

In some instances, a lane drift may be treated as an intermediary step in a lane change maneuver. For example, on a multi-lane road, if a driver initiates a left turn signal, the terrain-based localization system determines that there is a same-travel direction lane to the left, and the terrain-based lane drift detection system determines a lane drift to the left, the other vehicle system may not display a warning message as the lane drift is determined to be an intermediary step of a desired lane change maneuver. In some implementations, the controller 2118 may compare a previous position of the vehicle 2102 to a current position of the vehicle 2102 to determine if the maneuver has completed, is completing, or is ongoing.

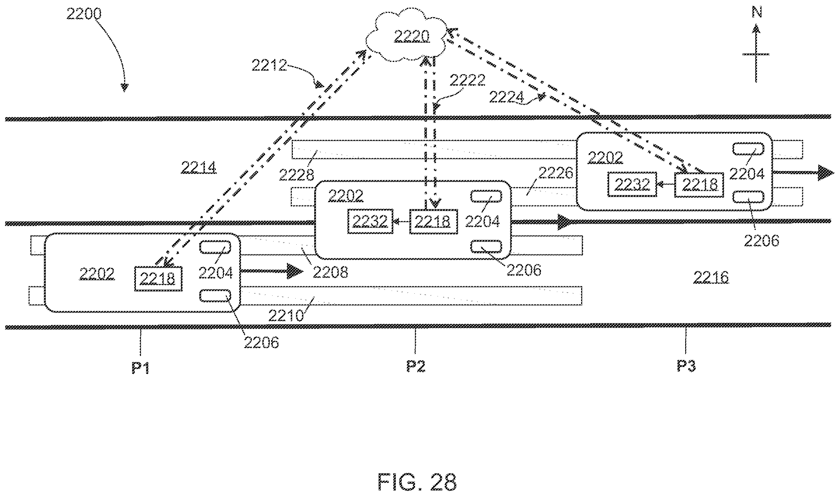

Referring to FIG. 28, a vehicle 2202 may be traveling in an eastward lane 2216 with a left wheel 2204 traveling on a left track 2208 and a right wheel 2206 traveling on a right track 2210. As the vehicle 2202 travels in the eastward lane 2216, sensors on the left wheel 2204 and right wheel 2206 gather wheel data (e.g., wheel speed, wheel acceleration, etc.). In some implementations, instead of (or in addition to) a wheel sensor (e.g., a wheel accelerometer), a body accelerometer, and/or a body IMU may be used to gather data relating to the right side and left side of the vehicle. It should be understood that such right side and left side data may be used instead of or in addition to road data gathered by wheel sensors (sometimes referred to as wheel data), as described herein. A controller 2218 of the vehicle communicates with a cloud database 2220 to obtain road profile information of candidate tracks (i.e., tracks that may be in the same general location as the vehicle 2202). Potentially matching tracks being located at the same general location may mean that the tracks are close enough together to be within the limits of GPS accuracy. The controller 2218 compares the obtained road profile data with road data gathered by sensors on the wheels 2204 and 2206 to determine a track that each wheel is traveling on and the longitudinal location of the wheel on that track. For example, in FIG. 28, at position P1, the terrain-based localization system may determine that left wheel 2204 is traveling on track 2208, the right wheel 2206 is traveling on track 2210, and that the vehicle 2202 is located at longitudinal position P1 along the road segment.

As the vehicle 2202 moves to position P2 along the road segment, the controller 2218 communicates 2222 with the cloud database 2220 to determine that data representing left wheel 2204 now matches with road profile data of track 2226 and data representing right wheel 2206 now matches with road profile data of track 2208, indicating that the vehicle 2202 has drifted partially into eastward lane 2214. The controller 2218 may inform another vehicle system 2232 (e.g., an ADAS, an autonomous vehicle controller, etc.) of the lane drift behavior.

As the vehicle 2202 moves from longitudinal position P2 to longitudinal position P3, the controller 2218 may communicate 2224 with the cloud database 2220 and obtain road profile information for tracks 2226 and 2228. The controller 2218 may compare road data gathered by sensors corresponding to the wheels 2204 and 2206 and compares the currently gathered road data with previously obtained road profiles from the cloud database 2220. At position P3, the controller 2218 may determine that the vehicle 2202 is laterally positioned on tracks 2226 and 2228 in lane 2214 and longitudinally positioned at position P3.

The controller 2218 may determine that a lane change maneuver has occurred based on matching current data from wheel 2204 with previously obtained data from track 2228 and data representing wheel 2206 with a road profile of track 2226 at longitudinal position P3 after having previously matched data representing wheel 2204 with a road profile of track 2208 and data representing wheel 2206 with a road profile of track 2210 at longitudinal position P1. The controller 2218 may compare a previous position of the vehicle 2202 to determine the maneuver the vehicle has completed, is completing, or is ongoing.

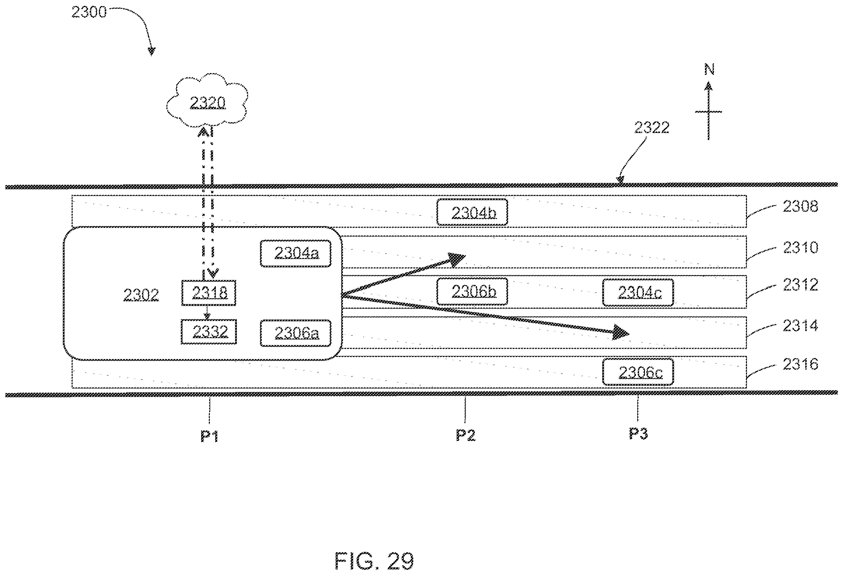

Referring to FIG. 29, as a vehicle 2302 travels in a lane 2322, a terrain-based localization system may determine a lateral position of the vehicle 2302 within the lane 2322. A controller 2318 of the vehicle may communicate with a cloud database 2320 as the vehicle 2302 travels in the lane 2322. Based on currently obtained road data representing wheels 2304a and 2306a, the controller 2318 compares the currently obtained road data with previously obtained road profile data received from the cloud database 2320. The road profile data received from the cloud database 2320 may include road profile data for multiple tracks within the lane 2322. Based on a comparison between the road data currently obtained from the sensors and the previously obtained road profile data received from the cloud database 2320, the terrain-based localization system may determine both lateral and longitudinal positions within the lane 2322. For example, at longitudinal position P1, the terrain-based localization system determines that the left wheel 2304a is laterally positioned in track 2310 and the right wheel 2306a is laterally positioned in track 2314. The terrain-based localization system may determine that this orientation of the vehicle corresponds to the vehicle being in the center of the lane 2322.

In some implementations, the controller 2318 may determine that the vehicle 2302 is not in the center of the lane and may alert another vehicle system 2332 (e.g., an ADAS, a lane keep assist system (LKAS), an autonomous driving controller, a semi-autonomous driving controller, etc.) that the vehicle 2302 is off-center. In one example, if the wheels 2304a and 2306a are located at lateral positions 2304b and 2306b, respectively, as the vehicle 2302 is at longitudinal position P2, the controller 2318 may determine that the vehicle 2302 has drifted to the left. In another example, if the wheels 2304a and 2306a are located at lateral positions 2304c and 2306c, respectively, as the vehicle 2302 is at longitudinal position P3, the controller 2318 may determine that the vehicle 2302 has drifted to the right. The controller 2318 may notify another vehicle system (e.g., an ADAS, a lane keep assist system (LKAS), an autonomous driving controller, a semi-autonomous driving controller, etc.) that the vehicle 2302 is off-center. The other vehicle system 2332 may present, on a display, an indication that the vehicle 2302 is off-center and/or that corrective steering is required. The driver then may correct this off-center position by steering the vehicle back into the center of the lane. In an autonomous or a semi-autonomous vehicle, the controller 2318 may notify an autonomous driving controller or a semi-autonomous driving controller that the vehicle 2302 is drifting within the lane 2322 so that the controller may adjust course accordingly.

FIG. 30 shows two graphs of correlations between driven and expected tracks during a lane drift maneuver. In the top graph 2350, a correlation (represented by line 2352) is shown between the left track as driven by the vehicle and the expected left track (i.e., if the vehicle proceeded following the original left track). As the vehicle drifts, the correlation decreases, as the match between the driven left track and the expected left track worsens. When the correlation drops below a threshold 2354, a controller may determine that the vehicle is in an ongoing, or has completed, a lane drift maneuver. In some implementations, as the correlation drops toward the threshold, the controller may be able to estimate how much of a lane drift maneuver has been completed, which may be mapped to an amount of lateral travel. The controller may instruct other vehicle systems (e.g., an ADAS, a lane keep assist system (LKAS), an autonomous driving controller, etc.) based on tracking this correlation.

In the bottom graph 2356 of FIG. 30, a correlation (represented by line 2358) is shown between the left track as driven by the vehicle and the expected right track (i.e., if the vehicle proceeded following the original left track, the expected right track would be followed by the right wheels of the vehicle). As the vehicle drifts, the correlation increases as the left wheel of the vehicle moves closer to the expected right track. When the correlation surpasses a threshold 2360, a controller may determine that the vehicle is in an ongoing, or has completed, a lane drift maneuver. In some implementations, as the correlation surpasses the threshold 2360, the controller may be able to estimate how much of a lane drift maneuver has been completed, which may be mapped to an amount of lateral travel. In some implementations, when the threshold is surpassed, the controller may localize the left wheel of the vehicle on the expected right track. The controller may instruct other vehicle systems (e.g., an ADAS, a lane keep assist system (LKAS), an autonomous driving controller, etc.) based on tracking this correlation.

*LOCATION BASED PASSING LANE GUIDANCE*

In some instances, lane changes may result in a vehicle entering a lane of travel where there may be vehicles traveling in an opposite direction (i.e., where oncoming traffic travels). In some embodiments, by using high precision terrain-based localization, a system may detect that a lane change maneuver has occurred at a precise location and may upload that information, and other vehicle information, to a cloud-based database. The cloud-based database may communicate with a cloud processing system to determine where such lane changes occur at a frequency that is above a certain threshold value and may send that information, and other vehicle information, to individual vehicles. Using many data points and statistical modeling, a lane change warning system may provide alerts and/or warnings to a driver of a vehicle.

Systems and methods described herein may include one or more of the following advantages. Embodiments described herein may leverage statistics and road information, which may include oncoming traffic, weather conditions, time of day, etc. In some implementations, aspects may be executed on a mobile device (e.g., a mobile phone, tablet, etc.), which allows the system to be portable and transferable from car to car. The system uses predictive information and may update that information in real time and may do a simple compare of datapoints, which offers simplicity and robustness. The system may also function in poor visibility conditions where cameras, which may be used in other road analysis systems, may perform poorly. The system may also give a simple, "Yes" or "No", advice on an overtaking maneuver, which allows the driver to easily interpret information. The system has the flexibility to use the vehicle's own statistical information from previous drives (or even from during the active drive) or a combination of the vehicle's own statistical information and crowd sourced information. A driver may be able to switch between these modes in real-time.

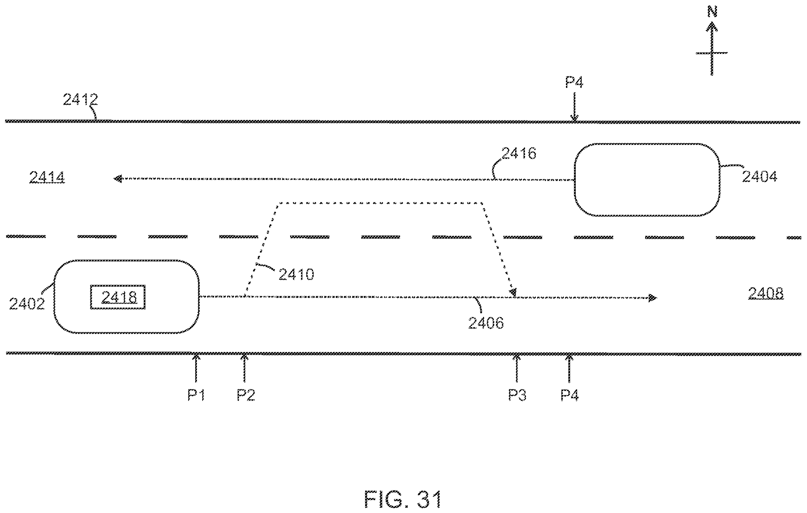

As shown in FIG. 31, a vehicle 2402 is traveling east along a road 2412 along path 2406 in a first lane 2408. The vehicle 2402 may perform a lane change maneuver and take path 2410, which takes the vehicle 2402 into a second lane 2414. When vehicle 2402 reaches position P1 in the first lane 2408, a controller 2418 on the vehicle 2402 may present to or otherwise notify (e.g., by an audible sound or tactile alert (e.g., vibration)), a driver of the vehicle 2402 via, for example, an advanced driver-assistance system (ADAS), that the vehicle 2402 is approaching an overtaking zone. The overtaking zone, starting at position P2 and extending eastward to position P3, is a zone where it is more common, as determined by crowd sourced vehicle data, to perform a lane change maneuver. The ADAS may, under certain circumstances, indicate to the driver of the vehicle 2402, when the vehicle has reached position P2, that the overtaking zone has begun. In some implementations, the ADAS may indicate that the overtaking zone begins in a certain amount of distance (e.g., 0.1 miles, 0.2 miles, etc.) or a certain amount of driving time (e.g., 5 seconds, 10 seconds, 30 seconds, etc.). The driving time may be based on a current speed of the vehicle. The ADAS may, under certain circumstances, indicate to the driver that the overtaking zone is ending as the vehicle 2402 approaches position P3. In some implementations, the ADAS may indicate that the overtaking zone ends in a certain amount of distance (e.g., 0.1 miles, 0.2 miles, etc.) or a certain amount of driving time (e.g., 5 seconds, 10 seconds, 30 seconds, etc.). The driving time may be based on a current speed of the vehicle. In some implementations, the crowd sourced data used to determine the position of the overtaking zone may indicate that characteristics of the road segment, on which the overtaking zone exists, may be advantageous for performing an overtaking lane change maneuver. For example, the road segment may be straight, may be free from potholes or bumps, may be free from rough pavement, may not collect water or snow frequently, etc.

In some implementations, overtaking zone indications may only be initiated when another vehicle is in front of the vehicle 2402 within a threshold distance such that the other vehicle would be passable if safe conditions for passing occur. For example, in situations where no vehicle is present to be potentially passed by the vehicle 2402, the overtaking zone indications may be suspended. In some implementations, the overtaking zone indications may be suspended if another vehicle, while within a threshold distance, is traveling at the same rate of speed as the vehicle 2402.

Also shown in FIG. 31, a second vehicle 2404 is traveling westward along the road 2412 on path 2416 in the second lane 2414, which is an adjacent, but opposite direction, lane to the first lane 408 in which the first vehicle 2402 is traveling. As the second vehicle 2404 reaches position P4 in lane 2414, the second vehicle 2404 may present to or otherwise notify a driver, for example, via an ADAS, that the second vehicle 2404 is approaching an oncoming overtaking zone. The ADAS may inform the driver of the second vehicle 2404 that there is a higher likelihood that an oncoming vehicle may enter lane 2414 which may increase collision risk.

In some implementations, the first vehicle 2402 and/or the second vehicle 2404 may be autonomous vehicles. In such implementations, the presence of an overtaking zone, either in the autonomous vehicle's lane of travel or an oncoming lane, may be sent to an autonomous driving controller of the autonomous vehicle. The autonomous driving controller may utilize the knowledge of the existence of an overtaking zone to determine autonomous driving behavior.

In some implementations, understanding that a lane change behavior has occurred may be important for path prediction and/or determining what data the vehicle consumes. For example, if the vehicle 2402 initiates an overtaking lane change maneuver at position P2, thereby following path 2410, the vehicle may consume road data for lane 2414 while between positions P2 and P3. For example, road data from lane 2414 may be consumed by the vehicle 2402 to perform motion control, e.g., by changing a position of one or more active suspension actuators on the vehicle 2402. In such an instance, the road data from lane 2414 would be sequentially reversed so that such road data could be consumed by vehicle 2402 traveling in lane 2414 in an opposite direction from a typical vehicle (e.g., vehicle 2404) traveling in lane 2414.

When determining a lane change maneuver has occurred or is occurring, the vehicle 2402 may ask the driver and/or a vehicle controller (e.g., if the vehicle is an autonomous or semi-autonomous vehicle) to confirm the lane change maneuver. Detection of a lane change maneuver may be done locally to the vehicle 2402 or via communication with a cloud database (e.g., comparing current data to data received by the vehicle from the cloud, uploading data to the cloud and receiving data that a lane change has occurred, etc.). A lane change and overtaking maneuver may be a specific feature or event available in the cloud database or in a database local to the vehicle 2402.

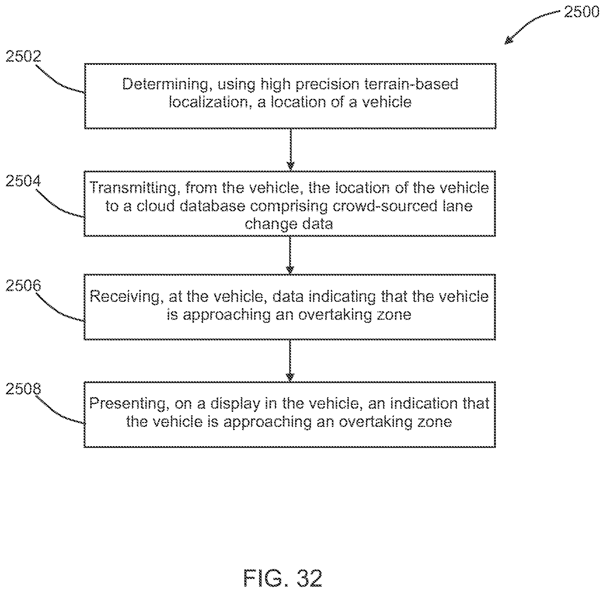

Referring to FIG. 32, a method of performing lane change guidance for a vehicle is shown in a flowchart 2500. The method includes using (2502) terrain-based localization to determine the location of the vehicle. In some instances, high precision terrain-based localization provides location accuracy to within less than 12 inches. In some instances, high precision terrain-based localization provides location accuracy to within less than 8 inches. The method also includes transmitting (2504), from the vehicle, the location of the vehicle to a cloud database comprising crowd-sourced lane change data. The method also includes receiving (2506), at the vehicle, data indicating that the vehicle is approaching an overtaking zone. In some embodiments, this data may be based on crowd-sourced data from other vehicles similar to the vehicle (e.g., same body type, traveling at same time of day/day of week, traveling during same type of weather, traveling at same time of year, etc.). The method also includes presenting (2508), on a display in the vehicle, an indication that the vehicle is approaching an overtaking zone. In some implementations, this presenting step may include presenting that the overtaking zone ends in a certain amount of distance (e.g., 0.1 miles, 0.2 miles, etc.) or a certain amount of driving time (e.g., 5 seconds, 10 seconds, 30 seconds, etc.). The driving time may be based on a current speed of the vehicle.

The lane change detection system may use statistical information to anticipate a lane change, which may be different than a steering event, while following the road. If the road profile for a particular road segment is known (i.e., by a terrain-based localization system), the vehicle may determine when a lane departure has occurred and then when the vehicle has reentered the lane by comparing currently gathered road data with the previously collected road information.

In some implementations, lane change maneuvers that are detected by a vehicle are uploaded to a cloud database. These lane change maneuvers may be aggregated and be labeled as a road event on the road segment on which the lane change maneuver often occurs. In some instances, a vehicle's own statistical information and weight may be used in view of crowd sourced data, which may include past information regarding the vehicle and the vehicle's driving behavior. Crowd-sourced information may be separated into similar vehicle groups, based on vehicle attributes. For example, data from sporty sedans (which, for example, may perform overtaking maneuvers more often or at different locations than other types of vehicles) may be separated from data from pickup trucks or large SUVs. In some instances, only data sourced from vehicles similar to the driven vehicle in at least one aspect may be used in determining whether an overtaking zone exists. In some implementations, similar to the driven vehicle may mean the same vehicle body type (e.g., sedan, SUV, pickup truck), same engine/power type (e.g., large/powerful gas engine, small gas engine, hybrid engine, electric vehicle, etc.), same driving type (e.g., human driven, semi-autonomous, autonomous, etc.), etc.

In some implementations, meta data may be used to separate and/or categorize overtaking maneuvers. For example, data may be sorted by season (e.g., winter versus summer). In some instances, roads may be differing widths in the winter due to snow accumulation and some areas which may have been appropriate for overtaking maneuvers in non-snowy environments may be inappropriate with due to snowbank accumulation. **In** another example, time of day and/or day of week/year information may also be used. For example, overtaking maneuvers may be performed at different frequencies or at different locations at night or on weekend days. Differing traffic patterns, which may depend on the day and time of travel (e.g., weekday, holiday, summer weekend day, ski season, etc.), may influence patterns of overtaking maneuvers that may occur. In some instances, a correction factor may be applied to overtaking maneuver data based on meta data associated with the particular instance of overtaking. This correction factor may allow filtering within the database of overtaking maneuvers that occur under similar conditions to the present vehicle and/or condition.

In some instances, an indication that an overtaking zone exists may be based primarily, or solely, on overtaking maneuvers that occur under similar weather conditions to the present vehicle. Similar weather conditions may mean similar temperature ranges (e.g., above freezing, below freezing, approximately 32 degrees F, above 80 degrees F, etc.), similar precipitation conditions (e.g., heavy rain, light rain, heavy snow, light snow, freezing rain, no precipitation, etc.), similar visibility conditions (e.g., low visibility due to fog, high visibility, etc.), etc.

In some instances, an indication that an overtaking zone exists may be based primarily, or solely, on overtaking maneuvers that occur under similar time conditions to the present vehicle. Similar time conditions may mean the same day of the week, same type of day of the week (e.g., weekends day versus weekdays), same type of day of year (e.g., holidays versus non-holidays), same date, same season (e.g., spring, summer, fall, winter), same portion of day (e.g., same hour of the day, morning commute time, evening commute time, morning, afternoon, evening, night, etc.).

In some instances, an indication that an overtaking zone exists may be based primarily, or solely, on overtaking maneuvers that are performed by drivers of a similar skill level to the driven vehicle. Similar skill level may mean length of driving record (e.g., number of years driving), reported skill level by the driver (e.g., beginner, intermediate, advanced), skill level determined based on driver behavior (e.g., sensing driver behavior and determining a beginner, intermediate, or advanced skill level, etc.), etc.

*CONSERVATION OF TELEMETRY BANDWIDTH BY COMPARISON TO EXISTING ROAD DATA*

A naive telematics system may upload all high-resolution data during a drive. The inventors have recognized that by selectively uploading only road profile information that includes data that is different from historical data allows the system to conserve bandwidth. Conserving bandwidth may be important as systems, which may be simultaneously uploading and downloading high-resolution road profile data, including terrain-based localization or proactive suspension control, may become bandwidth limited.

High-resolution road profile data may be needed by various in-vehicle control systems. However, substantial cellular bandwidth may be required to constantly update a road profile database, especially under conditions of high vehicular traffic. If a vehicle has downloaded a stored road profile and has determined that current data (i.e., vehicle data including road profile data for a current traversal of a road segment by the vehicle) matches expected data (i.e., vehicle data including road profile data for a previous traversal of a road segment by a vehicle (which may be a different vehicle or the same vehicle), the road profile data being stored in a cloud database) the vehicle may not need to upload the recorded current data. Instead, it may suffice, for example, to upload certain metadata about whether the road profile has matched and/or how well the road profile has matched.

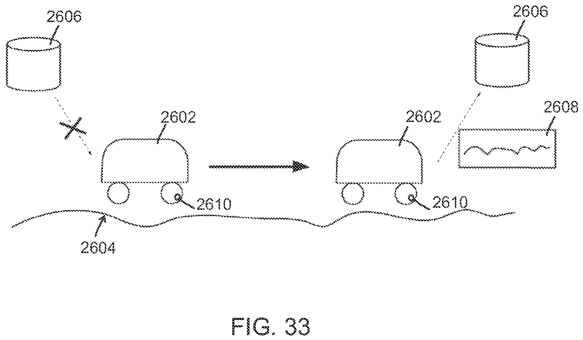

As illustrated in FIG. 33, as a vehicle 2602 travels on a road 2604, a sensor 2610 (e.g., a wheel sensor, an accelerometer, etc.) of the vehicle 2602 may collect data related to the road, such as for example, road surface data. The data may be used to determine a road profile 2608 of the road 2604, or otherwise characterize the environment of the road, on which the vehicle 2602 is traveling. The road profile 2608 may be determined by a processor on board the vehicle 2602. The vehicle 2602 may send a request, to the cloud database 2606, for data about the road on which the vehicle 2602 is traveling. This data may include stored and/or previously processed road profile information. When the road profile 2608 obtained by the vehicle 2602 is new (i.e., a cloud database 2606 in communication with the vehicle 2602 has no corresponding road profile stored), the vehicle 2602, by a wireless transmitter, may upload the road profile 2608 to the database.

The road profile 2608 may include data derived from wheel accelerations (e.g., vertical motion data). In some implementations, data in the road profile 2608 may be normalized. This normalization may be advantageous as vehicle specifics (e.g., make, model, tires, other options, etc.) of the vehicle 2602 that collected the road profile 2608, which may have affected the data making up the road profile 2608, are irrelevant to the later consumption of the normalized road profile by one or more other vehicles. Additional data may also be uploaded along with the road profile data. This additional data may include, for example, event detection data, suspension position data, longitudinal acceleration data, and/or other telemetry, etc. Event detection data may be data that indicates that a particular road event (e.g., a pothole, speed bump, manhole cover, etc.) exists on a road segment at a particular location.

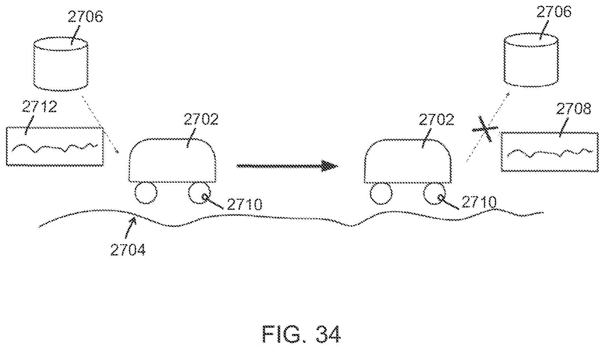

As illustrated in FIG. 34, as a vehicle 2702 travels on a road 2704, a sensor 2710 (e.g., a wheel sensor, an accelerometer, etc.) of the vehicle 2702 collects data related to the road surface. The data may be used to determine a profile of the road 2704 on which the vehicle 2702 is traveling. The road profile 2708 may be determined by a processor on board the vehicle 2702. As the vehicle 2702 is traveling along the road, a cloud database 2706 may inform the vehicle (by sending data to a wireless receiver of the vehicle 2702) of a stored road profile 2712 for an upcoming segment of road that is stored in the cloud database 2706. The processor on board the vehicle 2702 may determine if the current road profile 2708 (i.e., the road profile obtained by the vehicle 2702 during the current trip) and the previously stored road profile 2712 from the cloud database 2706 match sufficiently. To determine that the profiles match to a sufficient degree, the system may perform, for example, a cross-correlation between the current road profile 2708 and the stored road profile 2712. If the current road profile 2708 and the stored road profile 2712 have a similarity factor above a threshold, for example 0.75, the current road profile 2708 and the stored road profile 2712 are determined to be sufficiently matching.

If the on-board processor determines that the current road profile 2708 and the stored road profile 2712 do match, the vehicle 2702 may conserve bandwidth by not uploading recorded data corresponding to the current road profile 2708 to the cloud database 2706. In some implementations, which will be discussed later, only portions of the recorded data corresponding to the current road profile (e.g., current road profile 2708) may be uploaded to the cloud database 2706.

In some implementations, data may be selectively downloaded from the cloud database 2706 and saved to the vehicle 2702. For example, when the vehicle 2702 is connected to a Wi-Fi network, data for one or more planned paths may be downloaded to conserve bandwidth needed over a cellular network. For example, road profile data for a path between a current location of the vehicle 2702 and the driver of the vehicle 2702's home, work, or other commonly frequented location may be downloaded.

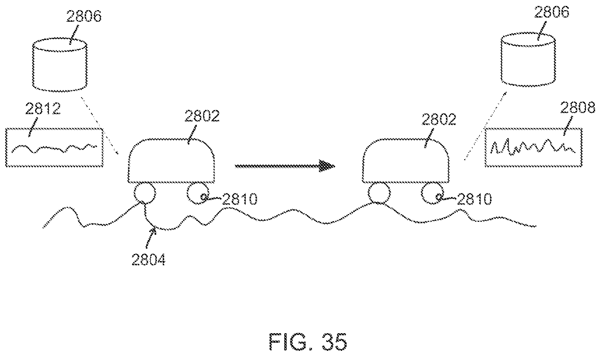

As illustrated in FIG. 35, as a vehicle 2802 travels on a road 2804, a sensor 2810 (e.g., a wheel sensor, an accelerometer, etc.) of the vehicle 2802 may collect data related to the road surface. The data may be used to determine a current road profile 2808 of the road 2804 on which the vehicle 2802 is traveling. The current road profile 2808 may be determined by a processor on board the vehicle 2802. As the vehicle 2802 is travelling along the road, a cloud database 2806 may inform the vehicle 2802 (by sending data to, for example, a wireless receiver of the vehicle 2802) of an upcoming road profile 2812 that is stored in the cloud database 2806. The processor on board the vehicle 2802 may determine if the current road profile 2808 obtained by the vehicle 2802 and the stored road profile 2812 from the cloud database 2806 match (as described previously). If the current road profile 2808 does not match the stored road profile 2812, the vehicle 2802 may upload, via a wireless transmitter, the current road profile 2808 to update the database 2806. In some embodiments, the database 2806 may replace (or update) the stored road profile 2812 with (or by using) the current road profile 2808. In some embodiments, the database 2806 may save the current road profile 2808 as a new version of the stored road profile 2812, such that the stored road profile 2812 (now an old version) may be accessed if needed. For example, if multiple traversals of the road 2804 are completed, it may be determined that the most current road profile 2808 and stored road profile 2812 are both valid options of road profiles that may be experienced along the road 2804 (e.g., if the road 2804 has multiple lanes). In such instances, overwriting each time a new profile is experienced may not be appropriate. For example, in some implementations, it may be possible that a newly obtained profile is for another, generally parallel, lane of the same road and that multiple, non-matching, road profiles may be experienced by a vehicle travelling along the same road. Upon uploading the newly obtained profile, a clustering process may allow sorting of different profiles into multiple lanes.

Embodiments described herein contemplate that selective uploading may be used on all types of roads. It is also contemplated that bandwidth may be conserved if no current road profile data, or a limited subset of road profile data, regardless of whether such current road profile data matches a corresponding stored road profile in a cloud database, is uploaded for smooth roads. In some implementations, smooth road profile data may be downloaded and used for consumption, but the current road profile may not be uploaded (or may be uploaded at a later time, e.g., when Wi-Fi is available). This may still provide acceptable performance because, for example, in some instances, a slight difference between a stored road profile and a current road profile, if both represent a generally smooth road, may not impact a corresponding command to the vehicle in a perceptible way to a vehicle occupant. In some implementations, the terrain-based localization system may inform another vehicle system (e.g., an ADAS, that the road ahead is smooth).

In some implementations, only those portions of the data that represent road events and/or deviations from smooth, may be uploaded. For example, if a vehicle is traveling on a very smooth road, but then hits a pothole, only the road data around the pothole may be transmitted. In such an example, transmitting hundreds of meters of smooth road data may be wasteful just to get data about the experienced pothole up to the cloud database.

Referring to FIG. 35, additional data at high resolution (e.g., for greater than 1 million vehicles per day) may have minimal value to a database after road segments have "matured". The system as described herein may (1) determine maturity threshold(s) to reduce data transfer from the vehicle while sustaining database quality and (2) determine what data from the vehicle is transferred to the cloud database. As data transfer through cellular networks is charged by the number of bytes used, reducing unnecessary data transfer may reduce the cost of the provided service to a vehicle. Once a database entry has matured, statistics may still be useful and may help determine if a road has changed or if there is a temporary change in conditions such as snow, ice, rain, etc.

Maturity may be determined on a short-term basis or on a long-term basis and maturity thresholds may be determined by statistical significance. For example, in some implementations, after data from 500 vehicles is received for a specific road segment on a specific day during a morning commuting period, the database entries for that road segment may be considered mature for that specific day or week. Data may be collected again at a normal rate after a time period, after which the database entries for that specific road segment may be re-labeled as immature. In some implementations, a mature entry may be relabeled as immature if a change occurs to the road surface. In some instances, this change may be, for example, a filled pothole, a repaved road, a new speedbump, grooved pavement during construction on the road, etc.

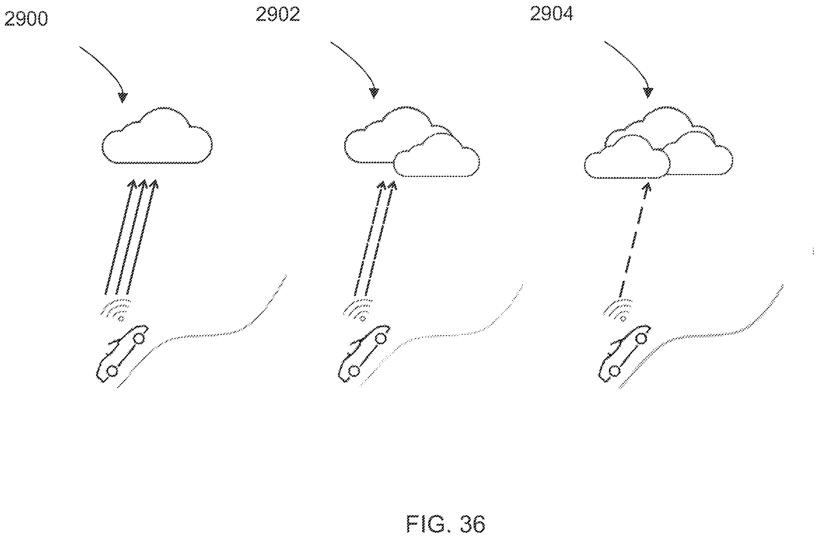

Referring to FIG. 36, at state 2900, a road profile entry (corresponding to a road segment of a road) in the cloud database is "immature" so all, a substantial percentage, or effectively all road data may be uploaded to the database to further refine the database and move toward maturity. In some implementations, this uploading may be done at a high data rate. In some implementations, an "immature" database entry may correspond with approximately 100 drives of the road segment where road data has been collected.

At state 2902, a road profile entry (corresponding to a road segment of a road) in the database is "maturing" and additional road information may be uploaded, for example, to provide meaningful statistics to confirm database validity or user behavior. In some implementations, this additional road information may be uploaded at a medium data rate. In some implementations, a "maturing" database entry may correspond with approximately 1000 drives of the road segment where road data has been collected.

At state 2904, a drive in the database is "mature" and additional drive-statistics may not add value, so the road data may, in some implementations, be disregarded. In other implementations, a subset of the road data may be uploaded. In some implementations, a subset of the road data may be uploaded at a low data rate. In some implementations, a "mature" database entry may correspond with approximately 5000 drives of the road segment where road data has been collected.

In some implementations, the maturity of a database entry may be determined in the cloud based on a degree of matching between current road profiles (e.g., current road profiles 2608, 2708, 2808 shown previously) and stored profiles (e.g., stored road profiles 2612, 2712, 2812 shown previously). If current road profiles are consistently and strongly matching stored road profiles, a database entry may be considered mature prior to a particular number of drives where data on the road segment is collected being reached.

In some implementations, the cloud database may inform the vehicle whether it wants data for particular road segments on which the vehicle is traveling or is predicted to travel. The cloud database may base this request on traffic information, time of day, day of week, etc. For example, during rush hour on a major highway, hundreds of vehicles may travel over a certain road segment within an hour. The cloud database may not need data from all of the vehicles traveling over this road segment. For example, in such a situation, the database may request data from every other car, every fifth car, every tenth car, etc.

In some implementations, road data may be stored on-board the vehicle for later transmission to the cloud database. For example, in a situation where the current road data does not match the cloud provided data, the vehicle may store the current road data for later transmission if sufficient bandwidth is not available when the data is collected. In some implementations, a flag that would inform the database that non-matching road data was collected may be sent.

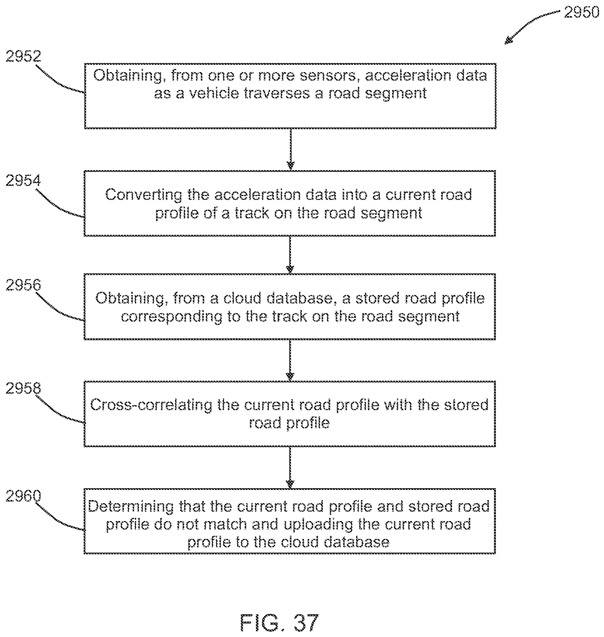

Referring to FIG. 37, a method for updating a cloud database of road data is shown by flowchart 2950. The method includes obtaining (2952), from one or more sensors, acceleration data as a vehicle traverses a track on a road segment. In some implementations, the sensors may be wheel speed sensors, wheel accelerometers, body accelerometers, an IMU, etc. The method also includes converting (2954) the acceleration data into a current road profile of the track on the road segment. The method also (2956) includes obtaining, from a cloud database, a stored road profile corresponding to the road segment. The method also includes cross-correlating (2958) the current road profile with the stored road profile. The method also includes determining (2960) that the current road profile and stored road profile do not match and uploading the current road profile to the cloud database.

## CORRECTION OF REPORTED AUTOMOBILE SPEED BY ANALYSIS OF GPS COORDINATES

Vehicles often report their speed based on the rotation rate of all four wheels. However, true vehicle speed will vary depending on, for example, wheel radius and tire pressure, wheel rotation sensor accuracy, which may cause problems when highly accurate dead reckoning is required. The inventors have recognized that different vehicles report slightly different speed values over CAN (e.g., there may be an approximately 2% difference between vehicles), which may be a problem for high precision terrain-based localization (i.e., localization where accuracy of location is within 1 meter or less, or on the order of centimeters, etc.). Speed measurements more accurate than is typically possible in conventional vehicles may be necessary, for example, for dead reckoning and converting signals from the time domain to distance domain. The system described herein finds a scaling factor to correct reported speed by analyzing GPS and steering data over a long period of time.

GPS serves as a potential source of ground truth because GPS reports the same position when any vehicle is in a given location. By calculating the distance covered by GPS samples over time, it is possible to synthesize a scaling factor to correct CAN speed. However, GPS is not very precise. Coordinates reported by a consumer-grade GPS receiver may drift 10 meters or farther from the actual coordinates of the receiver location. To create a speed scaling factor, a moderate amount of GPS and speed data for each vehicle is collected. When collecting GPS data, sample precision is important. The system described herein selects the more precise GPS samples for scaling factor synthesis. The system may determine that the GPS samples obtained when at least a threshold number of satellites are visible are more precise than other GPS samples. After the most precise GPS samples have been selected, a speed correction may be calculated, as also described below.

*GPS Sample Selection*

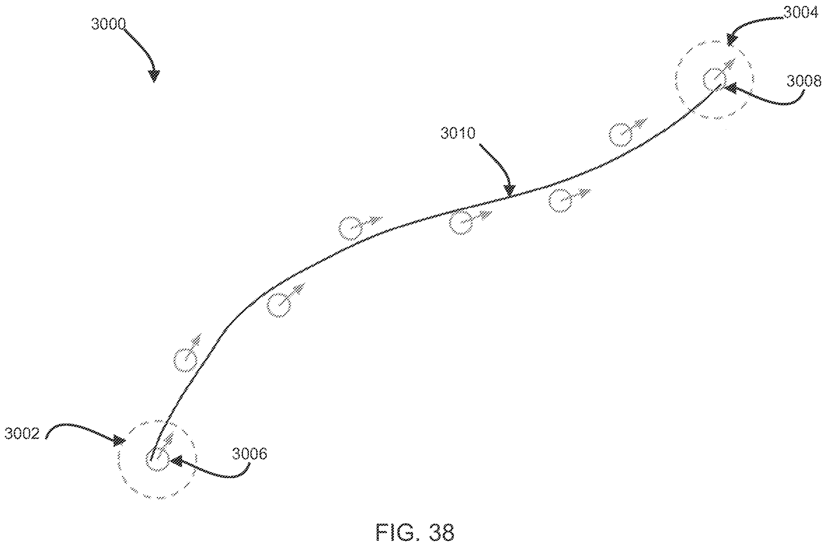

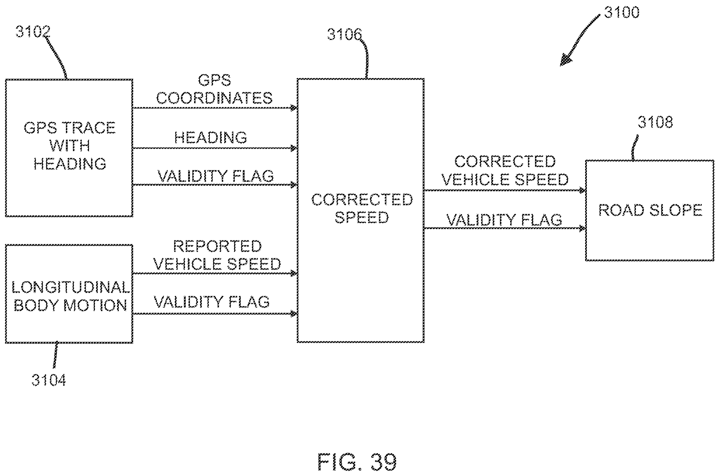

Precise sample selection may be used for performing speed scaling factor corrections. To select precise samples, the system determines when the vehicle is driving straight and at a constant speed. These vehicle driving conditions (straight and constant speed) are preferred as the GPS coordinates reported under these vehicle driving conditions are less likely to include a moving average determination (which introduces error), which is a built-in function for many GPS modules. Turning to FIG. 39, the speed correction block 3106 of speed correction system 3100 takes as inputs GPS coordinates, a heading, and a validity flag from a GPS trace block 3102. The validity flag indicates whether the GPS is receiving enough satellite information (e.g., the GPS has enough satellites reporting data) In some implementations, the GPS trace block 3102 reads GPS coordinates and a heading of a vehicle at a sampling rate of at least 1 Hz (e.g., between approximately 1 and 10 Hz). An example of a GPS trace (with lateral deviation reduced) is shown by element 3010 in FIG. 38. Accuracy of the GPS coordinates determines the amount of distance which may be traversed to calibrate corrected speed in block 3106. In some implementations, accuracy of the heading may be $\pm$ 1 degree. In some implementations, when consecutive heading samples differ by less than approximately 2 degrees, the vehicle is considered to be traveling straight. Other differences between consecutive heading samples are permissible and the disclosure is not so limited. However, the higher the variation between consecutive heading samples that is allowed, the more error that is inherent in the speed scaling factor calculation, which is shown below.

The speed correction block 3106 also takes as inputs a reported vehicle speed and a validity flag from a longitudinal body motion block 3104. In some implementations, the reported vehicle speed ($v_{reported}$) may have a sampling rate of at least 20 Hz. Other sampling rates less than 20 Hz may be permissible and the disclosure is not so limited. However, higher sampling rates improve accuracy in determining dead reckoning distance. In some implementations, the validity flag checks whether the reported vehicle speed is within $\pm$ 10% of the true speed, however other values are possible and the disclosure is not so limited. This is a form of "way off" check, which is used to double check validation of the distance traversed against GPS coordinates. This check may capture anomalies which may cause GPS jumping, which could significantly impact a speed correction calculation.

In some implementations (not shown in FIG. 39), the speed correction block 3106 may also take as an input a flag indicating whether the vehicle speed signal is valid. Based on the inputs from the GPS trace block 3102 and the longitudinal body motion block 3104, the speed correction block 3106 calculates a corrected vehicle speed ($v_{true}$).

*Speed Correction Determination*

The speed correction block 3106 may output the corrected vehicle speed ($v_{true}$) and a validity flag, the validity flag indicating whether the corrected speed is valid. In some implementations, the sampling rate of the corrected vehicle speed is at least 20 Hz and the accuracy of the corrected vehicle speed is $\pm 0.3\%$. Depending on requirements of a road slope calculation block 3108, the sampling rate and/or accuracy may change. The road slope (i.e., given a change in longitudinal distance, how much the road rises or falls vertically) calculated by road slope calculation block 3108 is used for terrain-based localization. By using corrected speed ($v_{true}$) rather than reported speed ($v_{reported}$), dead reckoning accuracy may be significantly improved.

True vehicle speed relates to reported vehicle speed by the following equation, where C is some unknown constant:

$$v_{true} = v_{reported} * C$$

A goal of this speed correction determination method is to determine the value of C which corrects the reported speed. As shown in FIG. 38, GPS is relatively inaccurate for determining an absolute location at a single position (see $\pm$ 5 meter error represented by dotted circles 3002 and 3004 that is associated with GPS samples associated with steering 3006 and 3008, respectively). However, GPS does not suffer from drift over long distances (e.g., 100 meters). A speed reporting error based on tire radius or wheel rotation sensor accuracy may be approximately 2%. Using the relationship between these errors ($\pm$ 5 meters becomes small in view of the 2% speed reporting error over long distances) GPS may be leveraged to find a speed scale correction.

A distance between consecutive GPS coordinates may be compared with distance computed by integrating true speed:

$$d_{GPS} \approx \int v_{true}(t)\, dt$$

$$d_{GPS} \approx \int v_{reported}(t)\, C\, dt$$

For small distances, $d_{GPS}$ will have a large error in comparison to integrated speed. However, for sufficiently large distances, $d_{GPS}$ will approach a very accurate value. In an example, if desired speed accuracy is, for example, $\pm 0.3\%$ and GPS is, for example, accurate within $\pm 5$ meters, the distance to obtain the target speed accuracy may be determined as follows:

$$d_{GPS} * 1.003 > d_{GPS} + 5 * 2$$

$$d_{GPS} * 0.003 > 10$$

$$d_{GPS} > 3333$$

In this example, to achieve the target accuracy, the speed correction may rely on at least 3333 meters of speed and GPS data. Until this criterion has been satisfied, corrected speed may be marked as invalid. The factor of 2 on the right side of the equation comes from the start and ending coordinates each having a possible error of +/- 5 meters.

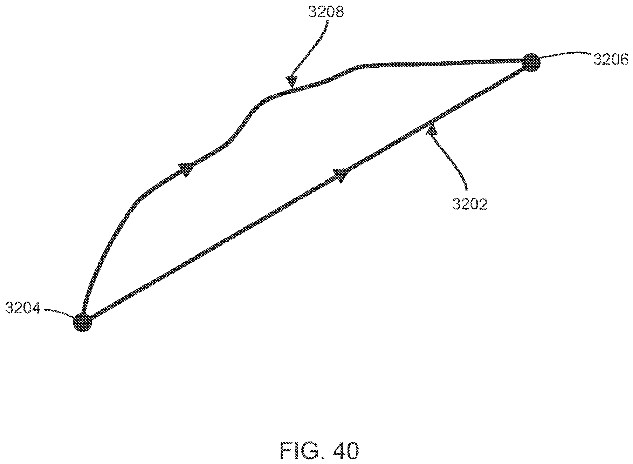

Referring to FIG. 40, if vehicle yaw rate is non-zero (meaning that the vehicle is turning), the straight-line path 3202 between two GPS coordinates, starting coordinate 3204 and ending coordinate 3206, may be different than distance determined by dead reckoning, which would match a distance traveled by the vehicle on the actual path 3208 taken between starting coordinate 3204 and ending coordinate 3206. For example, if the vehicle is traveling with constant (true) speed v with constant yaw rate $\omega$ for duration t, error $d_{error}$ caused by this yaw rate may be calculated in the following manner:

$$d_{error} = d_{curve} - d_{straight}$$

$$d_{curve} = v * t$$

$$\theta = \omega * t$$

$$c = v \frac{2\pi}{\omega}$$

$$r = \frac{c}{2\pi} = \frac{v}{\omega}$$

$$d_{straight} = 2r \sin\frac{\theta}{2} = 2\frac{v}{\omega}\sin\frac{\omega t}{2}$$

$$d_{error} = vt - 2\frac{v}{\omega}\sin\frac{\omega t}{2}$$

In this equation $d_{straight}$ includes a worst case scenario that consecutive headings vary by a maximum 2% (e.g., always steering by 2% from the previous heading). These equations assume a constant $\omega$. Variations in $\omega$ may increase error in the dead reckoning scaling factor computed.

As an example, suppose that yaw rate $\omega$ is 4 degrees per second (about 0.07 radians per second), v is 15 m/s, and t is 1 second:

$$d_{error} = 15 * 1 - 2\frac{15}{0.07}\sin\left(\frac{0.07 * 1}{2}\right)$$

$$d_{error} = 15 - 14.9969 = 0.0031$$

The distance error is 3.1 millimeters. If the vehicle travels 15 meters during this time, the percent error is 0.021%.

In some implementations, speed corrections may be performed when a vehicle is traveling on a relatively "level plane", i.e., at constant altitude. Altitude changes may complicate the speed correction. In some implementations, an accelerometer, altimeter, or other appropriate sensor may determine altitude change, which may be used as an input to a speed correction calculation as shown above.

Tire parameters (e.g., tire pressure, tire type, etc.), for example, may have an impact on the speed correction calculation. Therefore, it may be important for the speed correction system to understand when tire parameters may have changed so that the speed correction may be updated. In some implementations, to account for changing tire parameters, speed corrections may be constantly updated. This constant updating to the speed correction may be completed without server-side communication. In other implementations, the vehicle may report, to the speed correction system, that one or more vehicle tires have been changed. In such an implementation, a recalibration may be completed to update the speed correction. In other implementations, the speed correction system may detect a tire change and enter a calibration state to update the speed correction.

*PERFORMANCE SUPERVISOR FOR TERRAIN-BASED VEHICLE CONTROL*

Using knowledge of the upcoming road as well as precise localization (i.e., localization that may determine a location with accuracy to less than 1 meter, on the order of centimeters, etc.), the system described herein may be used to command active and/or passive forces (e.g., by an active suspension system) in order to provide improved ride characteristics over a feedback-only or reactive control loop. However, this command may result in degraded ride characteristics if (1) information about the upcoming road is incorrect and/or (2) the model used to determine the desired command is incorrect. Systems and methods described herein may detect such situations and may inform a controller to change one or more output commands. Systems and methods described herein may continuously or intermittently analyze a recent record, for example the previous few seconds, of vehicle motion, road motion, and/or force commands to determine if one or more of the commands by the controller during this period have helped or hurt the performance of the vehicle based on a predetermined criterion or criteria based on sensor measurements or occupant feedback. If the system finds that the system is hurting performance, output commands may be scaled down to prevent continued underperformance.

In some implementations, scaling down output commands may include changing one or more gains in the controller. For example, the system may apply a 10% gain, a 50% gain, etc. to one or more of the controller's commands to reduce the output of the system. In some instances, scaling down the output commands may be frequency dependent. For example, gains may be applied only to output commands in particular frequency ranges or may be applied differently across different frequency ranges. For example, in a first frequency range a 10% gain may be applied, in a second frequency range a 50% gain may be applied, and in a third frequency range no gain may be applied. This distribution allows the system to maintain performance in frequency ranges that are not experiencing degraded performance issues.

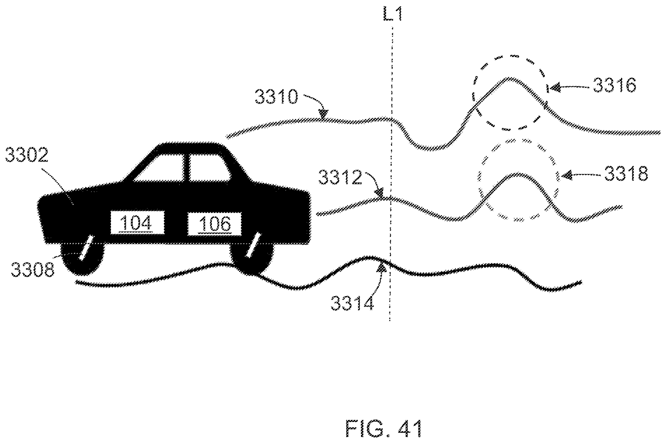

Referring to FIG. 41, a vehicle 3302 may be instrumented with one or more sensors. The one or more sensors may include one or more sensors 3304 that may support estimations of ride characteristics (e.g., body accelerometers, ride height sensors) and one or more sensors 3306 that may support terrain-based localization (e.g., wheel accelerometers, ride height sensors). The vehicle 3302 includes active or semi-active suspension actuators (e.g., actuator 3308) to which force/damping commands may be sent.

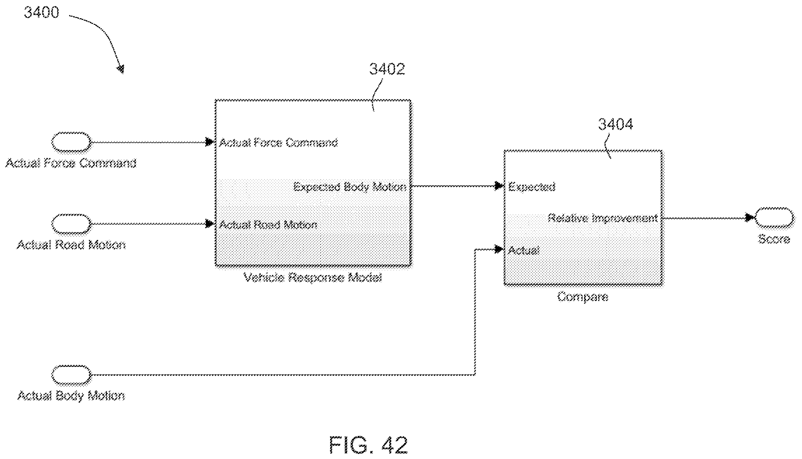

Using knowledge about the upcoming road, a command may be calculated and sent to the actuators (including actuator 3308) to improve the ride performance of the vehicle 3302. As the vehicle 3302 travels across a road surface 3314, the vehicle's wheels move based on features of the road surface (e.g., road smoothness, road profile, road events, etc.). A force command 3312 is output to suspension actuators (e.g., actuator 3308). If this force command 3312 is calculated based on a correct model and with accurate knowledge of the road surface 3314, the ride of the vehicle 3302 will be improved versus an uncontrolled vehicle's ride. In some implementations, where a road isolation strategy is preferred, body motion 3310 of the vehicle may be reduced. In some implementations, where a road following strategy is preferred, body motion 3310 of the vehicle may be increased. In FIG. 41, to the left of line L1, the body motion curve 3310 is relatively flat, showing a correct model and accurate knowledge of road surface 3314 which produces an appropriate force command 3312. However, if either, or both, of the model or road knowledge are inaccurate, the ride may be degraded (i.e., worse performance than a corresponding passive vehicle) rather than improved (i.e., better performance than a corresponding passive vehicle) as shown in FIG. 41 on the right side of line L1. For example, errors in the model or knowledge of road surface 3314 may cause an inappropriate force command, shown as by peak 3318, to be produced. The inappropriate force command may increase body motion (as compared to expected body motion of a corresponding passive vehicle), shown as peak 3316. A performance supervisor of the system, as shown in FIG. 42, may determine that the body motion output is larger than a prediction, meaning that performance of the system has degraded, and flag an error in the system.

Referring to FIG. 42, a performance supervisor 3400 is configured to detect degraded performance of one or more vehicle actuators. The performance supervisor 3400 includes a vehicle response model 3402. The vehicle response model 3402 takes as inputs the road information (e.g., road profile, road slope, road event information, etc.) and actuator commands. High precision localization (i.e., localization that may determine a location with accuracy to less than 1 meter, on the order of centimeters, etc.), is used to determine the actuator commands in real time, which are then input to the vehicle response model. The vehicle response model 3402 outputs an estimate of the resulting ride characteristics (e.g., body acceleration) of the vehicle (see, e.g., line 3310 in FIG. 41 representing vehicle 3302's body motion). The vehicle response model 3402 may be a simple linear quarter-car model, a half-car model, a more complex full-car model, or another appropriate vehicle model and the disclosure is not so limited. The vehicle response model 3402 may be able to run in real-time on the vehicle.

The vehicle response model 3402 may estimate the road motion using a combination of wheel accelerometers, body accelerometers, and ride height sensors to back-calculate the true road profile in real-time. For instance, a simple estimation model may estimate the vertical wheel motion and assume that the road is the same shape (i.e., assuming that the wheel follows the road sufficiently closely). In some implementations, an estimation model may estimate tire deflection in order to more accurately estimate the road surface.

Then, the vehicle response model 3402 may compare the estimated ride characteristics to the expected ride characteristics. In the example of FIG. 42, ride characteristics are simply vertical body accelerations ("body motion"). The expected and actual body accelerations may be filtered to a certain frequency range (e.g., 1 to 8 Hz) and then a relative improvement score may be calculated for a time period such as the most recent N seconds (e.g., 5 seconds) of data. In some instances, the relative improvement score may include a rolling root mean square (RMS) that is calculated for the last N seconds of data (e.g., 5 seconds). In some instances, the relative improvement score may include a standard deviation that is calculated for the last N seconds of data (e.g., 5 seconds). In some instances, an FFT of the signals may be compared to determine the relative improvement score. If the actual vehicle body acceleration's relative improvement score is significantly different (e.g., the actual vehicle body acceleration RMS is significantly larger than the expected body acceleration's RMS), this may indicate the actuator command is incorrect. In some instances, significantly different may mean between 2% and 100% different, between 5% and 100% different, between 10% and 100% different, between 15% and 100% different, between 20% and 100% different, etc. In some instances, the threshold for significance may be set based on what an occupant of the vehicle may be able to perceive based on driving conditions. Based on the magnitude of the relative improvement score, the actuator command may be scaled down or shut off completely (e.g., set at zero) to prevent continued issues of poor performance as discussed above.

In some implementations, ride characteristics may include suspension deflection. Reducing body accelerations means isolation is working correctly (usually at 0.8+ Hz) while reducing suspension deflection means road following/tracking is working correctly (usually below 1 Hz).

In some implementations, the performance supervisor 1400 may communicate a relative improvement score to a cloud database. In some instances, the relative improvements scores stored in the cloud database may be used for vehicle diagnostics. In some implementations, relative improvement scores sent to the cloud database may be used to determine particular models or types of vehicles where performance may be improved. For example, consistently lower relative improvement scores for one model of vehicle may indicate that the actuator commands are mismatched to vehicle performance for that model, or that that model's sensors are faulty, etc.

*REAL-TIME ROAD ESTIMATOR CALIBRATION*

When a vehicle drives over a road, a terrain-based localization system may use collected sensor data to create an estimate of the road profile. However, there will always be some error between this road estimate and the true road. This error may be caused by sensor calibration issues, unmodeled vehicle dynamics, etc. A better road estimate may be synthesized from multiple vehicles' drives over the same road to create a composite road profile. In some implementations, the composited road profile is created by intelligently averaging the different road profiles obtained. With this better road estimate, parameters of each vehicle's road estimation algorithm may be tuned such that if the vehicle re-acquires data on the same road, that vehicle's new estimate would more closely match the composite road profile. The inventors have recognized that tuning vehicle road estimators in real time solves a problem of scaling estimator calibration to many vehicles (e.g., tens, hundreds, thousands, etc.) by averaging away individual errors.

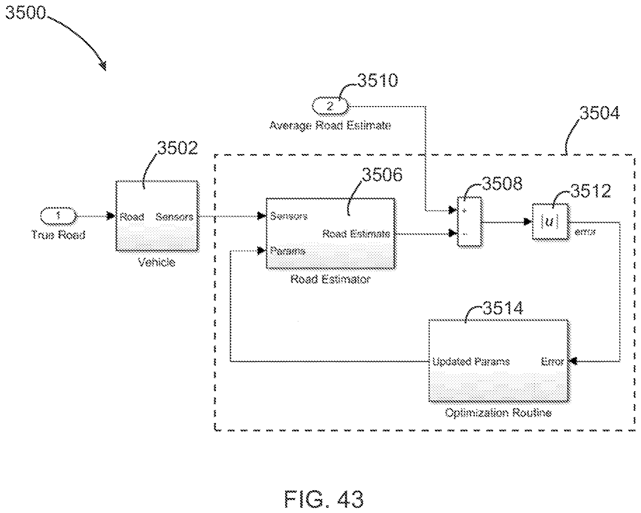

Referring to FIG. 43, a vehicular terrain-based localization system 3500 includes a vehicle 3502 that is equipped with sensors (e.g., wheel sensors, body sensors, accelerometers, etc.). A controller 3504 on the vehicle 3502 is configured to execute a road estimation algorithm 3506, which converts raw sensor signals into a road estimate.

In some implementations, the conversion is accomplished by estimating a motion of the wheel (e.g., using wheel accelerometers), estimating a tire compression using a physical quarter-car model, and subtracting the tire compression from the wheel motion to determine the road estimate. In some other implementations, the conversion is accomplished by estimating a motion of the wheel (e.g., using wheel accelerometers) and then applying a notch filter around wheel hop frequency (e.g., approximately 12 Hz, approximately 10-15 Hz, etc.) to remove the wheel hop from the signal. Due to calibration and placement of the wheel accelerometers, or other sensors, the road estimate may be inaccurate, but is useful within the terrain-based localization system 3500.

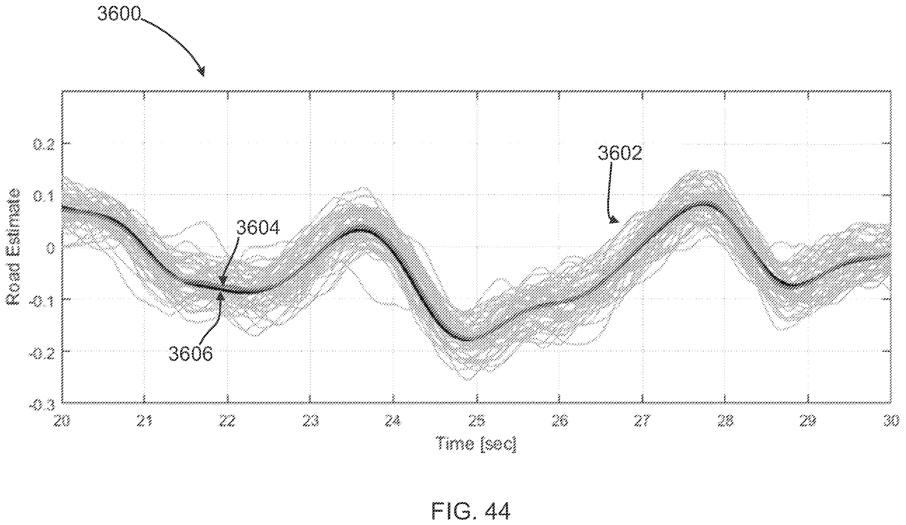

Referring to FIG. 44, a graph 3600 compares the true road 3606, a composite road profile 3604, and individual road estimates 3602 from different vehicles, which are used to produce the composite road profile 3604. Because each vehicle that calculates road estimates 3602 may have different sensor calibrations, sensor placements, and vehicle dynamics, each vehicle may produce a road estimate that is different from the true road. Because all of these vehicles have different configurations, inaccuracies in the produced road estimates will not all be in the same direction or manner, as shown by the varying curves of road estimates 3602. As such, averaging the road estimates 3602 created by different vehicles traveling over the same road yields a composite road profile 3604 that is more accurate than any individual road estimate. Accuracy of the composite road profile 3604 may be determined by comparing the composite road profile 3604 to a measurement of the true road (which may be taken via other methods, e.g., vision, LiDAR, etc.).

Referring back to FIG. 43, after a sufficient number of estimates have been merged (e.g., 2 estimates, 5 estimates, 10 estimates, 20 estimates, 50 estimates, 100 estimates, etc.) to create an composite road profile, the terrain-based localization system 3500 uses the composite road profile to optimize road estimators of individual vehicles. Referring to FIG. 43, for the vehicle 3502 and a given road on which the vehicle 3502 has already driven, previously recorded raw sensor data from the given road is fed to the vehicle's road estimator 3506, which creates a road estimate using the sensor data and a given set of parameters. The controller 3504 then takes the road estimate and compares the road estimate, at block 3508, with a composite road profile 3510 computed based on data from many vehicles. The comparison determines an error 3512, which is fed into an optimizer 3514. The optimizer 3514 looks at the error and updates parameters to minimize the error. The updated parameters may include a correction factor on the signal for the one or more sensors of the vehicle used to create the individual road estimate.

The correction factor may include a range of corrections to be applied differently to data collected at different frequencies and may be dependent on the type of sensor used to collect the road data. For example, ride height sensors are generally more accurate at low frequency since they sense position rather than acceleration, but at higher frequencies, sensor noise may overwhelm any signal. A correction factor may therefore correct higher frequency data obtained by a ride height sensor more than the correction factor corrects lower frequency data obtained by a ride height sensor. In another example, wheel accelerometers are generally more accurate at determining high frequency motion of the wheel, but at very low frequencies, the vertical acceleration (the information desired from the wheel accelerometers) may be drowned out by the wheel accelerometers picking up lateral and longitudinal vehicle motion. A correction factor may therefore correct low frequency data obtained by a wheel accelerometer more than the correction factor corrects high frequency data obtained by a wheel accelerometer.

The updated parameters are then fed into the road estimator 3506. The road estimator 3506 then uses the updated parameters for subsequent road estimates (e.g., takes the raw sensor signal and applies a correction factor to create subsequent road estimates).

In some embodiments, instead of averaging a number of drives as the source of truth against which to optimize, other statistical measures may be used as the source of truth. For example, in one instance, it may be assumed that, on average, roads are white noise in velocity (i.e., all frequencies have equal magnitude) and this assumption may be used to tune the road estimator.

In some instances, the one or more individual parameters comprises a parameter of a physics model of the vehicle. The physics model may be used to fuse sensor information into the road estimate.

*CACHED TERRAIN-BASED ROAD DATA FOR LOCALIZATION & CONTROL*

A motor vehicle traveling along a road, autonomously or under the control of a driver, may interact with one or more road surface features or anomalies that may expose the vehicle and/or one or more vehicle occupants to certain forces or accelerations. Such forces or accelerations may affect the comfort, safety, and/or wellbeing of vehicle occupants as well as wear-and-tear of on the vehicle. The magnitude, direction, and/or frequency content of such forces or accelerations may be a function, to a great extent, of the characteristics of one or more road surface features or anomalies.

A priori information about road surface features ahead of a vehicle may be used to, for example, dynamically tune, prepare, and/or control various automated or partially-automated systems in the vehicle (such as for example, suspension systems (semi or fully active), propulsion systems, ADAS, EPS, and/or ABS, etc.).

However, a priori information about upcoming distinctive features, associated with a road, may also be used by, for example, a localization system to determine the location of a vehicle. In some embodiments, a localization system may be used to determine the position of a vehicle relative to one or more features or anomalies associated with a road.

In some embodiments, information about the road ahead of a vehicle, including lane-to-lane differences, may be received from various sources, such as for example, from cloud-based databases. Inventors have recognized that, in some embodiments, substantial amount of detailed data about a road surface may be transferred to a vehicle to provide a vehicle information to support localization of the vehicle and/or a priori dynamic tuning and/or control of one or more vehicle systems.

The inventors have recognized that, in some embodiments, the use of information about road features for localization and/or vehicle control based on a priori data, may involve the exchange of large quantities data between a vehicle and, for example, a cloud-based data base. However, exchange of such data during peak travel times, such as morning and evening rush-hours may be expensive and/or hampered by slow data transfer rates. In some implementations, such disadvantages may be overcome by strategically caching data and transferring data when there is less demand for communication resources.

Alternatively or additionally, in some embodiments, a vehicle may collect road data for uploading at a later time. For example, the vehicle may collect data about the road surface of the road being travelled, associate the data with position along the road surface, and store the data locally for transfer at a later time. For example, the data may be uploaded when a Wi-Fi or hard-wired (e.g., ethernet) connection is available or when cell phone communication channels are less crowded. Uploaded data may be incorporated in a cloud database and used by the same or other vehicles in on future occasions.

The inventors have further recognized that in some embodiments, a hard-wired connection (such as an ethernet connection) may be incorporated in, attached to, or otherwise combined with the charging cable of an electric or hybrid-electric vehicle.

The inventors have further recognized that, in some implementations, there may generally be a high degree of repeatability and/or predictability in daily vehicle travel. This may be because drivers frequently travel the same roads on a daily basis, such as for example, while going to or from work. This is sometimes also true on the job, for example, on a delivery route while delivering mail or packages.

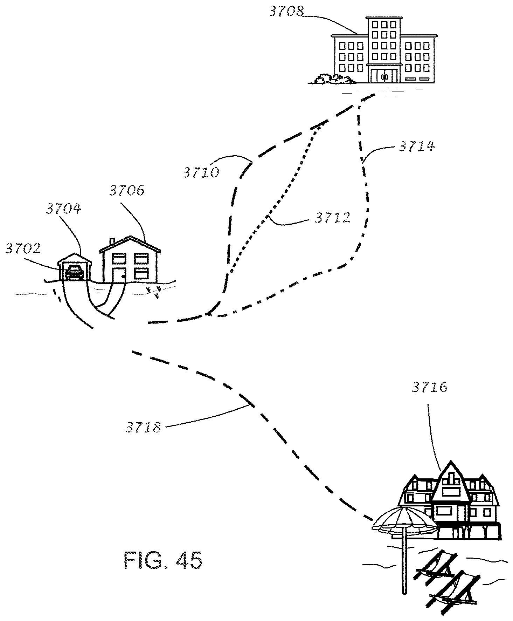

FIG. 45 illustrates vehicle 3702 which may be parked, overnight, in a garage 3704 that is may be in close proximity to home 3706. On typical work days, vehicle 3702 may be used to commute to work at an office building 3708. On most occasions, route 3710 may be used for the entire trip between home 3706 and office building 3708. On some occasions route 3712 may be used. Portions of routes 3712 and 3710 may overlap. Routes 3710 or 3712 or a different route 3714 may be used during the return commute.

Instead of downloading road information in real time (e.g., as it is used during each morning and/or evening commute) road surface information may be at least partially downloaded in advance, e.g., downloaded from a cloud-based database and cached, e.g., stored locally on the vehicle or on a cell phone or other appropriate portable device as the disclosure is not limited only to the local data storage devices discussed above. Locally pre-stored road information may then be made available to one or more controllers on the vehicle during the commute for localization and/or control of various onboard systems. In some embodiments, road information may be pre-downloaded using cell phone data communications and/or other communication channels such as, for example, Wi-Fi or hardwired (e.g., ethernet) connections or any other appropriate communication channel. Such alternate communications may be established at any appropriate location, such as for example, garage 3704, home 3706 and/or office building 3708. As discussed above, a hard-wired connection (such as an ethernet connection) may be incorporated in, attached to, or otherwise combined with the charging cable of an electric or hybrid-electric vehicle.

Alternatively or additionally, in some embodiments, vehicle 3702 may use one or more onboard sensors to collect and cache road data about routes taken during one or more trips, e.g. morning or evening commutes, and then upload such road data during off-peak hours such as when the vehicle is parked at home 3706 or at office building 3708.

The inventors have recognized that road data may remain unchanged or effectively unchanged over significant periods such as, for example, days, weeks or longer. In such cases, downloaded road data may be used multiple times without the need of updating. In some implementations, road data stored locally in a vehicle or cell phone may be associated with a data tag, such as for example, a time stamp that includes or is based on the date and time when the data was downloaded. Before downloading new data from a centralized data storage, e.g., a cloud-based database, a microprocessor onboard the vehicle may share the data tag of the data stored locally, e.g., in the vehicle or an accessible cell phone, with the cloud-based database. If it is determined, based at least partially on the data tag, that locally stored road data is sufficiently up-to-date, the decision may be made by the vehicle, the vehicle operator, and/or the central database to forego the download of a new version of the road data and instead rely on data already stored locally.

Under some circumstances, travel to infrequent or unprecedent destinations may occur, such as for example, to a shopping mall, an amusement park or a vacation destination. FIG. 45 illustrates a trip to a seaside motel 3716 along route 3718. Under such circumstances, road data may not be available locally. However, appropriate road data may be at least partially downloaded prior to starting the trip, e.g., when the vehicle is still parked and/or has access to a Wi-Fi or a hardwired (e.g., ethernet) connection to a cloud database. As discussed above, a hard-wired connection (such as an ethernet connection) may be incorporated in, attached to, or otherwise combined with the charging cable of an electric or hybrid-electric vehicle.

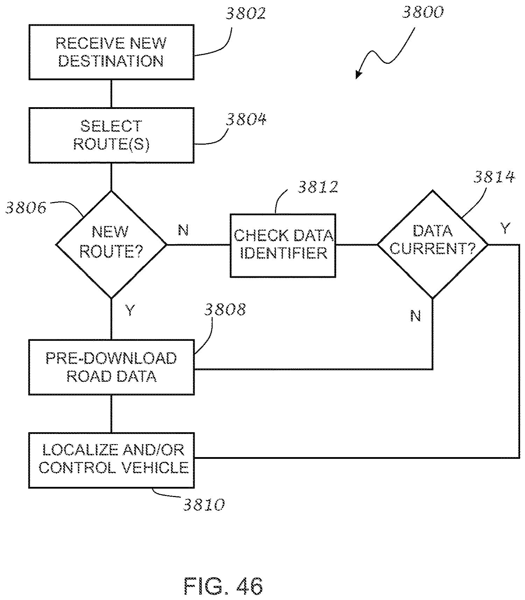

FIG. 46 illustrates an exemplary scenario 3800 where there may be an anticipated trip to a potential new or infrequent destination. At step 3802 the vehicle may receive an indication of a potential new destination. This indication may be received by, for example, synchronizing with a predetermined Google calendar, a user interface in the vehicle, or a cell phone app (i.e., application software). In step 3804, a navigation system may be used to plan a route to the anticipated destination, such as route 3718 in FIG. 45. At step 3806, a test may be conducted to determine if the route selected in step 3804 is a new route, for which road data may not have been downloaded previously. At step 3808, road data for at least a portion of the selected route is downloaded before the vehicle has started to travel along the selected route. In step 3810, the road data may be utilized as the vehicle travels along the selected route to locate the position of the vehicle and/or to control one or more vehicle systems. However, at step 3806, it may be determined that road data for the selected route had been downloaded previously. At step 3812 a data tag associated with the road data previously downloaded may be obtained and shared with the cloud data base. If at test 3814, it is determined that the previously downloaded data is out-of-date, a supplementary download may be conducted, at step 3808, before the vehicle starts travelling along the selected route. Alternatively, if at test 3814, it is determined that the previously downloaded data is current or sufficiently current, the previously downloaded data may be used in step 3810.

*MAINTAINING VEHICLE ANONYMITY D URING CLO UD-BASED VEHICLE CONTROL*

In some embodiments of cloud-based vehicle localization and/or control, a multiplicity of independent cloud-based databases may be used. As used herein, the term "independent cloud-based databases" refers to two or more cloud-based databases that are owned or operated by entities, e.g., corporations, that are independent of each other.

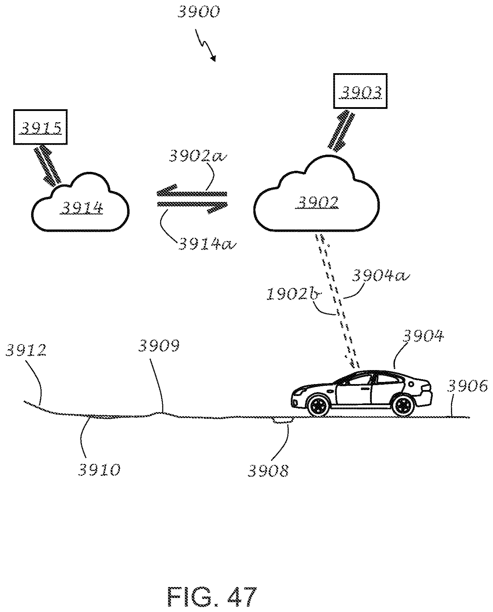

FIG. 47 illustrates a cloud-based vehicle localization and control system 3900 that includes two independent cloud-based databases 3902 and 3914. Cloud-based database 3902, which may, for example be owned or controlled by a vehicle manufacturer, may communicate with vehicle 3904 to exchange information including, for example, data about the road surface just traversed and/or about to be traversed by the vehicle. Such data may include information about coefficient of friction at location 3906, pothole 3908, bump 3909, depression 3910 and/or slope 3912. The data uploaded by vehicle 3904 to cloud-based database 3902 may include vehicle-identifying metadata such as, for example, Vehicle Identification Number (VIN) or a cell phone number associated with vehicle 3904.

At least some of the data 3904a uploaded to database 3902 may be transferred to independent database 3914 for further analysis and/or processing. However, before transmitting the data to database 3914, a microprocessor 3903, associated with database 3902, may alter or replace at least a portion of the metadata that may identify the source of the data 3904a. **In** some implementations, the processor 3903 may append new confidential tracking identifiers to the data transmitted to database 3914. The confidential tracking identifiers may be used by one or more microprocessors 3915 associated with database 3914 to track data 3904a without having access to the identity of the source of the data.

The microprocessor may then append the tracking identifiers to data 3914a transmitted back to database 3902. Microprocessor 3903 may then use the tracking identifiers to identify vehicle 3904 and transmit, to vehicle 3904, information 3902b that may, for example, be related to the location of vehicle 1904 and/or the operation of systems in that vehicle.

Consequently, microprocessor 3915 associated with database 3914 may track data originating from vehicle 3904 and send information back to vehicle 3904, without knowing the identity of vehicle 3904 or its owner.

*SYSTEM PERFORMANCE TRACKING*

In some implementations, microprocessor 3915, shown in FIG. 47, may track the history of performance metrics of various vehicle systems over time as a function of, for example, vehicle age or miles driven since new. Systems that may be tracked may include, for example, braking systems, active suspension systems, semi-active suspension systems, antilock braking systems (ABS), stability control systems, electric power steering systems (EPS), propulsion systems, etc. Such systems may be tracked on an aggregate basis by, for example, averaging all or most of the data received by database 3914. Data received by database 3914 may be provided by database 3902 in addition to other databases each of which may be operated by various manufacturers, e.g., original equipment manufacturers (OEMs) or component suppliers. Data received by database 3914 may be tracked, for example by microprocessor 3915 on the basis of average system performance metrics for each vehicle manufacturer, each vehicle model, and/or each individual vehicle. The information tracking identifiers, associated with data from a particular vehicle, such as data, from vehicle 3904, provided by database 3902 may be used to track the evolution of one or more system metrics for a particular vehicle. For example, database 3914 may track evolution over time of the performance metrics of one or more systems of vehicle 3904. For example, based on information received by database 3904, the microprocessor 3915 may be used to determine the variation over time of braking distance and/or tire grip under the same, effectively the same, or similar driving conditions.

Microprocessor 3914 may associate the tracked performance metrics with the appropriate information tracking data tag, without having access to the vehicle identification information of vehicle 3902. The metrics history of one or more system onboard vehicle 3904 may be provided to the vehicle owner or a repair shop selected by the owner or operator of vehicle 3904 via database 3902. The information may be, for example, used by the vehicle owner to schedule and/or perform repairs and/or prevented preventive maintenance of various systems in vehicle 3904.

Accordingly, data privacy may be maintained because database 3914 does not have access to the identifying metadata provided to database 3902 by vehicle 3904.

*USING REAR FACING OPTICAL DEVICES*

In some embodiments, sensors, such as for example accelerometers and/or Inertial Measurement Units (IMUs) on board a vehicle may be used to detect, characterize, and/or recognize road surface features. However, this process may be at least partially disrupted or obscured by, for example, sensor malfunction, forces applied by actuators of an active suspension system, or adjustment of damping coefficients of semi-active dampers.

The inventors have recognized that certain forward-, backward-, or downward-looking sensors, such as for example, video cameras or LiDAR, radar, or ultrasonic detectors may be used to confirm data collected by inertial sensors.

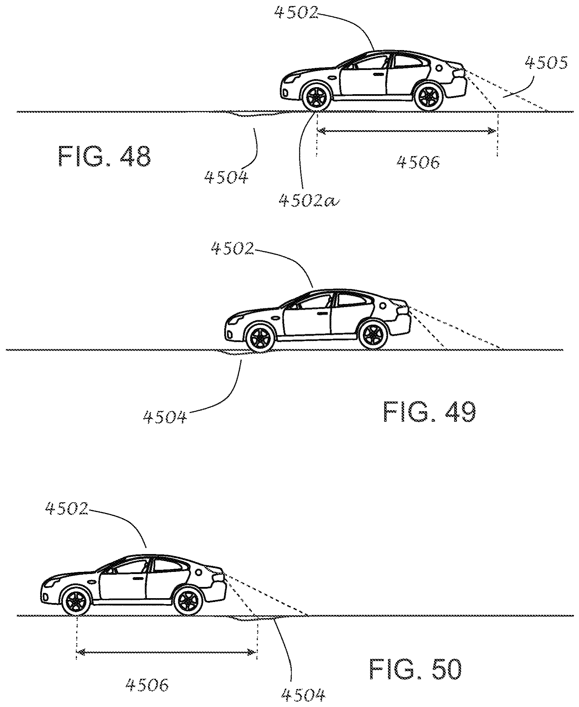

FIG. 48 illustrates vehicle 4502 approaching pothole 4504. The position and shape of the field of view 4505 of a rear facing video camera (not shown) may be known. For example, the distance 4506 from the contact patch of wheel 4502a and the edge of the intersection of the field of view 4505 with the road surface may be known.

FIG. 49 illustrates that the front wheel of the vehicle 4502 has engaged pothole 4504.

The speed of vehicle 4502 may be determined or confirmed based on the distance 4506 and the interval between the time when wheel 4502a first engages pothole 4504 and the time when the pothole is first enters the field of view 4505 of the video camera. The speed of the vehicle 4502 and image analysis of the video captured by the camera may be used to determine characteristics of the pothole such as its length, width, depth, and shape. This information may be associated with data from inertial sensors (not shown) generated by the interaction between the vehicle and the pothole. This optical data may also be used to characterize, confirm or evaluate the performance of a separate suite of sensors of a different type, e.g., inertial sensors.

**In** some implementations, the rear-facing camera may capture images of other road surface features, including but not limited to bumps such as speed bumps, surface cracks, manhole covers, storm drain grates, frost heaves, etc. Parameters of these road surface features may be determined by processing the images taken thereof by the rear-facing camera. Parameters may include a width, a length, a depth, a surface area, a circumference, a severity metric, etc. of the road surface feature.

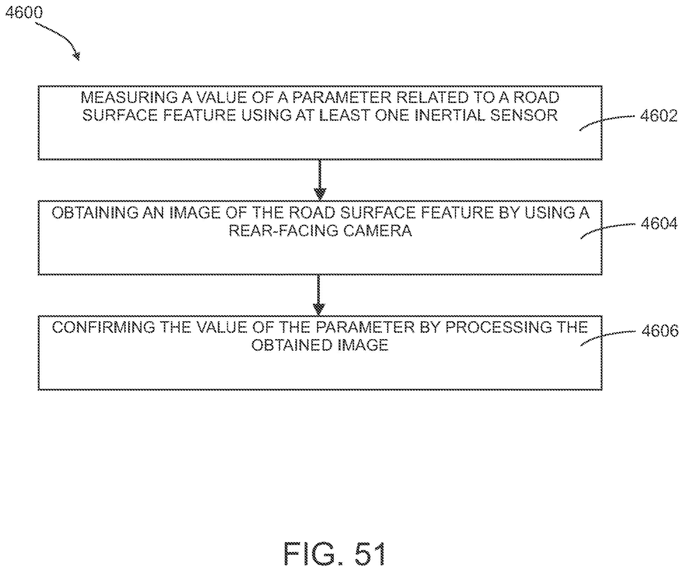

Referring to FIG. 51, a flow chart 4600 depicts a method of collecting road surface data. The method includes measuring (4602) a value of a parameter related to a road surface feature using at least one inertial sensor, obtaining (4604) an image of the road surface feature by using a rear-facing camera; and confirming (4606) the value of the parameter by processing the image captured obtained in step 4604.

The cloud-based databases described herein may include or be accessed by one or more microprocessors, such as those depicted in FIG. 47. The processors are configured to access non-transitory processor readable memory. Embodiments have been described where the techniques are implemented in circuitry and/or computer-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Accordingly, the foregoing description and drawings are by way of example only.

*DETERMINING CAMBER ESTIMATE VIA AVERAGE STEERING ANGLE*

Road camber is an inclination of the road (i.e., a general slope upward from the edges of the road toward the center of the road) that generally promotes drainage of the road. Camber may be defined as an angle between the surface normal and the vertical direction (aligned with gravity) that is parallel to the direction connecting the two wheels on a vehicle's front axle.

Roads are typically designed in a way to intentionally camber out from the middle, to allow rainwater to flow off to the side of the road instead of creating puddles. Roads are also often designed to camber into turns in curvy sections, and at other times are slanted simply to accommodate for terrain unevenness.

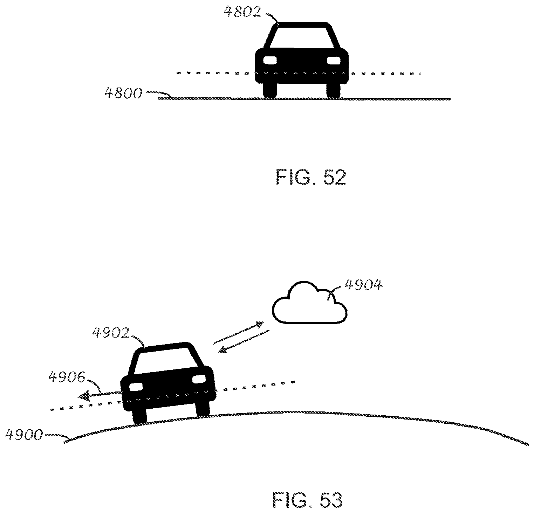

Referring to FIG. 52, a road vehicle 4802, which is designed to have a symmetric suspension system with respect to the driver and passenger sides of the vehicle, when properly aligned, is configured to drive straight on a perfectly flat road surface 4800 without any driver input. Referring to FIG. 53, when a road surface 4900, has a camber inclination, this will cause gravity to pull a vehicle 4902 in one direction (represented by arrow 4906), thus creating a lateral force on the vehicle 4902. To counter this lateral force, a driver or an operating system of the vehicle 4902 may impart a counteracting force, for example by steering the vehicle. At the same time, a vehicle with misaligned wheels, for example in the toe or steering direction, or in the camber direction, will generally experience a pull in one direction even on flat road, that may be counteracted by the driver or operating system with a countering force, for example by steering.

It is therefore typically impossible to detect a misalignment of a vehicle while on the road, and a diagnosis is typically done in a workshop on an alignment machine.

The inventors have recognized that crowd-sourced road information may be used to create a map of the road that contains additional information on the road character. As vehicles operate over a given stretch of road, and data is acquired from these vehicles, (e.g., in FIG. 53, the vehicle 4902 communicates with a cloud database) a map may be made of the required steering inputs in each vehicle and the yaw rate each vehicle achieved. Through proper filtering, and accounting for factors such as for example each vehicle's speed, wheelbase, and others, a low frequency component of the steering may be calculated that does not correlate with a yaw rate of the vehicle. This steering component is therefore used to either compensate for road camber, or for vehicle misalignment.

The inventors have recognized that by comparing the uncorrelated steering component of each vehicle to all other vehicles in the same stretch of road, and over other stretches of road, it is possible to separate out the two effects, and thus simultaneously define a road camber angle for each road segment, and a misalignment factor for each vehicle driving over those segments.

Interestingly, steering sensors in vehicles are typically calibrated at the factory to be aligned such that zero steering angle corresponds to the vehicle driving straight, but this calibration may change over time as the vehicle ages, the sensor moves, and/or other work on the vehicle, such as component replacement, modifies the sensor's readings. Because such a calibration change corresponds to a pure offset (which is constant), while a misalignment causes a steering angle that varies with speed among other factors, this calibration term may also be extracted from the same calculation described above.

Once the road camber and the calibration of the vehicle sensors is known, this information may also be used to correct for the effect of road camber before the driver senses it. As described above, when the vehicle drives on a section of road with a given camber, there is a lateral force induced on the vehicle by the angle of gravity with respect to the surface. This lateral force will tend to pull the vehicle in one direction, requiring the driver or operating system to produce a countering lateral force, for example through steering. This creates a disconcerting effect for the driver, and also creates a perception of the lateral motion both from a visual input (by seeing the vehicle "drift" in the lane) and sensory input (through perception of the lateral acceleration, for example on the seat) and is thus undesirable.

If the upcoming road camber is known, for example through a crowd-sourced map that includes road camber, or through some other means, and if the vehicle is able to localize accurately enough, for example through terrain-based localization, GPS, GNSS, and/or other technologies, a pre-emptive correction signal may be calculated based also on factors such as for example the vehicle type, driving speed, acceptable thresholds, and others. In FIG. 53, the vehicle 4902 communicates with a cloud database 4906. The pre-emptive correction signal may be calculated in the cloud or on vehicle by, for example, a microprocessor. This correction signal may then be applied in one of multiple ways, for example as a command to the vehicle's steering system if a steer-by-wire component is available (such as, for example, an add-angle steering system or rear steering systems), or as a command to another vehicle system able to influence vehicle heading, such as an active suspension system or an active aerodynamics system, or as a recommendation to the driver, for example through a heads-up display or a tactile feedback on an input surface such as a steering wheel.

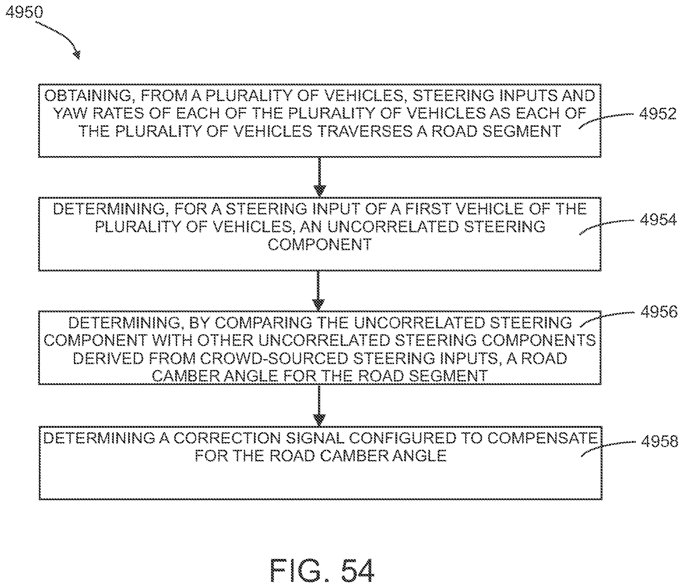

Referring to FIG. 54, a flow chart 4950 depicts a method of operating a vehicle. The method includes obtaining (4952), from a plurality of vehicles, steering inputs and yaw rates of each of the plurality of vehicles as each of the plurality of vehicles traverses a road segment. The method also includes determining (4954), for a steering input of a first vehicle of the plurality of vehicles, an uncorrelated steering component. The method also includes determining (4956), by comparing the uncorrelated steering component with other uncorrelated steering components derived from crowd-sourced steering inputs in step 4952, a road camber angle for the road segment. The method also includes determining (4958) a correction signal to compensate for the road camber angle. As discussed above, this correction signal may then be applied in one of multiple ways, for example as a command to the vehicle's steering system

### DIFFERENT CONSUMPTION ALGORITHMS OR GAINS BASED ON LOCALIZATION CONFIDENCE

**In** general, location recognition relies on a system behaving as expected, on the sensors having inputs to the system working as expected, and on a prescribed expected sensor output being correct. Any deviation from these may result in a poor location recognition, characterized for example by poor correlation between the actual and expected outputs or by poor recognition of individual beacons or events that are expected along the path. **In** a typical system, the quality of the location recognition will determine either an accurate location along the path, or a missed location recognition.

Described herein is a method for recognizing the location of a system along a path that is used to determine an upcoming desired motion of the system and commands for a set of actuators configured to carry out the desired motion. **In** some implementations, the system may be, for example, a robotic arm, a road vehicle, an autonomous road vehicle, etc. The set of actuators may be, for example, a variable damper system, an active suspension system, an active roll stabilizer system, a rear steering system, a robotic arm's actuators, etc. Recognizing a location of the system along the path requires matching a sensor output acquired at a current time to a sensor output predicted ahead of time, either from a previous path traversal, or a path traversal by another system at a previous time, or a sensor output from a model of the system. Knowing where the system currently is along the path allows the system to keep following its intended command, for example, a commanded damping force in a semiactive suspension system for a given location along a roadway, or a commanded trajectory for an active suspension system or a robotic arm.

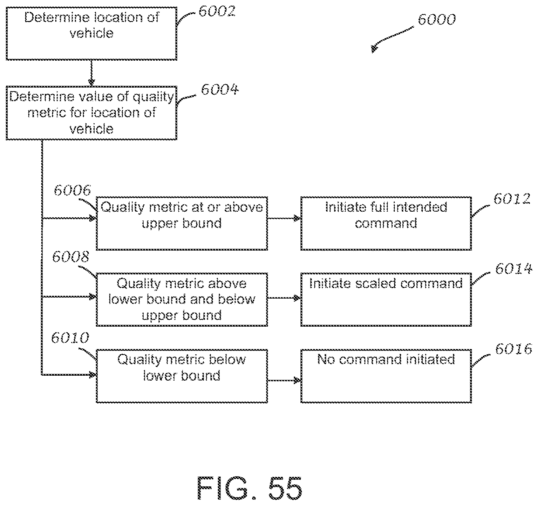

Referring to FIG. 55, a system 6000 performs a location recognition by determining (6002) a location of a vehicle. The system 6000 described herein defines a quality metric for the location recognition, for example, using a correlation value between the expected and actual output, or using a ratio of the number of events recognized over the total number of expected events, where an event might for example be a specific road signature such as a pothole, speedbump, etc., or a match with data expected from a subsection of road, or a recognition of an specific signature such as a sound or light from a transmitter, or a recognition of a specific feature in a camera feed, or many others. Using the performance metric, an upper bound and a lower bound for the quality metric may be defined.

The upper bound defines a level of the metric above which the path recognition is declared good, and the lower bound defines a level of the metric below which the path recognition is declared bad. The system 6000 determines (6004) a value for the quality metric. If the system determines that the value of the quality metric is at or below the lower bound (6010), the system may not continue to command the set of actuators (6016), since it may not have an accurate knowledge of its location and therefore cannot predict the correct future command to provide. If the system determines that the value of the quality metric is at or above the upper bound of the quality metric (6006), the system may apply its full intended command (6012) to achieve the desired performance. If the system determines that the value of the quality metric is between the upper and lower bounds (6008), the system may send a command that is a scaled version of the full input command (6014), scaled by a number that is mapped to the value of the path recognition metric. A mapping may be, for example, a linear scaling from 0-1, a lookup table relating the scale factor to the metric, a quadratic or nonlinear scaling, or any other direct relationship between one and the other.

This method may be applied to systems where the commanded input creates a monotonic improvement over a baseline state but may not be applied to a system where the primary function is not monotonic with the input. For example, it may not make sense to use path prediction to map the main steering command of an autonomous vehicle, because if the vehicle does not know its location, it could not simply "not steer" and still achieve even a baseline level of performance. However, the inventors have recognized that it may be advantageous to use a feedback system, such as a camera, LiDAR, and/or other sensors, to steer the vehicle, and a predicted path to correct the steering and allow the vehicle to improve on the smoothness of the trajectory, for example by starting turns wide, turning in until the apex of the turn, and then releasing back to the outside of the road.

In this scenario, no correction is applied if the location is not recognized, for example on the first drive in a given location, the vehicle would simply use its feedback sensors to provide acceptable, but likely subpar performance. When the location is recognized well, the vehicle receives a full correction command and reaches optimal performance; when a partial recognition is achieved, indicated by a value of the path recognition metric between the upper and lower bounds, then a partial correction command is applied, thus achieving performance that is better than the baseline if the location was correct, but worse than the optimal performance, but also achieving a performance that is still acceptable even if the location is only partially correct or the road has changed somewhat since the predicted path was created.

*USING LOCAL SENSORS TO ENHANCE MAPPING*

**In** some implementations, a crowd-sourced mapping system is used to populate a high-definition map. Data which may be included in or used in generating the road surface map may be received from a plurality of roving sensing units, which may be, for example, a plurality of vehicles driving on roadways, or a plurality of users with cellular phones, or other roving data sources. While roving sources may be useful for this kind of data population in that they significantly reduce the number of sensing units required to populate a map, there are data errors intrinsic to the system.

For example, a roving source may be a plurality of vehicles driving on a roadway, and acquiring data on the road conditions, road content, road events, weather conditions, surface conditions, or other relevant data that is experienced while driving on the roadway. Given the plurality of vehicles passing over the same location in a given span of time, and the plurality of vehicles also passing over different locations in the same span of time, it is possible to understand errors arising from differences between the vehicles, their sensors, or the drivers' or operators' input, as well as changes in the road content, events, and others over time.

The inventors have recognized that using local weather information, local road conditions, and/or local reporting of potholes, cracks, or other road surface features may enhance functionality of a crowd-sourced road surface map. At the same time, it may be inherently difficult to understand systemic errors that affect all vehicles or a large subset of vehicles, or short-time changes to the underlying conditions. For example, while it may be possible to use a vehicle's rain sensor data or a vehicle's temperature sensors data to extrapolate accurate real-time weather information, this data may suffer from systemic failures due to, for example, known inaccuracies of temperature sensors in vehicles, or to the fact that rain sensors may sense mist, rain, or snow in a similar way but that distinguishing between type of precipitation may be valuable.

The inventors have recognized that combining roving data sources with fixed data sources, creating absolute local measurements that allow a referencing of the data coming from the plurality of roving sensing units, and employing a method for calibrating the roving sensing units with the stationary ones when overlapping in the same location may enhance accuracy and functionality of generated road surface maps.

In a first method of collecting data, when information is required on a large geographic scale, and this information changes only slowly in time, then using roving sensing units is advantageous because using roving units reduces an overall number of sensors required. For example, to generate "street view" images for their Google Maps platform, Google uses vans that drive around collecting pictures of houses rather than placing a camera at each house. This method is not only advantageous because of cost savings, but because houses change much slower than the time it takes vans to drive around and reach the same house again after a period of time. One may use the information regarding the time it takes a roving unit to traverse a particular area (e.g., a van to drive a certain number of streets), and the average time required to capture differences in information (e.g., changes in the look of houses), to optimize the number of roving units.

In a second method of capturing data, employing roving units may not be optimal due to rapid changes in information. If, returning to the previous example, it were desirable to track the changes in a large construction project on a particular home by taking pictures of it, these changes would happen on a much faster time scale than changes to other houses. Instead of increasing the number of roving units to cover this use case, a stationary unit at the construction site could be integrated into the system to balance the needs of one location with the needs of the rest.

While this example is for illustration purposes only, it highlights a similar problem when collecting data on roadways regarding road content, road events, and road surface conditions. Some locations change more rapidly than others, and some data change more than others, and some data are less reliable than others when acquired from a roving sensing unit, such as a vehicle. For example, a local temperature sensor in a vehicle may often suffer from inaccuracies due to its exposure to multiple local heat sources, such as the engine, the brakes, and large surfaces absorbing sunlight, and multiple local cooling elements such as engine fans, wind from driving, air conditioning, and snow or ice that may be covering surfaces. These errors may be significant and are a reason that vehicle sensors are not generally used to source weather data for weather maps.

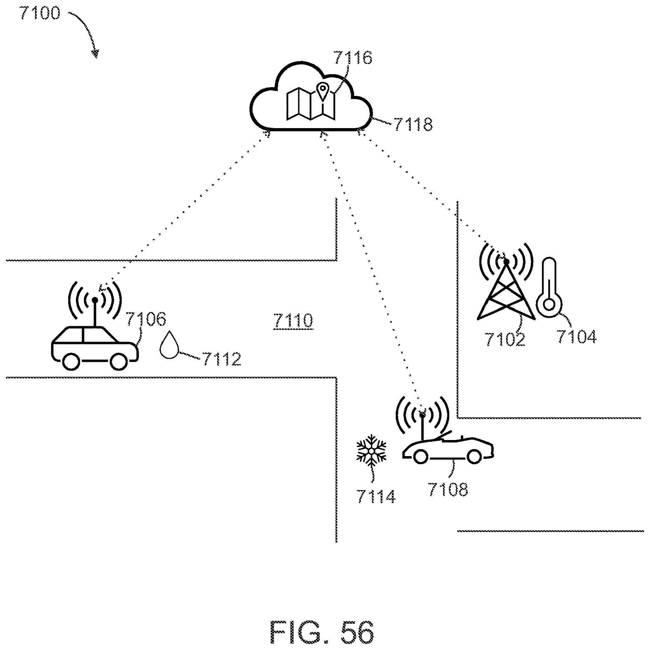

However, with the addition of a few strategically placed local sensors, this problem may be reduced. For example, referring to FIG. 56, across landscape 7100, a stationary unit 7102 includes a local temperature sensor 7104, which is well placed and well calibrated and does not suffer from the errors listed above for vehicle-based sensors. For example, a local temperature sensor may be placed away from direct sunlight, fans, or heater exhausts, among other things. It is possible to cross-reference the data from vehicles, for example first vehicle 7106 and second vehicle 7108, passing near the location (e.g., by traveling on roadway 7110) of the stationary unit 7102 with the data collected by the local sensor, and then correct a temperature reading obtained by the first vehicle 7106. Using additional measurements of states of the first vehicle 7106, for example the engine load, air conditioning status, fan status, and other measurements of local weather, for example precipitation, cloud cover, and others, a mapping of the vehicle's temperature sensor to the absolute sensor may be made. With enough local sensors to build a good model of the sensitivities of the roving sensors, it is possible to reduce many of the errors in the roving sensors, and thus improve the quality of the overall map 7116 (e.g., stored in cloud database 7118 which is in communication with the stationary unit 7102, the first vehicle 7106, and the second vehicle 7108) without having to introduce more expensive sensors, a larger number of roving sensors, or a larger number of stationary sensors.

Measurement of road conditions may be accomplished in this manner. For example, pothole size and depth, instances of cracks, and other features, measurements of environmental factors such as precipitation 7112 or snow cover 7114, measurements of road contour at spatial frequencies that are not suitable for roving sensors, such as for example spatial wavelengths longer than 100 m or shorter than 10 cm, measurements of cloud cover from vehicle-based cameras, and many others. Road condition information that is measured using this method may be used to populate a cloud database, a high-definition map, a road information database, or other storage of road information previously described.

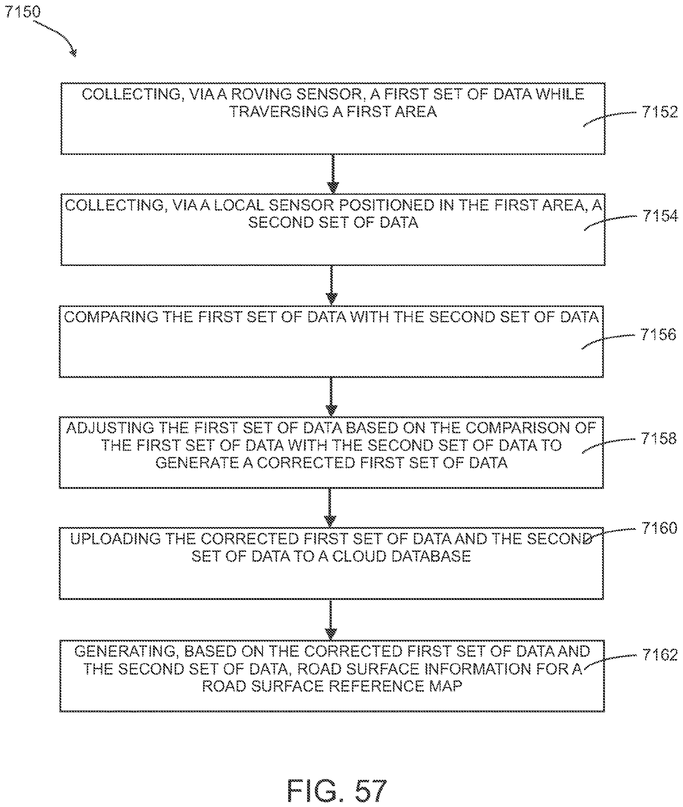

Referring to FIG. 57, a flow chart 7150 depicts a method of updating a road surface reference map. The method includes collecting (7152), via a roving sensor, a first set of data while traversing a first area; collecting (7154), via a local sensor positioned in the first area, a second set of data; comparing (7156) the first set of data with the second set of data; adjusting (7158) the first set of data based on the comparison in (c) to generate a corrected first set of data; uploading (7160) the corrected first set of data and the second set of data to a cloud database; and generating (7162), based on the corrected first set of data and the second set of data uploaded in (e), road surface information for a road surface reference map.

### IMPAIRED DRIVER DETECTION

Current methods for determining driver impairment are often based on making an assessment of a physical characteristic of the driver (e.g., a blood alcohol level, an alertness level based on tracking eye or eyelid motion, etc.). **In** some instances, these assessments may not accurately determine whether a driver's driving behavior will or has been impaired. **In** some instances, these assessment methods may be turned off or not completed by a driver of a vehicle.

The inventors have recognized that a terrain-based localization system may utilize information of a current driver's driving behavior (e.g., route taken, speed traveling, etc.) and compare against one or more previous drives completed by another driver (or the current driver on a previous traversal) of that road segment or route. In some implementations, the comparison may be to a particular reference drive or set of reference drives performed by a particular type of vehicle, model of vehicle, etc. The terrain-based localization system may perform the comparison to check for driver fatigue, driver intoxication, medication, and/or other unusual or erratic driving behavior. The terrain-based localization system may report driver fatigue, driver intoxication, driver impairment, and/or other unusual or erratic driving behavior to an ADAS (advanced driver assistance system) to alert a driver of the behavior.

In some implementations, direct-measured vehicle information (e.g., information obtained from sensors on the vehicle) may be used to compare current driver behavior to reference behavior. In some implementations, terrain-based localization information, for example lane drift, lane change (occurrences, speed/time of change, etc.), lane selection, missed road events (e.g., typically drivers hit a pothole/ridge/bump at a given location), hit road events (e.g., usually driver avoid large pothole, etc.), etc., information may be used to compare current driver behavior to reference behavior. In some implementations, reference behavior may be sourced from data based on behavior of the same driver on another day, a computed average driver on the particular road segment, and/or a driver of a vehicle which traversed the road segment a short time before the current driver.

Intoxicated or fatigued drivers may showcase different driving behaviors than unimpaired drivers, such as, for example, slower reaction times which may result in altered vehicle dynamics (e.g., more braking, higher lateral accelerations on obstacle avoidance, etc.), hitting large events on the road segment (e.g., multiple large potholes, etc., as many drivers would try to avoid these events), and/or engaging in many lane drift or lane change behaviors, etc. In some implementations, the reference behavior to which the current driving behavior is compared may be served to the vehicle from the cloud. In some implementations, the comparison between current and reference behavior may be done in the cloud and in other implementations the comparison may be done on the vehicle by one or more microprocessors and/or vehicle controllers. In some implementations, a crosscheck with other ADAS systems (e.g., lane keep assist, automatic braking, automatic steering, etc.) may be supported.

In some implementations, reference behavior and/or current driving behavior may be sourced from data obtained by sensing various parameters of or signals from the vehicle, which may include but are not limited to, steering, vehicle speed, longitudinal acceleration, lateral acceleration, yaw rate, etc. In some implementations, reference behavior and/or current driving behavior may be sourced from a terrain-based localization system. For example, the terrain-based localization system may determine a reference heading of the vehicle, may determine occurrences of lane drift and/or lane change, may determine that an abnormal lane selection behavior has occurred (e.g., usually drivers go straight on this road segment but this driver chooses to diverge, a rumble strip is detected, etc.), may determine that an incorrect lane selection behavior has occurred (e.g., this driver chooses to drive in a lane where typical vehicle travel is in the opposite direction of current travel), may determine that road surface events have been hit or missed, etc. In some implementations, road-based data may be used in place of or in addition to data from optical sensors.

A reference behavior may be stored in a terrain-based localization database, which may be a cloud database. In some implementations, a reference behavior may be determined by another vehicle that has recently traversed a road segment, for example, another vehicle currently driving along the same route (i.e., "just ahead" of the current vehicle). In some implementations, a reference behavior may be defined based on a combination of sources.

Information from the current vehicle may be analyzed and compared to the reference behavior. An estimation about a state of intoxication or fatigue of the driver may be determined. The estimation may be sent to the vehicle with a probability indicator (e.g., high/medium/low probability of intoxication and/or fatigue). In some implementations, a percentage value may be assigned to the estimation (e.g., 80% likely that driver is intoxicated/fatigued, etc.).

In some implementations, the estimation may be adjusted based on a time of day, a day of the week, a time of the day, a season (e.g., summer, winter, etc.), etc. Intoxication and/or fatigue may be more likely at certain times of day, for example, between the hours of midnight and three o'clock in the morning, at certain times of the year (e.g., New Year's Eve, daylight savings time changes, etc.), etc.

In some implementations, the estimation and/or reference behavior may be adjusted based on a type of vehicle driven (e.g., the data source of the reference behavior is an SUV and the current vehicle is a sedan or sports car). For example, sports cars or other specialty vehicles may encourage certain types of driving behavior as normal usage (unimpaired driving).

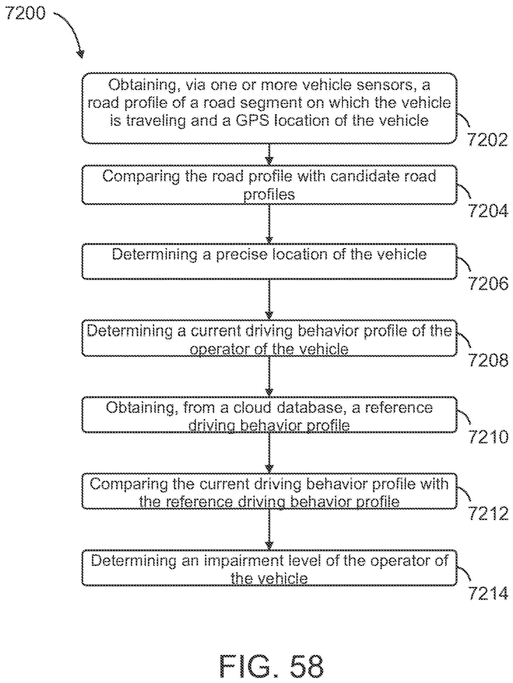

FIG. 58 is a flowchart showing a process 7200 for detecting erratic driving behavior by an operator of a vehicle. The process 7200 includes obtaining (7202), via one or more vehicle sensors, a road profile of a road segment on which the vehicle is traveling and a GPS location of the vehicle. The obtained road profile is compared (7204) with candidate road profiles. In some implementations, this comparison may be done in the cloud and in other implementations the comparison may be done on the vehicle by one or more microprocessors and/or vehicle controllers. The comparison allows the precise location of the vehicle on the road segment to be determined (7206).

The process 7200 also includes determining (7208), based on data from one or more vehicle sensors, a current driving behavior profile of the operator of the vehicle. The one or more vehicle sensors may include accelerometers. A reference driving behavior profile is obtained (7210) from a cloud database. The process 7200 also includes comparing (7212) the current driving behavior profile with the reference driving behavior profile. In some implementations, the comparison may be done in the cloud and in other implementations the comparison may be done on the vehicle by one or more microprocessors and/or vehicle controllers. In some implementations, direct-measured vehicle information (e.g., information obtained from sensors on the vehicle) may be used to compare current driver behavior to reference behavior. In some implementations, terrain-based localization information, for example lane drift, lane change (occurrences, speed/time of change, etc.), lane selection, missed road events (e.g., typically drivers hit a pothole/ridge/bump at a given location), hit road events (e.g. usually driver avoid large pothole, etc.), etc., information may be used to compare current driver behavior to reference behavior.

The process also includes determining (7214) an impairment level of the operator of the vehicle. In some implementations, a confidence score for the impairment level of the operator is also determined. When the impairment level is above a threshold, an alert may be sent to the operator of the vehicle and/or to a vehicle controller. If the vehicle controller is notified of operator impairment, the vehicle controller may change an operating mode of the vehicle (e.g., may slow the vehicle down, set a maximum speed, etc.).

*AIR SUSPENSION CONTROL USING PROACTIVE CONTROL*

Air suspension systems generally have a slow response time (typically up to 10 seconds to lift a vehicle) and therefore may need advance warning of a desired motion for the air suspension system to respond in time enough to be effective. The inventors have recognized that using crowd-sourced road maps along with terrain-based localization is an optimal way to provide this functionality on the time scale needed, as other vehicle-based sensors are unable to preview far enough ahead of the vehicle to allow enough time for the air suspension system to respond.

The inventors have recognized that crowd-sourced road surface information, including but not limited to road classification, road profiles, and/or road events may be used to modify the control strategies used for an air suspension system, especially a multi-chamber air suspension. In some implementations, using knowledge of large events (e.g., curbs, changes in incline, speed bumps, potholes, etc.) that may be ahead on the road, the multi-chamber air suspension may be used to stiffen or soften strategically to allow the vehicle to lift or lower as needed to traverse the events. In some implementations, using knowledge of the road character or type, for example a knowledge of the amount of primary ride content, an optimal setting for the air suspension system may be determined. In some implementations, using knowledge of the road type and/or road character, for example how much primary ride content there is, the optimal ride height may be determined and the vehicle may be pre-emptively raised or lowered. This type of control over the air suspension system may allow for more fuel-efficient operation as the vehicle may be operated as low as possible without compromise ride quality.

Using knowledge of specific road events that the particular vehicle has not yet traversed, but that have been experienced and mapped by other vehicles traversing the same road segment, optimal ride heights may be determined and set pre-emptively, allowing even a slow raising air suspension to provide benefits. Such optimal ride height determinations may be applied to, for example, driveway entrances, speedbumps, and/or large road events, as well as to the optimal height for loading docks for delivery fleet vehicles.

While geo-tagging of events (e.g., based on GPS data) may be performed for control of air suspension systems, recognizing and characterizing events may be necessary to provide for control beyond the scale of a few simple events like the owner's driveway.

Modifying the ride height based on general road characteristics also allows for generally lower ride heights, especially at higher driving speeds where aerodynamic effects of lowering ride height play an important role in fuel efficiency. Vehicles with air suspension may be configured to lower the vehicle at elevated speed, for example above 50 mph, but are generally unable to do so as aggressively as they would like due to the unknown character of the road that might lead to significantly lower comfort when reducing wheel travel too much.

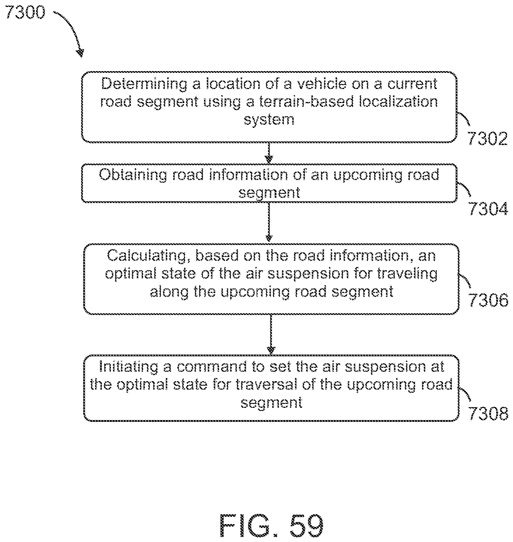

Referring to FIG. 59, a process 7300 for controlling an air suspension system of a vehicle is shown. The process includes determining (7302) a location of the vehicle on a current road segment using a terrain-based localization system. The terrain-based localization system may include comparing a road profile of the current road segment with a set of candidate road segments (the set of candidate road profiles may be based on a general location of the vehicle determined via GPS) stored in a database. Based on the location that is determined, information about the current road segment and possible upcoming road segments may be obtained.

The process 7300 also includes obtaining (7304) road information including at least one of road characteristics, road events, or a road profile of an upcoming road segment. Road events, road characteristics, and/or road profiles may be crowd-sourced, characterized, and mapped, and stored in a cloud database. The cloud database may be continuously updated based on data received from vehicles traversing the road segments whose information is stored in the database.

The process 7300 also includes calculating (7306), based on the road information, an optimal state of the air suspension for traveling along the upcoming road segment, wherein the optimal state of the air suspension includes at least one of an optimal ride height or an optimal stiffness setting. The consumption algorithm for control of the air suspension system may account for the vehicle type (e.g., sports car, sedan, SUV, etc.) and characteristics (e.g., ground clearance, etc.), suspension type and characteristics, and the driving speed to properly act on the information. A height profile (i.e., the height setting changing over time) for the air suspension may be determined based on upcoming road events and adjustment times required by the air suspension to raise and/or lower the vehicle. The height profile may be determined based on upcoming road events, aerodynamics, and ride comfort. A stiffness profile (i.e., the stiffness setting changing over time) for the air suspension may be similarly determined. Height and/or stiffness profiles may also be determined based on a speed at which the air suspension system may be adjusted (i.e., the air suspension system may not be able to move fast enough to move from a first setting (an optimal state at time $t_1$) to a second setting (an optimal state at time $t_2$) within the time difference between $t_2$ and $t_1$.

The process 7300 also includes initiating (7308) a command to set the air suspension system at the optimal state for traversal of the upcoming road event. The command may be initiated in view of a required adjustment time for moving the air suspension system into the optimal state determined.

*SWERVE DETECTION FOR IMPROVED EVENT CONSUMPTION*

In consuming terrain-based data and implementing a command strategy for one or more vehicle systems based on such terrain-based data, missing a road surface event (e.g., a pothole, a speed bump, etc.) when the terrain-based data indicates that the vehicle should have experienced the event may lead to unexpected, and potentially uncomfortable, performance of the vehicle systems.

The inventors have recognized that a swerve detector for a terrain-based localization and control system may be designed to suppress event consumption when a vehicle is maneuvering in a way where the vehicle may not be likely to hit an event that would be expected to be hit on the road surface if not performing a swerving maneuver.

While driving, a terrain-based localization and control system is configured to serve the vehicle actuators (e.g., semi-active actuators, active suspension actuators, etc.) with information about upcoming events (e.g., potholes, speed bumps, etc.) so that the actuator control system may react in a way that improves experience of that event (e.g., occupant comfort, vehicle durability, vehicle performance, safety, etc.). Some event-specific control algorithms, if performed while on an ordinary flat road, may degrade ride comfort, for example, a pothole mitigation algorithm may stiffen a semi-active damper. If the vehicle operates using the pothole mitigation algorithm and hits the pothole, optimal performance may be achieved as the expected pothole was experienced. However, if the vehicle does not hit the event (e.g., the vehicle misses the pothole), ride comfort may be worse than if the control system performed no pothole mitigation.

The swerve detector may use an IMU and GPS to determine if a heading and/or path of the vehicle is deviating from the heading of previous vehicles driving on the road segment. While the deviation persists, a terrain-based localization system may suppress information about upcoming events so that event algorithms are not falsely triggered when the events are unlikely to be experienced by the vehicle. The swerve detector may look for large, unexpected lateral accelerations using an IMU (or another appropriate sensor) to determine if a swerve behavior is occurring.

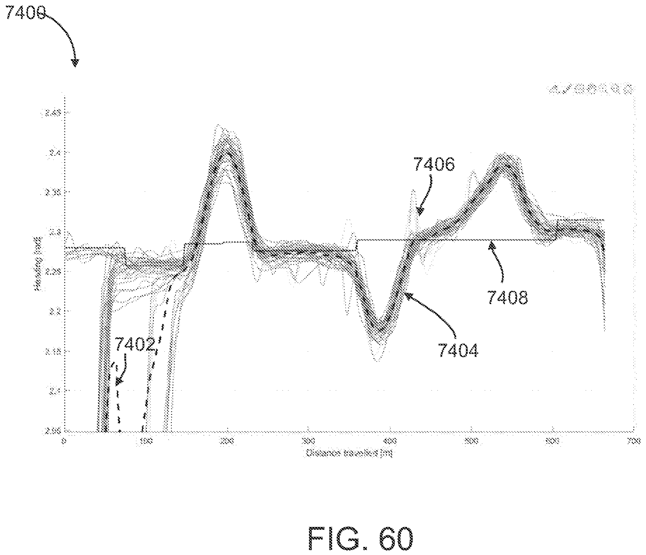

Referring to FIG. 60, a graph 7400 shows an estimate of a vehicle heading from a plurality of traversals (e.g., traces 7404, 7406 track the vehicle heading) of a road segment. The dotted black line 7402 is an average of all traces. The majority of traces 7406 represent drives when the vehicle hit a pothole just after 400 m of distance had been traveled along the road segment. The outlier traces 7406 represent drives where the vehicle swerved to miss the pothole.

In some implementations, Aa swerve detector as described herein may use a live heading estimate to detect when the vehicle's heading (e.g., represented by one of the traces 7404, 7406) deviates from the average heading (i.e., dotted black line 7402). A solid black line 7408 is the heading of the road segment gathered from a map database that includes information on the road segment. Generally, this shows that map database geometry is not accurate or high-resolution enough to provide information to detect swerves. The swerve detector enables avoidance of false positives when consuming information about detected events. By not providing a "positive" when the vehicle swerves, we the accuracy rate for consumption may be improved.

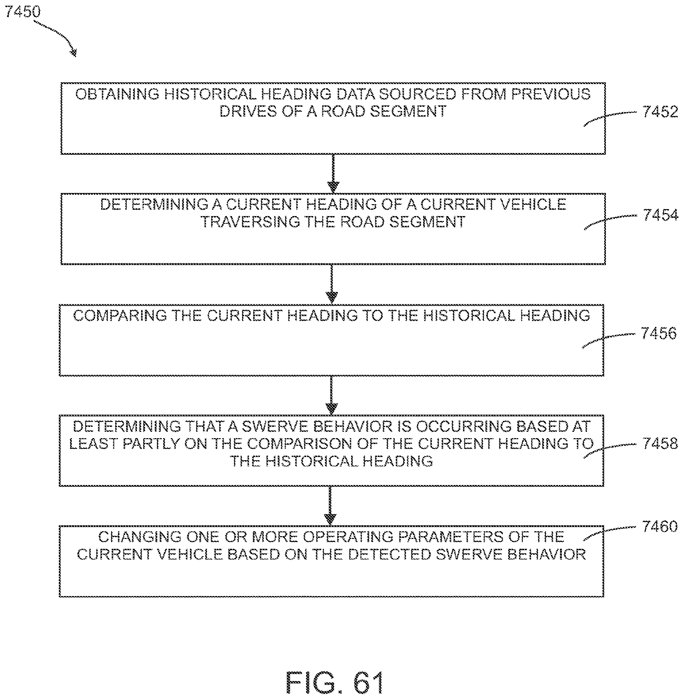

Referring to FIG. 61, a flow chart 7450 depicts a method of determining a swerve behavior of a vehicle. The method includes obtaining (7452) historical heading data sourced from previous drives of a road segment; determining (7454) a current heading of a current vehicle traversing the road segment; comparing (7456) the current heading to the historical heading data; determining (7458) that a swerve behavior is occurring; and changing (7460) one or more operating parameters of the current vehicle based on the detected swerve behavior.

*USING TERRAIN-BASED LOCALIZATION TO IMPROVE TRAVEL MANAGEMENT INCLUDING END OF TRAVEL CONTROLS*

The inventors have recognized that travel management improvement (proactive and reactive) may be used in vehicle systems for motion control given that those vehicle systems are influenced, directly or indirectly, by road inputs. Such vehicle systems may include, for example, vehicle systems that influence z-direction movement, including vehicle suspension systems (e.g., active suspension systems, semi-active suspension systems, air spring suspension systems, etc.), active roll control systems, and/or active seat suspension systems (e.g., active seat systems, etc.).

Travel management improvement is targeting proactively a desired motion through predictive information to feed into controls of the system. Two main controls approaches may be used. The first controls approach is to prevent engagement of travel limiting elements, such as, for example, end stops and/or secondary springs. The second controls approach is to, if travel limiting elements will engage or are chosen to be engaged, make the reaction more desirable than an uncontrolled engagement. For example, engagement of the travel limiting elements may be more smooth, more abrupt, etc., based on the situation.

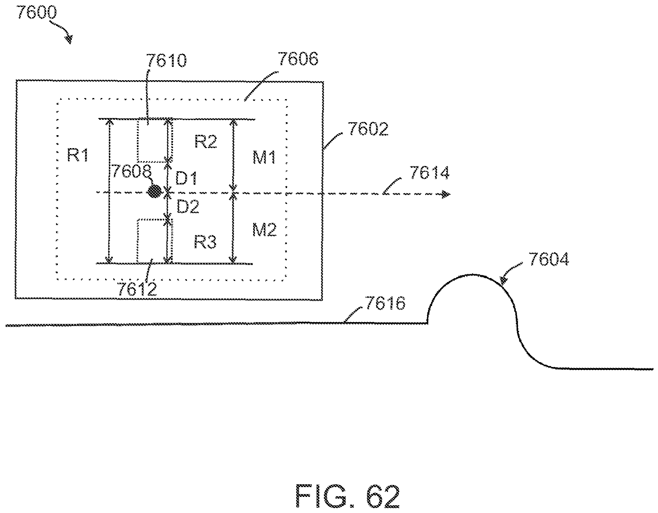

Referring to FIG. 62, in situation 7600, a vehicle 7602 is traveling on a road surface 7616 that includes a large road event 7604. The vehicle 7602 includes a suspension system 7606 that includes a suspension actuator 7608 and two passive suspension elements 7610 and 7612. The suspension actuator 7608 may be an active suspension actuator and the passive suspension elements may be end stops, secondary springs, and/or other travel limiting elements. The suspension actuator 7608 has a range of travel R1 (with a maximum upward travel M1 and a maximum downward travel M2) and the passive suspension elements 7610, 7612 have ranges of travel R2 and R3, respectively. The suspension actuator may move upward distance D1 and downward distance D2 prior to engaging the passive suspension elements 7610 or 7612, respectively. Note that FIG. 62 displays an event which is a higher height then the road. The same principle applies to a lower event. The road conditions may occur on one side of the vehicle (one wheel) or on both and may also be opposing (left to right, low and high).

From a resting current travel position 7614 (which may represent a ride height of the vehicle), the suspension actuator 7608 may be controlled to move within its range of travel R1. By using a predictive terrain-based localization system that utilizes upcoming road profile information, the actuator controller may initiate actuator control commands in view of upcoming road events (e.g., road event 7604). For example, in one implementation, as the vehicle 7602 approaches road event 7604, the actuator controller may initiate lowering the vehicle (e.g., moving actuator 7608 downward from current position 7614 into range D2) to allow actuator 7608 to have more travel space before impacting passive element 7610. **In** another implementation, the actuator controller may preemptively move actuator 7608 into range R2 so that the passive element 7610 is engaged prior to impacting the event. **In** another implementation, the actuator controller may move actuator 7608 upward into range D1 to allow for more downward travel to occur after the initial impact of hitting road event 7604. The actuator commands initiated by the actuator controller may be determined based on road information, vehicle information and optimized for comfort, fuel economy, vehicle durability, etc.

With the predictive information on the road (e.g., road surface information, road events, etc.) and the behavior of the device, it is possible to determine a health and functional state of the suspension system and initiate appropriate actions (e.g., for diagnostic purposes and/or adaptions). With the predictive information of the road, it is also possible to lower the vehicle to the ground more often and more precisely while preventing under floor damage to the vehicle (because the system proactively knows that there should not be a harmful event on the road surface that would damage the vehicle). This allows the vehicle to make gains in reducing fuel consumption and/or improving range (e.g., for electric vehicles) because of lowering the air resistance during driving. An improved travel management system is configured to automatically lower and raise the vehicle based on road information and therefore would spend more overall time positioned in a fuel-efficient state.

Additionally or alternatively, travel management improvement may also be used for applications such as, for example, systems which may benefit from a change in operating status due to road input and resulting vibration. For example, a CD player may stop playing or buffering for a period of time because a bumpy road section is ahead and CD reading may not work properly during traversal of the bumpy road section.

In some implementations, a position of a suspension device (e.g., a suspension actuator) may be proactively changed to allow for travel during an upcoming event so that the suspension device does not run out of travel during the event travel.

In some implementations, a control setting may be proactively changed to allow for a changed tuning set to prevent engaging an "out of travel" algorithm (e.g., a "higher damping control mode"). This controls change may also be done reactively, for example, when a road event already was hit, but in this situation, a strategy to counter the reaction is moving to a more desirable setting.

In some implementations, a controls setting may be proactively changed to allow for a changed tuning set to make the end of travel event more controlled, for example, to provide a more desirable experience for one or more occupants of the vehicle (e.g., increased comfort for rear seat passenger; even looking at left or right side in the rear of the vehicle) when the system knows that a response to an upcoming event will require more than the available travel of the suspension device.

In some implementations, travel management improvement may provide for a more efficient use of passive elements, damping elements or additional reaction force sources (e.g., extra spring), by using controls. In some implementations, a suspension system may be modified to remove some passive elements because the control system is now able to mimic behavior of the passive elements without them being present in the system. For example, the control system may be faster (i.e., does not need to wait for the system to react).

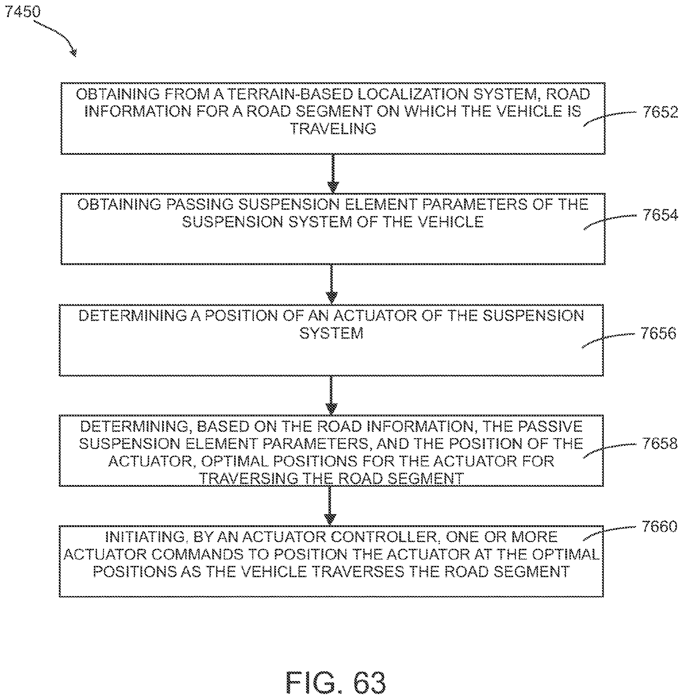

Referring to FIG. 63, a flow chart 7650 depicts a method of controlling travel of an actuator of a suspension system of a vehicle. The method includes obtaining (7652), from a terrain-based localization system, road information for a road segment on which the vehicle is traveling; obtaining (7654) passive suspension element parameters of the suspension system; determining (7656), a position of an actuator of the suspension system; determining (7658), based on the road information, the passive suspension element parameters, and the position of the actuator, optimal positions for the actuator for traversing the road segment; and initiating (7660), by an actuator controller, one or more actuator commands to position the actuator at the optimal positions as the vehicle traverses the road segment.

*ROAD PROFILE CREATION TECHNIQUES*

Generally, road profile data acquired at different speeds and with different sensor sets cannot be easily blended, and cannot be easily compared to a new dataset. This shortcoming makes creation of and updating of a road profile database difficult when drives along road segments are not often performed at the exact same speed using the exact same sensor set as vehicles differ widely.

The inventors have recognized that blended road profiles may be created from sensor data in a set of vehicles by combining multiple data acquisitions from different vehicles, different sensor sets, and/or different driving speeds. The inventors have recognized that by accounting for the range of high fidelity for each dataset, blending them in the spatial frequency domain is possible and advantageous.

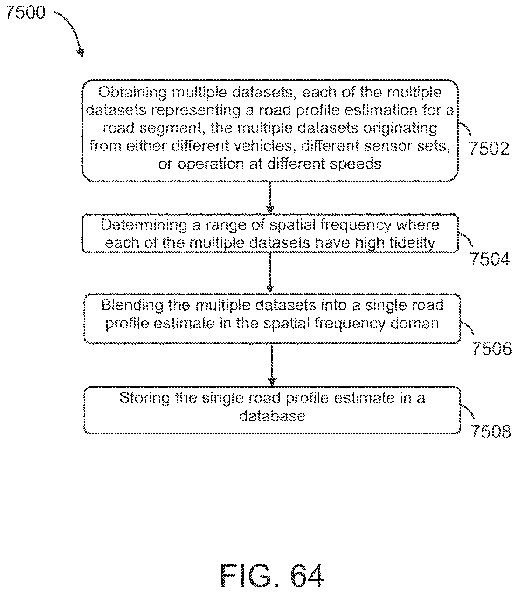

Referring to FIG. 64, a method 7500 of blending multiple datasets into a single road profile estimate is shown. The method includes obtaining (7502) multiple datasets that represent road profile estimations of a road segment. The multiple datasets may be gathered by different vehicles, the same vehicle operating at different speeds, and/or by different sensors sets. Each sensor set used may have certain characteristics that may reduce the validity of the estimated road profile of the road segment traversed by the vehicle. For example, a road scanning laser sensor may provide an accurate road profile with relatively low spatial resolution, and with typically no low-frequency accuracy due to its inability to measure absolute movement. A system including a road-scanning laser and an inertial measurement of the motion of the base of the road scanner (for example, the vehicle body it is mounted to) may provide better low frequency tracking. The addition of a GPS unit may provide better reference measurements for very low frequency. As another example, a single wheel accelerometer may provide a good estimate of road content on one side of the vehicle between about 1 Hz and about 10 Hz in a typical vehicle, because the wheel will generally follow the road for normal driving, and below the natural frequency of the unsprung mass on the tire ("tire hop"), which is typically around 12 to 15 Hz. The addition of a suspension position sensor and a body accelerometer or body-mounted IMU may extend the validity of the estimate to below 0.5 Hz. Any appropriate body-mounted sensor which senses movement of the rigid vehicle body may be used in addition to or instead of the body accelerometer or body-mounted IMU. Adding a force sensor in the wheel hub may extend the validity of the road estimate to above 12 Hz. At a given driving speed, each temporal frequency range translates into a spatial frequency rate. This means that even given a specific sensor set, for example with good fidelity between 1 Hz and 10 Hz, the resulting spatial mapping of the road content may only be valid at spatial frequencies corresponding to the frequency divided by the vehicle's driving speed, for example at 1 m/s and with 1 Hz to 10 Hz valid range, the spatial frequency of high fidelity data would correspond to 1 m to 1/10 m wave lengths, while at 5 m/s driving speed the same sensor set would provide high fidelity data between 5 m and ½ m wave length.

High frequency data acquisition may provide a point every 1/100 of a second, for example, or 1/1000 of a second, while low frequency data acquisition might provide a data point every 1 second or every 1/10 second. This may lead to a spatial resolution of data available that may vary, depending on the driving speed, even for the same sensor set and data acquisition, but is especially variable between different data acquisition sets.

The present disclosure provides a method for combining these disparate measurements into a single measurement to efficiently create good road profiles and/or create better estimates of true road profiles using multiple vehicle sensor sets and multiple data acquisition sets. The present disclosure also allows for the acquisition of data at multiple driving speeds. This method also allows acquisition of more precise data with even just a single sensor set by simply driving the same road at different speeds.

The data acquired by each run, with a given sensor set and driving speed, is determined (7504) to be valid in only a spatial frequency range consistent with the ratio of the declared validity range of the sensor set (in 1/s or Hz) and the driving speed (in m/s). Based on the valid spatial frequency ranges, the multiple datasets may be blended (7506) into a single road profile estimate in the spatial frequency domain. A sharp filter, for example a brick-wall filter (also may be called a knife-edge filter), is applied in an acausal way to the data set to remove spatial frequency content outside of the valid range without introducing any phase delays, and the data thus acquired is interpolated at the spatial frequency values predefined for the road profile (for example a linear spacing of points between 0.01 [1/m] and 100 [1/m], or a logarithmic spacing of points between those spatial frequencies). The data is then averaged into the existing data for this road segment through known averaging methods, for example by adding the frequency content and dividing by the number of points at that frequency value. A single road profile estimate may be stored (7508) in a database, e.g., a cloud database including road profile estimates of many different road segments.

Resolving the data to spatial frequency for each road segment also allows blending of different data acquisition rates, while accounting for the fact that data acquired at lower rates will have a maximum valid frequency that is impacted by this low rate. For example, at a data rate of 1 point per second, and a driving speed of 5 m/s, data may only be acquired at a rate of 1 data point every 5 m, and thus may only resolve spatial waves greater than 10 m, corresponding with a spatial frequency of 1/10 [1/m]. Taking this into account allows proper blending of different datasets into one cohesive set of data.

When comparing newly acquired data to an existing road profile, for example to calculate terrain-based localization, a similar process may be used. The road data used for the comparison is generally valid for a given spatial frequency range, depending on the data used to compose the road data. This range may be expressed, for example, as the spatial frequency points at which at least 3 data points exist, or a similar metric. The spatial frequency range of validity for the new dataset may be determined as described above. When comparing the new dataset to the road data, a comparison may be done in the frequency range where both overlap. For example, if the previous road data is valid from 0.1 [1/m] to 10 [1/m] and the new data is valid from 1 [1/m] to 5 [1/m], then a comparison may be done in the range from 1 [1/m] to 5 [1/m]. If instead the new data is valid between 3 [1/m] and 20 [1/m], then the comparison may only be done in the frequencies that overlap, or between 3 [1/m] and 10 [1/m]. This method may be done by decomposing each data set into spatial frequency, acausally filtering the data sets, and then comparing them either in the spatial frequency domain or in the time domain.

In some implementations, many alternative sensor sets may be used. Vehicle-based inertial sensors (accelerometers and/or rate sensors) may be used in combination or separate from GPS units, distance measurement units such as lasers, lidars, and radar systems, as well as ground-penetrating radar.

In some implementations, the system may be deployed on a specific vehicle designated for measurement, or the system may be deployed on a multitude of vehicles that all acquire different sets of data. Data acquisition may be local and/or stored in the cloud.

In some implementations, data transfer may occur continuously or at the end of an acquisition, or at intervals along the road. Data may be transferred using Wi-Fi, physical media (storage disks), Bluetooth, and/or any other data transfer medium.

Vehicle sensor sets may be common throughout a fleet of vehicles, or may be different for different vehicles, with some acquiring higher resolution data and some lower, and some acquiring data that is valid in different frequency ranges than others. This allows a multitude of vehicles to be used and in many cases does not require specific sensors to be installed in vehicles that already have motion sensors dedicated to other vehicle systems, such as, for example, suspension systems, lighting systems, etc.

*LOCALIZATION ENHANCEMENT USING TERRAIN-BASED AND SENSOR-BASED METHODS*

Each type of vehicle-based sensor has strengths and weaknesses in terms of accuracy, reliability, and validity. Examples of enhanced localization that may be achieved include, but are not limited to, maintaining localization in tunnels or other scenarios with poor GPS performance, enhancing localization above GPS precision where both terrain-based localization and GPS are available, inserting vision-based localization to allow quick reference for absolute landmarks, improving accuracy of vision-based landmarks through more accurate reference location, etc.

GPS generally has limited accuracy (typically a 5 m radius) and availability (e.g., due to tunnels, nearby buildings, cloud cover, and/or trees). Terrain-based localization may have limited availability until a road has been mapped but is highly accurate. Vision-based localization may have limited availability (until mapped) and limited usability (e.g., due to lighting, rain, snow, etc.).

The inventors have recognized that localization may be enhanced by creating a sensor fusion of terrain-based localization, GPS, and vision systems. Many different kinds of sensors may be used, including but not limited to, vision sensors, infrared sensors, short-wave infrared sensors, lidar, radar, ground-penetrating radar, GPS, motion sensors in the plane of the road surface, motion sensors out of the plane of the surface, and sensors on the wheels or the vehicle body. Navigation in highway tunnels may be heavily affected by loss of GPS signal and proper navigation may be critical for future vehicles. Accurate localization is important for event recognition and may be increasingly important for autonomous vehicles. The systems and methods described herein for enhanced localization may apply to many different types of vehicles and are not intended to be limited to road passenger vehicles.

Sensor fusion of the three systems (GPS, terrain-based localization, and vision-based localization) may provide a system that is, despite time, location, or conditions, equal to or better than the individual component systems with much higher availability. Each independent component has metrics for when it is reliable and when it is not reliable, and the sensor fusion may thus be parametrized to use only reliable inputs. The resulting output may provide a reliability metric and an accuracy metric based on the current sensors being used.

When using sensors to locate a vehicle in space, multiple methods may be used. Global positioning systems (GPS) may precisely locate a GPS receiver based on triangulation from four or more satellites. This method affords very good absolute accuracy (in the range of about 5 m) when available and is the primary sensor used in many applications.

Differential GPS systems use multiple GPS receivers to create an even more accurate location. Vision-based sensors (such as cameras, infrared sensors, etc.) may identify previously mapped objects and thus locate the vehicle with respect to those coordinates. Distance-based measurements (such as lidar, radar, etc.) may locate the vehicle relative to other surfaces and may be able to identify recognizable patterns to create an absolute reference (such as ground-penetrating radar, for example). Response-based methods (such as terrain-based localization) are able to recognize tracts of road and locate the vehicle very precisely (e.g., less than 1 m accuracy, less than 10 cm accuracy, etc.) when available. Motion-based localization (dead reckoning, for example based on vehicle speed, yaw rate, and in-plane accelerations) is extremely accurate for relative motion but is unable to provide an absolute reference.

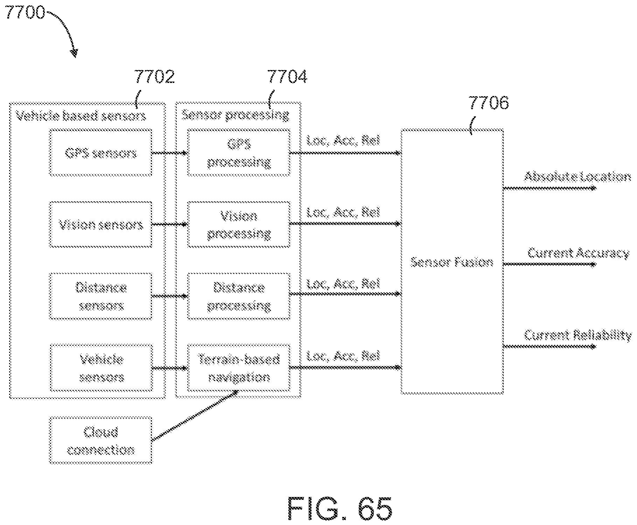

Referring to the block diagram 7700 of FIG. 65, each of the vehicle-based sensors 7702 described herein has strengths and weaknesses in terms of their range, accuracy, and resolution (in terms of data rate in time or distance). But each of the sensors may also have spotty availability based on environmental conditions, signal shielding, availability of previously generated maps, and other factors. A sensor fusion for each of these may therefore combine multiple factors. The sensor fusion may generate an absolute location (in some instances, with an associated accuracy estimate and a reliability value of the signal) based on varying sensor content without causing jumps in the output signal. To achieve this absolute location, each sensor is first processed (see sensor processing block 7704 in FIG. 65) to provide its own estimate of location, along with an instantaneous accuracy (based for example on the number of satellites available in a GPS sensor, or on the vehicle speed in a motion sensor) and an instantaneous reliability (to determine if this signal should be used at that moment).

A sensor fusion block 7706 may then combine the sensors. In some implementations, it may be preferable to use the accurate relative sensors such as motion sensors (yaw rate, in-plane accelerations, and vehicle speed sensors) for high frequency deviations, and absolute sensors as corrections (such as GPS). In the systems and methods described herein, sporadic but more accurate absolute sensors, such as terrain-based localization and object recognition-based localization, may be included in the sensor fusion.

This inclusion may require blending the GPS signal with a more accurate signal at lower frequency. This may be done using a Kalman filter, for example, with a vehicle model whose states are updated when new information is received. A Kalman filter uses a model to predict the motion of the vehicle based on certain sensor inputs (for example the in-plane motion sensors and the vehicle speed). Next, the model output is compared to actual measurements of the absolute position when such actual measurements are available and reliable (for example, at intervals when GPS signal is output or when an object is recognized by the camera). The error thus obtained may then be used to modify the states of the model, and to correct for drifts, sensor offsets, and other such errors as they occur. For example, a lateral accelerometer may be accurate in tracking the lateral motions of the vehicle but may be skewed by rolling of the vehicle (where the sensor is not parallel to the surface anymore). As another example, the speed reading in a typical vehicle relies on knowing the effective rolling radius of the tires, which changes over time, with temperature, use of the tire, and inflation pressure, but also changes when the tires are changed on the vehicle. These factors may be combined to create a tracking model that allows for accurate positioning over long distances with a mix of sensors that may vary in time and also from vehicle to vehicle.

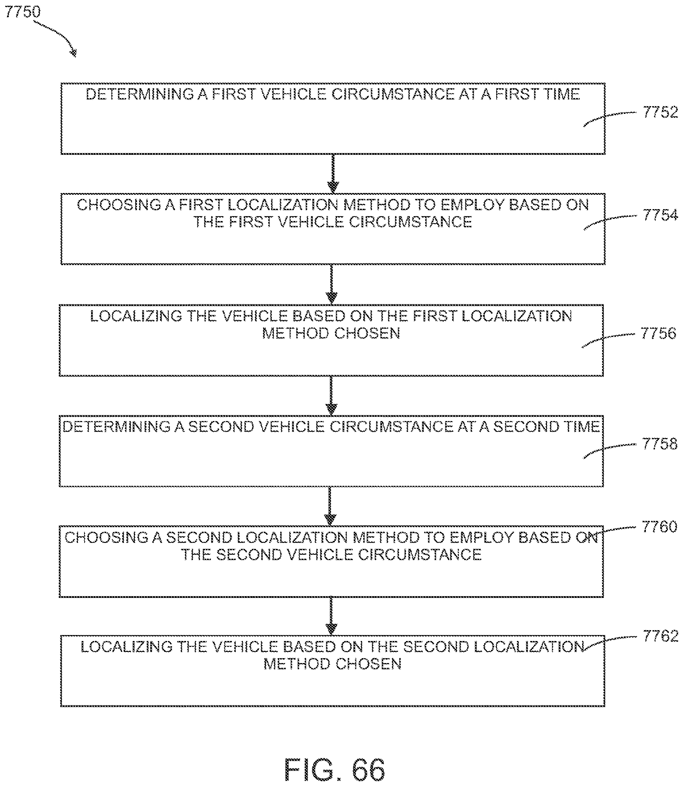

Referring to FIG. 66, a flow chart 7750 depicts a method of localizing a vehicle traversing a road segment. The method includes determining (7752) a first vehicle circumstance at a first time; choosing (7754) a first localization method to employ based on the first vehicle circumstance, localizing (7756) the vehicle using the first localization method; determining (7758) a second vehicle circumstance at a second time; choosing (7760) a second localization method to employ based on the second vehicle circumstance; and localizing (7762) the vehicle using the second localization method.

In some implementations, the first localization method and the second localization method are selected from the group consisting of GNSS localization, terrain-based localization, vision-based localization, distance-based localization, and dead reckoning.

In some implementations, the vehicle circumstance and the second vehicle circumstance are selected from the group consisting of weather conditions, overhead obstructions, cellular data availability, and GNSS satellite availability.

*LONGITUDINAL VEHICLE LOCALIZATION BY SWITCHING BETWEEN GNSS, DEAD-RECKONING, AND TERRAIN-BASED METHODS*

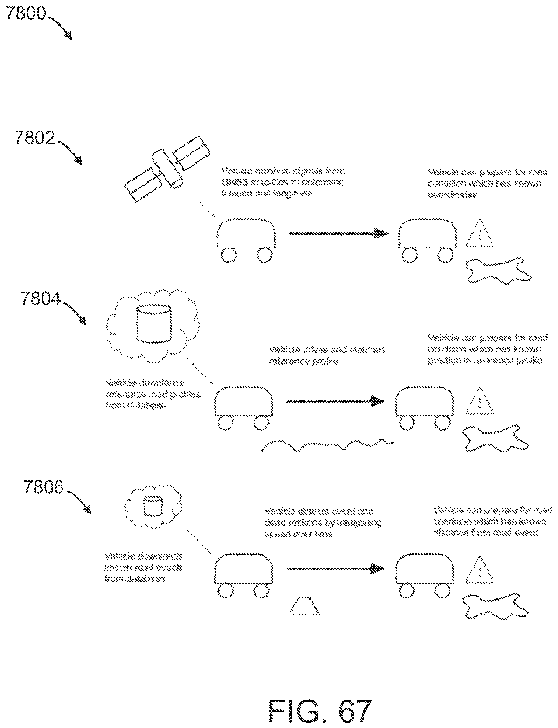

Determining vehicle longitudinal position has various use-cases, such as preparing an active suspension for upcoming road conditions and/or helping an autonomous vehicle navigate. As shown in FIG. 67, a vehicle system may measure its longitudinal position in various ways, each of which has benefits and drawbacks. A first method 7802 depicts using GNSS systems such as GPS, which has an advantage of high availability, but is generally only accurate to 5 meters and does not work in tunnels due to overhead obstruction. **In** such a method, the vehicle receives signals from GNSS satellites to determine latitude and longitude to allow the vehicle to prepare for road conditions that have known coordinates. A second method 7804 depicts using terrain-based localization (i.e., road profile cross-correlation) works on almost any road, even in tunnels and has very high accuracy (10 cm), but requires a lot of cellular traffic to download reference profiles. In such a method, the vehicle downloads reference road profiles form a database, drives and matches one of the reference road profiles, and may prepare for road conditions that have known positions in the reference road profile. A third method 7806 depicts using dead reckoning after event detection, but this method generally only works on roads which have major impact events but has the advantage that it may work well in tunnels, has generally high accuracy (10 cm, but error accumulates with dead reckoning), and requires low cellular network usage.

The inventors have recognized that a vehicle may utilize all three of these methods to localize longitudinally, switching between them depending on current conditions. For example, if cell tower reception is good, a vehicle may download reference profiles to perform terrain-based localization. Otherwise, the vehicle may fall back to localizing with GNSS or event detection.

Referring to FIG. 67, a vehicle may determine its position with respect to a road condition in various fashions. When cellular data is readily available, the vehicle may choose terrain-based localization method 7804 and download a reference profile and perform terrain-based localization. If cell reception is sparse but a road contains several impact events, the vehicle may choose to use method 7806 and dead reckon between events. In another scenario, the vehicle may use method 7802 to use GNSS systems to localize.

Terrain-based localization generally has very high accuracy, but it may be impractical to download all reference profiles in a large geographic region. Furthermore, cellular reception may vary significantly as the vehicle traverses different roads. To provide maximum availability of longitudinal localization, implementing multiple strategies, and switching between them to employ the strategy that works best under current vehicle circumstances is advantageous.

*ITERATIVELY IMPROVING PERFORMANCE OF EVENT MITIGATION ALGORITHMS THROUGH CROWD-SO URCED PARAMETER TUNING*

Generally, current systems employing event mitigation are either statically tuned (meaning, they remain the same over time), or tuned by experts in an iterative process during development or during tuning updates. To do so, the systems experience specific events multiple times (e.g., by a vehicle that includes the system driving repeatedly over the specific events) and parameters are manually modified.

The inventors have recognized that iteratively improving performance of event mitigation algorithms through crowd-sourced parameter turning may aid in reducing development times for active and semi-active systems in vehicles, improving performance in response to environmental factors or degradation, and determining reduction in performance as an indicator of system problems.

The systems and methods described herein allow both adaptively tuning during development and after the development phase is over (for example to adapt to changes in the vehicle such as tire changes). The process allows a more rapid tuning due to the number of events that may be identified, a less labor-intensive approach, and an optimization of performance over the lifetime of a vehicle due to its adaptive nature.

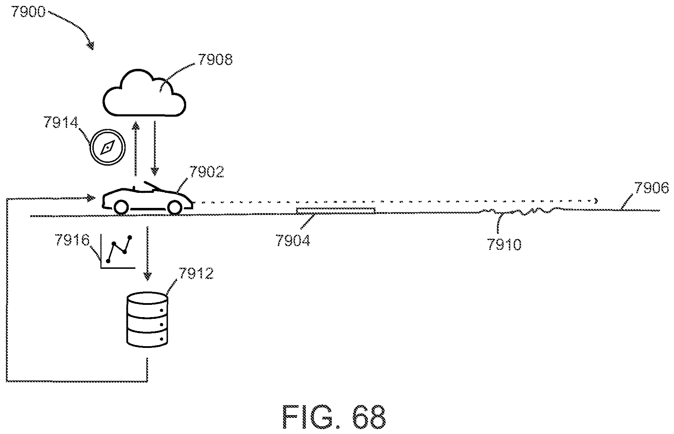

Referring to FIG. 68, in scenario 7900, a vehicle 7902 with one or more tunable parameters is set to traverse an event, e.g., bump 7904 or rough patch 7910, on a road segment 7906 that had been previously mapped. The vehicle 7902 includes a localization system that allows the vehicle 7902 to record traversing the event, for example a GPS or a terrain-based localization system. The terrain-based localization system may be cloud based such that the vehicle 7902 sources and/or transmits location information 7914 (which may include road profile information) from the cloud database 7908. Events may include discrete road features such as potholes, speedbumps, cracks, swells, railroad crossings; general road characteristics such as primary ride content, secondary ride content, roll content, or pitch content; road grade or camber content; and combinations thereof. Events may generally be classified with a level of specificity that allows the events to be grouped and/or sorted at least categorically, but in some implementations, by size or character.

Each time a given vehicle, or a given type or class of vehicle, traverses an event recorded as a specific type, for example a single-sided sharp pothole, a performance metric may be calculated, for example, a peak acceleration measured at a specific point on the vehicle body, a peak damper velocity, an RMS value of acceleration measured at the seat rail, etc. Other performance metrics may include visual cues such as vehicle body motion, for example measured through use of a camera; tactile cues such as accelerations or related signals such as jerk, and derivate metrics thereof such as peak values, peak-peak values, RMS values, and each of those in a given frequency range such as for example above 10Hz or between 1 and 5 Hz; audible cues such as noise measurements, sound pressure level measurements, or octave-based peak measurements; motion metrics such as damper velocity or suspension position metrics including peak and RMS values or wheel acceleration measurements; energy measurements such as component energy for an active suspension or global energy measurement such as cumulative engine power; estimates of tire rolling resistance based on motion metrics and similar extrapolated metrics; and combinations of thereof.

Given a vehicle with one or more tuning parameters, for example an active suspension calibration set, or a semi-active damper setpoint, it is possible to record a performance metric and the parameter setting for each traversal of a similar event in the same category. By comparing the obtained performance metrics with the parameter settings, adaptively improving the performance of the tuning parameters is possible. Performance metrics 7916 may be stored in a cloud database (e.g., cloud database 7908 in FIG. 68), stored locally on the vehicle, and/or transmitted to another database 7912 (which may or may not be cloud based). A setting of one or more tunable parameters may be updated (as represented by arrow 7918 in FIG. 68).

Tuning parameters may apply to suspension components such as active or semi-active suspension systems (e.g., active roll systems, active suspension systems, semi-active roll dampers, semi-active dampers, active steering systems, air suspension systems, multi-chamber air suspension systems, etc.); vehicle interior systems such as audio systems (e.g., through volume control or through parameter settings of active road noise cancellation systems), lighting systems (e.g., adaptive active headlight systems); powertrain calibration systems (e.g., active engine mounts, electric powertrain settings, active differential settings); safety systems (e.g., antilock-braking systems or stability control systems, or traction control systems) and any combinations thereof.

Adaptive improvements may be used during the vehicle development phase to more rapidly converge on an optimal performance of a system. Converging on optimal performance may include, but is not limited to, for example reducing development times for a semi-active damper. Adaptive improvements may also be used after launch of a vehicle to adapt to changing behavior of the vehicle or its components. Adapting to changing behavior of the vehicle or its components may be, for example, due to aging or environmental factors, due to different loading of the vehicle, etc. Adaptive improvements may be used after launch to extend the tuning set to a different set of roads, thereby reducing the need to fine-tune the performance for each type of road the vehicle might encounter during its lifetime and thus, for example, reducing the need for regional tuning. Adaptive improvements may also be used to determine a deterioration in the performance of a system, which may help to identify indicators for impending component or system failure. Adaptive improvement data may be stored in multiple places, for example, on the vehicle, in the cloud, on a movable data acquisition system that may be temporarily employed, etc.

Performance metrics that may be monitored and/or changed via the adaptive improvements system may include, but are not limited to, human perception, measured output from sensors on the vehicle, output from sensors outside of the vehicle, removable sensors, sensors permanently installed in the vehicle, and any processed output resulting from the sensor signals and human input. Processing may include filtering, selecting time segments or distance segments around the event, before the event, and/or after the event, calculating RMS, peak values, statistics of the signals, derivatives of the signals (such as jerk), and comparison between signals before, during, and after the events.

Adaptive tuning may use many optimization methods, including linear and gradient optimization, bisection method, Kalman filters, and many others. Tuning may be updated continuously after each event, in batches after some number of events, at fixed intervals, or in specific settings (such as at dealerships).

Tuning sets may be adapted to a single vehicle, or may be shared between vehicles, for example vehicles of the same make and model, to speed up the optimization.

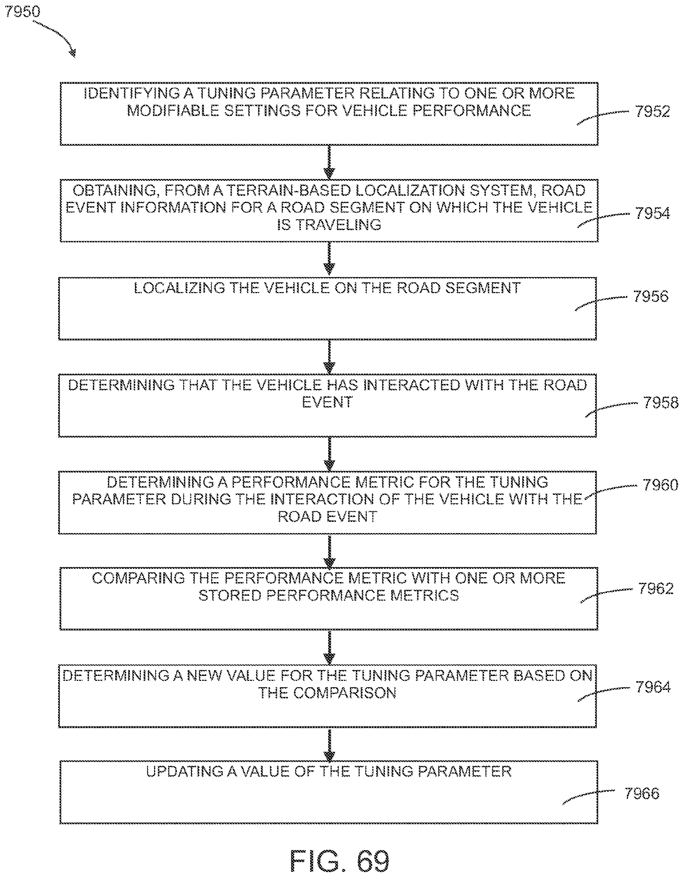

Tunable systems may include any system in the vehicle that has tuning parameters, including suspension systems, steering systems, powertrain systems, chassis actuators, interior actuators and settings (e.g., for seat systems, etc.), sound systems, navigation systems, wipers, lighting systems both outside and inside, etc. Referring to FIG. 69, a flow chart 7950 depicts a method of adaptively tuning a vehicle. The method includes: identifying (7952) a tuning parameter relating to one or more modifiable settings for vehicle performance; obtaining (7954), from a terrain-based localization system, road event information for a road segment on which the vehicle is traveling; localizing (7956) the vehicle on the road segment; determining (7958) that the vehicle has interacted with the road event; determining (7960) a performance metric for the tuning parameter during the interaction of the vehicle with the road event; comparing (7962) the performance metric with one or more stored performance metrics; determining (7964) a new value for the tuning parameter based on the comparison in step 7964; and updating (7966) a value of the tuning parameter.

## STORAGE AND CONSUMPTION OF DISCRETE ROAD PROFILE EVENTS IN MULTILANE CONTEXT

Road events such as potholes and grates are of interest to various vehicle systems such as semiactive controllers and driver heads-up-displays. GPS alone generally has an accuracy of 5 meters and is generally inadequate to determine whether the vehicle is in the same lane as a road event. By leveraging terrain-based localization, the vehicle may identify its current lane, and recorded road events may be stored with respect to lanes.

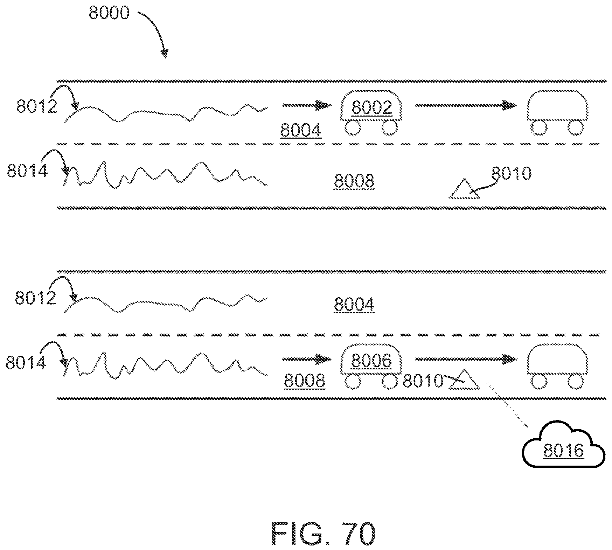

Referring to FIG. 70, a first vehicle 8002 travels in a first lane 8004. A second vehicle 8006 travels in a second lane 8008. The first lane 8004 does not contain any stored road events while the second lane 8008 includes stored road event 8010. The first lane 8004 has historic road profile data 8012 and the second lane 8008 has historic road profile data 8014. A crowd-sourced database contains the road profiles and road events associated with each lane. When a vehicle drives on a road, the vehicle compares its recorded road profile to those of known lanes. Here, the first vehicle 8002 compares its recorded road profile to historic road profile data 8012 and 8014 and determines that it is traveling in the first lane 8004 while the second vehicle 8006 does the same comparison for its recorded road profile and determines that it is traveling in the second lane 8008. After identifying its current lane, a vehicle may decide to employ a controls strategy or notify the driver of an upcoming event in the current lane. The second vehicle 8006 is in the second lane 8008 and the second lane includes the road event 8010. Therefore, the second vehicle 8006 may employ the event-specific controls strategy and/or notify the driver of the road event 8010 while the first vehicle 8002, traveling in the first lane 8004, which does not include a road event, does not. When the second vehicle 8006 records the road event 8010 (e.g., by traversing the road event 8010), the second vehicle 8006 informs a cloud database 8016 so the lane data for the current lane 8008 may be updated.

When implementing a terrain-based localization system with accuracy on roads that include multiple lanes, identifying the current lane is important so that reference commands for the correct lane may be applied as the vehicle travels. While applying reference commands, the terrain-based localization system may be configured to associate other road data with each lane, such as road events and classifications. The road events and/or classifications may be stored in a database with the road profile information for the various lanes of travel on the road segment. The road data may be useful if a false positive degrades performance when employing an event controls strategy.

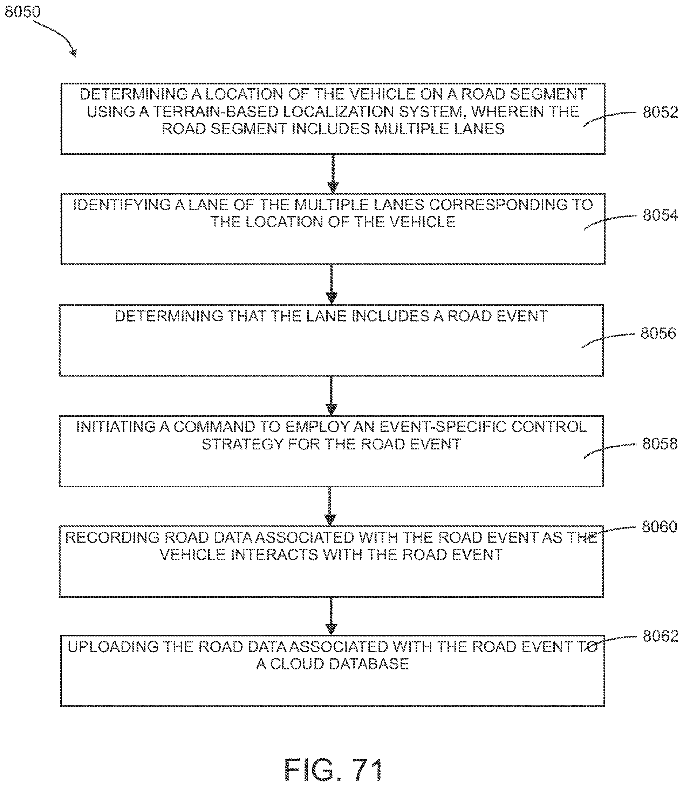

Referring to FIG. 71, a flow chart 8050 depicts a method of controlling a vehicle based on multi-lane event awareness. The method includes: determining (8052) a location of the vehicle on a road segment using a terrain-based localization system, wherein the road segment includes multiple lanes; identifying (8054) a lane of the multiple lanes corresponding to the location of the vehicle; determining (8056) that the lane includes a road event; initiating (8058) a command to employ an event-specific control strategy for the road event; recording (8060) road data associated with the road event as the vehicle interacts with the road event; and uploading (8062) the road data associated with the road event to a cloud database.

*MODELS AND TECHNIQUES AROUND ROAD DEGRADATION*

As background, hundreds of billions of dollars are spent each year by public and private entities around the globe to repair of roads. Some estimates place this total at approximately $200 billion in the US alone. Also, in the US, poor road conditions are believed to be, at least partially, responsible for approximately 50% of fatal auto accidents every year. Therefore, municipalities, and society in general, have a vital interest in keeping roads in proper repair.

New and repaired roads begin degrading almost as soon as construction ends, but all roads do not necessarily degrade at the same rate. The rate at which a given road degrades may depend on a number of factors including, for example, traffic conditions, climate and weather conditions, and the quality of the road construction and the materials used.

As vehicles travel along a road, various sensors may be used to collect data about road surface characteristics or anomalies. Such sensors may include, but are not limited to, inertial sensors (e.g., accelerometers mounted on the sprung mass or on an unsprung mass, an IMU attached to the vehicle body, etc.) and/or optical sensors (e.g., video cameras, LIDAR, etc.). Information from such sensors may be used to, for example, locate the position of the vehicle as well as to characterize the road surface.

By using sensors on-board a vehicle, information may be collected about a road surface and/or road surface anomalies under various conditions, including various weather conditions. At least a portion of this information may be processed using one or more micro-processors on-board the vehicle that collects the information and/or may be conveyed to a cloud-based database and processed by one or more micro-processors associated with the cloud. In some embodiments, such information may be collected by a multiplicity of vehicles, during a certain period of time, while each vehicle is travelling along a given segment of road. Processing of the data in the cloud may include, for example, aggregating and averaging the data collected from the multiplicity of vehicles. The period of time may be of a previously specified duration, such as, for example, an hour, a day, a week, a month or a year. However, the period during which data is collected and delivered to the cloud may be shorter or longer than the above specified periods, as the disclosure is not so limited. The averaging process may be used to determine, for example, the mean, the median and/or the mode of data collected from the multiple vehicles during the specified time period. Alternatively or additionally, data from individual vehicles may be collected and stored, in a data base in the cloud, without averaging data from multiple vehicles.

Data may be collected by vehicles during interactions between a vehicle or a portion of a vehicle, such as one or more vehicle wheels, and the road surface and/or various road surface anomalies. Road anomalies may include, for example, without limitation, potholes, bumps such as speed bumps, surface cracks, manhole covers, storm drain grates, frost heaves, etc. Road surface properties may include properties such as, for example, the calculated or measured IRI (international roughness index) value, coefficient of friction, road camber, and slope, etc.

In some embodiments, the degree or level of degradation of a road surface may be tracked by determining changes in one or more characteristics of one or more anomalies or changes in surface properties. For example, in some implementations, the degree of degradation may be represented by, for example, a dimension of an anomaly, such as, a length, a width and/or a depth of a pothole, and/or a length, a width or a height of a frost heave. As used herein, the term "length of a pothole" refers to the largest dimension of a pothole that is parallel to the longitudinal axis of the road, and the term "width of a pothole" refers to the largest dimension of a pothole that is perpendicular to the longitudinal axis of the road. Alternatively or additionally, the rate of change and/or the rate of change of the rate of change of one or more dimension or properties of the road surface may be representative of the degree or level of degradation.

The level or degree of degradation, may be reported to one or more entities, such as for example, companies, and local, state or Federal agencies, or their representatives. For example, and without limitation, in some implementations the existence, length, width and/or depth of a pothole may be reported to, for example, a client entity. In some embodiments, the information may be reported to a client entity when a length and/or a width and/or a depth of a pothole is greater than a preset threshold. Alternatively or additionally, a pothole may be reported when the rate of change of one of the characteristics of the pothole is greater than a threshold value. Such thresholds may be a function of various parameters, such as for example, the climate, the time of year, the type of road (e.g., highway or city street), and/or the frequency of accidents by vehicles in the region.

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein.

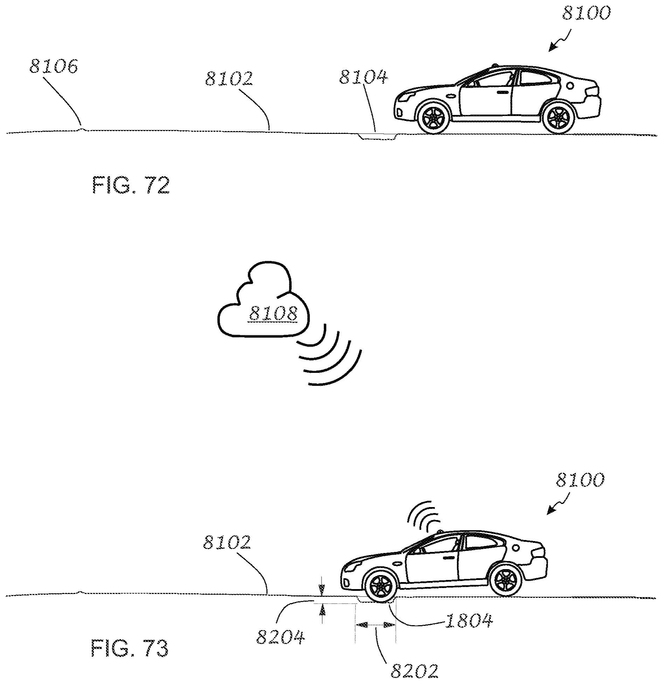

FIG. 72 depicts vehicle 8100 travelling on road 8102 and approaching two road surface anomalies: pothole 8104 and bump 8106. FIG. 73 illustrates vehicle 8100 interacting with pothole 8104. One or more microprocessors (not shown) on-board vehicle 8100 may determine one or more dimensions of the pothole 8104, based on information received from sensors (not shown), on-board the vehicle, during the interaction. Information about one or more dimensions of the pothole 8104 may be determined in the vehicle and transferred to the cloud 8108 by vehicle 8100. Alternatively or additionally, at least a portion of the information collected from vehicle sensors may the transferred to the cloud 8108 and one or more dimensions of the pothole 8104 may be determined in the cloud. The sensors used to collect the information on which determination of the dimensions are based may include, for example: one or more accelerometers, an IMU, LiDAR detector and/or a video camera. The dimensions of the pothole that may be determined in the vehicle and/or in the cloud may include the length 8202, the depth 8204 and the width of the pothole (not shown). In some embodiments, if one or more of dimensions are above a certain threshold value, the vehicle 8100 and or the cloud 8108 may report the existence, location of the pothole, and/or one or more characteristics, e.g., length, width, and/or depth) to a client entity that may be willing to pay for the information.

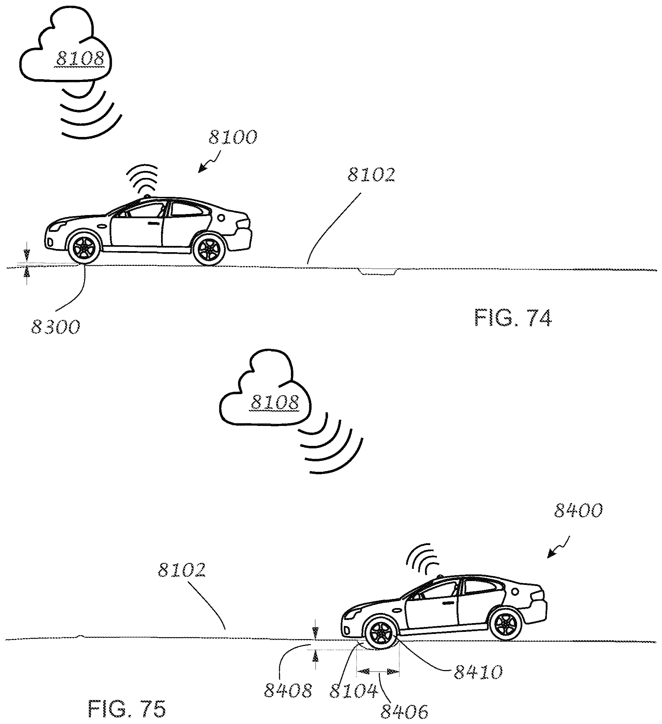

FIG. 74 illustrates vehicle 8100 interacting with bump 8300. One or more microprocessors (not shown) on-board the vehicle 8100 may determine, one or more dimensions of the pothole 8104, based on information received from sensors (not shown) e.g., accelerometers, cameras, and/or LiDAR on-board the vehicle during the interaction. Information about one or more dimensions of the pothole 804 may be transferred to the cloud 8108 by vehicle 8100. In some embodiments, vehicle 8100 may not report the existence of bump 8300 if one or more dimensions of the bump, as determined on-board the vehicle, are below a preset threshold value. In some embodiments, vehicle 8100 may report data collected, from one or more sensors, during an interaction with bump 8300 to cloud 8108. A processor associated with cloud 8108 may determine the magnitude of one or more dimensions of bump 8300 by aggregating information from multiple vehicles collected during interactions with bump 8300. Based on the aggregated information and previously selected thresholds, a processor associated with cloud 8108 may elect to report the existence and/or various characteristics of the bump to one or more entities. In some embodiments, threshold values may be preset based on a client-entity's request.

FIG. 75 illustrates vehicle 8400 traveling along road 8102 and interacting with pothole 8104. This interaction is subsequent to the interaction of vehicle 8100 with pothole 8104 shown in FIG. 73. Based on data collected by one or more sensors onboard vehicle 8400, one or more characteristics of pothole 8104 may be determined. Such characteristics may include, for example, the length 8406 and depth 8408 which may be greater that the corresponding dimensions of the pothole 8104 shown in FIG. 73. The characteristics, such as for example, the depth, length or width of pothole 8104 may be determined based on data collected during the interaction between the left front wheel 8410 of vehicle 8400 and pothole 8104. This data may be aggregated with data from a first set of one or more other vehicles interacting with pothole 804 and averaged before it is compared with a threshold value. Based on, for example, the data collected during interactions with pothole 8104 by a first set of vehicles and a preset threshold, a microprocessor associated with cloud 8108 may report the presence and/or characteristics of pothole 8104 to a client entity.

Alternatively, a processor associated with a cloud may determine the rate of degradation road surface anomaly or road surface property by comparing: (1) one or more characteristics of a particular road surface anomaly or surface property based on an average of data collected by a first set of one or more vehicles during a first period, with (2) one or more characteristics of a particular road surface anomaly or segment based on data collected by a second set of one or more vehicles during a second period that occurs after the first period. Based on this information, the rate of change of the one or more of the characteristics may be determined.

In some embodiments, the first period and second period may represent time periods of various duration such as for example, an hour, a day, a week, a month or a year. Longer and shorter periods are contemplated as the disclosure is not limited only to the periods described above.

Alternatively, the first and second set of vehicles may represent a predetermined number of vehicles without relying on the time period during which data is collected from these vehicles.

In some embodiments, data reported to a client entity may include the rate at which one or more characteristics are changing. Alternatively or additionally, data about the characteristics of road surface anomaly or segment may be reported to a client entity when rate of change, of the one or more characteristics, exceeds a preset threshold.

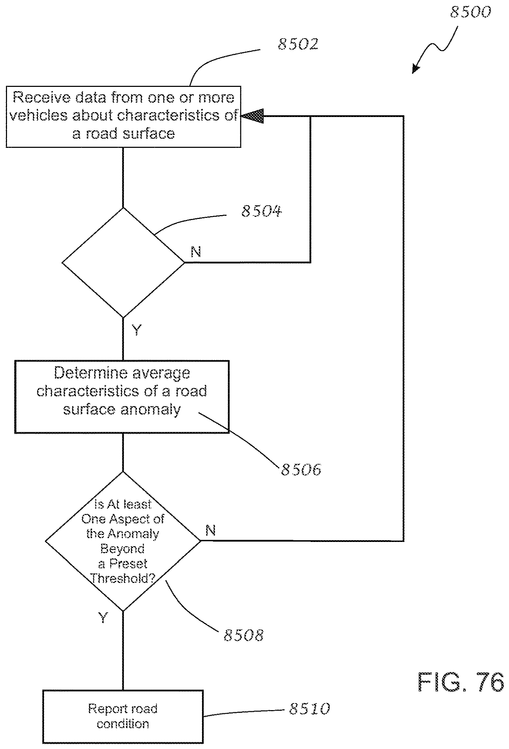

FIG. 76 shows a block diagram 8500 which illustrates a method of receiving, processing, and reporting data about road surface conditions as determined based on data collected by one or more sensors on-board one or more vehicles.

At step 8502, a cloud-based database receives information from one or more vehicles about the characteristics of a road surface segment or anomaly. This information may be gathered from a predetermined number of vehicles. Alternatively, this information may be gathered from one or more vehicles over a predetermined time period.

At decision block 8504, a decision may be made whether sufficient data has been collected about a road surface anomaly. If yes, the process may proceed to block 8506, otherwise it may return to block 8502 to collect additional data. The sufficiency of the data may depend on whether data has been collected from a number of vehicles that is greater than a threshold value and/or if a sufficient length of time has elapsed during which such data has been collected from vehicles.

At step 8506, the data received from multiple vehicles may be aggregated and averaged. At decision block 8508, a microprocessor may be used to determine if the value of a parameter associated with the road surface anomaly has surpassed a preset threshold or is increasing at a rate greater than a threshold rate. If so, at step 8510 the microprocessor associated with the cloud may report the condition to a client entity. Otherwise, the process may return to step 8502, to collect additional data.

Client entities may use the rate of degradation data to predict when a particular section of road may need to be patched, repaired or replaced so that resources may be appropriately scheduled.

PREEMPTIVE AWARENESS FOR ROAD EVENTS

Crowd-sourced road and event mapping may be used to provide cues to the occupant of a moving vehicle as to upcoming road content, events, or turns. Cues may be provided through visual, audio, or tactile feedback, and may use chassis actuators such as suspension actuators, seat actuators, or air springs, audio system feedback, visual lighting or ambient feedback, or cues provided on entertainment or productivity screens, mounted or handheld computing or display devices such as phones, touchpads, laptop computers or vehicle-mounted screens or displays.

In some implementations, upcoming road events may be categorized for their impact on the occupants of a given vehicle at a given speed, and upcoming road content may be similarly categorized. Based on knowledge of the impact of such upcoming events on occupant comfort, for example the likelihood to increase or elicit motion sickness, these events may be classified and the occupant may be warned about them , by for example, using visual cues on an entertainment screen, reminders to look up, leaning the vehicle in the direction of a turn or in the opposite direction before a turn happens, providing tactile feedback through motion of the seat base to alert to upcoming road content, and modifying the lighting scheme in the cabin, among many other possible cues.

In some implementations, crowd-sourced road information and localization techniques based on either terrain or other localization devices and methods such as GPS or vision systems, may be used to predict upcoming road content and specific events. In some embodiments, combined with an understanding of the vehicle's response to various road content or events, driving speed, and/or occupant condition and preferences, the effect of upcoming events on one or more vehicle occupants pay be predicted. For example, road content or events that are likely to be perceived as uncomfortable, or that are likely to add to discomfort or motion sickness over time may result in a cue being provided to one or more vehicle occupants. For a subset of these events, countermeasures may be taken, ranging from providing information to the driver or automated driving system to modify their driving, to providing a specific set of cues for each specific type of event or road content, to modifying the vehicle subsystem parameters for systems that are likely to suffer consequences and are able to be modified to improve occupant experience, such as for example raising audio volume for upcoming rough road patches that are likely to cause vehicle component noise.

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein.

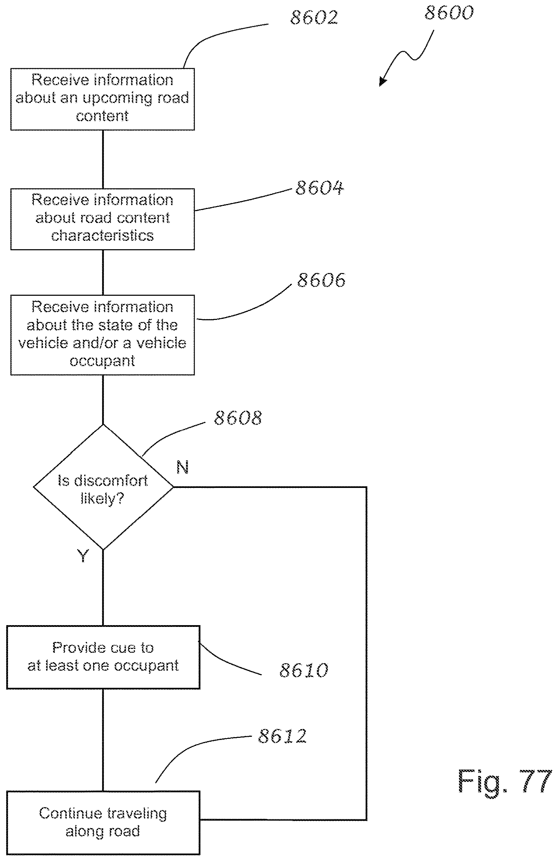

FIG. 77 shows a block diagram 8600 which illustrates a method of providing a cue to at least one vehicle occupant.

At block 8602, a microprocessor on-board an autonomous or a driven vehicle, travelling along a road, may receive information from, for example, a cloud-based database and/or a microprocessor associated with the cloud, that there is certain road content ahead. At block 8604, the microprocessor on-board the vehicle may also receive information about the characteristics of the upcoming road content. This information may include, for example, the type of road content, which may include, without limitation, a pothole, a frost heave, a turn, or a bump. In some embodiments, if the road content is a pothole, the information may include data about the dimensions of the pothole, such as, the depth, width and/or the length of the pothole. Alternatively, if the road content is a turn, the information may further include data about the severity of the turn.

At block 8606, the microprocessor on-board the vehicle may further receive information about the state of the vehicle, such as for example, its speed and/or the weight of the load being transported. The microprocessor may also receive information about one or more vehicle occupants, for example, data about the sensitivity of an occupant to motion sickness and the type of activity they may be engaged in, for example, reading from a laptop.

At decision block 1608, based on at least some of the information received at 8602-to 8606, a decision may be made whether a cue should be provided to one or more of the vehicle occupants. For example, at block 8608, it may be determined that at least one passenger, who may be working on a laptop, may experience discomfort, such as motion sickness, if that passenger is surprised by the upcoming left turn, at the current speed of the vehicle. Based on that determination, a cue may be given, at block 8610, to at least the one passenger who is likely to experience discomfort. After providing the cue, the vehicle may continue to traveling along the road at 8612. Alternatively, if at block 8608 it is determined that a cue is unnecessary, the vehicle may proceed to block 8612 without providing a cue.

In some embodiments, by using process 8600, unnecessary cues may be avoided so that vehicle occupants are not unnecessarily disturbed. For example, in an autonomous vehicle, passengers may not be given a cue about every upcoming turn but rather only for those turns that are sever enough to cause discomfort, such as for example, when taking an exit or stopping at a red light at a high speed.

In some embodiments, preset thresholds may be used for determining whether a cue is appropriate given the available data. In some embodiments, one or more of the thresholds may be set at least partially based on data provided by a vehicle operator, owner, or occupant by using a user interface.

*OPERATING A VEHICLE BASED ON THE PROBABILITY OF OCCURRENCE OF A ROAD EVENT*

In some embodiments, road events may be mapped based on crowd-sourced data. During one or more road events, each of one or more vehicles, which is equipped with one or more on-board sensors, may use those one or more sensors to determine aspects of the road being traveled and/or measuring the impact, on the vehicle, of various road features. As each vehicle undergoes one or more road events, the one or more events may be catalogued based on sensor measurements aspects of the road surface and/or of the vehicle's response (sensors may include, for example, wheel accelerometers, body accelerometers, video cameras, and/or LiDAR). In some embodiments, event categorization may be based on, for example, the peak response of one or more on-board sensors, the RMS of the response of one or more on-board sensors, and/or a pattern of successive peaks and valleys in the response one or more on-board sensors, to identify a specific event. In some embodiments, the identification may be proceeded by, for example, filtering of the signal. Acausal filtering may also be used to remove or diminish phase effects since the filter may be applied to the entire signature of the event after the event has been traversed.

Road events may result from the interaction of a vehicle with individual road features such as, for example, potholes, speed bumps, cracks, railroad crossings, swells, sewer access ports (e.g., storm drains). Alternatively or additionally, road events may result from, for example, the interaction of a vehicle with distributed road content such as road texture and road friction. Alternatively or additionally, road events may result from, for example, the interaction of a vehicle with distributed features which may be manifested as primary ride, secondary ride, and/or roll characteristics. Events may be more pronounced or preferentially impact one side of the vehicle (such as, for example, typical potholes or "manhole covers") or may impact both sides of the vehicle at the same time (such as a typical speedbump).

In some embodiments, classification of events may also, at least partially, be based on the knowledge of a vehicle's sensitivity to certain features. For example, a certain type of vehicle may be particularly sensitive to large potholes beyond a certain length, while a different type of vehicle may be more sensitive to smaller potholes. In some embodiments, the response of a vehicle to various road features may, at least partially be based the vehicle type.

In some embodiments, the length, depth, and sharpness of a pothole may be used to classify pothole events; the height, roundedness, length, and obliqueness to the general travel path may be used to classify speedbump events; the sharpness and height may be characteristics of a cleat or edge plate that may be used for classification purposes; the width and obliqueness for a crack; and the height and/or width of a road swell or frost heave may be used for classification purposes. In such a manner, many different classes of events may be identified by grouping the events into bins (for example, potholes 5-8 cm deep and 30-50 cm long with sharp edges may be one category).

It should be noted that the response of a given vehicle to a given event may also depend on, for example, the driving speed and/or the weight of the vehicle. For each event there may, therefore, be, for example, a characteristic speed or speed range in which an event may be considered significant and the classification valid. For example, a sharp pothole may not affect a vehicle at all at 1 mph while it may have a severe effect at 20 mph. Alternatively, the pothole may not be a significant event when traversed at 50 mph since the tire may simply "skip" over the pothole without entering the pothole to a significant or perceptible degree.

It is also noted that a road event may have a certain probability, ranging from equal to or greater than zero percent, to less than or equal to 100 percent, associated with the road event. The probability associated with a given road event may be the probability of occurrence of the event, such as for example interacting with a pothole or a bump, when a vehicle is travelling along a given road. In some implementations where a road event results from an interaction between a vehicle and a road feature, e.g., a pothole or bump, the probability associated with the event may be a function one or more of the dimensions of the feature, e.g., the width of a pothole and/or its position, e.g., its lateral position on the road. For example, if a pothole or bump spans the entire width of a road, 100 percent of the vehicles travelling along the road may undergo a road event that involves interacting with the particular pothole or bump. If the feature is narrow, e.g., a pothole that is 10 percent or less of the width of a lane in the road, a small number of the vehicles travelling along a road may interact with the feature and the probability associated with a road event resulting with an interaction with the road feature, e.g., a pothole, may be low, e.g., less than 10 percent. The probability associated with a road event may also be a function of, for example, the time of day (e.g., a pothole may be hit more frequently in the dark rather than during daylight hours), weather conditions (e.g., a pothole may be hit more frequently during heavy rain), visibility (e.g., a pothole may be hit more frequently during foggy conditions), and traffic congestion.

The probability of occurrence of a road event may also depend on the vehicle involved. For example, an event may only affect (e.g., be perceptible in) 20% of vehicles.

The probability of occurrence of a road event may be used to make strategic decisions about responding to an upcoming event (e.g., reducing speed), modifying system parameters (e.g., altering the damping in active or semi-active dampers), increasing or decreasing ride height, or maneuvering to avoid a particular feature that may result in a particular road event.

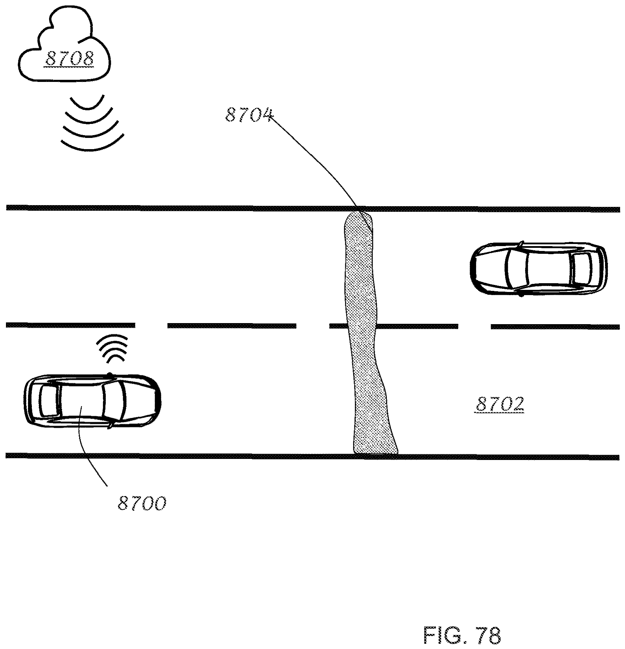

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein. FIG. 78 illustrates a vehicle 8700 travelling, in a first direction, along a two-lane road 8702 (one lane in either direction) and pothole 8704. In this implementation, since pothole 8704 spans the entire road, all vehicles continuing to travel along road 8702, in the first direction, will traverse the pothole 8704. If the dimension of the pothole 8704 along the direction of travel is sufficiently large, a controller in vehicle 8700 may receive information, from, for example a cloud-based data base 8708, that it will not be able to skip over pothole 8704. The controller may, therefore, prepare various systems for the interaction with pothole 8704 by adjusting for example, the vehicles speed and/or various suspension system parameters to minimize the impact of the interaction on the vehicle and or its occupant(s).

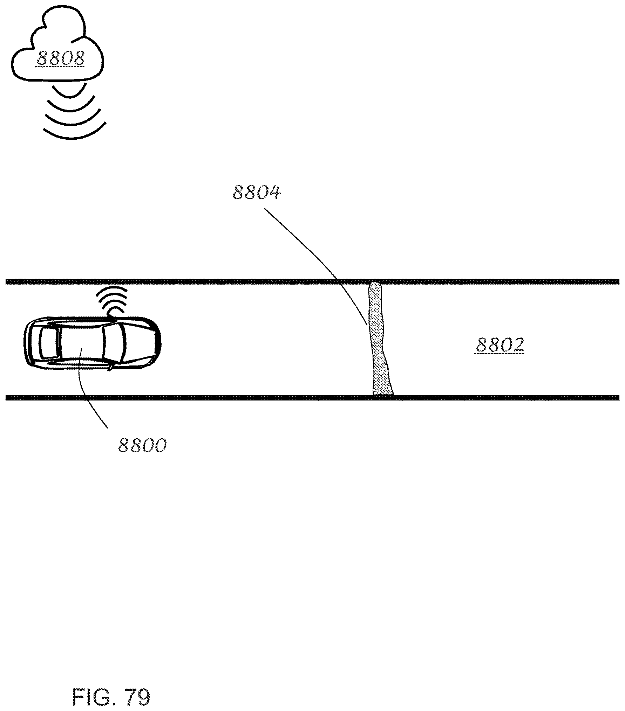

FIG. 79illustrates vehicle 8800 traveling along road 8802 and approaching pothole 8804. A microprocessor in vehicle 8800 may receive information from an external source, such as a cloud-based data base, about the position of pothole 8804. Additionally, the microprocessor may receive information that effectively all vehicles traveling faster than a threshold speed, for example 50 miles per hour, are able to skip over the pothole with no or effectively no interaction with the pothole 8804. Additionally the microprocessor may receive information that at speeds below the threshold speed, 100% of the vehicles interact with the pothole. Based on this information, the microprocessor may inform the operator of the vehicle, whether a person or an autonomous vehicle controller, of an appropriate speed for traversing pothole 8804. If safety permits, the operator may elect to traverse the pothole at a speed that is greater than the threshold speed. Alternatively, if a lower speed is appropriate for safety or other reasons, the controller may prepare certain systems, such as the suspension system of the vehicle to prepare for the interaction with the pothole.

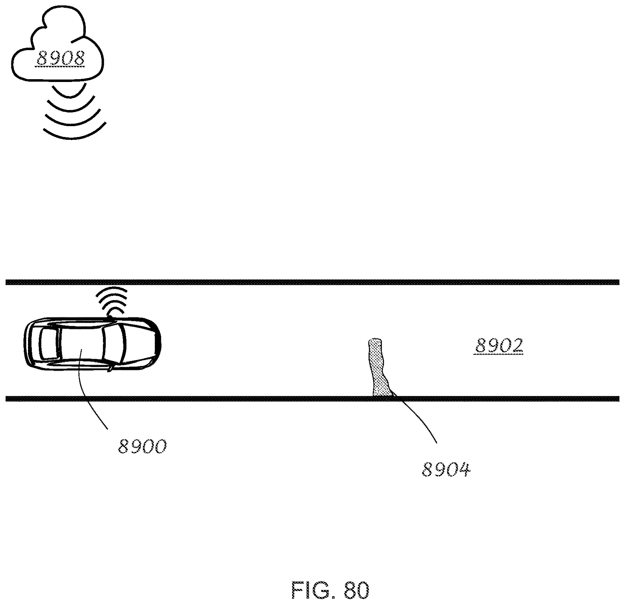

FIG. 80 illustrates a vehicle 8900 travelling on road 8902 and approaching pothole 8904. A microprocessor in vehicle 8900 may receive information from an external source, such as a cloud-based data base, about the position of pothole 8904. Additionally, the microprocessor may receive information that only a fraction of vehicles, for example 50%, travelling along road 8902 interact with pothole 8904. Additionally the microprocessor may receive information that a smaller fraction, such as 5% of vehicles, that perform a maneuver, such as a steering maneuver, interact with pothole 8904. If safety permits, the vehicle operator may elect to avoid the pothole by performing the identified maneuver.

In some embodiments, groups vehicle responses to various road events may be classified across different road events (e.g., across events of the same type) or even across different road event types. As described above the spatial attributes of features, that may result in a particular road event, may be length, depth, width, profile curvature, etc. The characteristics of a vehicle response induced by a road event may include, for example, duration, intensity (e.g., magnitude), shape, frequency content, etc. The relationship between the dimensions of features and the vehicle response attributes for a given speed may depend on a number of factors such as, for example, vehicle, wheel, suspension, and tire properties, steering angle, etc. A road event that involves interaction with the same road feature may result in different vehicle responses. Therefore, in some embodiments, vehicle responses may be classified (i.e., groups of vehicle responses) based on their common characteristics. In some embodiments, mapping these classes instead of the actual road event categories may be more effective for the vehicle mitigation strategies.

Camera systems, on-board a vehicle, may be used to collect additional information about road features and associated events. In some embodiments, ground truth data may be collected (i.e. labeled or loosely labeled data) based on, for example, video or vision data regarding road events that may either be used to train a classifier or be used to increase its classification accuracy. An in-vehicle detector may be used to trigger camera recordings when the vehicle traverses a particular road event or type of road event.

In some embodiments, the ability to use the events categorized as described above may be used to bolster vision (e.g., camera, etc.) and distance sensor (e.g., LIDAR, RADAR, etc.) navigation. In some embodiments, camera systems may need to recognize road events in front of the vehicle, both for road signage and lane markings, but also to allow recognition of certain types of events and distinction between types of events. For example, a vision system may be called on to recognize asphalt patching as different from potholes and may use data a priori knowledge provided by the event mapping to improve its recognition capabilities. As another embodiment, a camera system may detect a certain shape of speedbump ahead but may not be able to determine if this speedbump may be traversed safely at a given speed. Using the event mapping data, an event map may be used to improve the estimate the severity of an upcoming event.

In some embodiments, event mapping may be used to appropriately classify events when classification based on vision system data may lead to uncertainty in classification. Classification techniques and a machine learning approach may be used to create such a mapping.

In some embodiments, the method may also allow for the improvement of vision processing by providing a ground truth for events that may be recognized by the vision system.

*TEMPERATURE MAPPING*

Systems on-board a vehicle are often affected by temperature, and many components in vehicles have thermal compensation methods to account for this, such as for example variable dampers, batteries. Information about the local ambient temperature may be used by such compensation systems. One or more sensors may be used to collect such information, but such sensors are not able to properly measure ambient temperatures. For example, temperature sensors on vehicles are often influenced by, for example, engine heat, brake heat, or solar heating of vehicle surfaces. Alternatively or additionally, such sensors may be influenced by air flow around them due to vehicle motion, component fans, or wind. Such sensors may also be susceptible to calibration drift over time.

In some implementations, local environmental factor information, for example temperature sensors used by weather stations, cell phones, and home devices, may be used to map local weather conditions in real time. Environmental conditions may also be downloaded from weather services, both private and public, and may be enhanced by local sensors where useful and appropriate.

Using local environmental factor information along with accurate localization may provide a weather reference ambient temperature signal to the vehicle and/or to its component systems, such as for example variable damping systems, steering systems, brake systems, and others, including temperature reference, to be used for example for compensation algorithms to normalize system performance at different ambient temperatures.

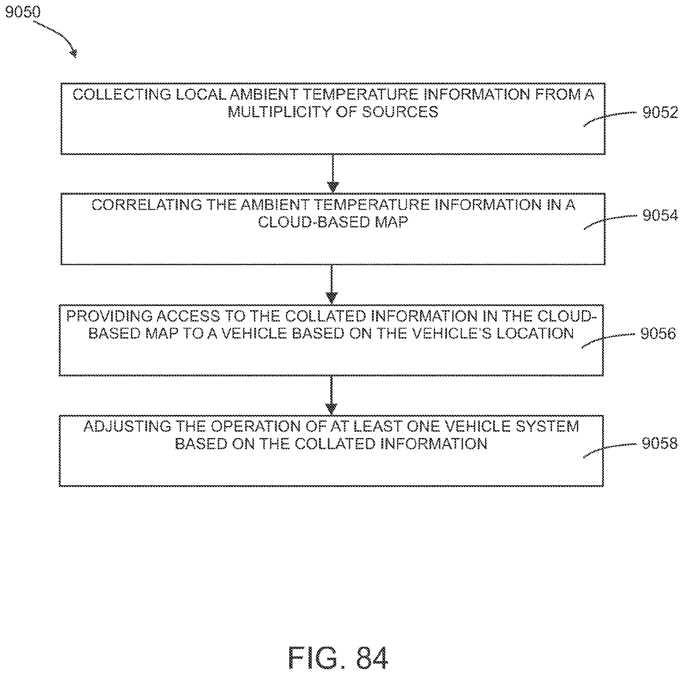

Referring to FIG. 84, a flow chart 9050 depicts a method of operating a vehicle using ambient temperature information. The method includes: collecting (9052) local ambient temperature information from a multiplicity of sources, collating (9054) the information collected in step 9052 in a cloud-based map, providing access (9056) to the collated information from step 9054 to a vehicle based on its location, and adjusting (9058) the operation of at least one vehicle system based on the information provided in step 9056.

*A COMBINATION CONTROLLER COMBINING PROACTIVE AND REACTIVE CONTROL ELEMENTS*

A feedback control system, such as for example, for a suspension system (e.g., an active suspension, a semi-active suspension, an active roll system), and/or active steering system may use signals from one or more sensors to calculate a system state and a desired response. The control system may then produce a command for one or more actuators to follow. This process may rely on fast response and processing, but may tolerate any type of input variation.

A proactive control system may use, for example, a crowd-sourced method for estimating road profile and road event data, along with a method for localization to provide information about an upcoming road profile or events to another system on-board a vehicle. Such a controller may predict upcoming disturbances and thus may tolerate much slower system response and processing times. However, it may be sensitive to input variation or errors, for example, due to reliance on inaccurate road profile and road event data. Such inaccuracies may occur, for example, due to an unaccounted-for deviation of the vehicle from an expected path, incorrect localization, or due to a change in the road profile since the data was collected.

In some embodiments, a combination of the two methods may be used to take advantage of the strengths of each type of control strategy. When optimizing the control strategy for both methods simultaneously, the proactive controller may focus on the desired response to a predicted input, while the reactive component may be used to correct the output and to monitor the efficacy of the proactive control.

In one embodiment of a vehicle controller, the proactive and reactive elements may be set to achieve the same goal, for example, a reduction in vehicle vertical acceleration over a given frequency band. If the proactive control is functioning well, and the disturbance input is predicted correctly, then the reactive control may not need to compensate for any errors.

As a result, the command signal correction provided by the reactive controller may be small, effectively zero or zero in the targeted frequency band. In some embodiments where a combined proactive/reactive controller is used, the command signal correction may be less than or equal to 1/10 of the reactive controller's maximum output. In such an embodiment, if the reactive control output grows beyond this range, it may be used as an early indicator of a malfunctioning of the proactive control, for example, due to a deviation of the vehicle from its predicted path.

When optimizing a reactive controller for a given plant (the system to control, for example a vehicle and a set of actuators and signal processing), the goal may be to reject disturbance inputs from outside sources. For example, a controller may be designed to minimize vehicle vertical body acceleration in a given frequency band. The limit to performance in this case may be the response time of the system (the actuator, the sensors, and/or the processor). A proactive controller may achieve better performance due to its ability to tolerate latency and slow response of a system. Therefore, when the proactive controller is working properly, the reactive controller's may only be responsible to correct predictive errors of the proactive control. This may be achieved with a different control logic, and in one implementation, the reactive controller may change to a different tuning, only to switch back to a reactive tuning when the proactive controller fails to predict and/or react to disturbances with sufficient accuracy or is otherwise disabled.

In some embodiments, such a combination controller arrangement may be used to mitigate for the diminished performance of a reactive controller, for example at higher frequencies, such as above 8 Hz, by modifying the tuning of the reactive controller, for example by reducing its overall gain, without a loss in overall performance due to the performance of the proactive control component.

By using optimization control techniques each controller may be optimally tuned independently or together, in order to achieve a desired focused performance. For example, the feedback controller may be tuned to contribute only in a certain range of frequencies, whereas the proactive controller may be tuned to contribute in a complementary frequency range.

In some embodiments, a proactive controller may provide a sensor reference and a proactive command, and the reactive control may provide a reactive command in response to sensor signal. When the proactive control is disabled, the feedback loop on the reactive controller may remain but the tuning parameters for the controller may be altered.

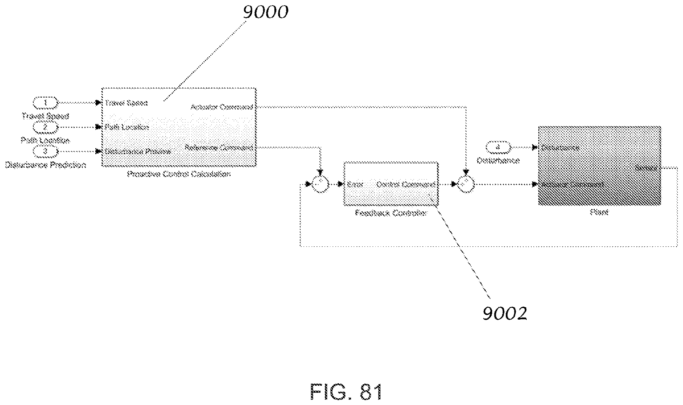

The block diagram in FIG. 81 illustrates an embodiment of a proactive controller 9000 in combination with a feedback loop that includes a feedback (i.e., reactive) controller 9002. According to various embodiments, other controller configurations, such as those without feedback loops, with feedforward loops, as well as those for semi-active and partially active systems may be used as the disclosure is not so limited.

The proactive controller 9000 shown on the left provides two outputs. First, it provides an actuator command that is sized such that it creates a desired performance in terms of the response of the plant to the disturbance. As a second output, the expected sensor signal, may be determined based at least partially on crowd-sourced road data. The second output is provided to the reactive controller as a reference signal. Accordingly, in this embodiment, the proactive control strategy may be insensitive to the feedback loop. If the actuator command from the proactive control results in the expected reference output from the sensors, then the feedback loop may see effectively no error and thus take effectively no action. If, on the other hand, there is an error, due for example to inaccuracies in the expected disturbance (for example due to an error in localization of the vehicle, then the feedback loop may work to correct the resulting motion.

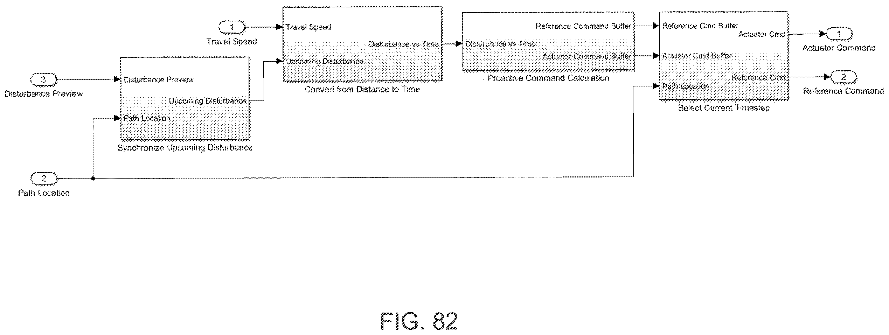

In some embodiments of the combination controller of FIG. 81, a vehicle may be travelling over a known surface, for example, a previously recorded road. Accordingly, if the disturbance preview and the location of the vehicle are available then a time signal of the upcoming disturbance may be determined by a proactive controller if, for example, the vehicle travel speed is also known. For example, if a general road profile defined as z_road=f(s_road,y) is available, where the vertical height of the road z_road is a function of the longitudinal coordinate along the path s_road and the lateral location y. Knowing the location s_current along the path of the vehicle at any given time, and knowing the travel speed $v\_s=\partial s/\partial t$, the upcoming vertical road velocity may be expressed as a function of time as $\partial z/\partial t= \partial z/\partial s\ v\_s$. If this input is determined for each location along a section of the path, a time trace of command input for the control system may be calculated. Knowing the current path location, the appropriate command may be applied at the appropriate time to achieve the desired result. FIG. 82 shows aspects of an embodiment employing a proactive controller.

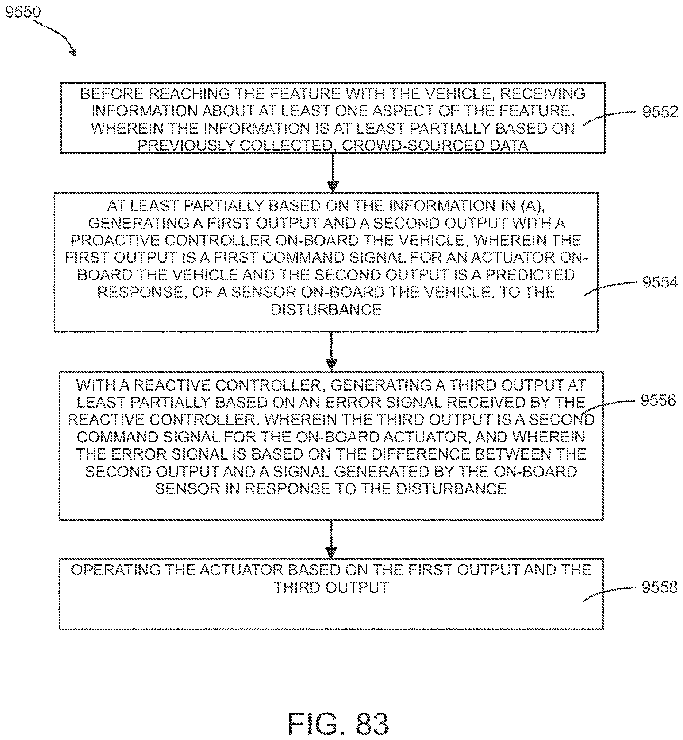

Referring to FIG. 83, a flow chart 9550 depicts a method of controlling a response of a vehicle to a road induced disturbance caused by a surface feature of the road. The method includes before reaching the feature with the vehicle, receiving (9552) information about at least one aspect of the feature, wherein the information is at least partially based on previously collected, crowd-sourced data. The method also includes, at least partially based on the information in step 9552, generating (9554) a first output and a second output with a proactive controller on-board the vehicle, wherein the first output is a first command signal for an actuator on-board the vehicle and the second output is a predicted response, of a sensor on-board the vehicle, to the disturbance. The method also includes, with a reactive controller, generating (9556) a third output at least partially based on an error signal received by the reactive controller, wherein the third output is a second command signal for the on-board actuator, and wherein the error signal is based on the difference between the second output in step 9554 and a signal generated by the on-board sensor in response to the disturbance. The method also includes operating (9558) the actuator based on the first output and the third output.

In some implementations, the actuator is an active suspension actuator.

The above-described embodiments of the technology described herein may be implemented in any of numerous ways. For example, the embodiments may be implemented using hardware, software or a combination thereof. When implemented in software, the software code may be executed on any suitable processor or collection of processors, whether provided in a single computing device or distributed among multiple computing devices. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format. It should also be understood that any reference to a controller in the current disclosure may be understood to reference the use of one or more processors configured to implement the one or more methods disclosed herein.

Further, it should be appreciated that a computing device including one or more processors may be embodied in any of a number of forms, such as a rack-mounted computer, a desktop computer, a laptop computer, or a tablet computer. Additionally, a computing device may be embedded in a device not generally regarded as a computing device but with suitable processing capabilities, including a Personal Digital Assistant (PDA), a smart phone, tablet, or any other suitable portable or fixed electronic device.

Also, a computing device may have one or more input and output devices. These devices may be used, among other things, to present a user interface. Examples of output devices that may be used to provide a user interface include display screens for visual presentation of output and speakers or other sound generating devices for audible presentation of output. Examples of input devices that may be used for a user interface include keyboards, individual buttons, and pointing devices, such as mice, touch pads, and digitizing tablets. As another example, a computing device may receive input information through speech recognition or in other audible format.

Such computing devices may be interconnected by one or more networks in any suitable form, including as a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. These methods may be embodied as processor executable instructions stored on associated non-transitory computer readable media that when executed by the one or more processors perform any of the methods disclosed herein. Additionally, such software may be written using any of a number of suitable programming languages and/or programming or scripting tools, and also may be compiled as executable machine language code or intermediate code that is executed on a framework or virtual machine.

In this respect, the embodiments described herein may be embodied as a computer readable storage medium (or multiple computer readable media) (e.g., a computer memory, one or more floppy discs, compact discs (CD), optical discs, digital video disks (DVD), magnetic tapes, flash memories, RAM, ROM, EEPROM, circuit configurations in Field Programmable Gate Arrays or other semiconductor devices, or other tangible computer storage medium) encoded with one or more programs that, when executed on one or more computers or other processors, perform methods that implement the various embodiments discussed above. As is apparent from the foregoing examples, a computer readable storage medium may retain information for a sufficient time to provide computer-executable instructions in a non-transitory form. Such a computer readable storage medium or media may be transportable, such that the program or programs stored thereon may be loaded onto one or more different computing devices or other processors to implement various aspects of the present disclosure as discussed above. As used herein, the term "computer-readable storage medium" encompasses only a non-transitory computer-readable medium that may be considered to be a manufacture (i.e., article of manufacture) or a machine. Alternatively or additionally, the disclosure may be embodied as a computer readable medium other than a computer-readable storage medium, such as a propagating signal.

The terms "program" or "software" are used herein in a generic sense to refer to any type of computer code or set of computer-executable instructions that may be employed to program a computing device or other processor to implement various aspects of the present disclosure as discussed above. Additionally, it should be appreciated that according to one aspect of this embodiment, one or more computer programs that when executed perform methods of the present disclosure need not reside on a single computing device or processor, but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

The embodiments described herein may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by a "user." It should be appreciated that a "user" need not be a single individual, and that in some embodiments, actions attributable to a "user" may be performed by a team of individuals and/or an individual in combination with computer-assisted tools or other mechanisms.

While the present teachings have been described in conjunction with various embodiments and examples, it is not intended that the present teachings be limited to such embodiments or examples. On the contrary, the present teachings encompass various alternatives, modifications, and equivalents, as will be appreciated by those of skill in the art. Accordingly, the foregoing description and drawings are by way of example only.

Further preferred embodiments of the present invention are set out in the following:

E1. A method for providing terrain-based insights to a terrain-based advanced driver assistance system of a vehicle, the method comprising:

obtaining a road profile of a road segment the vehicle is traveling on;
determining a location of the vehicle based at least partly on the road profile; and
determining one or more operating parameters of one or more vehicle systems based at least partially on the location of the vehicle.

E2. The method of embodiment E1, further comprising transmitting the one or more operating parameters to the vehicle.

E3. The method of embodiment E2, further comprising operating the one or more vehicle systems based at least partly on the one or more operating parameters.

E4. The method of embodiment E2, further comprising operating the advanced driver assistance system based at least partly on the one or more operating parameters.

E5. The method of embodiment E4, wherein operating the advanced driver assistance system comprises initiating an alert to a driver of the vehicle.

E6. The method of embodiment E5, wherein the alert comprises at least one of a visual, audible, haptic, or tactile alert.

E7. The method of embodiment E4, wherein operating the advanced driver assistance system comprises initiating an alert to an autonomous or a semi-autonomous driving controller of the vehicle.

E8. A method for providing terrain-based insights to an intelligent speed adaptation system of a vehicle, the method comprising:

obtaining a road profile of a road segment the vehicle is traveling on;

determining a location of the vehicle based at least partly on the road profile; and

determining one or more recommended driving speeds based at least partly on the location of the vehicle.

E9. The method of embodiment E8, further comprising transmitting the one or more recommended driving speeds to the vehicle.

E10. The method of embodiment E9, further comprising operating the intelligent speed adaptation system based at least partly on the one or more recommended driving speeds.

E11. The method of embodiment E9, wherein operating the intelligent speed adaptation system comprises initiating an alert to a driver of the vehicle.

E12. The method of embodiment E11, wherein the alert comprises at least one of a visual, audible, haptic, or tactile alert.

E13. The method of embodiment E12, wherein the alert is a visual alert and is presented on a display in the vehicle.

E14. The method of embodiment E9, wherein operating the intelligent speed adaptation system comprises initiating an alert to an autonomous or a semi-autonomous driving controller of the vehicle.

E15. The method of embodiment E8, wherein the recommended driving speed is based, at least partially, on road information for an upcoming portion of the road segment on which the vehicle is traveling.

E16. The method of embodiment E15, wherein road information for an upcoming portion of the road segment comprises weather information.

E17. The method of embodiment E8, wherein the road profile information comprises at least one of road slope information, road roughness information, road frequency content, road friction information, road curvature, or road grip information.

E18. The method of embodiment E15, wherein road information for an upcoming portion of the road segment comprises road event information.

E19. The method of embodiment E18, wherein the road event information comprises a location of at least one of a pothole or a speedbump.

E20. The method of embodiment E18, wherein the road event information is based on road data that has been normalized by vehicle class.

E21. The method of embodiment E15, wherein road information for an upcoming portion of the road segment comprises road feature information, wherein the road feature is a bridge.

E22. The method of embodiment E16, wherein the weather information comprises an ambient temperature at the location of the vehicle.

E23. The method of embodiment E16, wherein the weather information comprises precipitation information at the location of the vehicle.

E24. The method of embodiment E16, wherein the weather information comprises fog information at the location of the vehicle.

E25. The method of embodiment E8, wherein the recommended driving speed is based, at least partially, on an average driving speed at which vehicles traverse the road segment.

E26. A method for providing a recommended driving speed to a vehicle, the method comprising:

obtaining, by one or more sensors of the vehicle, road data of a road segment on which the vehicle is traveling;

determining, based on the road data, a current road profile of the road segment;

sending, to a cloud database, the current road profile;

receiving, from the cloud database, a set of candidate stored road profiles;

determining, by a processor, a location of the vehicle based on the set of candidate stored road profiles and the current road profile;

determining, by the processor, a recommended driving speed, the recommended driving speed being based, at least partially, on the location of the vehicle; and

initiating, via an advanced driver assistance system of the vehicle, an alert to a driver to change a driving speed of the vehicle.

E27. The method of embodiment E26, wherein the alert comprises at least one of a visual alert, an audio alert, or a tactile alert.

E28. The method of embodiment E27, wherein the alert is a visual alert and is presented on a display in the vehicle.

E29. The method of embodiment E26, wherein the recommended driving speed is based, at least partially, on road information for an upcoming portion of the road segment on which the vehicle is traveling.

E30. The method of embodiment E29, wherein road information for an upcoming portion of the road segment comprises weather information.

E31. The method of embodiment E29, wherein road information for an upcoming portion of the road segment comprises road profile information.

E32. The method of embodiment E31, wherein the road profile information comprises at least one of road slope information, road roughness information, road frequency content, road friction information, road curvature, or road grip information.

E33. The method of embodiment E29, wherein road information for an upcoming portion of the road segment comprises road event information.

E34. The method of embodiment E33, wherein road event information comprises a location of at least one of a pothole or a speedbump.

E35. The method of embodiment E33, wherein the road event information is based on road data that has been normalized by vehicle class.

E36. The method of embodiment E29, wherein road information for an upcoming portion of the road segment comprises road feature information, wherein the road feature is a bridge.

E37. The method of embodiment E26, wherein the recommended driving speed is based, at least partially, on an average driving speed at which vehicles traverse the road segment.

E38. A method for providing terrain-based insights to an automatic emergency braking system of a vehicle, the method comprising:

  obtaining a road profile of a road segment the vehicle is traveling on;
  determining a location of the vehicle based at least partly on the road profile; and
  determining one or more automatic emergency braking trigger point distances at least partly on the location of the vehicle.

E39. The method of embodiment E38, further comprising transmitting the one or more automatic emergency braking trigger point distances to the vehicle.

E40. The method of embodiment E39, further comprising operating the automatic emergency braking system based at least partly on the one or more transmitted automatic emergency braking trigger point distances.

E41. A method for determining an automatic emergency braking trigger point distance for a vehicle, the method comprising:

  obtaining, by one or more sensors of the vehicle, road data of a road segment on which the vehicle is traveling;
  determining, based on the road data, a current road profile of the road segment;
  sending, to a cloud database, the current road profile;
  receiving, from the cloud database, a set of candidate stored road profiles;
  determining, by a processor, a location of the vehicle based on the set of candidate stored road profiles and the current road profile;
  determining, by the processor, the automatic emergency braking trigger point distance, the automatic emergency braking trigger point distance being based, at least partially, on the location of the vehicle; and
  initiating, when the vehicle is within the automatic emergency braking trigger point distance from another vehicle or object, via an advanced driver assistance system of the vehicle, an alert to a driver to brake.

E42. The method of embodiment E41, further comprising, initiating, when the vehicle is within the automatic emergency braking trigger point distance, via an advanced driver assistance system of the vehicle, a braking command configured to initiate braking of the vehicle.

E43. The method of embodiment E41, further comprising, initiating, when the vehicle is within a second distance, smaller than the automatic emergency braking trigger point distance, via an advanced driver assistance system of the vehicle, a braking command configured to initiate braking of the vehicle.

E44. The method of embodiment E41, wherein the alert comprises at least one of a visual alert, an audio alert, or a tactile alert.

E45. The method of embodiment E44, wherein the alert is a visual alert and is presented on a display in the vehicle.

E46. The method of embodiment E45, wherein the automatic emergency braking trigger point distance is based, at least partially, on road information for an upcoming portion of the road segment on which the vehicle is traveling.

E47. The method of embodiment E46, wherein road information for an upcoming portion of the road segment comprises weather information.

E48. The method of embodiment E46, wherein road information for an upcoming portion of the road segment comprises road profile information.

E49. The method of embodiment E48, wherein the road profile information comprises at least one of road slope information, road roughness information, road frequency content, road friction information, road curvature, or road grip information.

E50. The method of embodiment E46, wherein road information for an upcoming portion of the road segment comprises road event information.

E51. The method of embodiment E50, wherein road event information comprises a location of at least one of a pothole or a speedbump.

E52. The method of embodiment E50, wherein the road event information is based on road data that has been normalized by vehicle class.

E53. The method of embodiment E46, wherein road information for an upcoming portion of the road segment comprises road feature information, wherein the road feature is a bridge.

E54. A method for providing terrain-based insights to an adaptive cruise control system of a vehicle, the method comprising:

   obtaining a road profile of a road segment the vehicle is traveling on;
   determining a location of the vehicle based at least partly on the road profile; and
   determining one or more following distances at least partly on the location of the vehicle.

E55. The method of embodiment E54, further comprising transmitting the one or more following distances to the vehicle.

E56. The method of embodiment E55, further comprising operating the adaptive cruise control system based at least partly on the one or more transmitted following distances.

E57. A method for determining a following distance for an adaptive cruise control of a vehicle, the method comprising:

   obtaining, by one or more sensors of the vehicle, road data of a road segment on which the vehicle is traveling;

determining, based on the road data, a current road profile of the road segment;
sending, to a cloud database, the current road profile;
receiving, from the cloud database, a set of candidate stored road profiles;
determining, by a processor, a location of the vehicle based on the set of candidate stored road profiles and the current road profile; and
determining, by the processor, the following distance, the following distance being based, at least partially, on the location of the vehicle.

E58. The method of embodiment E57, further comprising, initiating, when the vehicle is within the following distance, a braking command configured to initiate braking of the vehicle.

E59. The method of embodiment E57, further comprising, initiating, when the vehicle is within the following distance, a command configured to adjust a set speed of the adaptive cruise control.

E60. The method of embodiment E57, initiating an alert to a driver of a vehicle, wherein the alert comprises at least one of a visual alert, an audio alert, or a tactile alert.

E61. The method of embodiment E60, wherein the alert is a visual alert and is presented on a display in the vehicle.

E62. The method of embodiment E57, wherein the following distance is based, at least partially, on road information for an upcoming portion of the road segment on which the vehicle is traveling.

E63. The method of embodiment E62, wherein road information for an upcoming portion of the road segment comprises weather information.

E64. The method of embodiment E62, wherein road information for an upcoming portion of the road segment comprises road profile information.

E65. The method of embodiment E64, wherein the road profile information comprises at least one of road slope information, road roughness information, road frequency content, road friction information, road curvature, or road grip information.

E66. The method of embodiment E62, wherein road information for an upcoming portion of the road segment comprises road event information.

E67. The method of embodiment E66, wherein road event information comprises a location of at least one of a pothole or a speedbump.

E68. The method of embodiment E66, wherein the road event information is based on road data that has been normalized by vehicle class.

E69. The method of embodiment E62, wherein road information for an upcoming portion of the road segment comprises road feature information, wherein the road feature is a bridge.

E70. A method of adjusting an operating mode of a vehicle, the method comprising:

obtaining, by one or more sensors of the vehicle, road data of a road segment on which the vehicle is traveling;
determining, based on the road data, a current road profile of the road segment;
sending, to a cloud database, the current road profile;
receiving, from the cloud database, a set of candidate stored road profiles and other road information;
determining, by a processor, a location of the vehicle based on the set of candidate stored road profiles and the current road profile;
determining, by the processor, that a bridge exists on an upcoming portion of the road segment;
determining, by the processor, that a slippery condition may be occurring on the upcoming portion of the road segment on the bridge; and
determining, by the processor, a value of an operating parameter of the vehicle for traversing the bridge.

E71. The method of embodiment E70, wherein the operating parameter of the vehicle is at least one of a driving speed of the vehicle, a following distance of an adaptive cruise control of the vehicle, or an automatic emergency braking trigger distance.

E72. The method of embodiment E70, wherein the other road information comprises an ambient temperature at the location of the bridge.

E73. The method of embodiment E70, wherein the other road information comprises weather information at the location of the bridge.

E74. The method of embodiment E73, wherein the weather information comprises precipitation information at the location of the bridge.

E75. A method for calculating a target travel path for a first vehicle traversing a road segment, the method comprising:

determining a current location of a first vehicle;

obtaining a target travel path for traversing the road segment based at least in part on the current location of the first vehicle; and
determining an error between the current location of the first vehicle and the target travel path.

E76. The method of embodiment E75, further comprising operating one or more vehicle systems based at least in part on the determined error.

E77. The method of embodiment E76, wherein the one or more vehicle systems comprises an autonomous driving trajectory planning system.

E78. The method of embodiment E76, wherein the one or more vehicle systems comprises a lane keep assist system.

E79. The method of embodiment E75, further comprising comparing the error to a threshold and determining that a current path of the first vehicle is appropriate for traversing the road segment.

E80. The method of embodiment E75, further comprising comparing the error to a threshold and determining that a current path of the first vehicle is inappropriate for traversing the road segment.

E81. The method of embodiment E80, further comprising calculating, based on the error, a corrective action to bring the current trajectory to match the target travel path.

E82. The method of embodiment E81, further comprising initiating the corrective action with an advanced driver assistance system of the first vehicle that at least partially influences the steering of the first vehicle.

E83. The method of embodiment E82, wherein calculating the target travel path comprises averaging at least one other path taken by the at least one other vehicle across the road segment.

E84. A steering correction system for a vehicle, the steering correction system comprising:

a localization system configured to determine a location of the vehicle;
at least one system configured to influence a direction of travel of the vehicle; and
a processor configured to perform the steps of:

obtaining the location of the vehicle from the localization system;
obtaining a target path of travel based at least partly on the location of the vehicle;
determining a current path of travel of the vehicle; and

controlling the at least one system based at least partly on the target path of travel and the current path of travel.

E85. The steering correction system of embodiment E84, wherein the at least one system configured to influence the direction of vehicle travel is at least one rear steering actuator.

E86. The steering correction system of embodiment E85, wherein the localization system is a localization system having an accuracy within 0.3 meters.

E87. The steering correction system of embodiment E85, wherein the localization system uses global navigation satellite systems enhanced through real-time kinematic positioning.

E88. The steering correction system of embodiment E85, wherein the localization system uses inertial navigation enhanced by global navigation satellite systems.

E89. The steering correction system of embodiment E85, wherein the processor is further configured to perform the step of initiating transmission of the location of the vehicle to a cloud computing system.

E90. The steering correction system of embodiment E85, wherein the processor is further configured to perform the step of receiving the target path of the vehicle from a cloud computing system.

E91. A method of providing steering correction commands to a vehicle system, the method comprising:

obtaining travel paths from at least two vehicles using high-accuracy localization;
generating an aggregate path from the travel paths of the at least two vehicles, wherein the aggregate path is representative of one lane in a road;
obtaining a current travel path of an operated vehicle obtained using a high-accuracy localization system;
comparing the current travel path with the aggregate path;
generating a corrective command to correct the current travel path of the vehicle in motion; and
sending the corrective steering command to a steering controller.

E92. The method of embodiment E91, wherein during the generating of the aggregate path, the input travel paths are filtered to remove outliers and undesirable travel paths.

E93. The method of embodiment E92, wherein the travel paths from at least two vehicles are obtained using global navigation satellite systems enhanced through real-time kinematic positioning.

E94. The method of embodiment E92, wherein the travel paths from at least two vehicles are obtained using inertial navigation enhanced by global navigation satellite systems.

E95. The method of embodiment E92, wherein the current travel path is obtained using global navigation satellite systems enhanced through real-time kinematic positioning.

E96. The method of embodiment E92, wherein the current travel path is obtained using inertial navigation enhanced by global navigation satellite systems.

E97. A vehicle comprising:

a localization system configured to determine a location of the vehicle;
a display; and
a processor configured to perform the steps of:

obtaining a location of the vehicle from the localization system;
determining the presence of one or more road surface features on a road surface based at least in part on the location of the vehicle; and
presenting on the display a position of the one or more road surface features on the road surface.

E98. The vehicle of embodiment E97, wherein the position is determined at least partially based on road surface information downloaded from a cloud-based database.

E99. The vehicle of embodiment E97, wherein the display is selected from the group consisting of a heads-up display and a monitor.

E100. The vehicle as in any of embodiments E97-E99, wherein the controller is further configured to present, on the display, a projected tire path of at least one tire of the vehicle relative to the one or more road surface features.

E101. The vehicle of embodiment E99, wherein the controller is further configured to present, on the display, a projected tire path of two front tires of the vehicle.

E102. The vehicle as in any of embodiments E97-E101, wherein the one or more road surface features

84

comprises a pothole or a bump.

E103. A method of operating a vehicle, the method comprising:

(a) while a vehicle is traveling along a road surface, determining a location of a road surface feature on the road surface the location of the road surface feature being relative to the vehicle; and
(b) presenting, on a display, the location of the road surface feature on the road surface.

E104. The method of embodiment E103, wherein presenting the location of the road surface feature comprises presenting a graphical representation of the road surface feature on the display.

E105. The method of embodiment E103, wherein the display is a heads-up display.

E106. The method as in any of embodiments E103-E105, further comprising presenting, on the display a projected tire path of at least one tire of the vehicle.

E107. The method of embodiment E106, further comprising, based on the projected tire path of the at least one tire of the vehicle, adjusting a steering angle of a steering wheel of the vehicle to avoid the road surface feature.

E108. The method as in any of embodiments E103-E107, wherein the road surface feature is a pothole.

E109. A method of operating a vehicle under conditions of poor visibility, the method comprising:

(a) while the vehicle is traveling along a road surface, determining, using at least one remote sensor, a location, relative to the road surface, of at least one other vehicle; and
(b) presenting, on a display, the determined location of the at least one other vehicle (a) relative to an image of the road surface.

E110. The method of embodiment E109, wherein the conditions of poor visibility are caused by fog and the at least one remote sensor is a radar detector.

E111. The method of any of embodiments E109-E110, wherein the display is a heads-up display or a monitor.

E112. The method of any of embodiments E109-E111, wherein presenting, on the display, the determined location of the at least one other vehicle comprises presenting a graphical representation of the at least one other vehicle on the display.

E113. A method for providing terrain-based insights to an adaptive headlight system of a vehicle, the method comprising:

obtaining road surface information of a road segment the vehicle is traveling on;
determining a location of the vehicle based at least partly on the road surface information; and
determining one or more target illumination areas based at least partly on the location of the vehicle.

E114. The method of embodiment E113, further comprising transmitting the one or more target illumination areas to the vehicle.

E115. The method of embodiment E114, further comprising operating the adaptive headlight system based at least partly on the one or more transmitted target illumination areas.

E116. The method of any of embodiments E113-E115, wherein the road surface information comprises a road profile.

E117. A method for providing terrain-based insights to an adaptive ADAS sensor system of a vehicle, the method comprising:

obtaining road surface information of a road segment the vehicle is traveling on;
determining a location of the vehicle based at least partly on the road surface information; and
determining one or more target sensing areas based at least partly on the location of the vehicle.

E118. The method of embodiment E117, further comprising transmitting the one or more target sensing areas to the vehicle.

E119. The method of embodiment E118, further comprising operating the adaptive headlight system based at least partly on the one or more transmitted target sensing areas.

E120. The method of any of embodiments E117-E119, wherein the road surface information comprises a road profile.

E121. A method comprising:

obtaining, from one or more sensors corresponding to a left wheel of a vehicle, left wheel data as the vehicle traverses a road segment;
obtaining, from one or more sensors corresponding to a right wheel of the vehicle, right wheel data as the vehicle traverses the road segment;

obtaining, from a cloud database, two or more road profiles, each road profile corresponding to a track on the road segment;

comparing the left wheel data and the right wheel data to the two or more road profiles;

determining, by a controller, at a first time, a first match between the left wheel data or the right wheel data and a first road profile of the two or more road profiles;

determining, by the controller, a first location the vehicle on the road segment based on the first match;

determining, by the controller, at a second time, a second match between the left wheel data or the right wheel data and a second road profile of the two or more road profiles;

determining, by the controller, a second location of the vehicle on the road segment based on the second match; and

determining, based on a difference between the first location and the second location, that the vehicle has completed a lane drift behavior.

E122. The method of embodiment E121, wherein the difference between the first location and the second location indicates that the vehicle has drifted within a lane on the road.

E123. The method of embodiment E121, wherein the difference between the first location and the second location indicates that the vehicle has drifted into another lane on the road.

E124. The method any of embodiments E121-E123, wherein the one or more sensors representing the left wheel of the vehicle comprises a left wheel sensor, wherein the one or more sensors representing the right wheel of the vehicle comprises a right wheel sensor.

E125. The method of any of embodiments E121-E124, wherein determining a second match between the left wheel data or the right wheel data and a second road profile of the two or more road profiles comprises reversing at least a portion of the second road profile prior to determining the second match.

E126. The method of any of embodiments E121-E125, wherein the difference between the first location and the second location indicates that the vehicle has drifted into an oncoming lane on the road.

E127. The method of any of embodiments E121-E126, further comprising, sending, to another vehicle system, a signal indicating the lane drift behavior.

E128. The method of embodiment E127, wherein the other vehicle system is an ADAS configured to present, on a display, a warning to a driver of the vehicle.

E129. The method of embodiment E127, wherein the other vehicle system is an autonomous driving controller configured to initiate steering commands for the vehicle.

E130. The method of embodiment E124, wherein the right wheel data is right wheel vertical acceleration data and wherein the left wheel data is left wheel vertical acceleration data.

E131. The method of embodiment E124, wherein determining a first match comprises exceeding a predetermined correlation threshold between either the right wheel data or the left wheel data and the first road profile.

E132. A method of locating a lateral position of a vehicle traveling along a road, the method comprising:

(a) receiving, from a cloud-based data storage, road surface profile information of at least two tracks located in a single lane of the road;
(b) collecting road profile information from a left wheel of the vehicle and a right wheel of the vehicle; and
(c) determining the lateral position of the vehicle by comparing the information received in step (a) with the information collected in step (b).

E133. The method of embodiment E132, wherein collecting in step (b) includes using at least one sensor selected from the group consisting of: a wheel accelerometer, a body accelerometer, and a body IMU.

E134. A method of performing lane change guidance for a vehicle, the method comprising:

determining, using terrain-based localization, a location of the vehicle;
transmitting, from the vehicle, the location of the vehicle to a cloud database comprising crowd sourced lane change data;
receiving, at the vehicle, data indicating that the vehicle is approaching an overtaking zone; and
presenting an indication that the vehicle is approaching the overtaking zone.

E135. The method of embodiment E134, wherein the indication is at least one of a visual, audible, or tactile indication.

E136. The method of any of embodiments E134-E135, wherein the indication that the vehicle is approaching an overtaking zone is presented via an advanced driver assistance system.

E137. The method of any of embodiments E134-E136, wherein the data indicating that the vehicle is approaching an overtaking zone is based on data from other vehicles similar to the vehicle in at least one aspect.

E138. The method of embodiment E137, wherein the at least one aspect is vehicle body type.

E139. The method of embodiment E134, wherein the data indicating that the vehicle is approaching an overtaking zone is based on data from other vehicles driving in similar conditions to the vehicle.

E140. The method of embodiment E139, wherein driving in similar conditions comprises driving in similar weather conditions.

E141. The method of embodiment E140, wherein driving in similar weather conditions comprises driving in similar precipitation conditions.

E142. The method of embodiment E139, wherein driving in similar conditions comprises driving on the same day of the week.

E143. The method of embodiment E139, wherein driving in similar conditions comprises driving at the same portion of the day.

E144. The method of embodiment E134, further comprising, presenting, on a display in the vehicle, an indication that the vehicle is reaching the end of an overtaking zone.

E145. The method of embodiment E144, wherein the indication is at least one of a visual, audible, or tactile indication.

E146. The method of embodiment E134, wherein the vehicle is a semi-autonomous or an autonomous vehicle.

E147. A method for updating a cloud database of road data, the method comprising:

> obtaining, from one or more sensors, acceleration data as a vehicle traverses a road segment;
> converting the acceleration data into a current road profile of a track on the road segment;
> obtaining, from a cloud database, a stored road profile corresponding to the track on the road segment;
> cross-correlating the current road profile with the stored road profile;

> determining that the current road profile and stored road profile do not match; and
> uploading the current road profile to the cloud database.

E148. The method of embodiment E147, wherein the one or more sensors comprises a wheel sensor.

E149. The method of any of embodiments E147-E148, further comprising updating the stored road profile, wherein updating the stored road profile comprises overwriting at least a portion of the road data in the road profile or replacing the stored road profile with the current road profile.

E150. A method for updating a cloud database of road data, the method comprising:

> obtaining, by a vehicle sensor on a vehicle, road data corresponding to a track of a road segment on which the vehicle is traveling, the road data comprising a road profile;
> receiving, from a cloud database, a location of the vehicle and a road segment maturity indication corresponding to the road segment on which the vehicle is traveling;
> based on the road segment maturity indication, determining a subset of the road data to upload to the cloud database; and
> uploading the subset of road information to the cloud database.

E151. The method of embodiment E150, wherein the road data comprises road event data.

E152. The method of embodiment E151, wherein the subset of road data comprises road event data.

E153. The method of any of embodiments E150-E152, further comprising, based on the road segment maturity indication, determining a data rate for uploading the subset of road data.

E154. The method of any of embodiments E150-E153. wherein the road segment maturity indication is determined based on a number of drives for which the cloud database has stored road data.

E155. The method of any of embodiments E150-E154, wherein the road segment maturity indication is determined based on one or more of a level of traffic, a time of day, or a day of the week.

E156. A method of correcting a speed of a vehicle, the method comprising:

> obtaining a plurality of GPS coordinates and headings, the GPS coordinates and headings corresponding to a plurality of locations of the vehicle;

obtaining a reported vehicle speed of the vehicle;

determining, based on two or more of the plurality of GPS coordinates and headings, that the vehicle is traveling straight and at a constant speed;

calculating a speed correction factor based on the two or more of the plurality of GPS coordinates and headings; and

applying the speed correction factor to the reported vehicle speed to determine a true speed of the vehicle.

E157. The method of embodiment E156, further comprising sending, to a terrain-based localization system, the true speed of the vehicle.

E158. The method of any of embodiments E156-E157, wherein determining that the vehicle is traveling straight comprises determining that a plurality of consecutive vehicle headings differ from one another by less than 2%.

E159. A method of determining a location of a vehicle, the method comprising:

obtaining a plurality of GPS coordinates and headings, the GPS coordinates and headings corresponding to a plurality of locations of the vehicle;

obtaining a reported vehicle speed of the vehicle;

determining, based on two or more of the plurality of GPS coordinates and headings, that the vehicle is traveling straight and at a constant speed;

calculating a speed correction factor based on the two or more of the plurality of GPS coordinates and headings;

applying the speed correction factor to the reported vehicle speed to determine a true speed of the vehicle; and

determining, based on dead reckoning using the true speed of the vehicle, a location of the vehicle.

E160. The method of embodiment E159, wherein determining that the vehicle is traveling straight comprises determining that a plurality of consecutive vehicle headings differ from one another by less than 2%.

E161. A method of monitoring location-based suspension system commands, the method comprising:

obtaining a force command for a suspension actuator of a vehicle;

obtaining road information for a road on which the vehicle is traveling;

determining one or more expected ride characteristics of the vehicle;

sensing, by one or more sensors, one or more actual ride characteristics of the vehicle as the vehicle travels on the road;

comparing the one or more expected ride characteristics with the one or more actual ride characteristics; and

calculating a relative improvement score based on the comparison of the one or more expected ride characteristics with the one or more actual ride characteristics.

E162. The method of embodiment E161, wherein ride characteristics comprises vehicle body accelerations.

E163. The method of any of embodiments E161-E162, further comprising determining, based on the relative improvement score, that the force command caused performance degradation.

E164. The method of embodiment E163, further comprising applying a gain to the force command.

E165. The method of embodiment E164, wherein the gain is applied to the force command over a limited frequency range.

E166. The method of embodiment E161, further comprising turning off force commands to the suspension actuator.

E167. The method of embodiment E161, wherein the suspension actuator is a semi-active suspension actuator or an active suspension actuator.

E168. The method of embodiment E161, wherein obtaining road information comprises using a high precision localization system to determine a road profile of the road.

E169. A method comprising:

obtaining road data from one or more vehicle sensors as a vehicle traverses a road segment;

determining, by a controller, based on the road data and using a set of parameters relating to the one or more vehicle sensors, an estimated road profile of the road segment;

obtaining, from a cloud database, a composite road profile of the road segment;

comparing the estimated road profile of the road segment with the composite road profile of the road segment;

determining an error between the estimated road profile of the road segment and the composite road profile of the road segment; and initiating, by the controller, a command to adjust one or more individual parameters within the set of parameters relating to the one or more vehicle sensors.

E170. The method of embodiment E169, wherein the one or more vehicle sensors comprises one or more wheel accelerometers.

E171. The method of embodiment E169, wherein the one or more vehicle sensors comprises at least one of one or more ride height sensors, one or more body accelerometers, or one or more body IMUs.

E172. The method of any of embodiments E169-E171, wherein the composite road profile is compiled from sensor data from other vehicles previously traversing the road segment.

E173. The method of claim embodiments E169-E172, wherein the composite road profile is compiled from road data from at least 5 vehicles previously traversing the road segment.

E174. The method of embodiment E169, wherein the one or more individual parameters comprises a correction factor on a sensor signal used to create the road data.

E175. The method of embodiment E174, wherein the correction factor comprises different corrections to the sensor signal at different frequencies.

E176. The method of embodiment E174, wherein the one or more sensors comprises a wheel accelerometer and the correction factor comprises a correction to data collected for low frequency road content.

E177. The method of embodiment E174, wherein the one or more sensors comprises a ride height sensor and the correction factor comprises a correction to data collected for high frequency road content.

E178. The method of embodiment E174, wherein the one or more individual parameters comprises a parameter of a physics model of the vehicle.

E179. The method of embodiment E178, comprising using the physics model to fuse sensor information into the estimated road profile.

E180. A method of operating a vehicle using data stored on a cloud-based database during a trip to a destination, the method comprising:

(a) while a vehicle is parked, downloading road surface information, for a predetermined route to be travelled during a future trip, to a local information storage unit onboard the vehicle; and
(b) during the trip, using the information to determine the location of the vehicle.

E181. The method of embodiment E180, further comprising using the information to control an aspect of a system on the vehicle during the trip.

E182. The method as in one of embodiments E180-E181, wherein the information is supplied to the vehicle using Wi-Fi communication link.

E183. The method as in one of embodiments E180-E181, wherein the information is supplied to the vehicle using an ethernet connection.

E184. The method of embodiment E183, wherein the vehicle is selected from the group consisting of an electric vehicle and a plug-in hybrid-electric vehicle, and wherein the ethernet connection is integrated with a charging cable.

E185. The method as in one of embodiments E180-E184, further comprising, before starting the trip, confirming that the road surface information is up-to-date.

E186. The method as in one of embodiments E180-E185, further comprising determining the destination before starting the trip by accessing data from a predesignated electronic calendar.

E187. The method as in one of embodiments E180-E185, further comprising determining the destination before starting the trip by accessing data provided to a navigation system in a cell phone.

E188. The method as in one of embodiments E180-E185, further comprising determining the destination before starting the trip by accessing data from a user interface in the vehicle.

E189. A method of operating a vehicle using road surface information previously stored onboard a vehicle, the method comprising:

(a) determining a destination;
(b) using a navigation system to determine a route to the destination;
(c) determining that the road surface data for the route in (b) is available onboard the vehicle; and
(d) using the road surface data onboard the vehicle while traveling along the route to perform at least one function selected from the group consisting of: determining the location of the vehicle and controlling an aspect of the operation of a system onboard the vehicle.

E190. The method of embodiment E189 further comprising: determining that the road surface data available in (c) is not up-to-date, updating the data onboard the vehicle by accessing data from a cloud-based data base before step (d).

E191. A method of providing road preview information to a vehicle while maintaining the data privacy of information received from the vehicle, the method comprising:

(a) receiving, from the vehicle at a first cloud-based database, information based on data collected by at least one sensor on board the vehicle;
(b) receiving, from the vehicle at the first cloud-based database, vehicle identifying data that identifies the vehicle in step (a);
(c) creating a data tag based on the vehicle identifying data received in (b);
(d) associating the data tag in (c) with at least a portion of the information received in step (a);
(e) supplying, to a second cloud-based database, at least a portion of the data received in step (a) and the associated information tag created in step (c); and
(f) receiving, from the independent second cloud-based database, road preview information, wherein the road preview information includes data characterizing at least an aspect of the road ahead of the vehicle.

E192. The method of embodiment E191, wherein the at least one sensor is selected from the group consisting of an accelerometer mounted on an unsprung mass of the vehicle, an accelerometer mounted on a sprung mass of the vehicle, an IMU.

E193. The method as in one of embodiments E191-E192, wherein the information received in step (a) is selected from the group consisting of vertical displacement of the road surface and vertical acceleration measurements.

E194. A method of exchanging data with a vehicle while maintaining data privacy, the method comprising

(a) receiving a first quantity of sensor data from a vehicle at a first cloud-based data base;
(b) receiving information that identifies the vehicle providing the data in (a);
(c) generating a data tag for the data in (a) and associating the tag with the information in (b);
(d) conveying the data received in (a) and the data tag generated in (c) to an independent second cloud-based database;
(e) receiving, at the first data base, information from the second database, based, at least partially, on the data conveyed in (d), wherein the information is associated with the tag generated (c); and
(f) providing information to the vehicle based, at least partially, on the information received in (e).

E195. The method of embodiment E194, wherein the data in (a) is related to a performance metric of at least one system in the vehicle and the information in provided (f) a value of a performance parameter of the at least one system.

E196. The method of embodiment E195, wherein the at least one system is selected from the group consisting of a braking system, an ABS system, and an EPS system.

E197. A method of operating a vehicle, the method comprising:

(a) determining a location of a vehicle;
(b) determining a value of a quality metric for the location of the vehicle;
(c) comparing the quality metric to an upper bound and a lower bound for the quality metric; and
(d) initiating a command to a vehicle subsystem based on the comparison in (c).

E198. The method of embodiment E197, further comprising determining that the value of the quality metric is above the upper bound.

E199. The method of embodiment E198, wherein the command initiated to a vehicle subsystem is a full intended command.

E200. The method of embodiment E197, further comprising determining that the value of the quality metric is between the upper bound and the lower bound.

E201. The method of embodiment E200, wherein the command initiated to the vehicle subsystem is a scaled command.

E202. The method of any of embodiments E197-E201, wherein the vehicle subsystem is a variable damper system, an active suspension system, an active roll stabilizer system, or a rear steering system.

E203. A method of collecting road surface data, the method comprising:

(a) measuring a value of a parameter related to a road surface feature using at least one inertial sensor;

(b) obtaining an image of the road surface feature by using a rear-facing camera; and

(c) confirming the value of the parameter by processing the image obtained in (b).

E204. The method of embodiment E203, wherein the feature in (a) is a pothole and the parameter in (a) is selected from the group consisting of a width, a length, and a depth of the pothole.

E205. The method of embodiment E203, wherein the feature in (a) is selected from the group consisting of speed bumps, surface cracks, manhole covers, storm drain grates, and frost heaves and the parameter in (a) is selected from the group consisting of a width, a length, and a depth of the feature.

E206. A method of determining road camber, the method comprising:

(a) obtaining, from a plurality of vehicles, steering inputs and yaw rates of each of the plurality of vehicles as each of the plurality of vehicles traverses a road segment;

(b) determining, for a steering input of a first vehicle of the plurality of vehicles, an uncorrelated steering component; and

(c) determining, by comparing the uncorrelated steering component with other uncorrelated steering components derived from crowd-sourced steering inputs in (a), a road camber angle for the road segment.

E207. The method of embodiment E206, further comprising determining a misalignment factor for the first vehicle.

E208. A method of operating a vehicle, the method comprising:

(a) obtaining, from a plurality of vehicles, steering inputs and yaw rates of each of the plurality of vehicles as each of the plurality of vehicles traverses a road segment;

(b) determining, for a steering input of a first vehicle of the plurality of vehicles, an uncorrelated steering component;

(c) determining, by comparing the uncorrelated steering component with other uncorrelated steering components derived from crowd-sourced steering inputs in (a), a road camber angle for the road segment; and

(d) determining a correction signal to compensate for the road camber angle.

E209. The method of embodiment E208, further comprising initiating, based on the correction signal in (d), a command to a steering system of the first vehicle.

E210. The method of embodiment E208, further comprising initiating, based on the correction signal in (d), a command to a vehicle system configured to influence a heading of the first vehicle, wherein the vehicle system is an active suspension system or an aerodynamics system.

E211. The method of embodiment E208, further comprising initiating, based on the correction signal in (d), a recommendation to a driver of the first vehicle, to steer the first vehicle.

E212. The method of embodiment E211, wherein the recommendation is presented on a heads-up display or via tactile feedback through a steering wheel.

E213. A method of operating a vehicle, the method comprising:

(a) determining a location of a vehicle;
(b) determining a value of a quality metric for the location of the vehicle;
(c) comparing the quality metric to an upper bound and a lower bound for the quality metric; and
(d) initiating a command to a vehicle subsystem based on the comparison in (c).

E214. The method of embodiment E213, further comprising determining that the value of the quality metric is above the upper bound.

E215. The method of embodiment E214, wherein the command initiated to a vehicle subsystem is a full intended command.

E216. The method of embodiment E213, further comprising determining that the value of the quality metric is between the upper bound and the lower bound.

E217. The method of embodiment E216, wherein the command initiated to the vehicle subsystem is a scaled command.

E218. The method of any of embodiments E213-E217, wherein the vehicle subsystem is a variable damper system, an active suspension system, an active roll stabilizer system, or a rear steering system.

E219. A method of updating a road surface map, the method comprising:

(a) collecting, via a roving sensor, a first set of data while traversing a first area;

(b) collecting, via a local sensor positioned in the first area, a second set of data;

(c) comparing the first set of data with the second set of data;

(d) adjusting the first set of data based on the comparison in (c) to generate a corrected first set of data;

(e) uploading the corrected first set of data and the second set of data to a cloud database; and

(f) generating, based on the corrected first set of data and the second set of data uploaded in (e), road surface information for a road surface reference map.

E220. The method of embodiment E219, wherein the first set of data and the second set of data include temperature information.

E221. The method of embodiment E219, wherein the first set of data and the second set of data include precipitation information.

E222. The method of embodiments E220 or E221, wherein the road surface information includes road events dependent on precipitation or temperature, the road events being selected from the group consisting of puddles, snowbanks, snow drifts, snow cover, flood areas, and ice patches.

E223. A method of detecting erratic driving behavior by an operator of a vehicle, the method comprising:

(a) obtaining, via one or more vehicle sensors, a road profile of a road segment on which the vehicle is traveling and a GPS location of the vehicle;

(b) comparing the road profile obtained in (a) with candidate road profiles;

(c) determining a precise location of the vehicle on the road segment;

(d) determining, based on data from one or more vehicle sensors, a current driving behavior profile of the operator of the vehicle;

(e) obtaining, from a cloud database, a reference driving behavior profile;

(f) comparing the current driving behavior profile with the reference driving behavior profile; and

(g) determining an impairment level of the operator of the vehicle.

E224. The method of embodiment E223, further comprising, determining a confidence score for the impairment level of the operator determined in (g).

E225. The method of embodiment E223, wherein the impairment level of the operator is above a threshold.

E226. The method of embodiment E225, further comprising, alerting the operator of the vehicle of the impairment level of the operator.

E227. The method of embodiment E225, further comprising, alerting a vehicle controller of the impairment level of the operator.

E228. The method of embodiment E227, further comprising, changing an operating mode of the vehicle based on the impairment level of the operator.

E229. The method of embodiment E228, wherein changing an operating mode of the vehicle comprises activating an autonomous driving mode, activating a semi-autonomous driving mode, activating a lane keep assist feature, activating an adaptive cruise control feature, reducing a driving speed of the vehicle, and/or reducing a maximum driving speed of the vehicle.

E230. A method of controlling an air suspension system of a vehicle, the method comprising:

determining a location of the vehicle on a current road segment using a terrain-based localization system;
obtaining road information including at least one of road characteristics, road events, or a road profile of an upcoming road segment;
calculating, based on the road information, an optimal state of the air suspension for traveling along the upcoming road segment, wherein the optimal state of the air suspension includes at least one of an optimal ride height or an optimal stiffness setting; and
initiating a command to set the air suspension system at the optimal state for traversal of the upcoming road event.

E231. The method of embodiment E230, wherein the optimal ride height comprises a height profile for the air suspension.

E232. The method of embodiment E230, wherein the optimal stiffness setting comprises a stiffness profile for the air suspension system.

E233. The method of embodiment E230, wherein determining a location of the vehicle on a current road segment using a terrain-based localization system includes comparing a current road profile to candidate road profiles in a crowd-sourced database.

E234. A method of determining a swerve behavior of a vehicle, the method comprising:

obtaining historical heading data sourced from previous drives of a road segment;

determining a current heading of a current vehicle traversing the road segment;

comparing the current heading to the historical heading data;

determining that a swerve behavior is occurring; and

changing one or more operating parameters of the current vehicle based on the detected swerve behavior.

E235. The method of embodiment E234, wherein changing one or more operating parameters comprises suspending pothole mitigation.

E236. The method of embodiment E234, wherein changing one or more operating parameters comprises suppressing event detection.

E237. A method of controlling travel of an actuator of a suspension system of a vehicle, the method comprising:

(a) obtaining, from a terrain-based localization system, road information for a road segment on which the vehicle is traveling;

(b) obtaining passive suspension element parameters of the suspension system;

(c) determining, a position of an actuator of the suspension system;

(d) determining, based on the road information, the passive suspension element parameters, and the position of the actuator, optimal positions for the actuator for traversing the road segment;

(e) initiating, by an actuator controller, one or more actuator commands to position the actuator at the optimal positions as the vehicle traverses the road segment.

E238. The method of embodiment E237, wherein the passive suspension element is selected from the group consisting of end stops and secondary springs.

E239. The method of embodiment E237, wherein the actuator is an active suspension actuator.

E240. The method of embodiment E237, wherein the determination in (d) is also based on occupant comfort, fuel efficiency, and/or vehicle durability.

E241. The method of embodiment E237, wherein the one or more actuator commands causes the actuator to preemptively engage one or more of the passive suspension elements.

E242. The method of embodiment E237, wherein the road information comprises information on road events.

E243. A method of creating a road profile estimate, the method comprising:

(a) obtaining multiple datasets, each of the multiple datasets representing a road profile estimation for a road segment, the multiple datasets originating from either different vehicles, different sensor sets, or operation at different speeds;

(b) determining a range of spatial frequency where each of the multiple datasets have high fidelity;

(c) blending the multiple datasets into a single road profile estimate in the spatial frequency domain; and

(d) storing the single road profile estimate in a database.

E244. A method of localizing a vehicle, the method comprising:

(a) obtaining a road profile from a map layer for a road segment;

(b) obtaining, via one or more sensors of the vehicle, a new dataset representing a road profile estimate for the road segment;

(c) determining a range of validity in spatial frequency of the road profile from the map layer;

(d) determining a range of validity in spatial frequency of the new dataset; and

(e) localizing the vehicle based on comparing the road profile from the map layer and the new dataset in an overlapping range of spatial frequency where both the new dataset and the road profile from the map layer have high fidelity.

E245. A method of localizing a vehicle, the method comprising:

sensing, based on a first sensor system of a vehicle, a first signal corresponding to a first parameter, the first signal having a first availability and a first accuracy;

sensing, based on a second sensor system of the vehicle, a second signal corresponding to a second parameter, wherein the second sensor system is a terrain-based localization system and the second signal is based on a road profile of a road segment on which the vehicle is traveling, the second signal having a second availability and a second accuracy; and

blending the first signal and the second signal based on the first and second availabilities and the first and second accuracies, wherein a blended signal has a third availability higher than the first availability or the second availability.

E246. The method of embodiment E245, wherein the first sensor system comprises at least one of a GPS localization system, a vision-based localization system, a distance-based localization system (e.g., LIDAR/RADAR), or a vehicle motion sensing system (e.g., dead reckoning).

E247. The method of embodiment E245, wherein the terrain-based localization employs crowd-sourced terrain maps.

E248. A method of localizing a vehicle traversing a road segment, the method comprising:

(a) determining a first vehicle circumstance at a first time;
(b) choosing a first localization method to employ based on the first vehicle circumstance;
(c) localizing the vehicle using the first localization method;
(d) determining a second vehicle circumstance at a second time;
(e) choosing a second localization method to employ based on the second vehicle circumstance; and
(f) localizing the vehicle using the second localization method.

E249. The method of embodiment E248, wherein the first localization method and the second localization method are selected from the group consisting of GNSS localization, terrain-based localization, and dead reckoning.

E250. The method of embodiment E248, wherein the vehicle circumstance and the second vehicle circumstance are selected from the group consisting of weather conditions, overhead obstructions, cellular data availability, and GNSS satellite availability.

E251. A method of adaptively tuning a vehicle, the method comprising:

(a) identifying a tuning parameter relating to one or more modifiable settings for vehicle performance;
(b) obtaining, from a terrain-based localization system, road event information for a road segment on which the vehicle is traveling;
(c) localizing the vehicle on the road segment;
(d) determining that the vehicle has interacted with the road event;
(e) determining a performance metric for the tuning parameter during the interaction of the vehicle with the road event;
(f) comparing the performance metric with one or more stored performance metrics;
(g) determining a new value for the tuning parameter based on the comparison in (f); and
(h) updating a value of the tuning parameter.

E252. The method of embodiment E251, wherein comparing the performance metric with one or more stored performance metrics comprises using stored performance metrics from the vehicle or a similar vehicle traversing a similar event with a different tuning parameter.

E253. The method of embodiment E251, wherein comparing the performance metric with one or more stored performance metrics comprises using stored performance metrics from the vehicle or a similar vehicle traversing a similar event with the same tuning parameter.

E254. A method of controlling a vehicle, the method comprising:

determining a location of the vehicle on a road segment using a terrain-based localization system, wherein the road segment includes multiple lanes;
identifying a lane of the multiple lanes corresponding to the location of the vehicle;
determining that the lane includes a road event;
initiating a command to employ an event-specific control strategy for the road event;
recording road data associated with the road event as the vehicle interacts with the road event; and
uploading the road data associated with the road event to a cloud database.

E255. A method of monitoring a condition of a segment of a road surface, the method comprising:

(a) at a cloud-based database, receiving information about an aspect of the segment, from at least one vehicle that interacts with the segment;
(b) processing the information received in (a);
(c) based on the processed information in (b), determining a value of a parameter associated with the aspect;
(d) comparing the value determined in (c) with a threshold value; and
(e) based on the comparison in (d) determining the condition of the segment of the road surface.

E256. The method of embodiment E255, wherein the at least one vehicle is a number of vehicles that are greater than a preset number of vehicles.

E257. The method of embodiment E255, wherein the at least one vehicle is a number of vehicles from which information is received over a predetermined time period.

E258. The method as in one of embodiments E255-E257, wherein the predetermined time period is selected from the group consisting of an hour, a day a week, a month, and a year.

E259. The method as in one of embodiments E255-E258, wherein the aspect is selected from the group consisting of a pothole, a bump, a surface crack, surface roughness, coefficient of friction, road camber, and road slope.

E260. The method as in one of embodiments E255-E259, wherein information is received in step (a) is received from at least two vehicles and wherein the processing in step (b) includes averaging data received from the at least two vehicles.

E261. The method as in one of embodiments E255-E260, wherein the aspect of the road segment is selected from the group consisting of a pothole, a bump, a surface crack, a manhole cover, a storm drain grate, a frost heave.

E262. The method of embodiment E261, wherein the parameter in step (c) is a physical dimension.

E263. The method as in embodiment E262, wherein the physical dimension is selected from the group consisting of a depth, a width and a length of a pothole.

E264. The method as in embodiment E262, wherein the physical dimension is selected from the group consisting of a height, a width and a length of a frost heave.

E265. The method as in one of embodiments E255-E260, wherein the aspect of the road segment is selected from the group consisting of roughness of the road segment, coefficient of friction of the road segment, camber of the road segment, and slope of the road segment.

E266. The method of embodiment E265, wherein the parameter is a magnitude of a quantity selected from the group consisting of road roughness, road coefficient of friction, road camber, and road slope.

E267. The method as in one of embodiments E255-E266, further comprising reporting the condition of the road to a client only when the value of the parameter is greater than the threshold.

E268. The method as in one of embodiments E255-E264, wherein the parameter in step (c) is a rate of change of a quantity associated with the aspect.

E269. A method of tracking changes over time of a parameter associated with a segment of a road surface, the method comprising:

(a) receiving data from at least two vehicles, wherein the data includes information obtained using one or more sensors, when each of the at least two vehicles interacts with the segment of the road surface;
(b) based on the data received in (a), determining a rate at which the parameter is changing; and
(c) reporting the rate determined in (b) to a client entity.

E270. The method of embodiment E269, further comprising, comparing the rate determined in (b) with a preset threshold rate and reporting the rate in (c) when the rate is greater than the threshold value.

E271. The method as in one of embodiments E269-E270, wherein the parameter associated with the segment of a road surface is a dimension of a road surface anomaly.

E272. The method of embodiment E271, wherein the anomaly is a pothole.

E273. The method of embodiment E272, wherein the dimension is selected from the group consisting of length, width, and depth.

E274. A method of characterizing an aspect of a road surface anomaly, the method comprising:

(a) receiving, in the cloud, data from the at least two vehicles, wherein the data received from each of the at least two vehicles is obtained using sensors, on-board at least two vehicles, when each of the at least two vehicles is interacting with the road surface anomaly;
(b) processing the data received in (a) in the cloud;
(c) based on the processed data, determining at least one dimension of the anomaly; and
(d) when the dimension is greater that a threshold value, reporting information about the anomaly to a client entity.

E275. The method of embodiment E274, wherein the information includes the location of the anomaly and at least one dimension of the anomaly.

E276. The method as in one of embodiments E274-E275, wherein the anomaly is a pothole and the dimension is selected from the group consisting of length, width, and depth of the pothole.

E277. A method of operating a vehicle traveling along a road, the method comprising:

(a) at the motor vehicle, receiving data about an upcoming road content;
(b) at the motor vehicle, receiving data about a state of the vehicle;
(c) based on the data received in (a) and (b), determining whether a cue should be given to at least one occupant of the vehicle about the upcoming road content; and
(d) based on the determination in (c) providing a cue to the at least one passenger.

E278. The method of embodiment E277, wherein the upcoming road content is selected from the group consisting of a pothole, a bump, and a turn.

E279. The method as in one of embodiments E277-E278, wherein the state of the vehicle includes the vehicle's speed.

E280. The method as in one of embodiments E277-E279, wherein the cue in step (d) includes a cue selected from the group consisting of visual, audio, or tactile cues.

E281. The method as in one of embodiments E277-E279, further comprising an actuator, wherein the actuator is used to provide the cue in step (d), and wherein the actuator is selected from the group consisting of a suspension actuator, a seat actuator, an air-spring.

E282. A method of operating a vehicle traveling along a road, the method comprising:

(a) at the motor vehicle, receiving data about an upcoming road content;
(b) at the motor vehicle, receiving data about a state of the vehicle;
(c) based on the data received in (a) and (b), determining whether a cue should be given to at least one occupant of the vehicle about the upcoming road content; and
(d) based on the determination in (c), travelling along the road without providing any cue about the upcoming road content to the at least one occupant of the vehicle.

E283. A method of operating a vehicle traveling along a road, the method comprising:

(a) receiving information from an external source regarding the position of a road feature and the probability of interacting with the feature; and
(b) at least partially based on the probability in (a), adjusting the operation one or more systems in the vehicle.

E284. The method of embodiment E283, wherein the one or more systems in (b) are selected from the group consisting of a propulsion system, a steering system, a suspension system, and a steering system.

E285. The method as in one of embodiments E283-E284, wherein the external source in (b) is a cloud-based data base.

E286. The method as in one of embodiments E283-E285, wherein the system in (b) is an active suspension system.

E287. The method as in one of embodiments E283-E286, wherein the road feature is selected from the group consisting of a pothole, a bump, a speed bump, a crack, a manhole cover, a storm-drain grate.

E288. The method as in one of embodiments E283-E287, wherein adjusting the operation of the one or more systems in the vehicle includes increasing a speed of the vehicle.

E289. The method as in one of embodiments E283-E288, wherein adjusting the operation of the one or more systems in the vehicle includes adjusting the damping of a suspension system.

E290. A method of operating a vehicle, the method comprising:

(a) collecting local ambient temperature information from a multiplicity of sources;
(b) correlating the information in (a) in a cloud-based map;
(c) providing access to the collated information in (b) to a vehicle based on its location; and
(d) adjusting the operation of at least one vehicle system based on the information provided in (c).

E291. A method of controlling a response of a vehicle to a road induced disturbance caused by a surface feature of the road, the method comprising:

(a) before reaching the feature with the vehicle, receiving information about at least one aspect of the feature, wherein the information is at least partially based on previously collected, crowd-sourced data;
(b) at least partially based on the information in (a), generating a first output and a second output with a proactive controller on-board the vehicle, wherein the first output is a first command signal for an actuator on-board the vehicle and the second output is a predicted response, of a sensor on-board the vehicle, to the disturbance;
(c) with a reactive controller, generating a third output at least partially based on an error signal received by the reactive controller, wherein the third output is a second command signal for the on-board actuator, and wherein the error signal is based on the difference between the second output in (b) and a signal generated by the on-board sensor in response to the disturbance; and
(d) operating the actuator based on the first output and the third output.

E292. The method of embodiment E291, wherein the actuator is an active suspension actuator.

## Claims

1. A vehicle comprising:

   a localization system configured to determine a location of the vehicle;
   a display; and
   a processor configured to perform the steps of:

      obtaining a location of the vehicle from the localization system;
      determining the presence of one or more road surface features on a road surface based at least in part on the location of the vehicle; and
      presenting on the display a position of the one or more road surface features on the road surface.

2. The vehicle of claim 1, wherein the position is determined at least partially based on road surface information downloaded from a cloud-based database.

3. The vehicle of claim 1, wherein the display is selected from the group consisting of a heads-up display and a monitor.

4. The vehicle as in any of claims 1-3, wherein the controller is further configured to present, on the display, a projected tire path of at least one tire of the vehicle relative to the one or more road surface features.

5. The vehicle of claim 3, wherein the controller is further configured to present, on the display, a projected tire path of two front tires of the vehicle.

6. The vehicle as in any of claims 1-5, wherein the one or more road surface features comprises a pothole or a bump.

7. A method of operating a vehicle, the method comprising:

   (a) while a vehicle is traveling along a road surface, determining a location of a road surface feature on the road surface the location of the road surface feature being relative to the vehicle; and
   (b) presenting, on a display, the location of the road surface feature on the road surface.

8. The method of claim 7, wherein presenting the location of the road surface feature comprises presenting a graphical representation of the road surface feature on the display.

9. The method of claim 7, wherein the display is a heads-up display.

10. The method as in any of claims 7-9, further comprising presenting, on the display a projected tire path of at least one tire of the vehicle.

11. The method of claim 10, further comprising, based on the projected tire path of the at least one tire of the vehicle, adjusting a steering angle of a steering wheel of the vehicle to avoid the road surface feature.

12. The method as in any of claims 7-11, wherein the road surface feature is a pothole.

FIG. 1

FIG. 2

EP 4 531 004 A2

FIG. 3

EP 4 531 004 A2

350

352
380
382
356

354 — Gather road data

358 — Determine road profile

362 — Receive road profile and vehicle information

364 — Database information

360 — Vehicle information

366 — Determine precise location of vehicle

368 — Receive precise vehicle location

370 — Determine optimal speed operating parameter

374 — Receive recommended operating parameter

372 — Send operating parameter to vehicle

376 — Initiate driver alert and/or initiate change in vehicle behavior

FIG. 4

FIG. 5

450

OBTAINING, BY ONE OR MORE SENSORS OF THE VEHICLE, ROAD DATA OF A ROAD SEGMENT ON WHICH THE VEHICLE IS TRAVELING — 452

DETERMINING, BASED ON THE ROAD DATA, A CURRENT ROAD PROFILE OF THE ROAD SEGMENT — 454

SENDING, TO A CLOUD DATABASE, THE CURRENT ROAD PROFILE — 456

RECEIVING, FROM THE CLOUD DATABASE, A SET OF CANDIDATE STORED ROAD PROFILES — 458

DETERMINING, BY A PROCESSOR, A LOCATION OF THE VEHICLE BASED ON THE SET OF CANDIDATE STORED ROAD PROFILES AND THE CURRENT ROAD PROFILE — 460

DETERMINING, BY THE PROCESSOR, A FOLLOWING DISTANCE BEING BASED, AT LEAST PARTIALLY, ON THE LOCATION OF THE VEHICLE — 462

FIG. 6

480

OBTAINING, BY ONE OR MORE SENSORS OF THE VEHICLE, ROAD DATA OF A ROAD SEGMENT ON WHICH THE VEHICLE IS TRAVELING — 482

DETERMINING, BASED ON THE ROAD DATA, A CURRENT ROAD PROFILE OF THE ROAD SEGMENT — 484

SENDING, TO A CLOUD DATABASE, THE CURRENT ROAD PROFILE — 486

RECEIVING, FROM THE CLOUD DATABASE, A SET OF CANDIDATE STORED ROAD PROFILES — 488

DETERMINING, BY A PROCESSOR, A LOCATION OF THE VEHICLE BASED ON THE SET OF CANDIDATE STORED ROAD PROFILES AND THE CURRENT ROAD PROFILE — 490

DETERMINING, BY THE PROCESSOR, AN AUTOMATIC EMERGENCY BRAKING TRIGGER POINT DISTANCE BEING BASED, AT LEAST PARTIALLY, ON THE LOCATION OF THE VEHICLE — 492

INITIATING, WHEN THE VEHICLE IS WITHIN THE AUTOMATIC EMERGENCY BRAKING TRIGGER POINT DISTANCE FROM ANOTHER VEHICLE OR OBJECT, AN ALERT TO A DRIVER TO BRAKE — 494

FIG. 7

FIG. 8

FIG. 9

EP 4 531 004 A2

FIG. 10

EP 4 531 004 A2

EP 4 531 004 A2

```
750
```

┌─────────────────────────────────────────────────────────────┐
│ DETERMINING A CURRENT LOCATION OF THE FIRST VEHICLE THAT IS   │
│ TRAVERSING A FIRST ROAD SEGMENT, THE FIRST VEHICLE            │── 752
│ INCLUDING THE LANE KEEP ASSIST SYSTEM                         │
└─────────────────────────────────────────────────────────────┘

┌─────────────────────────────────────────────────────────────┐
│ OBTAINING A TARGET TRAVEL PATH FOR TRAVERSING THE FIRST       │
│ ROAD SEGMENT BASED, AT LEAST IN PART ON THE CURRENT           │── 754
│ LOCATION OF THE FIRST VEHICLE                                 │
└─────────────────────────────────────────────────────────────┘

┌─────────────────────────────────────────────────────────────┐
│ DETERMINING AN ERROR BETWEEN THE CURRENT LOCATION OF THE      │── 756
│ FIRST VEHICLE AND THE TARGET TRAVEL PATH                      │
└─────────────────────────────────────────────────────────────┘

# FIG. 11

108

FIG. 12

EP 4 531 004 A2

FIG. 13

FIG. 14

1050

DETERMINING A CURRENT LOCATION OF THE FIRST VEHICLE THAT IS TRAVERSING A FIRST ROAD SEGMENT, THE FIRST VEHICLE INCLUDING THE TRAJECTORY PLANNING SYSTEM — 1052

OBTAINING A TARGET TRAVEL PATH FOR TRAVERSING THE FIRST ROAD SEGMENT BASED, AT LEAST IN PART ON THE CURRENT LOCATION OF THE FIRST VEHICLE — 1054

DETERMINING AN ERROR BETWEEN THE CURRENT LOCATION OF THE FIRST VEHICLE AND THE TARGET TRAVEL PATH — 1056

COMPARING THE ERROR TO A THRESHOLD AND DETERMINING THAT THE CURRENT PATH OF THE FIRST VEHICLE IS NOT APPROPRIATE FOR TRAVERSING THE ROAD SEGMENT — 1058

CALCULATING A CORRECTIVE ACTION TO BRING THE FIRST VEHICLE BACK TO THE TARGET TRAVEL PATH — 1060

FIG. 15

FIG. 16

FIG. 17

FIG. 18

EP 4 531 004 A2

1350

OBTAINING, BY ONE OR MORE SENSORS OF THE VEHICLE, ROAD
SURFACE INFORMATION OF A ROAD SEGMENT ON WHICH THE
VEHICLE IS TRAVELING ⟍ 1352

DETERMINING A LOCATION OF THE VEHICLE, BASED AT LEAST PARTLY
ON THE ROAD SURFACE INFORMATION ⟍ 1354

DETERMINING ONE OR MORE TARGET ILLUMINATION AREAS BASED AT
LEAST PARTLY ON THE LOCATION OF THE VEHICLE ⟍ 1356

# FIG. 19

FIG. 20

1850

OBTAINING, BY ONE OR MORE SENSORS OF THE VEHICLE, ROAD SURFACE INFORMATION OF A ROAD SEGMENT ON WHICH THE VEHICLE IS TRAVELING — 1852

DETERMINING A LOCATION OF THE VEHICLE, BASED AT LEAST PARTLY ON THE ROAD SURFACE INFORMATION — 1854

DETERMINING ONE OR MORE TARGET SENSING AREAS BASED AT LEAST PARTLY ON THE LOCATION OF THE VEHICLE — 1856

FIG. 21

FIG. 22

EP 4 531 004 A2

FIG. 23

EP 4 531 004 A2

EP 4 531 004 A2

1600

```
┌─────────────────────────────────────────────────────────────────┐
│  Obtaining travel paths from at least two vehicles using          │──1602
│  high-accuracy localization                                       │
└─────────────────────────────────────────────────────────────────┘
                              │
                              ▼
┌─────────────────────────────────────────────────────────────────┐
│  Generating a first system travel path from the travel paths of   │──1604
│  the at least two vehicles, wherein the travel path is            │
│  representative of one lane in the road                           │
└─────────────────────────────────────────────────────────────────┘
                              │
                              ▼
┌─────────────────────────────────────────────────────────────────┐
│  Obtaining a second system travel path of an operated vehicle     │──1606
│  using high-accuracy localization                                 │
└─────────────────────────────────────────────────────────────────┘
                              │
                              ▼
┌─────────────────────────────────────────────────────────────────┐
│  Comparing the second system travel path with the first system    │──1608
│  travel path                                                      │
└─────────────────────────────────────────────────────────────────┘
                              │
                              ▼
┌─────────────────────────────────────────────────────────────────┐
│  Generating a command to correct the travel path of the operated  │──1610
│  vehicle                                                          │
└─────────────────────────────────────────────────────────────────┘
                              │
                              ▼
┌─────────────────────────────────────────────────────────────────┐
│  Sending the command to a corrective steering controller          │──1612
└─────────────────────────────────────────────────────────────────┘
```

FIG. 24

FIG. 25

1900

OBTAINING, A LOCATION OF A VEHICLE FROM A TERRAIN-BASED LOCALIZATION SYSTEM WHILE THE VEHICLE IS TRAVELING ON A ROAD SURFACE — 1902

DETERMINING THE PRESENCE OF ONE OR MORE ROAD SURFACE FEATURES ON THE ROAD SURFACE BASED AT LEAST IN PART ON THE LOCATION OF THE VEHICLE — 1904

PRESENTING, ON A DISPLAY, A POSITION OF THE ONE OR MORE ROAD SURFACE FEATURES ON THE ROAD SURFACE — 1906

FIG. 26

FIG. 27

FIG. 28

FIG. 29

2350

Correlation: L Track Driven
to L Track Expected

2352

2354

Time or Distance

2356

Correlation: L Track Driven
to R Track Expected

2360

2358

Time or Distance

FIG. 30

FIG. 31

EP 4 531 004 A2

2500

2502 — Determining, using high precision terrain-based localization, a location of a vehicle

2504 — Transmitting, from the vehicle, the location of the vehicle to a cloud database comprising crowd-sourced lane change data

2506 — Receiving, at the vehicle, data indicating that the vehicle is approaching an overtaking zone

2508 — Presenting, on a display in the vehicle, an indication that the vehicle is approaching an overtaking zone

FIG. 32

FIG. 33

FIG. 34

FIG. 35

2904

2902

2900

FIG. 36

2950

2952 — Obtaining, from one or more sensors, acceleration data as a vehicle traverses a road segment

2954 — Converting the acceleration data into a current road profile of a track on the road segment

2956 — Obtaining, from a cloud database, a stored road profile corresponding to the track on the road segment

2958 — Cross-correlating the current road profile with the stored road profile

2960 — Determining that the current road profile and stored road profile do not match and uploading the current road profile to the cloud database

FIG. 37

FIG. 38

FIG. 39

FIG. 40

FIG. 41

FIG. 42

EP 4 531 004 A2

3500

3510

2

Average Road Estimate

3504

3502

1

True Road

Road    Sensors

Vehicle

3506

Sensors

Road Estimate

Params

Road Estimator

3508

+

-

3512

|u|

error

3514

Updated Params

Error

Optimization Routine

FIG. 43

FIG. 44

FIG. 45

FIG. 46

FIG. 47

4502

4505

FIG. 48

4504

4502a

4506

4502

4504

FIG. 49

4502

4506

4504

FIG. 50

4600

MEASURING A VALUE OF A PARAMETER RELATED TO A ROAD SURFACE FEATURE USING AT LEAST ONE INERTIAL SENSOR — 4602

OBTAINING AN IMAGE OF THE ROAD SURFACE FEATURE BY USING A REAR-FACING CAMERA — 4604

CONFIRMING THE VALUE OF THE PARAMETER BY PROCESSING THE OBTAINED IMAGE — 4606

FIG. 51

FIG. 52

FIG. 53

4950

OBTAINING, FROM A PLURALITY OF VEHICLES, STEERING INPUTS AND YAW RATES OF EACH OF THE PLURALITY OF VEHICLES AS EACH OF THE PLURALITY OF VEHICLES TRAVERSES A ROAD SEGMENT ⟋— 4952

DETERMINING, FOR A STEERING INPUT OF A FIRST VEHICLE OF THE PLURALITY OF VEHICLES, AN UNCORRELATED STEERING COMPONENT ⟋— 4954

DETERMINING, BY COMPARING THE UNCORRELATED STEERING COMPONENT WITH OTHER UNCORRELATED STEERING COMPONENTS DERIVED FROM CROWD-SOURCED STEERING INPUTS, A ROAD CAMBER ANGLE FOR THE ROAD SEGMENT ⟋— 4956

DETERMINING A CORRECTION SIGNAL CONFIGURED TO COMPENSATE FOR THE ROAD CAMBER ANGLE ⟋— 4958

FIG. 54

FIG. 55

FIG. 56

7150

COLLECTING, VIA A ROVING SENSOR, A FIRST SET OF DATA WHILE TRAVERSING A FIRST AREA — 7152

COLLECTING, VIA A LOCAL SENSOR POSITIONED IN THE FIRST AREA, A SECOND SET OF DATA — 7154

COMPARING THE FIRST SET OF DATA WITH THE SECOND SET OF DATA — 7156

ADJUSTING THE FIRST SET OF DATA BASED ON THE COMPARISON OF THE FIRST SET OF DATA WITH THE SECOND SET OF DATA TO GENERATE A CORRECTED FIRST SET OF DATA — 7158

UPLOADING THE CORRECTED FIRST SET OF DATA AND THE SECOND SET OF DATA TO A CLOUD DATABASE — 7160

GENERATING, BASED ON THE CORRECTED FIRST SET OF DATA AND THE SECOND SET OF DATA, ROAD SURFACE INFORMATION FOR A ROAD SURFACE REFERENCE MAP — 7162

FIG. 57

7200

Obtaining, via one or more vehicle sensors, a road profile of a road segment on which the vehicle is traveling and a GPS location of the vehicle
7202

Comparing the road profile with candidate road profiles
7204

Determining a precise location of the vehicle
7206

Determining a current driving behavior profile of the operator of the vehicle
7208

Obtaining, from a cloud database, a reference driving behavior profile
7210

Comparing the current driving behavior profile with the reference driving behavior profile
7212

Determining an impairment level of the operator of the vehicle
7214

FIG. 58

7300

Determining a location of a vehicle on a current
road segment using a terrain-based localization
system
7302

Obtaining road information of an upcoming road
segment
7304

Calculating, based on the road information, an
optimal state of the air suspension for traveling
along the upcoming road segment
7306

Initiating a command to set the air suspension at
the optimal state for traversal of the upcoming road
segment
7308

FIG. 59

FIG. 60

7450

OBTAINING HISTORICAL HEADING DATA SOURCED FROM PREVIOUS DRIVES OF A ROAD SEGMENT — 7452

DETERMINING A CURRENT HEADING OF A CURRENT VEHICLE TRAVERSING THE ROAD SEGMENT — 7454

COMPARING THE CURRENT HEADING TO THE HISTORICAL HEADING — 7456

DETERMINING THAT A SWERVE BEHAVIOR IS OCCURRING BASED AT LEAST PARTLY ON THE COMPARISON OF THE CURRENT HEADING TO THE HISTORICAL HEADING — 7458

CHANGING ONE OR MORE OPERATING PARAMETERS OF THE CURRENT VEHICLE BASED ON THE DETECTED SWERVE BEHAVIOR — 7460

FIG. 61

FIG. 62

7450

OBTAINING FROM A TERRAIN-BASED LOCALIZATION SYSTEM, ROAD INFORMATION FOR A ROAD SEGMENT ON WHICH THE VEHICLE IS TRAVELING — 7652

OBTAINING PASSING SUSPENSION ELEMENT PARAMETERS OF THE SUSPENSION SYSTEM OF THE VEHICLE — 7654

DETERMINING A POSITION OF AN ACTUATOR OF THE SUSPENSION SYSTEM — 7656

DETERMINING, BASED ON THE ROAD INFORMATION, THE PASSIVE SUSPENSION ELEMENT PARAMETERS, AND THE POSITION OF THE ACTUATOR, OPTIMAL POSITIONS FOR THE ACTUATOR FOR TRAVERSING THE ROAD SEGMENT — 7658

INITIATING, BY AN ACTUATOR CONTROLLER, ONE OR MORE ACTUATOR COMMANDS TO POSITION THE ACTUATOR AT THE OPTIMAL POSITIONS AS THE VEHICLE TRAVERSES THE ROAD SEGMENT — 7660

FIG. 63

7500

Obtaining multiple datasets, each of the multiple datasets representing a road profile estimation for a road segment, the multiple datasets originating from either different vehicles, different sensor sets, or operation at different speeds
7502

Determining a range of spatial frequency where each of the multiple datasets have high fidelity
7504

Blending the multiple datasets into a single road profile estimate in the spatial frequency doman
7506

Storing the single road profile estimate in a database
7508

FIG. 64

FIG. 65

7750

```
DETERMINING A FIRST VEHICLE CIRCUMSTANCE AT A FIRST TIME          — 7752

                              ↓

CHOOSING A FIRST LOCALIZATION METHOD TO EMPLOY BASED ON          — 7754
THE FIRST VEHICLE CIRCUMSTANCE

                              ↓

LOCALIZING THE VEHICLE BASED ON THE FIRST LOCALIZATION           — 7756
METHOD CHOSEN

                              ↓

DETERMINING A SECOND VEHICLE CIRCUMSTANCE AT A SECOND TIME       — 7758

                              ↓

CHOOSING A SECOND LOCALIZATION METHOD TO EMPLOY BASED ON         — 7760
THE SECOND VEHICLE CIRCUMSTANCE

                              ↓

LOCALIZING THE VEHICLE BASED ON THE SECOND LOCALIZATION          — 7762
METHOD CHOSEN
```

# FIG. 66

FIG. 67

FIG. 68

7950

IDENTIFYING A TUNING PARAMETER RELATING TO ONE OR MORE MODIFIABLE SETTINGS FOR VEHICLE PERFORMANCE — 7952

OBTAINING, FROM A TERRAIN-BASED LOCALIZATION SYSTEM, ROAD EVENT INFORMATION FOR A ROAD SEGMENT ON WHICH THE VEHICLE IS TRAVELING — 7954

LOCALIZING THE VEHICLE ON THE ROAD SEGMENT — 7956

DETERMINING THAT THE VEHICLE HAS INTERACTED WITH THE ROAD EVENT — 7958

DETERMINING A PERFORMANCE METRIC FOR THE TUNING PARAMETER DURING THE INTERACTION OF THE VEHICLE WITH THE ROAD EVENT — 7960

COMPARING THE PERFORMANCE METRIC WITH ONE OR MORE STORED PERFORMANCE METRICS — 7962

DETERMINING A NEW VALUE FOR THE TUNING PARAMETER BASED ON THE COMPARISON — 7964

UPDATING A VALUE OF THE TUNING PARAMETER — 7966

FIG. 69

FIG. 70

8050

DETERMINING A LOCATION OF THE VEHICLE ON A ROAD SEGMENT USING A TERRAIN-BASED LOCALIZATION SYSTEM, WHEREIN THE ROAD SEGMENT INCLUDES MULTIPLE LANES —— 8052

IDENTIFYING A LANE OF THE MULTIPLE LANES CORRESPONDING TO THE LOCATION OF THE VEHICLE —— 8054

DETERMINING THAT THE LANE INCLUDES A ROAD EVENT —— 8056

INITIATING A COMMAND TO EMPLOY AN EVENT-SPECIFIC CONTROL STRATEGY FOR THE ROAD EVENT —— 8058

RECORDING ROAD DATA ASSOCIATED WITH THE ROAD EVENT AS THE VEHICLE INTERACTS WITH THE ROAD EVENT —— 8060

UPLOADING THE ROAD DATA ASSOCIATED WITH THE ROAD EVENT TO A CLOUD DATABASE —— 8062

FIG. 71

FIG. 72

FIG. 73

FIG. 74

FIG. 75

8500

8502

Receive data from one or more vehicles about characteristics of a road surface

8504

N

Y

Determine average characteristics of a road surface anomaly

8506

Is At least One Aspect of the Anomaly Beyond a Preset Threshold?

N

8508

Y

Report road condition

8510

FIG. 76

Fig. 77

FIG. 78

FIG. 79

_8908_

_8902_

_8900_

_8904_

FIG. 80

FIG. 81

FIG. 82

9550

BEFORE REACHING THE FEATURE WITH THE VEHICLE, RECEIVING INFORMATION ABOUT AT LEAST ONE ASPECT OF THE FEATURE, WHEREIN THE INFORMATION IS AT LEAST PARTIALLY BASED ON PREVIOUSLY COLLECTED, CROWD-SOURCED DATA — 9552

AT LEAST PARTIALLY BASED ON THE INFORMATION IN (A), GENERATING A FIRST OUTPUT AND A SECOND OUTPUT WITH A PROACTIVE CONTROLLER ON-BOARD THE VEHICLE, WHEREIN THE FIRST OUTPUT IS A FIRST COMMAND SIGNAL FOR AN ACTUATOR ON-BOARD THE VEHICLE AND THE SECOND OUTPUT IS A PREDICTED RESPONSE, OF A SENSOR ON-BOARD THE VEHICLE, TO THE DISTURBANCE — 9554

WITH A REACTIVE CONTROLLER, GENERATING A THIRD OUTPUT AT LEAST PARTIALLY BASED ON AN ERROR SIGNAL RECEIVED BY THE REACTIVE CONTROLLER, WHEREIN THE THIRD OUTPUT IS A SECOND COMMAND SIGNAL FOR THE ON-BOARD ACTUATOR, AND WHEREIN THE ERROR SIGNAL IS BASED ON THE DIFFERENCE BETWEEN THE SECOND OUTPUT AND A SIGNAL GENERATED BY THE ON-BOARD SENSOR IN RESPONSE TO THE DISTURBANCE — 9556

OPERATING THE ACTUATOR BASED ON THE FIRST OUTPUT AND THE THIRD OUTPUT — 9558

FIG. 83

9050

COLLECTING LOCAL AMBIENT TEMPERATURE INFORMATION FROM A MULTIPLICITY OF SOURCES — 9052

CORRELATING THE AMBIENT TEMPERATURE INFORMATION IN A CLOUD-BASED MAP — 9054

PROVIDING ACCESS TO THE COLLATED INFORMATION IN THE CLOUD-BASED MAP TO A VEHICLE BASED ON THE VEHICLE'S LOCATION — 9056

ADJUSTING THE OPERATION OF AT LEAST ONE VEHICLE SYSTEM BASED ON THE COLLATED INFORMATION — 9058

FIG. 84

**REFERENCES CITED IN THE DESCRIPTION**

**Patent documents cited in the description**

- US 63130028
- US 63132184

- US 63146379